# EUROPÄISCHE PATENTANMELDUNG

(11) **EP 4 047 003 A1**
(43) Veröffentlichungstag der Anmeldung: **24.08.2022**
(21) Anmeldenummer: 21158012.1
(22) Anmeldetag: 18.02.2021
(51) Int. Cl.: C07F 3/06, C07F 9/50, C07F 15/00, C07F 15/02, C07F 17/00, C07F 17/02, C07F 15/06

(54) **METALLKOMPLEXE MIT 4-H-, 6-H- ODER 8-H-DIHYDROAZULENYL-LIGANDEN UND DEREN VERWENDUNG**

(71) Anmelder: UMICORE AG & Co. KG, 63457 Hanau-Wolfgang (DE)
(72) Erfinder: Vollgraff, Tobias, 35037 Marburg (DE); SUNDERMEYER, Joerg, 35041 Marburg (DE); DOPPIU, Angelino, 63500 Seligenstadt (DE)
(74) Vertreter: Clauswitz, Kai-Uwe Wolfram

(57) **Zusammenfassung**

Die Erfindung betrifft ein Verfahren zur Herstellung von Verbindungen gemäß der allgemeinen Formel M^{A}Yₙ(AzuH) (I), wobei M^{A} = Alkalimetall, Y = Neutralligand, n = 0, 1, 2, 3 oder 4. AzuH ist Azulen (Bicyclo[5.3.0]decapentaen) oder ein Azulenderivat, welches in 4-, 6- oder 8-Position zusätzlich zu einem H-Atom ein Hydrid-Anion H⁻ trägt. Gegenstand der Erfindung sind zudem Verbindungen, erhältlich nach diesem Verfahren, sowie ein Verfahren unter Verwendung solcher Verbindungen zur Herstellung von Komplexen von Metallen der Gruppen 6 bis 12. Weiterhin betrifft die Erfindung Komplexe mittlerer und später Übergangsmetalle (Gruppen 6 bis 12), welche jeweils wenigstens ein *H*-Dihydroazulenyl-Anion (AzuH)¹⁻ aufweisen, sowie die Verwendung aller vorgenannten Übergangsmetallkomplexe als Präkatalysatoren oder Katalysatoren oder Elektronentransfer-Reagenzien in einer chemischen Reaktion oder als Präkursorverbindungen zur Herstellung einer Schicht, welche ein Metall M enthält, oder einer Metallschicht bestehend aus dem Metall M, insbesondere auf wenigstens einer Oberfläche eines Substrats. Außerdem ist Gegenstand der Erfindung ein Substrat, erhältlich nach einem solchen Verfahren.

## Beschreibung

Homoleptische und heteroleptische Metallkomplexe mit anionischen Liganden, welche von Bicyclo[5.3.0]decapentaen (Azulen) oder einfach oder mehrfach substituiertem Azulen, d. h. Azulenderivaten, abgeleitet sind, sowie Verfahren zu ihrer Herstellung sind bekannt.

Azulen und Azulenderivate, welche z. B. in 4-Position anstelle eines H-Atoms einen Alkyl- oder Arylsubstituenten aufweisen, gehören zu den *ortho*-anellierten aromatischen Ringsystemen. Sie liegen als neutrale Zwitterionen vor.

Anionische Liganden, die von Azulen oder Azulenderivaten abgeleitet sind, können beispielsweise durch Addition eines Alkalimetallorganyls, z. B. Methyllithium oder Phenyllithium, in 4-Position, in 6-Position oder in 8-Position eines Azulenmoleküls oder eines Azulenderivats hergestellt werden. Das jeweilige Produkt ist ein Alkalimetalldihydroazulenid, welches in 4-Position, 6-Position oder 8-Position zusätzlich zu einem H-Atom eine Organylgruppe trägt, z. B. eine Methylgruppe oder eine Phenylgruppe. Mithin liegt in C4-Position oder in C6-Position oder in C8-Position des Azulengerüsts eine RCH-Gruppe vor, wobei R eine Organylgruppe ist.

Es sei angemerkt, dass Azulen in 4-Position, 6-Position und 8-Position eine vergleichbare Elektrophilie aufweist. Daher kann es zur Bildung von Regioisomeren kommen. Weil Azulen zudem eine C₂ᵥ-Symmetrie aufweist, handelt es sich bei den Produkten der Additionsreaktion um ein Alkalimetall-4-organo-dihydroazulenid und/oder ein Alkalimetall-6-organo-dihydroazulenid. Das jeweilige Anion kann als 4-Organo-dihydroazulenyl-Anion oder als 6-Organo-dihydroazulenyl-Anion bezeichnet werden. Genauer gesagt handelt es sich um ein 3a,4-Organo-dihydroazulenyl-Anion oder ein 3α,6-Organo-dihydroazulenyl-Anion.

Wird anstatt eines Alkalimetallorganyls ein Alkalimetallhydrid, z. B. Lithiumhydrid, in 4-Position, in 6-Position oder in 8-Position eines Azulenmoleküls oder eines Azulenderivats nucleophil addiert, so liegt als Ergebnis der Additionsreaktion jeweils ein Alkalimetalldihydroazulenid vor, welches in 4-Position, 6-Position oder 8-Position ein H-Atom und ein Hydrid-Anion H⁻ trägt. Mithin liegt in C4-Position oder in C6-Position oder in C8-Position des Azulengerüsts eine CH₂-Gruppe vor. Im Falle von Azulen kann das jeweilige Anion als 4-*H*-Dihydroazulenyl-Anion oder als 6-*H*-Dihydroazulenyl-Anion bezeichnet werden. Genauer gesagt handelt es sich um das 3α,4-*H*-Dihydroazulenyl-Anion oder das 3a,6-*H-*Dihydroazulenyl-Anion.

Unabhängig vom Substitutionsmuster wird das konjugierte pi-System durch die Hydrid-Addition auf den Fünfring beschränkt. Dabei geht in der Regel die für Azulen typische blaue Farbe verloren.

Bei Dihydroazulenyl-Anionen, d. h. Organo-dihydroazulenyl-Anionen und *H-*Dihydroazulenyl-Anionen, handelt es sich um Cyclopentadienyl-artige Monoanionen bzw. Derivate des Cyclopentadienyl-Anions. Daher eignen sie sich ebenso wie das Cyclopentadienyl-Anion (Cp⁻) unter anderem als Liganden für die Darstellung von *Sandwich*-Komplexen vom Metallocen-Typ. Hinsichtlich Herstellung und Lagerung besitzen Lithium-Dihydroazulenide insbesondere gegenüber Lithium-Cyclopentadienid (LiCp) einige Vorteile.

Nachteilig an der Chemie des Cyclopentadienyl-Liganden, eines der wichtigsten Liganden der Metallorganik, ist zum einen, dass sie erdölbasiert ist. Die Bereitstellung von LiCp umfasst zunächst das thermische Cracken von Dicyclopentadien in sein Monomer Cyclopentadien in Gegenwart eines Katalysators, z. B. Eisenpulver. Nach diesem ersten Schritt muss Cyclopentadien rasch verbraucht oder im Gefrierschrank gelagert werden. Ansonsten dimerisiert es rasch wieder zu Dicyclopentadien. In einem zweiten Schritt erfolgt die Umsetzung von Cyclopentadien mit einer starken Base, z. B. einem Lithiumalkyl, üblicherweise dem relativ kostenintensiven n-Butyllithium.

Beispiele für Übergangsmetallkomplexe, welche Dihydroazulenyl-Anionen, d. h. Cyclopentadienyl-artige Monoanionen bzw. Cyclopentadienyl-Derivate als Liganden aufweisen, sind unter anderem in einem Überblicksartikel von M. R. Churchill beschrieben. (Prog. Inorg. Chem. 1970, 54 - 98, Kapitel IV., Abschnitt C.)

Knox und Pauson (*J*. *Chem. Soc.* **1961,** 4610 - 4615) gelang die *in situ*-Herstellung von Lithium-3α4-dihydroazulenid im Rahmen der Synthese des Komplexes Bis(3a,4-dihydroazulenyl)eisen(II), welcher als Gemisch dreier Isomere erhalten wurde. Das Lithium-Azulenid wurde mittels Addition eines Hydrid-Anions an Azulen unter Verwendung von LiAlH₄ (äquimolar) als Hydridierungsreagenz dargestellt. Und zwar in Anlehnung an eine Vorschrift von Hafner und Weldes (Liebigs Ann. Chem. 1957, 606, 90 - 99) zur Synthese von Lithium-4-methyl-dihydroazulenid.

Unvorteilhaft an der von Knox und Pauson beschriebenen Synthese sind die lange Reaktionszeit von 60 Tagen und insbesondere das Anfallen von Aluminiumtrihydrid (AlH₃) als Nebenprodukt. Die starke *Lewis-Säure* AlH₃ kann aufgrund ihrer - im Vergleich zum ursprünglich eingesetzten LiAlH₄ - hohen Reaktivität weitere Reaktionen, beispielsweise gegenüber Metallpräkursorverbindungen wie Eisen(II)-chlorid, eingehen. Möglich ist auch die Bildung von Addukten mit Lithium-3a,4-dihydroazulenid und/oder dem etherischen Lösungsmittel, wie z. B. H₃Al x OEt₂. Etherate der allgemeinen Formel H₃Al x Ether, liegen nach einer gewissen Zeit üblicherweise als hochpolymeres, unlösliches (AlH₃)ₓ vor. Mithin ist die von Knox und Pauson berichtete Umsetzung des *in* situ-erzeugten Lithium-3a,4-dihydroazulenids mit Blick auf Reinheit und Ausbeute der gewünschten Folgeprodukte, z. B. Komplexe vom Metallocen-Typ, unvorteilhaft. Denn dabei werden zwangsläufig mit H₃Al x Ether bzw. (AlH₃)ₓ verunreinigte Produkte, insbesondere Metallkomplexe, erhalten, welche gar nicht oder nur schwierig aufzureinigen sind.

Hinzu kommt, dass von (AlH₃)ₓ grundsätzlich ein Gefährdungspotenzial ausgeht. So zerfällt es oberhalb von 100 °C in seine Bestandteile, ist äußerst feuchtigkeits- und oxidationsempfindlich und verbrennt explosionsartig an der Luft. Mithin entsteht ein erhöhter präparativer Aufwand, insbesondere mit Blick auf die zu treffenden Sicherheitsmaßnahmen.

Erst kürzlich publizierte die Gruppe um Edelmann (J. Richter, P. Liebing, F. T. Edelmann, Inorg. Chim. Acta 2018, 475,18 - 27) ihre Ergebnisse betreffend die Synthese von Metallocen-Komplexen der frühen Übergangsmetalle Titan und Zirkonium und des Lanthanoids Neodym, welche Dihydroazulenyl-Liganden aufweisen. Die im Rahmen der Metallkomplex-Synthesen eingesetzten Lithium-Dihydroazulenide, nämlich Lithium-4-methyl-dihydroazulenid, Lithium-7-*iso-*propyl-1,4,8-trimethyldihydroazulenid und Lithium-7-*iso*-propyl-1,4-dimethyl-8-phenyldihydroazulenid, wurden analog zu der Methode von Hafner und Weldes (Liebigs Ann. Chem. 1957, 606, 90 - 99) dargestellt, d. h. ausgehend von Azulen oder 7-*iso*-Propyl-1,4-dimethylazulen (Guajazulen) und Methyl- oder Phenyllithium. Um solvensfreie Produkte zu erhalten, wurden die isolierten Lithium-Dihydroazulenide jedoch mit *n*-Pentan anstelle von Diethylether gewaschen. Darüber hinaus wurde Lithium-7-*iso*-propyl-1,4-dimethyldihydroazulenid *in situ* erzeugt, und zwar mittels Addition eines Hydrid-Anions in 8-Position von Guajazulen. Dabei wurde das Hydrierungsreagenz LiAlH₄ - im Unterschied zu der Vorschrift von Knox und Pauson (J. Chem. Soc. 1961, 4610 - 4615) nicht in stöchiometrischer Menge, sondern im Überschuss eingesetzt.

Gemäß Edelmann und Mitarbeitern konnten lediglich zwei heteroleptische *Sandwich-*Komplexe von Zirkonium(IV) isomerenrein dargestellt werden, und zwar in geringen Ausbeute von 19 % und 30 %. Die Autoren stellen zusammenfassend fest, dass ihnen Dihydroazulenyl-Anionen und ähnliche von Azulen abgeleitete Anionen als Liganden für die Darstellung von Metallocenen früher Übergangsmetalle und der Lanthanoide zunächst vielversprechend erschienen. Allerdings seien gemäß den von ihnen beschriebenen Syntheseprotokollen die Metallocen-Komplexe in den meisten Fällen nur als Isomerengemische erhältlich. Mithin sei der synthetische Wert von Dihydroazulenyl-Liganden für die metallorganische Chemie bzw. davon abgeleiteter Mono- und Bisdihydroazulenyl-Komplexe deutlich gemindert.

Zusammenfassend kann festgestellt werden, dass die bislang beschriebene Chemie der Dihydroazulenyl-Liganden, also von Organo-dihydroazulenyl-Liganden und H-Dihydroazulenyl-Liganden, sich nahezu vollständig auf die d-elektronenarmen frühen Übergangsmetalle der Gruppe 4, d. h. Titan(IV) und Zirkonium(IV), sowie die Lanthanoide, d. h. Neodym(III), mit der d-Elektronenkonfiguration d⁰ beschränkt. Komplexe von Dihydroazulenyl-Liganden mit Übergangsmetallen, welche eine d-Elektronenkonfiguration größer d⁰ aufweisen, also d^{a} mit a = 1 bis 10, sind äußerst wenige bekannt. Das einzige vorbekannte Beispiel eines homoleptischen Bis-dihydroazulenyl-Übergangsmetallkomplexes, also ohne zusätzliche Chloro-Liganden o. Ä., ist der bereits weiter oben erwähnte, von Knox und Pauson als Isomerengemisch erhaltene d⁶-Metallkomplex Bis(3α,4-dihydroazulenyl)eisen(II), also Fe(AzulenH)₂, mit zwei H-Dihydroazulenyl-Liganden (AzulenH)¹⁻. Der drei Jahre später von Fischer und Müller (J. Organomet. Chem. 1964, 1, 464 - 470) beschriebene d⁶-Cr(0)-Komplex Cr(AzulenH)₂ weist eine Azulenium-Chrom(0)-azuleniat-Einheit auf, also nur einen *H*-Dihydroazulenyl-Liganden (AzulenH)¹⁻.

Nachteilig an den weiter oben beschriebenen Prozessführungen ist - vor allem mit Blick auf eine weitere Verwendung der damit erhältlichen wenigstens einen Dihydroazulenyl-Liganden aufweisenden Metallkomplexe -, dass die erhaltenen Metallkomplexe in vielen Fällen als Gemische von drei oder sogar sechs nicht voneinander separierbaren Isomeren vorliegen. In den wenigen Fällen, in denen eine isomerenreine Darstellung möglich ist, handelt es sich beispielsweise um gemischte Zirkonocene, nämlich um Zirkonocen-Dichloride (J. Richter, P. Liebing, F. T. Edelmann Inorg. Chim. Acta 2018, 475,18 - 27). Aufgrund des Vorhandenseins von Chlorid-Liganden können die Möglichkeiten der weiteren Verwendung dieser Metallkomplexe eingeschränkt sein.

Weiterhin unvorteilhaft an den vorgenannten Syntheserouten ist der Einsatz von Lithiumorganylen im Rahmen der Darstellung der Lithium-Dihydroazulenide. Nachteilig an Organolithium-Verbindungen sind insbesondere ihr hohes Reduktionsvermögen, welches sie aufgrund ihres hohen elektropositiven Charakters und ihrer Nukleophilie besitzen, der damit verbundene Selektivitätsverlust und die starke Exothermie der Reaktionen, an denen sie beteiligt sind.

Im Fall der Synthese von Lithium-Dihydroazuleniden unter Verwendung von LiAlH₄ als Hydridübertragungsmittel fällt unvorteilhafterweise AlH₃ als Nebenprodukt an. Dessen quantitative Abtrennung stellt - wie weiter oben beschrieben - eine kaum zu bewältigende Herausforderung dar. Dies gilt insbesondere für die Herstellung solcher Lithium-Dihydroazulenide im industriellen Maßstab.

Insgesamt sind die literaturbekannten Synthesewege für die Herstellung von Metallkomplexen mit *H*-Dihydroazulenyl-Liganden unter technologischen, ökologischen und (atom-)ökonomischen Gesichtspunkten als unbefriedigend einzustufen. Zudem ist die Auswahl an Metallkomplexen, insbesondere der mittleren Übergangsmetalle (Gruppen 6, 7 und 8) und der späten Übergangsmetalle (Gruppen 9, 10, 11 und 12), welche wenigstens einen *H*-Dihydroazulenyl-Liganden aufweisen und in hoher (Isomeren-)Reinheit und guter Ausbeute erhältlich sind, extrem limitiert.

Der Erfindung liegt daher die Aufgabe zugrunde, diese und weitere Nachteile des Standes der Technik zu überwinden und ein Verfahren zur Verfügung zu stellen, mit welchem einfach, reproduzierbar und vergleichsweise kostengünstig Alkalimetall-*H-*dihydroazulenide, also Alkalimetall-4-*H*-dihydroazulenide und/oder Alkalimetall-6-*H-*dihydroazulenide und/oder Alkalimetall-8-*H*-dihydroazulenide, in hoher Reinheit und guter Ausbeute herstellbar sind. Insbesondere soll die Reinheit dieser Verbindungen den Anforderungen an Präkursorverbindungen zur Herstellung von Übergangsmetallkomplexen in hoher Reinheit und guter Ausbeute genügen. Das Verfahren soll sich weiterhin dadurch auszeichnen, dass es - mit vergleichbarer Ausbeute und Reinheit der Zielverbindungen - auch im industriellen Maßstab durchgeführt werden kann und die Entstehung schwierig abtrennbarer und/oder gefährlicher Nebenprodukte vermieden wird oder die Abtrennbarkeit solcher Nebenprodukte einfach und sicher ermöglicht wird. Zudem soll ein Verfahren zur Herstellung von Metallkomplexen mittlerer und später Übergangsmetalle unter Verwendung der vorgenannten Alkalimetall-*H*-dihydroazulenide bereitgestellt werden. Mittels dieses Verfahrens sollen Metallkomplexe, welche wenigstens einen 4-*H*-, 6-H- oder 8-*H*-Dihydroazulenyl-Liganden aufweisen, einfach, reproduzierbar und vergleichsweise kostengünstig in hoher (Isomeren-)Reinheit und guter Ausbeute herstellbar sein. Gegenstand der vorliegenden Erfindung sind außerdem Metallkomplexe mittlerer und später Übergangsmetalle, welche wenigstens einen 4-*H*-, 6-*H*- oder 8-*H*-Dihydroazulenyl-Liganden aufweisen, sowie deren Verwendung.

Die Hauptmerkmale der Erfindung ergeben sich aus den Patentansprüchen.

Gelöst wird die Aufgabe durch ein Verfahren zur Herstellung von Verbindungen gemäß der allgemeinen Formel

M^{A}Yₙ(AzuH) (I),

wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
   und
- AzuH = Azulen oder ein Azulenderivat, welches in 4-Position, 6-Position oder 8-Position zusätzlich zu einem H-Atom ein Hydrid-Anion trägt,
   wobei
   Azu = Azulen gemäß der Formel 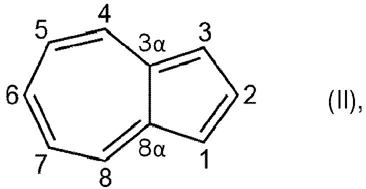 oder
   Azu = ein Azulenderivat, welches ein Azulengerüst gemäß Formel II, bestehend aus einem Fünfring und einem Siebenring, aufweist,
      wobei
      a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
         wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
         wobei zwei Substituenten R^{F} optional einen Ring bilden können,
         und
      b) wenigstens ein Kohlenstoffatom des Azulengerüsts, ausgewählt aus der Gruppe bestehend aus den Kohlenstoffatomen C4, C6 und C8, ein H-Atom trägt,
umfassend die folgenden Schritte:
A. Zurverfügungstellung von
   i. Azulen oder einem Azulenderivat, welches ein Azulengerüst gemäß Formel II, bestehend aus einem Fünfring und einem Siebenring, aufweist,
      wobei
      - wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
         wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
         wobei zwei Substituenten R^{F} optional einen Ring bilden können,
         und
      - wenigstens ein Kohlenstoffatom des Azulengerüsts, ausgewählt aus der Gruppe bestehend aus den Kohlenstoffatomen C4, C6 und C8, ein H-Atom trägt,
      und
   ii. wenigstens einem hydridischen Reduktionsmittel Z,
B. Umsetzung des Azulens oder des Azulenderivats mit dem wenigstens einen hydridischen Reduktionsmittel Z in einem, insbesondere aprotisch-polaren, Lösungsmittel S_{P},
   und
   - bei Verwendung wenigstens eines Alkalimetallaluminiumtetrahydrids M^{A}AlH₄ als ein erstes hydridisches Reduktionsmittel Z₁ -
C. Zurverfügungstellung
   i. wenigstens eines zweiten hydridischen Reduktionsmittels Z₂ ausgewählt aus der Gruppe bestehend aus Alkalimetallhydriden M^{A}H
      und/oder
   ii. wenigstens eines Elektronenpaardonators E,
      wobei der Elektronenpaardonator E wenigstens ein Donoratom aufweist,
      wobei H₂O ausgenommen ist,
   und
D. optional Hinzufügen eines Neutralliganden Y, wenn Y ungleich S_{P} und Y ungleich E ist.

Verbindungen gemäß der allgemeinen Formel M^{A}Yₙ(AzuH) (I) werden vorliegend allgemein als Alkalimetall-*H*-dihydroazulenide bezeichnet, es sei denn, dass ein bestimmtes Regioisomer gemeint ist, wie z. B. Alkalimetall-3α,4-*H*-dihydroazulenid. Dabei weisen die Verbindungen gemäß der allgmeinen Formel I jeweils ein *H*-Dihydroazulenyl-Anion (AzuH)¹⁻ auf, welches ein einfach, nämlich in 4-Position, in 6-Position oder in 8-Position, hydriertes Azulen oder Azulenderivat ist. Das jeweilige *H*-Dihydroazulenyl-Anion (AzuH)¹⁻ weist in 4-Position oder in 6-Position oder in 8-Position zusätzlich zu einem H-Atom ein Hydrid-Anion H⁻ auf. Mithin liegt in C4-Position oder in C6-Position oder in C8-Position des Azulengerüsts eine CH₂-Gruppe vor. Das *H*-Dihydroazulenyl-Anion stellt ein Derivat des Cyclopentadienyl-Anions bzw. ein Cyclopentadienyl-artiges Monoanion dar. Bei dem *H-*Dihydroazulenyl-Anion kann es sich um ein 3α,4-*H*-Dihydroazulenyl-, ein 8,8a-*H-*Dihydroazulenyl-, ein 3α,6-*H*-Dihydroazulenyl- oder ein 6,8α-*H*-Dihydroazutenyl-Anion handeln, oder um eine Mischung zweier oder mehrerer Regioisomere.

Die Reste R^{F} können unabhängig voneinander teilweise oder vollständig substituiert sein. Dabei können ein oder mehrere Wasserstoffatome des jeweiligen Alkyl-, Alkenyl-, Alkinyl- oder Benzylrests, Arens oder Heteroarens beispielsweise durch ein Halogenatom, d. h. Fluor, Chlor, Brom oder Iod, ersetzt sein.

Das Lösungsmittel S_{P} kann auch ein Lösungsmittelgemisch sein, welches zwei oder mehr Lösungsmittel enthält. Eine Ausführungsform des Verfahrens sieht vor, dass das Lösungsmittel S_{P} wenigstens ein aprotisch-polares Lösungsmittel umfasst oder ist. In einer weiteren Ausführungsform des Verfahrens ist das Lösungsmittel S_{P} ein aprotisch-polares Lösungsmittel oder ein Gemisch wenigstens zweier aprotisch-polarer Lösungsmittel. Gemäß einer anderen Ausführungsvariante sind die in einem Lösungsmittelgemisch S_{P} enthaltenen Solventien miteinander mischbar.

Im Zusammenhang mit der vorliegenden Erfindung werden zwei Lösungsmittel als mischbar bezeichnet, wenn sie wenigstens während der jeweiligen Umsetzung mischbar sind, also nicht als zwei Phasen vorliegen.

Die Reihenfolge, in der ein Reaktionsbehältnis mit den Edukten, insbesondere dem Azulen oder dem Azulenderivat und dem wenigstens einen hydridischen Reduktionsmittel Z, beschickt wird, ist frei wählbar. Das schließt auch die Möglichkeit mit ein, die Schritte A. und B. sowie die optionalen Schritte C. und D., also sämtliche die Herstellung der jeweiligen Zielverbindung betreffenden Schritte, in einem einzigen Schritt durchzuführen, also sämtliche Edukte und Lösungsmittel zeitgleich oder nahezu zeitgleich in das Reaktionsbehältnis einzubringen.

Die Begriffe Reaktionsbehältnis und Reaktionsgefäß werden im Zusammenhang mit der vorliegenden Erfindung synonym verwendet und sind nicht auf ein Volumen, eine Materialbeschaffenheit, eine Ausstattung oder eine Form beschränkt. Geeignete Reaktionsgefäße sind z. B. Glaskolben, emaillierte Reaktoren, Rührkesselreaktoren, Druckbehälter, Röhrenreaktoren, Mikroreaktoren und Durchflussreaktoren.

Mit dem Ausdruck "hydridisches Reduktionsmittel" ist gemäß der vorliegenden Erfindung ein Reduktionsmittel gemeint, welches wenigstens eine hydridische Funktionalität M^{R}-H aufweist und somit als Hydrid-Donor fungieren kann. Dabei ist M^{R} insbesondere ausgewählt aus der Gruppe bestehend aus Alkalimetallen, Aluminium und Bor.

Das hierin beschriebene Verfahren zur Herstellung einer Verbindung gemäß der allgemeinen Formel

M^{A}Yₙ(AzuH) (I)

kann als diskontinuierliches Verfahren oder als kontinuierliches Verfahren durchgeführt werden.

Verbindungen des Typs

M^{A}Yₙ(AzuH) (I)

sind mittels des hier beschriebenen Verfahrens - in Abhängigkeit von dem in Schritt A. i. zur Verfügung gestellten Edukt, bei dem es sich entweder um unsubstituiertes Azulen oder um ein Azulenderivat, d. h. einfach oder mehrfach substituiertes Azulen, handelt, isomerenrein erhältlich oder als Gemisch zweier oder dreier Isomere. Bei den mittels dieses Verfahrens erhältlichen Isomeren gemäß der allgemeinen Formel

M^{A}Yₙ(AzuH) (I)

handelt es sich im Einzelnen um ein Alkalimetall-3a,4-*H*-dihydroazulenid und/oder ein Alkalimetall-8,8α-*H*-dihydroazulenid und/oder ein Alkalimetall-3α,6-*H*-dihydroazulenid und/oder ein Alkalimetall-6,8α-*H*-dihydroazulenid. Diese können adduktfrei bzw. solvensfrei vorliegen, nämlich wenn n = 0, oder als Addukte bzw. Solvate mit einem (n = 1), zwei (n = 2), drei (n = 3) oder vier (n = 4) Neutralliganden Y. In Lösung erfolgt regelmäßig eine Solvatation der Alkalimetallionen M^{A+}, insbesondere wenn das Lösungsmittel S_{P} ein Ether ist oder wenigstens einen Ether umfasst. Dann liegen in Lösung insbesondere solvatisierte Lithium-Ionen vor, wobei Y = ein Ether und n = 4 ist, z. B. Li(OC₂H₅)₄ oder Li(thf)₄. Zudem können gemäß diesem Verfahren erhältliche, isolierte Verbindungen des Typs

M^{A}Yₙ(AzuH) (I)

als Addukte vorliegen, wobei das jeweilige Metallkation M^{A+} komplexiert ist. Dabei fungiert entweder das im Rahmen des hier beschriebenen Verfahrens eingesetzte, insbesondere einen Ether enthaltende oder aus einem oder mehreren etherischen Solventien bestehende, Lösungsmittel S_{P} oder der Elektronenpaardonator E als Neutralligand Y. Alternativ oder ergänzend zu einem, insbesondere etherischen, Lösungsmittel S_{P} oder einem Elektronenpaardonator E kann das Hinzufügen eines Neutralliganden Y in Schritt D. vorgesehen sein. Dies kann insbesondere dann vorteilhaft sein, wenn mittels des hier beschriebenen Verfahrens die gewünschte Verbindung des Typs

M^{A}Yₙ(AzuH) (I)

als viskoses Öl erhalten wird, welches mit Blick auf weitere Umsetzungen schwierig handhabbar ist. In einem solchen Fall kann in Schritt D. das Hinzufügen eines Neutralliganden Y, insbesondere eines aprotisch-polaren Lösungsmittels, vorgesehen sein. Vorteilhaft ist der Neutralligand Y ausgewählt aus der Gruppe bestehend aus Ethern (= Alkoxyalkanen), Thioethern und tertiären Aminen, insbesondere aus der Gruppe bestehend aus Ethern (= Alkoxyalkanen) und Thioethern. Denn auf diese Weise kann einfach eine Kristallisation des jeweiligen Produktes herbeigeführt und/oder beschleunigt werden. Dabei ist im Falle eines Kronenethers darauf zu achten, dass ein Innendurchmesser des ausgewählten Kronenethers und ein lonenradius des jeweiligen Metallkations M^{A+} miteinander korrespondieren.

Mit dem Begriff "Alkoxyalkan" ist vorliegend jeder Sauerstoff enthaltende Ether gemeint, beispielsweise auch Glycol-dialkylether und Kronenether. Der Begriff "Thioether" umfasst sowohl nicht-cyclische als auch cyclische Thioether.

Als Glycol-dialkylether werden auch terminal dialkylierte Mono-, Di- oder Trialkylenglycoldialkylether verstanden. Der als Neutralligand Y vorgesehene Glycol-dialkylether ist in einer Variante des Verfahrens ausgewählt aus der Gruppe bestehend aus einem Monoethylenglycoldialkylether, einem Diethylenglycoldialkylether, einem Triethylengylcoldialkylether, einem Monopropylenglycoldialkylether, einem Dipropylenglycoldialkylether, einem Tripropylenglycoldialkylether, einem Monooxomethylendialkylether, einem Dioxomethylendialkylether und einem Trioxomethylendialkylether, deren Isomerenmischungen, und Mischungen davon.

In einer weiteren Ausführungsform des Verfahrens ist der als Neutralligand Y vorgesehene Glycol-dialkylether ausgewählt aus der Gruppe bestehend aus Ethylenglycoldimethylether CH₃-O-CH₂CH₂-O-CH₃, Ethylenglycoldiethylether CH₃CH₂-O-CH₂CH₂-O-CH₂CH₃, Ethylenglycoldi-*n*-propylether CH₃CH₂CH₂-O-CH₂CH₂-O-CH₂CH₂CH₃, Ethylenglycoldi*iso-*propylether (CH₃)₂CH-O-CH₂CH₂-O-CHO(CH₃ )₂, Ethylenglycoldi-*n*-butylether CH₃CH₂CH₂CH₂-O-CH₂CH₂-O-CH₂CH₂CH₂CH₃, Ethylenglycoldi-*n*-pentylether CH₃CH₂CH₂CH₂CH₂-O-CH₂CH₂-O-CH₂CH₂CH₂CH₂CH₃, Ethylenglycoldi-*n*-hexylether CHsCH₂CH₂CH₂CH₂CH₂-O-CH₂CH₂-O-CH₂CH₂CH₂CH₂CH₂CH₃, Ethylenglycoldiphenylether C₆H₅-O-CH₂CH₂-O-C₆H₅, Ethylenglycoldibenzylether C₆H₅CH₂-O-CH₂CH₂-O-CH₂C₆H₅, Diethylenglycoldimethylether CH₃-O-CH₂CH₂-O-CH₂CH₂-O-CH₃, Diethylenglycoldiethylether CH₃CH₂-O-CH₂CH₂-O-CH₂CH₂-O-CH₂CH₃, Diethylenglycoldi-n-propylether CH₃CH₂CH₂-O-CH₂CH₂-O-CH₂CH₂-O-CH₂CH₂CH₃, Diethylenglycoldi-*iso*-propylether (CH₃)₂CH-O-CH₂CH₂-O-CH₂CH₂-O-CH(CH₃)₂, Diethylenglycoldi-*n*-butylether CH₃CH₂CH₂CH₂-O-CH₂CH₂-O-CH₂CH₂-O-CH₂CH₂CH₂CH₃, Diethylenglycoldi-*n*-pentylether CH₃CH₂CH₂CH₂CH₂-O-CH₂CH₂-O-CH₂CH₂-O-CH₂CH₂CH₂CH₂CH₃, Diethylenglycoldi-*n*-hexylether CH₃CH₂CH₂CH₂CH₂CH₂-O-CH₂CH₂-O-CH₂CH₂-O-CH₂CH₂CH₂CH₂CH₂CH₃, Diethylenglycoldiphenylether C₆H₅-O-CH₂CH₂-O-CH₂CH₂-O-C₆H₅, Diethylenglycoldibenzylether C₆H₅CH₂-O-CH₂CH₂-O-CH₂CH₂-O-CH₂C₆H₅, Propylenglycoldimethylether CH₃-O-CH₂CH₂CH₂-O-CH₃, Propylenglycoldiethylether CH₃CH₂-O-CH₂CH₂CH₂-O-CH₂CH₃, Propylenglycoldi-*n-*propylether CH₃CH₂CH₂-O-CH₂CH₂CH₂-O-CH₂CH₂CH₃, Propylenglycoldi-*n*-butylether CH₃CH₂CH₂CH₂-O-CH₂CH₂CH₂-O-CH₂CH₂CH₂CH₃, Propylenglycoldi-*n*-pentylether CH₃CH₂CH₂CH₂CH₂-O-CH₂CH₂CH₂-O-CH₂CH₂CH₂CH₂CH₃, Propylenglycoldi-n-hexylether CH₃CH₂CH₂CH₂CH₂CH₂-O-CH₂CH₂CH₂-O-CH₂CH₂CH₂CH₂CH₂CH₃, Propylenglycoldiphenylether C₆H₅-O-CH₂CH₂CH₂-O-C₆H₅, Propylenglycoldibenzylether C₆H₅CH₂-O-CH₂CH₂CH₂-O-CH₂C₆H₅, *iso*-Propylenglycoldimethylether CH₃-O-CH₂-CH(CH₃)-O-CH₃, *iso*-Propylenglycoldiethylether CH₃CH₂-O-CH₂-CH(CH₃)-O-CH₂CH₃, *iso*-Propylenglycoldi-n-propylether CH₃CH₂CH₂-O-CH₂-CH(CH₃)-O-CH₂CH₂CH₃, *iso*-Propylenglycoldi-iso-propylether (CH₃)₂CH-O-CH₂-CH (CH₃)-O-CH(CH₃)₂, *iso*-Propylenglycoldi-n-butylether CH₃CH₂CH₂CH₂-O-CH₂-CH(CH₃)-O-CH₂CH₂CH₂CH₃, *iso*-Propylenglycoldi-n-pentylether CH₃CH₂CH₂CH₂CH₂-O-CH₂-CH(CH₃)-O-CH₂CH₂CH₂CH₂CH₃, *iso*-Propylenglycoldi-*n-*hexylether CH₃CH₂CH₂CH₂CH₂CH₂-O-CH₂-CH(CH₃)-O-CH₂CH₂CH₂CH₂CH₂CH₃, *iso*-Propylenglycoldiphenylether C₆H₅-O-CH₂-CH(CH₃)-O-C₆H₅, *iso*-Propylenglycoldibenzylether C₆H₅CH₂-O-CH₂-CH(CH₃)-O-CH₂C₆H₅, Dipropylenglycoldimethylether CH₃OCH₂CH₂CH₂OCH₂CH₂CH₂OCH₃, *Di-iso-*propylenglycoldi-*n*-propylether CH₃CH₂CH₂-O-CH₂CH(CH₃)-OCH₂CH(CH₃)-O-CH₂CH₂CH₃, Tripropylenglycoldimethylether CH₃OCH₂CH₂CH₂OCH₂CH₂CH₂OCH₂CH₂CH₂OCH₃, Dipropylenglycoldibutylether CH₃CH₂CH₂CH₂OCH₂CH₂CH₂OCH₂CH₂CH₂OCH₂CH₂CH₂CH₃, Tripropylenglycoldibutylether CH₃CH₂CH₂CH₂OCH₂CH₂CH₂OCH₂CH₂CH₂OCH₂CH₂CH₂OCH₂CH₂CH₂CH₃, sowie deren Mischungen. Die angegebenen Glycolether können auch als Isomerengemische verwendet werden.

Als tertiäres Amin kann beispielsweise Di-*iso-*propylethylamin (DIPEA) oder *N,N,N,N-*Tetramethylethylendiamin (TMEDA) vorgesehen sein.

Kronenether sind makrocyclische Polyether, deren Ring aus mehreren Ethyloxy-Einheiten (-CH₂-CH₂-O-) besteht. Sie besitzen die Fähigkeit zur Komplexierung von Kationen unter Bildung von Coronaten. Bei Übereinstimmung von Innendurchmesser eines Kronenethers und lonenradius eines Metallkations werden äußerst stabile Komplexe gebildet. Beispielsweise ist der Kronenether [18]-Krone-6 ein sehr guter Ligand für ein Kalium-Ion, während sich z. B. der Kronenether [15]-Krone-5 besonders gut für die Komplexierung eins Natrium-Ions eignet. Ein Lithium-Ion kann z. B. sehr gut von dem Kronenether [12]-Krone-4 komplexiert werden. Über den Austausch der Sauerstoff-Atome gegen andere Heteroatome, z. B. Stickstoff, Phosphor oder Schwefel, sind Aza-, Phospha- oder Thia-Derivate der Kronenether zugänglich.

In einer anderen Variante des Verfahrens ist der Neutralligand Y ein Kronenether, welcher ausgewählt ist aus der Gruppe bestehend aus makrocyclischen Polyethern und deren Aza-, Phospha- und Thia-Derivaten, wobei ein Innendurchmesser des Kronenethers und ein lonenradius von M^{A} miteinander korrespondieren.

Eine weitere Ausführungsform des Verfahrens sieht vor, dass
- das Lösungsmittel S_{P} und der Neutralligand Y
   und/oder
- der Neutralligand Y und der Elektronenpaardonator E
   und/oder
- das Lösungsmittel S_{P} und der Elektronenpaardonator E
   mischbar oder identisch sind.

Gemäß einer noch anderen Ausführungsform des Verfahrens ist das Lösungsmittel S_{P} und/oder der Neutralligand Y ein Ether. Beispielsweise kann der Ether ein nicht-cyclischer oder ein cyclischer Ether sein ausgewählt aus der Gruppe bestehend aus Dialkylethern, Cyclopentylmethylether, Tetrahydrofuran, 2-Methyltetrahydrofuran, 3-Methyltetrahydrofuran, Tetrahydropyran, 1,4-Dioxan, und deren Isomeren, und Mischungen davon, insbesondere aus der Gruppe bestehend aus Diethylether, Methyl-*tert-*butylether, Di-n-propylether, Di-*iso*-propylether, Di-n-butylether, Di-*iso*-butylether, Di-*tert-*butylether, Tetrahydrofuran, 2-Methyltetrahydrofuran, 3-Methyltetrahydrofuran, Tetrahydropyran, 1,4-Dioxan, und deren Isomeren, und Mischungen davon.

Vorteilhaft an dem hier beanspruchten Verfahren zur Herstellung von Verbindungen gemäß der allgemeinen Formel

M^{A}Yₙ(AzuH) (I)

ist, dass es einfach und reproduzierbar und -je nach Wahl der Edukte - nachhaltig und relativ kostengünstig durchführbar ist. Die Zielverbindungen werden zudem in hoher Reinheit von mindestens 97 %, vorteilhaft von mehr als 97 %, insbesondere von mehr als 98 % oder 99 %, und in guten Ausbeuten, auch Raum-Zeit-Ausbeuten, von ≥ 60 % erhalten. Im Allgemeinen kann das Endprodukt noch Reste von Lösungsmitteln oder beispielsweise Verunreinigungen aus den Edukten enthalten. Dem Fachmann ist bekannt, dass der Gehalt an Verunreinigungen, wie z. B. von Lösungsmitteln, mittels gaschromatographischer Verfahren (GC), ggf. mit Massenspektrometrie-Kopplung (GC-MS), bestimmt werden kann.

Unter "Raum-Zeit-Ausbeute" wird hier eine pro Raum und Zeit innerhalb eines Reaktionsbehältnisses bzw. Reaktionsgefäßes gebildete Produktmenge verstanden.

Insbesondere die Herstellung von Verbindungen gemäß der allgemeinen Formel

M^{A}Yₙ(AzuH) (I),

wobei AzuH = GuaH = 7-*iso*-Propyl-1,4-dimethyl-8-*H*-dihydroazulen, ist vorteilhafterweise als nachhaltig zu bewerten. Denn in diesem Fall können die Zielverbindungen, welche Cyclopentadienyl-artige Liganden umfassen, ausgehend von kostengünstigen nachwachsenden Rohstoffen hergestellt werden. Der Richtpreis des ausgehend von dem Naturstoff Guajol und anderen Azulenbildnern durch einfache Dehydratisierung und Dehydrierung (T. Shono, N. Kise, T. Fujimoto, N. Tominaga, H. Morita, J. Org. Chem. 1992, 57, 26, 7175 - 7187; CH 314 487 A (B. Joos) 29.01.1953) zugänglichen partialsynthetischen Guajazulens beträgt 74,70 € pro 25g (Sigma Aldrich, 12/2020).

Besonders vorteilhaft ist, dass während der Umsetzung des Azulens oder Azulenderivats mit dem wenigstens einen hydridischen Reduktionsmittel Z wie beispielsweise Lithiumtriethylborhydrid, in den meisten Fällen - außer z. B. bei Verwendung wenigstens eines Alkalimetallaluminiumtetrahydrids M^{A}AlH₄ - ausschließlich Nebenprodukte, wie z. B. Triethylboran, anfallen, welche in dem verwendeten, insbesondere aprotisch-polaren, Lösungsmittel S_{P}, eine sehr gute Löslichkeit zeigen und somit leicht von der jeweiligen Zielverbindung

M^{A}Yₙ(AzuH) (I)

abtrennbar sind. Die sehr gute Löslichkeit von Nebenprodukten, wie z. B. Triethylboran, ist insbesondere in cyclischen und nicht-cyclischen Ethern, wie z. B. Et₂O, Dimethylether, Diethylether, Methyl-*tert*-butylether, Di-*n-*propylether, Di*i*sopropylether, deren Isomeren, und Mischungen davon, gegeben. Dagegen sind die mittels des hier beschriebenen Verfahrens erhältlichen Alkalimetall-*H-*dihydroazulenide des Typs

M^{A}Yₙ(AzuH) (I)

in dem, insbesondere aprotisch-polaren, Lösungsmittel S_{P}, insbesondere in nicht-cyclischen Ethern wie z. B. Et₂O, Dimethylether, Diethylether, Methyl-*tert-*butylether, Di-*n*-propylether, Di*i*sopropylether, deren Isomreren, und Mischungen, unlöslich oder nahzu unlöslich. Mithin kann das Produkt mittels eines einfachen Filtrationsschritts und/oder durch Zentrifugieren und/oder Dekantieren quantitativ abgetrennt werden. Die in Form eines Feststoffs, einer Flüssigkeit oder eines Öls erhaltene Verbindung gemäß der allgemeinen Formel

M^{A}Yₙ(AzuH) (I)

kann gelagert und/oder oder unmittelbar mit einer oder mehreren anderen Verbindungen, z. B. einem Metallkomplex mit anionischen Abgangsgruppen, z. B. einem Metallsalz, z. B. FeCl₂, RuCl₂, CoCl₂ oder Pd(OAc)₂, oder einem Organo-Metallpräkursor mit anionischen Abgangsgruppen wie z. B. [Rh(cod)Cl]₂ (cod = 1,5-Cyclooctadien), [PtMe₃I]₄, [(*p*-Cymen)RuCl₂]₂, [CpCrCl₂] oder [Ir(nbd)Cl]₂ (nbd = Norbornadien) zur Reaktion gebracht werden. Alternativ oder ergänzend kann das jeweilige Produkt des Typs

M^{A}Yₙ(AzuH) (I)

einer Isomerentrennung und/oder einem oder mehreren Reinigungsschritten unterzogen werden, z. B. wenigstens einem Waschschritt mit einem, insbesondere aprotisch-polaren, Lösungsmittel. Letzteres kann ein etherisches oder nicht-etherisches Lösungsmittel sein. Wurde als Lösungsmittel S_{P} z. B. Et₂O gewählt und soll das Produkt als Et₂O-Addukt, z. B.

M^{A}(Et₂O)₂(AzuH) (I),

vorliegen, empfiehlt es sich, für den Waschschritt ebenfalls Et₂O zu wählen. Ist dagegen ein solvensfreies, insbesondere etherfreies, Produkt

M^{A}Yₙ(AzuH) (I),

wobei n = 0, gewünscht, sollte das Lösungsmittel für den Waschschritt vorteilhafterweise ein aprotisch-unpolares sein, beispielsweise ausgewählt aus der Gruppe bestehend aus *n*-Pentan, *n*-Hexan, *n*-Heptan, *n*-Octan, *n*-Nonan, *n*-Decan, *n*-Undecan, *n*-Dodecan, *n*-Tridecan, *n*-Tetradecan, Cyclopentan, Cyclohexan, Cycloheptan, 1-Octen, 1-Nonen, 1-Decen, 1-Undecen, 1-Dodecen, Benzol, Toluol oder Xylol, deren Isomeren, und deren Mischungen. Nach dem Waschen mit einem der vorgenannten Lösungsmittel, insbesondere einem relativ niedrigsiedenden, wie z. B. *n*-Pentan und/oder *n*-Hexan, liegt die jeweilige Verbindung gemäß der allgemeinen Formel

M^{A}Yₙ(AzuH) (I)

in hoher Reinheit von mindestens 97 %, vorteilhaft von mehr als 97 %, insbesondere von mehr als 98 % oder 99 %, und guter Ausbeute, auch Raum-Zeit-Ausbeuten, von ≥ 60 % vor. Dabei kann es sich um eine solvensfreie Verbindung des Typs

M^{A}Yₙ(AzuH) (I),

wobei n = 0, handeln oder beispielsweise um ein Addukt, wobei Y = ein Kronenether und n = 1. Fällt das Produkt gemäß der allgemeinen Formel

M^{A}Yₙ(AzuH) (I)

als Feststoff an, liegt dieser in der Regel laut NMR-spektroskopischer Untersuchung bereits in Reinform, insbesondere als Addukt, vor. Eine Aufreinigung des Feststoffs ist also vor einer weiteren Verwendung üblicherweise nicht erforderlich, sofern das Addukt für die geplante Reaktion problemlos als Edukt einsetzbar ist.

Nach einer Ausführungsform des Verfahrens ist das Alkalimetall M^{A} ausgewählt aus der Gruppe bestehend aus Li, Na und K.

Gemäß einer weiteren Variante des Verfahrens ist wenigstens ein hydridisches Reduktionsmittel Z ausgewählt aus der Gruppe bestehend aus Alkalimetallhydriden M^{A}H, Alkalimetallbortetrahydriden M^{A}BH₄, Alkalimetalltrialkylborhydriden M^{A}[(R^{C})₃BH], Alkalimetallaluminiumtetrahydriden M^{A}AlH₄, Alkalimetalltrialkylaluminiumhydriden M^{A}[(R^{D})₃AlH], Alkalimetall-dihydrido-bis(dialkoxy)-aluminaten M^{A}[AlH₂(OR^{E})₂], sowie deren Mischungen, wobei
i. die Reste R^{C} und R^{D} jeweils unabhängig voneinander ausgewählt sind aus der Gruppe bestehend aus primären, sekundären, tertiären Alkyl-, Alkenyl- und Alkinylresten mit 1 bis 10 Kohlenstoffatomen,
   wobei jeweils zwei Substituenten R^{C} oder zwei Substituenten R^{D} optional einen Ring bilden können,
   und
ii. die Reste OR^{E} unabhängig voneinander jeweils eine korrespondierende Base eines Glycolethers R^{E}OH sind.

Eine andere Variante des Verfahrens sieht vor, dass wenigstens ein hydridisches Reduktionsmittel Z ausgewählt ist aus der Gruppe bestehend aus Lithiumhydrid LiH, Natriumhydrid NaH, Kaliumhydrid KH, Lithiumbortetrahydrid LiBH₄, Natriumbortetrahydrid NaBH₄, Kaliumbortetrahydrid KBH₄, Lithiumtrialkylborhydriden Li[(R^{C})₃BH], Natriumtrialkylborhydriden Na[(R^{C})₃BH], Kaliumtrialkylborhydriden K[(R^{C})₃BH], Lithiumaluminiumtetrahydrid LiAlH₄, Natriumaluminiumtetrahydrid NaAlH₄, Kaliumaluminiumtetrahydrid KAlH₄, Lithiumtrialkylaluminiumhydrid Li[(R^{D})₃AlH], Natriumtrialkylaluminiumhydrid Na[(R^{D})₃AlH], Kaliumtrialkylaluminiumhydrid K[(R^{D})₃AlH], Lithium-dihydrido-bis(dialkoxy)-aluminaten Li[AlH₂(OR^{E})₂], Natrium-dihydrido-bis(dialkoxy)-aluminaten Na[AlH₂(OR^{E})₂], Kalium-dihydrido-bis(dialkoxy)-aluminaten K[AlH₂(OR^{E})₂], sowie deren Mischungen.

Beispiele für Lithiumtrialkylborhydride Li[(R^{C})₃BH] sind Lithiumtriethylborhydrid, welches z. B. als Lösung in Tetrahydrofuran (1,0 M oder 1,7 M) eingesetzt werden kann, und Lithium-tri-*sec*.-butylborhydrid-Lösung, welches im Handel unter dem Namen L-Selectride^{®} als Lösung in Tetrahydrofuran (1,0 M) erhältlich ist. Kommerziell erhältliche Natriumtrialkylborhydride Na[(R^{C})₃BH] sind z. B. Natriumtriethylborhydrid (1,0 M in THF) und Natrium-tri-*sec*.-butylborhydrid-Lösung (N-Selectride^{®}-Lösung, 1,0 M in THF). Beispiele für im Handel angebotene Kaliumtrialkylborhydride K[(R^{C})₃BH] sind das Kaliumtriethylborhydrid (1,0 M in THF) und Kalium-tri-sec.-butylborhydrid (K-Selectride^{®}-Lösung, 1,0 M in THF).

Beispiele für Alkalimetalltrialkylaluminiumhydride sind Verbindungen gemäß der allgemeinen Formel M^{A}[(R^{D})₃AlH], wobei M^{A} = Li, Na oder K und die Reste R^{D} unabhängig voneinander ausgewählt sind aus der Gruppe bestehend aus Methyl, Ethyl, Propyl, Butyl, Pentyl, Hexyl, sowie deren Isomeren. Beispielsweise kann der Einsatz von Li[Et₃AlH], Na[*i*Pr₃AlH] oder K[MeEt₂AlH] vorgesehen sein.

Die beiden Reste OR^{E} eines Alkalimetall-dihydrido-bis(dialkoxy)-aluminats gemäß der allgemeinen Formel M^{A}[AlH₂(OR^{E})₂] können identisch oder unterschiedlich sein. In einer Variante des Verfahrens ist vorgesehen, dass die Glycolether R^{E}OH unabhängig voneinander ausgewählt sind aus der Gruppe bestehend aus Monooxomethylenmonoethern, Monoethylenglycolmonoethern, Monopropylenglycolmonoethern, und deren Isomerenmischungen, und Mischungen davon.

Gemäß einer anderen Variante ist die Verwendung wenigstens eines Alkalimetall-dihydrido-bis(dialkoxy)-aluminats gemäß der allgemeinen Formel M^{A}[AlH₂(OR^{E})₂] vorgesehen, wobei M^{A} = Li, Na oder K und die Reste OR^{E} unabhängig voneinander jeweils ausgewählt sind aus der Gruppe bestehend aus O-CH₂CH₂-O-CH₃, O-CH₂CH₂-O-CH₂CH₃, O-CH₂CH₂-O-CH₂CH₂CH₃, O-CH₂CH₂-O-CH(CH₃)₂, O-CH₂CH₂-O-CH₂CH₂CH₂CH₃, O-CH₂CH₂-O-CH₂CH₂CH₂CH₂CH₃, O-CH₂CH₂-O-CH₂CH₂CH₂CH₂CH₂CH₃, O-CH₂CH₂-O-C₆H₅, O-CH₂CH₂-O-CH₂C₆H₅, O-CH₂CH₂CH₂-O-CH₃, O-CH₂CH₂CH₂-O-CH₂CH₃, O-CH₂CH₂CH₂-O-CH₂CH₂CH₃, O-CH₂CH₂CH₂-O-CH(CH₃)₂, O-CH₂CH₂CH₂-O-CH₂CH₂CH₂CH₃, O-CH₂CH₂CH₂-O-CH₂CH₂CH₂CH₂CH₃, O-CH₂CH₂CH₂-O-CH₂CH₂CH₂CH₂CH₂CH₃, O-CH₂CH₂CH₂-O-C₆H₅, O-CH₂CH₂CH₂-O-CH₂C₆H₅, O-CH(CH₃)-CH₂-O-CH₃, O-CH(CH₃)-CH₂-O-CH₂CH₃, O-CH(CH₃)-CH₂-O-CH₂CH₂CH₃, O-CH(CH₃)-CH₂-O-CH(CH₃)₂, O-CH(CH₃)-CH₂-O-CH₂CH₂CH₂CH₃, O-CH(CH₃)-CH₂-O-CH₂CH₂CH₂CH₂CH₃, O-CH(CH₃)-CH₂-O-CH₂CH₂CH₂CH₂CH₂CH₃, O-CH(CH₃)-CH₂-O-C₆H₅, O-CH(CH₃)-CH₂-O-CH₂C₆H₅, O-CH(CH₃)-CH₂-O-C₄H₉, und O-CH(CH₃)-CH₂-O-C₃H₇, sowie deren Isomeren, und deren Mischungen. Ein Beispiel für hydridische Reduktionsmittel dieses Typs ist kommerziell erhältliches Natrium-bis(2-methoxy-ethoxy)-aluminium-dihydrid (Na[AlH₂(OC₂H₄OCH₃)₂), welches auch bekannt ist als Synhydrid, Red-Al^{®} und Vitrid^{®}. Dieses Reduktionsmittel ist in Form einer viskosen, toluolischen Lösung kommerziell erhältlich, wobei ein ungefährer Gewichtsanteil von > 60w% angegeben wird.

Ein weiterer Vertreter dieser Gruppe hydridischer Reduktionsmittel ist Na[AlH₂(OC₂H₄OC₄H₉)₂].

Eine Ausführungsvariante des Verfahrens sieht vor, dass ein molares Verhältnis Azu : Z wenigstens 1,00 : 2,00 beträgt. Es kann also beispielsweise auch 1,00 : 1,00 betragen. In einer anderen Ausführungsform des Verfahrens beträgt das molare Verhältnis Azu : Z zwischen 1,00 : 2,00 und 2,00 : 1,00, vorteilhafterweise zwischen 1,00 : 1,75 und 1,75 : 1,00, insbesondere zwischen 1,00 : 1,50 und 1,50 : 1,00, beispielsweise 1,00 : 1,95 oder 1,95 : 1,00 oder 1,00 : 1,90 oder 1,90 : 1,00 oder 1,00 : 1,85 oder 1,85 : 1,00 oder 1,00 : 1,80 oder 1,80 : 1,00 oder 1,00 : 1,70 oder 1,70 : 1,00 oder 1,00 : 1,65 oder 1,65 : 1,00 oder 1,00 : 1,60 oder 1,60 : 1,00 oder 1,00 : 1,55 oder 1,55 : 1,00 oder 1,00 : 1,45 oder 1,45 : 1,00 oder 1,00 : 1,40 oder 1,40 : 1,00 oder 1,00 : 1,35 oder 1,35 : 1,00 oder 1,00 : 1,30 oder 1,30 : 1,00 oder 1,00 : 1,25 oder 1,25 : 1,00 oder 1,00 : 1,20 oder 1,20 : 1,00 oder 1,00 : 1,15 oder 1,15 : 1,00 oder 1,00 : 1,10 oder 1,10 : 1,00 oder 1,00 : 1,05 oder 1,05 : 1,00. In einer noch anderen Ausführungform beträgt das molare Verhältnis Azu : Z 1,00 : 1,00.

Gemäß einer weiteren Ausführungsform des Verfahrens weist der Elektronenpaardonator E wenigstens ein Donoratom ausgewählt aus der Gruppe bestehend aus einem Stickstoffatom, einem Phosphoratom, einem Sauerstoffatom und einem Schwefelatom auf. Dabei ist wenigstens ein Donoratom des jeweiligen Elektronenpaardonators E zur Ausbildung einer, insbesondere koordinativen, Bindung mit einem Elektronenpaarakzeptor, insbesondere AlH₃, geeignet.

In einer anderen Ausführungsvariante des Verfahrens ist vorgesehen, dass der Elektronenpaardonator E ein, zwei, drei, vier oder fünf Donoratome aufweist. Dabei ist wenigstens ein Donoratom des jeweiligen Elektronenpaardonators E zur Ausbildung einer, insbesondere koordinativen, Bindung mit einem Elektronenpaarakzeptor wie AlH₃ geeignet.

Nach einer weiteren Ausführungsform des Verfahrens beträgt ein molares Verhältnis Z : E wenigstens 1,00 : 5,00. Es kann also beispielsweise auch 1,00 : 1,00 betragen. In einer anderen Ausführungsform des Verfahrens beträgt das molare Verhältnis Z : E zwischen 1,00 : 5,00 und 5,00 : 1,00, vorteilhafterweise zwischen 1,00 : 4,50 und 4,50 : 1,00, insbesondere zwischen 1,00 : 4,00 und 4,00 : 1,00, beispielsweise 1,00 : 3,75 oder 3,75 : 1,00 oder 1,00 : 3,50 oder 3,50 : 1,00 oder 1,00 : 3,25 oder 3,25 : 1,00 oder 1,00 : 3,00 oder 3,00 : 1,00 oder 1,00 : 2,75 oder 2,75 : 1,00 oder 1,00 : 2,50 oder 2,50 : 1,00 oder 1,00 : 2,25 oder 2,25 : 1,00 oder 1,00 : 2,00 oder 2,00 : 1,00 oder 1,00 : 1,75 oder 1,75 : 1,00 oder 1,00 : 1,50 oder 1,50 : 1,00 oder 1,00 : 1,25 oder 1,25 : 1,00. In einer noch anderen Ausführungform beträgt das molare Verhältnis Z : E 1,00 : 1,00.

Gemäß einer weiteren Variante des Verfahrens ist vorgesehen, dass das hydridische Reduktionsmittel Z wenigstens zwei hydridische Reduktionsmittel Zᵣ umfasst, wobei r jeweils eine ganze natürliche Zahl ≥ 1 ist. Das bedeutet, dass das hydridische Reduktionsmittel Z beispielsweise ein erstes hydridisches Reduktionsmittel Z₁ und ein zweites hydridisches Reduktionsmittel Z₂ umfasst und ggf. auch ein drittes hydridisches Reduktionsmittel Z₃ usw. enthalten kann. Die zwei oder mehr hydridischen Reduktionsmittel Zᵣ können getrennt voneinander oder als Gemisch zweier oder mehrerer hydridischer Reduktionsmittel Zᵣ bereitgestellt werden. Zudem können die zwei oder mehr hydridischen Reduktionsmittel Zᵣ mit identischen oder unterschiedlichen Massenanteilen vorgesehen sein.

Eine andere Ausführungsform des Verfahrens sieht vor, dass das hydridische Reduktionsmittel Z aus genau einem oder genau zwei hydridischen Reduktionsmitteln besteht. Beispielsweise kann ein Gemisch bestehend aus einem ersten hydridischen Reduktionsmittel Z₁ und einem zweiten hydridischen Reduktionsmittel Z₂ vorgesehen sein. Dabei kann es sich um ein Gemisch von Lithiumhydrid und Diisobutylaluminiumhydrid (DIBAL) handeln.

In einem Gemisch zweier unterschiedlicher hydridischer Reduktionsmittel Z₁ und Z₂ kann ein molares Verhältnis Z₁ : Z₂ der beiden hydridischen Reduktionsmittel zwischen 1 : 10 und 10 : 1, also zwischen 0,1 und 10,0, betragen, vorteilhaft zwischen 1 : 8 und 8 : 1, besonders vorteilhaft zwischen 1 : 6 und 6 : 1, insbesondere zwischen 1 : 5 und 5 : 1. Das molare Verhältnis Z₁ : Z₂ kann also auch zwischen 1 : 9 und 9 : 1 oder zwischen 1 : 7 und 7 : 1 oder zwischen 1 : 4 und 4 : 1 oder zwischen 1 : 3 und 3 : 1 oder zwischen 1 : 2 und 2 : 1 betragen. Gemäß einer weiteren Ausführungsform ist ein molares Verhältnis Z₁ : Z₂ von 1 : 1 vorgesehen.

Bei Verwendung wenigstens eines Alkalimetallaluminiumtetrahydrids M^{A}AlH₄ als ein erstes hydridisches Reduktionsmittel Z₁ ist gemäß Schritt C. des hier beschriebenen Verfahrens vorgesehen, dass
i. wenigstens ein zweites hydridisches Reduktionsmittel Z₂ ausgewählt aus der Gruppe bestehend aus Alkalimetallhydriden M^{A}H,
   und/oder
ii. wenigstens ein Elektronenpaardonator E, wobei der Elektronenpaardonator E wenigstens ein Donoratom aufweist, wobei H₂O ausgenommen ist,
zur Verfügung gestellt wird.

Eine vorteilhafte Ausführungsvariante des Verfahrens sieht wenigstens ein erstes hydridisches Reduktionsmittel Z₁ und wenigstens ein zweites hydridisches Reduktionsmittel Z₂ vor, wobei
i. wenigstens ein erstes hydridisches Reduktionsmittel Z₁ ausgewählt ist aus der Gruppe bestehend aus Alkalimetallaluminiumtetrahydriden M^{A}AlH₄
   und
ii. wenigstens ein zweites hydridisches Reduktionsmittel Z₂ ausgewählt ist aus der Gruppe bestehend aus Alkalimetallhydriden M^{A}H.

Beispielsweise kann als das erste hydridische Reduktionsmittel Z₁ LiAlH₄ und als das zweite hydridische Reduktionsmittel Z₂ LiH gewählt werden. In diesem Fall wird angefallenes und/oder anfallendes Aluminiumtrihydrid AlH₃ bzw. (AlH₃)ₓ durch den, insbesondere in aprotisch-polaren Lösungsmitteln wie Ethern, z. B. Tetrahydrofuran oder Diethylether, schwer löslichen bis unlöslichen Elektronenpaardonator LiH bzw. durch dessen Hydrid-Anion H⁻ abgefangen. Dabei wird vorteilhafterweise ohne weiteres Zutun das erste hydridische Reduktionsmittel LiAlH₄ regeniert. Mithin steht das für die Umsetzung mit dem Azulen oder dem Azulenderivat eingesetzte erste hydridische Reduktionsmittel Z₁, welches in dem jeweiligen Lösungsmittel S_{P} üblicherweise eine gute bis sehr gute Löslichkeit aufweist, erneut als lösliches, hydridübertragendes Reagenz zur Verfügung. Folglich kann das relativ kostenintensive erste hydridische Reduktionsmittel LiAlH₄-bezogen auf das jeweilige Edukt Azulen oder Azulenderivat - vorteilhaft auch in substöchiometrischer Menge, inbesondere in katalytischer Menge, eingesetzt werden. Dies ist mit Blick auf eine großtechnische Anwendung der hier beschriebenen Ausführungsvariante besonders vorteilhaft, und zwar aus (atom-)ökonomischer und ökologischer Sicht. Denn zum einen wird eine geringere Menge des relativ teuren ersten hydridischen Reduktionsmittels Z₁ benötigt, und zum anderen wird es vollständig verbraucht. Hinsichtlich des relativ kostengünstigen und in großen Mengen kommerziell verfügbaren zweiten hydridischen Reduktionsmittels Lithiumhydrid kann es, insbesondere aufgrund seines Löslichkeitsverhaltens, vorteilhaft sein, einen Überschuss - bezogen auf das jeweils eingesetzte Edukt Azulen oder Azulenderivat - einzusetzen. Ggf. nicht umgesetztes Lithiumhydrid kann mittels eines einfachen Filtrationsschritts, ggf. über Silica, z. B. Celite^{®}, und/oder durch Zentrifugieren und/oder Dekantieren quantitativ abgetrennt werden. Eine Verunreinigung der mittels des hier beschriebenen Verfahrens herstellbaren Verbindungen gemäß der allgemeinen Formel

M^{A}Yₙ(AzuH) (I)

durch Lithiumhydrid kann somit ausgeschlossen werden. Die jeweilige Zielverbindung des Typs

M^{A}Yₙ(AzuH) (I)

zeigt üblicherweise eine gute bis sehr gute Löslichkeit in dem verwendeten, insbesondere aprotisch-unpolaren, Lösungsmittel S_{P}.

Die Verwendung von Lithiumhydrid ist auch aus Sicherheitsgründen vorteilhaft. Denn im Unterschied zu anderen Hydrid-übertragenden Reagenzien ist es an Luft nicht pyrophor und infolge Passivierung sogar kurze Zeit an Luft handhabbar.

Dass diese Verfahrensführung aus (atom-)ökonomischer und ökologischer Sicht besonders vorteilhaft ist, lässt sich anhand der drei nachfolgend angeführten Reaktionsgleichungen (1) bis (3) einfach nachvollziehen:

(1) Azu + Li[AlH_{4]} → Li(AzuH) + [AlH₃]ₓ

(2) [AlH₃]ₓ + LiH → Li[AlH₄]

(3) Azu + LiH → Li(AzuH)

Dabei sind Azu und AzuH wie weiter oben definiert. Li(AzuH) umfasst auch dessen Lösungsmittelsolvate, in denen solvatisierte Lithium-Ionen vorliegen.

Eine weitere Ausführungsform des beanspruchten Verfahrens sieht vor, dass wenigstens ein erstes hydridisches Reduktionsmittel Z₁ ausgewählt ist aus der Gruppe bestehend aus Alkalimetallaluminiumtetrahydriden M^{A}AlH₄ und wenigstens ein zweites hydridisches Reduktionsmittel Z₂ ausgewählt ist aus der Gruppe bestehend aus Alkalimetallhydriden M^{A}H,
wobei
a) ein molares Verhältnis Azu : Z₁ wenigstens 1,0 : 1,0 beträgt,
   und
b) ein molares Verhältnis Z₁ : Z₂ wenigstens 1 : 250 beträgt.

Vorteilhaft beträgt das molare Verhältnis Azu : Z₁ (Unterpunkt a)) zwischen 1,0 : 1,0 und 20,0 : 1,0, besonders vorteilhaft zwischen 1,1 : 1,0 und 20,0 : 1,0, insbesondere zwischen 1,1 : 1,0 und 19,9 : 1,0, beispielsweise 19,8 : 1,0 oder 19,7 : 1,0 oder 19,6 : 1,0 oder 19,5 : 1,0 oder 19,4 : 1,0 oder 19,3 : 1,0 oder 19,2 : 1,0 oder 19,1 : 1,0 oder 19,0 : 1,0 oder 18,9 : 1,0 oder 18,8 : 1,0 oder 18,7 : 1,0 oder 18,6 : 1,0 oder 18,5 : 1,0 oder 18,4 : 1,0 oder 18,3 : 1,0 oder 18,2 : 1,0 oder 18,1 : 1,0 oder 18,0 : 1,0 oder 17,9 : 1,0 oder 17,8 : 1,0 oder 17,7 : 1,0 oder 17,6 : 1,0 oder 17,5 : 1,0 oder 17,4 : 1,0 oder 17,3 : 1,0 oder 17,2 : 1,0 oder 17,1 : 1,0 oder 17,0 : 1,0 oder 16,9 : 1,0 oder 16,8 : 1,0 oder 16,7 : 1,0 oder 16,6 : 1,0 oder 16,5 : 1,0 oder 16,4 : 1,0 oder 16,3 : 1,0 oder 16,2 : 1,0 oder 16,1 : 1,0 oder 16,0 : 1,0 oder 15,9 : 1,0 oder 15,8 : 1,0 oder 15,7 : 1,0 oder 15,6 : 1,0 oder 15,5 : 1,0 oder 15,4 : 1,0 oder 15,3 : 1,0 oder 15,2 : 1,0 oder 15,1 : 1,0 oder 15,0 : 1,0 oder 14,9 : 1,0 oder 14,8 : 1,0 oder 14,7 : 1,0 oder 14,6 : 1,0 oder 14,5 : 1,0 oder 14,4 : 1,0 oder 14,3 : 1,0 oder 14,2 : 1,0 oder 14,1 : 1,0 oder 14,0 : 1,0 oder 13,9 : 1,0 oder 13,8 : 1,0 oder 13,7 : 1,0 oder 13,6 : 1,0 oder 13,5 : 1,0 oder 13,4 : 1,0 oder 13,3 : 1,0 oder 13,2 : 1,0 oder 13,1 : 1,0 oder 13,0 : 1,0 oder 12,9 : 1,0 oder 12,8 : 1,0 oder 12,7 : 1,0 oder 12,6 : 1,0 oder 12,5 : 1,0 oder 12,4 : 1,0 oder 12,3 : 1,0 oder 12,2 : 1,0 oder 12,1 : 1,0 oder 12,0 : 1,0 oder 11,9 : 1,0 oder 11,8 : 1,0 oder 11,7 : 1,0 oder 11,6 : 1,0 oder 11,5 : 1,0 oder 11,4 : 1,0 oder 11,3 : 1,0 oder 11,2 : 1,0 oder 11,1 : 1,0 oder 11,0 : 1,0 oder 10,9 : 1,0 oder 10,8 : 1,0 oder 10,7 : 1,0 oder 10,6 : 1,0 oder 10,5 : 1,0 oder 10,4 : 1,0 oder 10,3 : 1,0 oder 10,2 : 1,0 oder 10,1 : 1,0 oder 10,0 : 1,0 oder 9,9 : 1,0 oder 9,8 : 1,0 oder 9,7 : 1,0 oder 9,6 : 1,0 oder 9,5 : 1,0 oder 9,4 : 1,0 oder 9,3 : 1,0 oder 9,2 : 1,0 oder 9,1 : 1,0 oder 9,0 : 1,0 oder 8,9 : 1,0 oder 8,8 : 1,0 oder 8,7 : 1,0 oder 8,6 : 1,0 oder 8,5 : 1,0 oder 8,4 : 1,0 oder 8,3 : 1,0 oder 8,2 : 1,0 oder 8,1 : 1,0 oder 8,0 : 1,0 oder 7,9 : 1,0 oder 7,8 : 1,0 oder 7,7 : 1,0 oder 7,6 : 1,0 oder 7,5 : 1,0 oder 7,4 : 1,0 oder 7,3 : 1,0 oder 7,2 : 1,0 oder 7,1 : 1,0 oder 7,0 : 1,0 oder 6,9 : 1,0 oder 6,8 : 1,0 oder 6,7 : 1,0 oder 6,6 : 1,0 oder 6,5 : 1,0 oder 6,4 : 1,0 oder 6,3 : 1,0 oder 6,2 : 1,0 oder 6,1 : 1,0 oder 6,0 : 1,0 oder 5,9 : 1,0 oder 5,8 : 1,0 oder 5,7 : 1,0 oder 5,6 : 1,0 oder 5,5 : 1,0 oder 5,4 : 1,0 oder 5,3 : 1,0 oder 5,2 : 1,0 oder 5,1 : 1,0 oder 5,0 : 1,0 oder 4,9 : 1,0 oder 4,8 : 1,0 oder 4,7 : 1,0 oder 4,6 : 1,0 oder 4,5 : 1,0 oder 4,4 : 1,0 oder 4,3 : 1,0 oder 4,2 : 1,0 oder 4,1 : 1,0 oder 4,0 : 1,0 oder 3,9 : 1,0 oder 3,8 : 1,0 oder 3,7 : 1,0 oder 3,6 : 1,0 oder 3,5 : 1,0 oder 3,4 : 1,0 oder 3,3 : 1,0 oder 3,2 : 1,0 oder 3,1 : 1,0 oder 3,0 : 1,0 oder 2,9 : 1,0 oder 2,8 : 1,0 oder 2,7 : 1,0 oder 2,6 : 1,0 oder 2,5 : 1,0 oder 2,4 : 1,0 oder 2,3 : 1,0 oder 2,2 : 1,0 oder 2,1 : 1,0 oder 2,0 : 1,0 oder 1,9 : 1,0 oder 1,8 : 1,0 oder 1,7 : 1,0 oder 1,6 : 1,0 oder 1,5 : 1,0 oder 1,4 : 1,0 oder 1,3 : 1,0 oder 1,2 : 1,0.

Das molares Verhältnis Z₁ : Z₂ (Unterpunkt b)) beträgt vorteilhaft zwischen 1 : 250 und 20 : 1, besonders vorteilhaft zwischen 1 : 245 und 19 : 1, ganz besonders vorteilhaft zwischen 1 : 240 und 18 : 1, insbesondere zwischen 1 : 235 und 17 : 1. Das molare Verhältnis Z₁ : Z₂ kann also beispielsweise auch 1 : 230 oder 1 : 225 oder 1 : 220 oder 1 : 215 oder 1 : 210 oder 1 : 209 oder 1 : 208 oder 1 : 207 oder 1 : 206 oder 1 : 205 oder 1 : 204 oder 1 : 203 oder 1 : 202 oder 1 : 201 oder 1 : 200 oder 1: 199 oder 1 : 198 oder 1 : 197 oder 1 : 196 oder 1 : 195 oder oder 1 : 194 oder 1 : 193 oder 1 : 192 oder 1 : 191 oder 1 : 190 oder 1 : 185 oder 1 : 180 oder 1 : 175 oder 1 : 170 oder 1 : 165 oder 1 : 160 oder 1 : 155 oder 1 : 150 oder 1 : 145 oder 1 : 140 oder 1 : 135 oder 1 : 130 oder 1 : 125 oder 1 : 120 oder 1 : 115 oder 1 : 110 oder 1 : 105 oder 1 : 100 oder 1 : 95 oder 1 : 90 oder 1 : 85 oder 1 : 80 oder 1 : 75 oder 1 : 70 oder 1 : 65 oder 1 : 60 oder 1 : 55 oder 1 : 50 oder 1 : 45 oder 1 : 40 oder 1 : 35 oder 1 : 30 oder 1 : 25 oder 1 : 20 oder 1 : 19 oder 1 : 18 oder 1 : 17 oder 1 : 16 oder 1 : 15 oder 1 : 14 oder 1 : 13 oder 1 : 12 oder 1 : 11 oder 1 : 10 oder 1 : 9,5 oder 1 : 9 oder 1 : 8,5 oder 1 : 8 oder 1 : 7,5 oder 1 : 7 oder 1 : 6,5 oder 1 : 6 oder 1 : 5,5 oder 1 : 5 oder 1 : 4,5 oder 1 : 4 oder 1 : 3,5 oder 1 : 3 oder 1 : 2,5 oder 1 : 2 oder 1 : 1,5 oder 1 : 1,4 oder 1 : 1,3 oder 1 : 1,2 oder 1 : 1,1 oder 19,5 : 1 oder 18,5 : 1 oder 17,5 : 1 oder 16,5 : 1 oder 16,0 : 1 oder 15,5 : 1 oder 15,0 : 1 oder 14,5 : 1 oder 14,0 : 1 oder 13,5 : 1 oder 13,0 : 1 oder 12,5 : 1 oder 12,0 : 1 oder 11,5 : 1 oder 11,0 : 1 oder 10,5 : 1 oder 10,0 : 1 oder 9,5 : 1 oder 9,0 : 1 oder 8,5 : 1 oder 8,0 : 1 oder 7,5 : 1 oder 7,0 : 1 oder 6,5 : 1 oder 6,0 : 1 oder 5,5 : 1 oder 5,0 : 1 oder 4,5 : 1 oder 4,0 : 1 oder 3,5 : 1 oder 3,0 : 1 oder 2,5 : 1 oder 2,0 : 1 oder 1,5 : 1 oder 1,4 : 1 oder 1,3 : 1 oder 1,2 : 1 oder 1,1 : 1 betragen.

Das molare Verhältnis Azu : Z₁ kann beispielsweise 19,8 : 1,0 betragen, wobei das molare Verhältnis Z₁ : Z₂ 1 : 200 beträgt. An dieser Stelle sei auf den Abschnitt Arbeitsvorschriften verwiesen (Beispiel 1, Methode C).

Bei dem Elektronenpaardonator E handelt es sich um einen *Lewis*-Säure-Fänger, mittels dessen beispielsweise als Nebenprodukt anfallendes und/oder angefallenes Aluminiumtrihydrid AlH₃ bzw. (AlH₃)ₓ unter Bildung eines *Lewis-Säure*/*Lewis-Base-*Komplexes E-AlH₃ abgefangen werden kann. Mit anderen Worten: Der Elektronenpaardonator E dient dazu, die Löslichkeit des Aluminiumtrihydrids AlH₃ bzw. (AlH₃)ₓ in dem jeweils eingesetzten Lösungsmittel S_{P} im Vergleich zu der Löslichkeit der jeweiligen Zielverbindung des Typs

M^{A}Yₙ(AzuH) (I)

so zu verändern, dass eine quantitative Abtrennung der vorgenannten, zwangsläufig als Nebenprodukte anfallenden Hydride möglich ist. Dazu wird üblicherweise ein in dem jeweiligen Lösungsmittel S_{P} schwerlöslicher und daher quantitativ präzipitierender *Lewis*-Säure/*Lewis*-Base-Komplex E-AlH₃ generiert. Alternativ kann vorgsehen sein, dass ein in dem jeweiligen Lösungsmittel S_{P} besonders gut löslicher *Lewis*-Säure/*Lewis*-Base-Komplex E-AlH₃ erzeugt wird, wenn das jeweilige Produkt gemäß der allgemeinen Formel

M^{A}Yₙ(AzuH) (I)

eine sehr geringe bis keine Löslichkeit in dem jeweiligen Lösungsmittel S_{P} aufweist. In letzterem Fall fällt die im Reaktionsgemisch enthaltene Menge der jeweiligen Zielverbindung vorteilhafterweise quantitativ oder nahezu quantitativ aus.

Der Elektronenpaardonator E kann erst nach der Umsetzung gemäß Schritt B., also in Schritt C., hinzugefügt werden und/oder bereits während der Umsetzung gemäß Schritt B. Alternativ oder ergänzend kann das Hinzufügen des Elektronenpaardonators E in Schritt A. und/oder in Schritt D. erfolgen. In einer Ausführungsform des Verfahrens umfasst das Lösungsmittel S_{P} den Elektronenpaardonator E.

In nicht beschränkender Weise seien nachfolgend Beispiele für den Elektronenpaardonator E genannt: tertiäre Amine, wie z. B. 1,4-Diazabicyclo[2.2.2]octan (DABCO^{®} = Triethylendiamin) und TMEDA, organische Amide, wie z. B. *N,N*-Dimethylformamid (DMF) und Hexamethylphosphorsäuretriamid (HMPT), und die heterocyclische Sauerstoffbase 1,4-Dioxan.

Vorteilhafterweise kann mittels des Elektronenpaardonators E das während der Umsetzung des Azulens oder Azulenderivats mit dem wenigstens einen hydridischen Reduktionsmittel Z anfallende und/oder angefallene Nebenprodukt Aluminiumtrihydrid AlH₃ bzw. (AlH₃)ₓ unmittelbar während Schritt B. und/oder in dem sich anschließenden Schritt C. und/oder Schritt D. abgefangen werden. Das gebildete AlH₃-E-Addukt sind in dem eingesetzten, insbesondere aprotisch-polaren Lösungsmittel S_{P}, insbesondere Tetrahydrofuran, 1,4-Dioxan, Tetrahydropyran, Dialkylethern, z. B. Diethylether, Di-n-butylether und *tert*-Butylmethylether, und Glycolethern, wie z. B. 1,2-Dimethoxyethan, schwerlöslich bis unlöslich. Folglich kann dieses Präzipitat mittels eines einfachen Filtrationsschritts, ggf. über Silica, z. B. Celite^{®}, und/oder durch Zentrifugieren und/oder Dekantieren quantitativ abgetrennt werden.

Eine quantitative Entfernung von AlH₃ bzw. (AlH₃)ₓ aus dem Reaktionsgemisch stellt eine Herausforderung dar, welche mittels der im Stand der Technik beschriebenen Verfahren nicht zufriedenstellend bewältig werden kann. Die quantitative Abtrennung von AlH₃ bzw. (AlH₃)ₓ ist jedoch zwingend erforderlich. Denn sie stellt eine starke *Lewis-Säure* dar, welche bereits bei oder geringfügig oberhalb Raumtemperatur eine hohe Reaktivität zeigt, insbesondere gegenüber diversen Metallpräkursor-Verbindungen. Mithin ist eine weitere Umsetzung einer Verbindung des Typs

M^{A}Yₙ(AzuH) (I),

welche durch AlH₃ bzw. (AlH₃)ₓ verunreinigt ist, mit Ausbeuteverlusten verbunden. Dieses Problem wird mittels des hier beschriebenen Verfahrens vorteilhafterweise ausgeschlossen. Im Anschluss an den oben genannten Filtrationsschritt und/oder das Zentrifugieren und/oder Dekantieren kann beispielsweise ein Lösungsmittelaustausch erfolgen, indem das Lösungsmittel S_{P}, insbesondere Tetrahydrofuran, vollständig im Vakuum vollständig entfernt wird und ein anderes Lösungsmittel S_{P}, insbesondere Et₂O, hinzugefügt wird. Das gewünschte Produkt ist - wie bereits weiter oben erwähnt - in Et₂O unlöslich und daher mittels einer einfachen Filtration und/oder durch Zentrifugieren und/oder Dekantieren abtrennbar. Ggf. kann - wie weiter oben beschrieben - wenigstens ein Waschschritt vorgesehen sein.

Gemäß einer anderen Ausführungsform ist oder umfasst das wenigstens eine hydridische Reduktionsmittel Z ein Alkalimetallbortetrahydriden M^{A}BH₄ und/oder Alkalimetalltrialkylborhydrid M^{A}[(R^{C})₃BH] und/oder Alkalimetalltrialkylaluminiumhydrid M^{A}[(R^{D})₃AlH] und/oder Alkalimetall-dihydrido-bis(dialkoxy)-aluminaten M^{A}[AlH₂(OR^{E})₂], wobei ein Elektronenpaardonator E vorgesehen ist, mittels dessen angefallenes und/oder anfallendes Bortrihydrid BH₃ bzw. B₂H₆ und/oder Trialkylboran und/oder Trialkylaluminium und/oder [(R^{E}O)₂AlH]ₓ abgefangen wird. Beispielsweise kann LiBH₄ und/oder Lithiumtriethylborhydrid und/oder Lithiumtriethylaluminiumhydrid und/oder Li[AlH₂(OC₂H₄OCH₃)₂] als eines der hydridischen Reduktionsmittel Z vorgesehen sein. Dann wird angefallenes und/oder anfallendes Bortrihydrid BH₃ bzw. B₂H₆ und/oder Triethylboran Et₃B und/oder Triethylaluminium Et₃Al bzw. (Et₃Al)₂ und/oder [(R^{E}O)₂AlH]ₓ unter Bildung eines *Lewis*-Säure/*Lewis*-Base-Komplexes E-BH₃ bzw. E-BEt₃ bzw. E-AlEt₃ bzw. und/oder E-Al(R^{E}O)₂H abgefangen - wie bereits weiter oben für AlH₃ bzw. (AlH₃)ₓ beschrieben.

Eine weitere Ausführungsvariante des Verfahrens sieht wenigstens ein erstes hydridisches Reduktionsmittel Z₁ und wenigstens ein zweites hydridisches Reduktionsmittel Z₂ vor, wobei
i. wenigstens ein erstes hydridisches Reduktionsmittel Z₁ ausgewählt ist aus der Gruppe bestehend aus Alkalimetallbortetrahydriden M^{A}BH₄, Alkalimetall-dihydrido-bis(dialkoxy)-aluminaten M^{A}[AlH₂(OR^{E})₂], Alkalimetalltrialkylaluminiumhydriden M^{A}[(R^{D})₃AlH] und Alkalimetalltrialkylborhydriden M^{A}[(R^{C})₃BH], und Mischungen davon,
   und
ii. wenigstens ein zweites hydridisches Reduktionsmittel Z₂ ausgewählt ist aus der Gruppe bestehend aus Alkalimetallhydriden M^{A}H.

Eine alternative oder ergänzende Ausführungsform des beanspruchten Verfahrens sieht vor, dass
a) ein molares Verhältnis Azu : Z₁ wenigstens 1,0 : 1,0 beträgt,
   und
b) ein molares Verhältnis Z₁ : Z₂ wenigstens 1 : 250 beträgt.

Vorteilhaft beträgt das molare Verhältnis Azu : Z₁ (Unterpunkt a)) zwischen 1,0 : 1,0 und 20,0 : 1,0, besonders vorteilhaft zwischen 1,1 : 1,0 und 20,0 : 1,0, insbesondere zwischen 1,1 : 1,0 und 19,9 : 1,0, beispielsweise 19,8 : 1,0 oder 19,7 : 1,0 oder 19,6 : 1,0 oder 19,5 : 1,0 oder 19,4 : 1,0 oder 19,3 : 1,0 oder 19,2 : 1,0 oder 19,1 : 1,0 oder 19,0 : 1,0 oder 18,9 : 1,0 oder 18,8 : 1,0 oder 18,7 : 1,0 oder 18,6 : 1,0 oder 18,5 : 1,0 oder 18,4 : 1,0 oder 18,3 : 1,0 oder 18,2 : 1,0 oder 18,1 : 1,0 oder 18,0 : 1,0 oder 17,9 : 1,0 oder 17,8 : 1,0 oder 17,7 : 1,0 oder 17,6 : 1,0 oder 17,5 : 1,0 oder 17,4 : 1,0 oder 17,3 : 1,0 oder 17,2 : 1,0 oder 17,1 : 1,0 oder 17,0 : 1,0 oder 16,9 : 1,0 oder 16,8 : 1,0 oder 16,7 : 1,0 oder 16,6 : 1,0 oder 16,5 : 1,0 oder 16,4 : 1,0 oder 16,3 : 1,0 oder 16,2 : 1,0 oder 16,1 : 1,0 oder 16,0 : 1,0 oder 15,9 : 1,0 oder 15,8 : 1,0 oder 15,7 : 1,0 oder 15,6 : 1,0 oder 15,5 : 1,0 oder 15,4 : 1,0 oder 15,3 : 1,0 oder 15,2 : 1,0 oder 15,1 : 1,0 oder 15,0 : 1,0 oder 14,9 : 1,0 oder 14,8 : 1,0 oder 14,7 : 1,0 oder 14,6 : 1,0 oder 14,5 : 1,0 oder 14,4 : 1,0 oder 14,3 : 1,0 oder 14,2 : 1,0 oder 14,1 : 1,0 oder 14,0 : 1,0 oder 13,9 : 1,0 oder 13,8 : 1,0 oder 13,7 : 1,0 oder 13,6 : 1,0 oder 13,5 : 1,0 oder 13,4 : 1,0 oder 13,3 : 1,0 oder 13,2 : 1,0 oder 13,1 : 1,0 oder 13,0 : 1,0 oder 12,9 : 1,0 oder 12,8 : 1,0 oder 12,7 : 1,0 oder 12,6 : 1,0 oder 12,5 : 1,0 oder 12,4 : 1,0 oder 12,3 : 1,0 oder 12,2 : 1,0 oder 12,1 : 1,0 oder 12,0 : 1,0 oder 11,9 : 1,0 oder 11,8 : 1,0 oder 11,7 : 1,0 oder 11,6 : 1,0 oder 11,5 : 1,0 oder 11,4 : 1,0 oder 11,3 : 1,0 oder 11,2 : 1,0 oder 11,1 : 1,0 oder 11,0 : 1,0 oder 10,9 : 1,0 oder 10,8 : 1,0 oder 10,7 : 1,0 oder 10,6 : 1,0 oder 10,5 : 1,0 oder 10,4 : 1,0 oder 10,3 : 1,0 oder 10,2 : 1,0 oder 10,1 : 1,0 oder 10,0 : 1,0 oder 9,9 : 1,0 oder 9,8 : 1,0 oder 9,7 : 1,0 oder 9,6 : 1,0 oder 9,5 : 1,0 oder 9,4 : 1,0 oder 9,3 : 1,0 oder 9,2 : 1,0 oder 9,1 : 1,0 oder 9,0 : 1,0 oder 8,9 : 1,0 oder 8,8 : 1,0 oder 8,7 : 1,0 oder 8,6 : 1,0 oder 8,5 : 1,0 oder 8,4 : 1,0 oder 8,3 : 1,0 oder 8,2 : 1,0 oder 8,1 : 1,0 oder 8,0 : 1,0 oder 7,9 : 1,0 oder 7,8 : 1,0 oder 7,7 : 1,0 oder 7,6 : 1,0 oder 7,5 : 1,0 oder 7,4 : 1,0 oder 7,3 : 1,0 oder 7,2 : 1,0 oder 7,1 : 1,0 oder 7,0 : 1,0 oder 6,9 : 1,0 oder 6,8 : 1,0 oder 6,7 : 1,0 oder 6,6 : 1,0 oder 6,5 : 1,0 oder 6,4 : 1,0 oder 6,3 : 1,0 oder 6,2 : 1,0 oder 6,1 : 1,0 oder 6,0 : 1,0 oder 5,9 : 1,0 oder 5,8 : 1,0 oder 5,7 : 1,0 oder 5,6 : 1,0 oder 5,5 : 1,0 oder 5,4 : 1,0 oder 5,3 : 1,0 oder 5,2 : 1,0 oder 5,1 : 1,0 oder 5,0 : 1,0 oder 4,9 : 1,0 oder 4,8 : 1,0 oder 4,7 : 1,0 oder 4,6 : 1,0 oder 4,5 : 1,0 oder 4,4 : 1,0 oder 4,3 : 1,0 oder 4,2 : 1,0 oder 4,1 : 1,0 oder 4,0 : 1,0 oder 3,9 : 1,0 oder 3,8 : 1,0 oder 3,7 : 1,0 oder 3,6 : 1,0 oder 3,5 : 1,0 oder 3,4 : 1,0 oder 3,3 : 1,0 oder 3,2 : 1,0 oder 3,1 : 1,0 oder 3,0 : 1,0 oder 2,9 : 1,0 oder 2,8 : 1,0 oder 2,7 : 1,0 oder 2,6 : 1,0 oder 2,5 : 1,0 oder 2,4 : 1,0 oder 2,3 : 1,0 oder 2,2 : 1,0 oder 2,1 : 1,0 oder 2,0 : 1,0 oder 1,9 : 1,0 oder 1,8 : 1,0 oder 1,7 : 1,0 oder 1,6 : 1,0 oder 1,5 : 1,0 oder 1,4 : 1,0 oder 1,3 : 1,0 oder 1,2 : 1,0.

Das molares Verhältnis Z₁ : Z₂ (Unterpunkt b)) beträgt vorteilhaft zwischen 1 : 250 und 20 : 1, besonders vorteilhaft zwischen 1 : 245 und 19 : 1, ganz besonders vorteilhaft zwischen 1 : 240 und 18 : 1, insbesondere zwischen 1 : 235 und 17 : 1. Das molare Verhältnis Z₁ : Z₂ kann also beispielsweise auch 1 : 230 oder 1 : 225 oder 1 : 220 oder 1 : 215 oder 1 : 210 oder 1 : 209 oder 1 : 208 oder 1 : 207 oder 1 : 206 oder 1 : 205 oder 1 : 204 oder 1 : 203 oder 1 : 202 oder 1 : 201 oder 1 : 200 oder 1: 199 oder 1 : 198 oder 1 : 197 oder 1 : 196 oder 1 : 195 oder oder 1 : 194 oder 1 : 193 oder 1 : 192 oder 1 : 191 oder 1 : 190 oder 1 : 185 oder 1 : 180 oder 1 : 175 oder 1 : 170 oder 1 : 165 oder 1 : 160 oder 1 : 155 oder 1 : 150 oder 1 : 145 oder 1 : 140 oder 1 : 135 oder 1 : 130 oder 1 : 125 oder 1 : 120 oder 1 : 115 oder 1 : 110 oder 1 : 105 oder 1 : 100 oder 1 : 95 oder 1 : 90 oder 1 : 85 oder 1 : 80 oder 1 : 75 oder 1 : 70 oder 1 : 65 oder 1 : 60 oder 1 : 55 oder 1 : 50 oder 1 : 45 oder 1 : 40 oder 1 : 35 oder 1 : 30 oder 1 : 25 oder 1 : 20 oder 1 : 19 oder 1 : 18 oder 1 : 17 oder 1 : 16 oder 1 : 15 oder 1 : 14 oder 1 : 13 oder 1 : 12 oder 1 : 11 oder 1 : 10 oder 1 : 9,5 oder 1 : 9 oder 1 : 8,5 oder 1 : 8 oder 1 : 7,5 oder 1 : 7 oder 1 : 6,5 oder 1 : 6 oder 1 : 5,5 oder 1 : 5 oder 1 : 4,5 oder 1 : 4 oder 1 : 3,5 oder 1 : 3 oder 1 : 2,5 oder 1 : 2 oder 1 : 1,5 oder 1 : 1,4 oder 1 : 1,3 oder 1 : 1,2 oder 1 : 1,1 oder 19,5 : 1 oder 18,5 : 1 oder 17,5 : 1 oder 16,5 : 1 oder 16,0 : 1 oder 15,5 : 1 oder 15,0 : 1 oder 14,5 : 1 oder 14,0 : 1 oder 13,5 : 1 oder 13,0 : 1 oder 12,5 : 1 oder 12,0 : 1 oder 11,5 : 1 oder 11,0 : 1 oder 10,5 : 1 oder 10,0 : 1 oder 9,5 : 1 oder 9,0 : 1 oder 8,5 : 1 oder 8,0 : 1 oder 7,5 : 1 oder 7,0 : 1 oder 6,5 : 1 oder 6,0 : 1 oder 5,5 : 1 oder 5,0 : 1 oder 4,5 : 1 oder 4,0 : 1 oder 3,5 : 1 oder 3,0 : 1 oder 2,5 : 1 oder 2,0 : 1 oder 1,5 : 1 oder 1,4 : 1 oder 1,3 : 1 oder 1,2 : 1 oder 1,1 : 1 betragen.

Als das erste hydridische Reduktionsmittel Z₁ kann beispielsweise LiBH₄ oder Li[AlH₂(OC₂H₄OCH₃)₂] oder Li[Et₃ALH] oder Li[Et₃BH], oder eine Mischung davon, und als das zweite hydridische Reduktionsmittel Z₂ LiH gewählt werden. In diesem Fall wird angefallenes und/oder anfallendes Bortrihydrid BH₃ bzw. B₂H₆ und/oder [(H₃COH₄C₂O)₂AlH]ₓ und/oder Triethylaluminium Et₃Al bzw. (Et₃Al)₂ und/oder Triethylboran Et₃B durch den, insbesondere in aprotisch-polaren Lösungsmitteln wie Ethern, z. B. Tetrahydrofuran oder Diethylether, schwer löslichen bis unlöslichen Elektronenpaardonator LiH bzw. durch dessen Hydrid-Anion H⁻ abgefangen. Dabei wird vorteilhafterweise ohne weiteres Zutun das erste hydridische Reduktionsmittel LiBH₄ und/oder Li[AlH₂(OC₂H₄OCH₃)₂] und/oder Li[Et₃ALH] und/oder Li[Et₃BH] regeniert. Mithin steht das für die Umsetzung mit dem Azulen oder dem Azulenderivat eingesetzte erste hydridische Reduktionsmittel Z₁, welches in dem jeweiligen Lösungsmittel S_{P} üblicherweise eine gute bis sehr gute Löslichkeit aufweist, erneut als lösliches, hydridübertragendes Reagenz zur Verfügung. Folglich kann das relativ kostenintensive erste hydridische Reduktionsmittel LiBH₄ und/oder Li[AlH₂(OC₂H₄OCH₃)₂] und/oder Li[Et₃ALH] und/oder Li[Et₃BH] - bezogen auf das jeweilige Edukt Azulen oder Azulenderivat - vorteilhaft auch in substöchiometrischer Menge, inbesondere in katalytischer Menge, eingesetzt werden. Dies ist mit Blick auf eine großtechnische Anwendung der hier beschriebenen Ausführungsvariante besonders vorteilhaft, und zwar aus (atom-)ökonomischer und ökologischer Sicht. Denn zum einen wird eine geringere Menge des relativ teuren ersten hydridischen Reduktionsmittels Z₁ benötigt, und zum anderen wird es vollständig verbraucht. Hinsichtlich des relativ kostengünstigen und in großen Mengen kommerziell verfügbaren zweiten hydridischen Reduktionsmittels Lithiumhydrid kann es, insbesondere aufgrund seines Löslichkeitsverhaltens, vorteilhaft sein, einen Überschuss - bezogen auf das jeweils eingesetzte Edukt Azulen oder Azulenderivat - einzusetzen. Ggf. nicht umgesetztes Lithiumhydrid kann mittels eines einfachen Filtrationsschritts, ggf. über Silica, z. B. Celite^{®}, und/oder durch Zentrifugieren und/oder Dekantieren quantitativ abgetrennt werden. Eine Verunreinigung der mittels des hier beschriebenen Verfahrens herstellbaren Verbindungen gemäß der allgemeinen Formel

M^{A}Yₙ(AzuH) (I)

durch Lithiumhydrid kann somit ausgeschlossen werden. Die jeweilige Zielverbindung des Typs

M^{A}Yₙ(AzuH) (I)

zeigt üblicherweise eine gute bis sehr gute Löslichkeit in dem verwendeten, insbesondere aprotisch-unpolaren, Lösungsmittel S_{P}.

Die Verwendung von Lithiumhydrid ist auch aus Sicherheitsgründen vorteilhaft. Denn im Unterschied zu anderen Hydrid-übertragenden Reagenzien ist es an Luft nicht pyrophor und infolge Passivierung sogar kurze Zeit an Luft handhabbar.

Dass diese Verfahrensführung aus (atom-)ökonomischer und ökologischer Sicht besonders vorteilhaft ist, lässt sich anhand der nachfolgend angeführten Reaktionsgleichungen (4) bis (6) und (7) bis (9) und (10) bis (12) einfach nachvollziehen:

(4) Azu + Li[BH_{4]} → Li(AzuH) + BH₃

(5) BH₃ + LiH → Li[BH₄]

(6) Azu + LiH → Li(AzuH)

(7) Azu + Li[AlH₂(OC₂H₄OCH3)₂] → Li(AzuH) + [(H₃COH₄C₂O)₂AlH]ₓ

(8) [(H₃COH₄C₂O)₂AlH]ₓ + LiH → Li[AlH₂(OC₂H₄OCH₃)₂]

(9) Azu + LiH → Li(AzuH)

(10) Azu + Li[Et₃BH] → Li(AzuH) + Et₃B

(11) Et₃B + LiH → Li[Et₃BH]

(12) Azu + LiH → Li(AzuH)

Dabei sind Azu und AzuH jeweils wie weiter oben definiert. Li(AzuH) umfasst jeweils auch dessen Lösungsmittelsolvate, in denen solvatisierte Lithium-Ionen vorliegen.

Die Reaktionsgleichungen für die Umsetzung von Azu mit Li[Et₃ALH] als erstem hydridischen Reduktionsmittel Z₁ und LiH als zweitem hydridischen Reduktionsmittel Z₂ können analog zu den Gleichungen (10) bis (12) formuliert werden.

Wird in dem hier beschriebenen Verfahren ein Azulenderivat als Edukt eingesetzt, so ist vorgesehen sein, dass das Azulengerüst an einem Kohlenstoffatom oder mehreren Kohlenstoffatomen, ausgewählt aus der Gruppe bestehend aus den Kohlenstoffatomen C1, C2, C3, C4, C5, C6, C7 und C8, einen Substituenten R^{F} aufweist. Zugleich soll wenigstens eines der Kohlenstoffatome C4, C6 und C8 ein H-Atom tragen. Insbesondere durch die Wahl des Substitutionsmusters des Azulenderivats kann die Regioselektivität der nucleophilen Addition des von dem wenigstens einen hydridischen Reduktionsmittel Z zur Verfügung gestellten Hydrid-Anions H⁻ beeinflusst werden. Es kann also unmittelbar Einfluss auf die Anzahl der zu erwartenden Regioisomere genommen werden. Wird Bicyclo[5.3.0]decapentaen, also Azulen, gemäß der allgemeinen Formel II als Edukt verwendet, kann die nucleophile Addition des Hydrid-Anions H⁻ in 4-Position (C4), in 6-Position (C6) oder in 8-Position (C8) des Azulens erfolgen. Denn die Kohlenstoffatome C4, C6 und C8 weisen bekanntermaßen eine vergleichbare Nucleophilie auf. Mithin wird bei Verwendung von unsubstituiertem Azulen als Edukt ein Gemisch dreier Regioisomere erhalten. Dagegen wird beispielsweise im Falle des Azulenderivats 7-*iso*-Propyl-1,4-dimethylazulen (Guajazulen) eine regioselektive Addition des Hydrid-Anions in 8-Position, d. h. am Kohlenstoffatom C8, beobachtet. Mittels des hier beschriebenen Verfahrens ist also, insbesondere in Abhängigkeit vom Substitutionsmuster des als Edukt gewählten Azulenderivats, auch die Darstellung isomerenreiner Verbindungen gemäß der allgemeinen Formel

M^{A}Yₙ(AzuH) (I)

möglich. Ein Beispiel ist Lithium-7-*iso*-propyl-1,4-dimethyl-8-*H*-dihydroazulenid, welches auch als Lithium-8-*H*-dihydroguajazulenid bezeichnet werden kann.

Gemäß einer Ausführungsform des Verfahrens wird in Schritt A. ein Azulenderivat zur Verfügung gestellt, wobei wenigstens
- an den Kohlenstoffatomen C4 und C6
   oder
- an den Kohlenstoffatomen C8 und C6
   oder
- an dem Kohlenstoffatom C4 und/oder an dem Kohlenstoffatom C8
des Azulengerüsts ein H-Atom vorgesehen ist.

Gemäß einer anderen Variante des hier beschriebenen Verfahrens wird in Schritt A. ein Azulenderivat zur Verfügung gestellt, wobei wenigstens ein Kohlenstoffatom des Azulengerüsts, ausgewählt aus der Gruppe bestehend aus C1, C2 und C3, einen Substituenten R^{F} trägt und die Kohlenstoffatome C4, C5, C6, C7 und C8 des Auzulengerüsts jeweils ein H-Atom tragen.

In einer noch anderen Ausführungsform trägt wenigstens ein Kohlenstoffatom des Azulengerüsts, ausgewählt aus der Gruppe bestehend aus C4, C5, C6, C7 und C8, einen Substituenten R^{F}, und die Kohlenstoffatome C1, C2 und C3 des Azulengerüsts tragen jeweils ein H-Atom.

In einer weiteren Variante des Verfahrens wird ein zweifach substituiertes Azulenderivat als Edukt in Schritt A. eingesetzt. Dabei ist beispielsweise vorgesehen, dass genau ein Kohlenstoffatom des Fünfrings, also C1 oder C2 oder C3, und genau ein Kohlenstoffatom des Siebenrings, also C4 oder C5 oder C6 oder C7 oder C8, einen Substituenten R^{F} tragen.

Eine alternative Ausführungsform des Verfahrens sieht in Schritt A. ein dreifach substituiertes Azulenderivat als Edukt vor. Dabei ist z. B. vorgesehen, dass genau ein Kohlenstoffatom des Fünfrings, also C1 oder C2 oder C3, und genau zwei Kohlenstoffatome des Siebenrings, also zwei der Kohlenstoffatome C4, C5, C6, C7, C8, einen Substituenten R^{F} tragen.

Gemäß einer noch anderen Verfahrensvariante wird ein vierfach substituiertes Azulenderivat in Schritt A. zur Verfügung gestellt. Dabei ist beispielsweise vorgesehen, dass genau ein Kohlenstoffatom des Fünfrings, also C1 oder C2 oder C3, und genau drei Kohlenstoffatome des Siebenrings, als drei der Kohlenstoffatome C4, C5, C6, C7, C8, einen Substituenten R^{F} tragen.

In einer weiteren Ausführungsform des Verfahrens wird in Schritt A. ein Azulenderivat zur Verfügung gestellt wird, wobei wenigstens die Kohlenstoffatome C1, C4 und C7 des Azulengerüsts einen Substituenten R^{F} tragen, oder eines seiner Isomeren.

Das Azulenderivat kann beispielsweise ausgewählt sein aus der Gruppe bestehend aus 1,4,7-Trimethylazulen, 7-Ethyl-1,4-dimethylazulen (Chamazulen), 7-n-Propyl-1,4-dimethylazulen, 7-*iso*-Propyl-1,4-dimethylazulen (Guajazulen), 7-n-Butyl-1,4-dimethylazulen, 7-*iso*-Butyl-1,4-dimethylazulen, 7-sec-Butyl-1,4-dimethylazulen, 7-*tert-*Butyl-1,4-dimethylazulen, 7-*n*-Pentyl-1,4-dimethylazulen, 7-*iso*-Pentyl-1,4-dimethylazulen, 7-*neo*-Pentyl-1,4-dimethylazulen, 7-*n*-Hexyl-1,4-dimethylazulen, 7-*iso*-Hexyl-1,4-dimethylazulen, 7-(3-Methylpentan)-1,4-dimethylazulen, 7-*neo*-Hexyl-1,4-dimethylazulen, 7-(2,3-Dimethylbutan)-1,4-dimethylazulen, und deren Isomeren.

Bei Guajazulen handelt es sich um einen Naturstoff, der in Kamillenöl und anderen ätherischen Ölen enthalten und daher vorteilhafterweise in großen Mengen kostengünstig zugänglich ist. Synthetisch kann es aus dem Guajol des Guajakholzöls (Guajakharz) hergestellt werden. Guajazulen ist eine intensiv blaue Substanz mit entzündungshemmender Wirkung. Ein Isomer des Guajazulens ist beispielsweise 2*-iso*Propyl-4,8-dimethylazulen (Vetivazulen).

In einer anderen Variante des Verfahrens ist wenigstens ein hydridisches Reduktionsmittel Z ausgewählt aus der Gruppe bestehend aus Alkalimetallhydriden M^{A}H, Alkalimetallbortetrahydriden M^{A}BH₄, Alkalimetalltrialkylborhydriden M^{A}[(R^{C})₃BH], Alkalimetallaluminiumtetrahydriden M^{A}AlH₄, Alkalimetalltrialkylaluminiumhydriden M^{A}[(R^{D})₃AlH], Alkalimetall-dihydrido-bis(dialkoxy)-aluminaten M^{A}[AlH₂(OR^{E})₂], sowie deren Mischungen, wobei
i. die Reste R^{C} und R^{D} jeweils unabhängig voneinander ausgewählt sind aus der Gruppe bestehend aus primären, sekundären, tertiären Alkyl-, Alkenyl- und Alkinylresten mit 1 bis 10 Kohlenstoffatomen,
   wobei jeweils zwei Substituenten R^{C} oder zwei Substituenten R^{D} optional einen Ring bilden können,
   und
ii. die Reste OR^{E} unabhängig voneinander jeweils eine korrespondierende Base eines Glycolethers R^{E}OH sind.

In einer anderen Ausführungsform des Verfahrens wird das Alkalimetall-dihydrido-bis(dialkoxy)-aluminat gemäß der allgemeinen Formel M^{A}[AlH₂(OR^{E})₂], wobei M^{A} = Li, Na oder K, *in situ* hergestellt durch eine Reaktion von M^{A}AlH₄, also LiAlH₄, NaAlH₄ oder KAlH₄, mit einem Glycolether R^{E}OH. Dabei beträgt ein molares Verhältnis M^{A}AlH₄ : Glycolether R^{E}OH 1 : 2, also 0,5.

Im Zusammenhang mit der vorliegenden Erfindung bedeutet der Ausdruck "*in situ* erzeugt/hergestellt" bzw. "*in situ*-Herstellung", dass die Edukte, welche zur Synthese einer auf diese Weise herzustellenden Verbindung erforderlich sind, in einer geeigneten Stöchiometrie in einem Lösungsmittel oder Lösungsmittelgemisch zur Reaktion gebracht werden und das dabei entstehende Produkt nicht isoliert wird. Vielmehr wird die Lösung oder die Suspension, welches die *in situ* erzeugte Verbindung umfasst, in der Regel direkt, d. h. ohne Isolierung und/oder weitere Aufreinigung, weiterverwendet. Dabei kann die *in situ*-Herstellung einer Verbindung in dem für ihre Weiterverwendung vorgesehenen Reaktionsgefäß erfolgen oder in einem davon unterschiedlichen Reaktionsbehältnis. Die Begriffe Reaktionsbehältnis und Reaktionsgefäß sind bereits weiter oben definiert worden.

In einer noch anderen Ausführungsform des beanspruchten Verfahrens ist der Glycolether R^{E}OH, welcher zur *in situ*-Herstellung eines Reduktionsmittels gemäß der allgemeinen Formel M^{A}[AlH₂(OR^{E})₂] - ausgehend von LiAlH₄, NaAlH₄ oder KAlH₄ - verwendet wird, ausgewählt aus der Gruppe bestehend aus Monooxomethylenmonoethern, Monoethylenglycolmonoethern, Monopropylenglycolmonoethern, und deren Isomerenmischungen, und Mischungen davon. In einer vorteilhaften Variante wird ein Monoethylenglycolmonoether eingesetzt. Beispielsweise erfolgt die Alkoholyse ausgehend von LiAlH₄, NaAlH₄ oder KAlH₄ und einem Monoglycolmonoether R^{E}OH, wobei insbesondere R^{E} = C₂H₄OCH₃ oder C₂H₄OC₄H₉, in einem aliphatischen oder aromatischen Solvens, z. B. n-Pentan, n-Hexan, Toluol oder p-Cymol. Die Synthese kann beispielsweise in einem Temperaturbereich von -10 °C bis 40 °C durchgeführt werden, wobei die Möglichkeit eines Gasausgleiches unbedingt gegeben sein muss.

Als Glycolether werden auch Polyether verstanden. Dabei ist der Glycolether in einer Variante des Verfahrens ausgewählt aus der Gruppe bestehend aus 2-Methoxyethanol CH₃-O-CH₂CH₂-OH, 2-Ethoxyethanol CH₃CH₂-O-CH₂CH₂-OH, Ethylenglycolmono-*n-*propylether CH₃CH₂CH₂-O-CH₂CH₂-OH, Ethylenglycolmono-*iso*-propylether (CH₃)₂CH-O-CH₂CH₂-OH, Ethylenglycolmono-*n*-butylether CH₃CH₂CH₂CH₂-O-CH₂CH₂-OH, Ethylenglycolmono-*n*-pentylether CH₃CH₂CH₂CH₂CH₂-O-CH₂CH₂-OH, Ethylenglycolmono-*n*-hexylether CH₃CH₂CH₂CH₂CH₂CH₂-O-CH₂CH₂-OH, Ethylenglycolmonophenylether C₆H₅-O-CH₂CH₂-OH, Ethylenglycolmonobenzylether C₆H₅CH₂-O-CH₂CH₂-OH, Propylenglycolmonomethylether CH₃-O-CH₂CH₂CH₂-OH, Propylenglycolmonoethylether CH₃CH₂-O-CH₂CH₂CH₂-OH, Propylenglycolmono-*n-*propylether CH₃CH₂CH₂-O-CH₂CH₂CH₂-OH, Propylenglycolmono-*n*-butylether CH₃CH₂CH₂CH₂-O-CH₂CH₂CH₂-OH, Propylenglycolmono-*n*-pentylether CH₃CH₂CH₂CH₂CH₂-O-CH₂CH₂CH₂-OH, Propylenglycolmono-*n*-hexylether CH₃CH₂CH₂CH₂CH₂CH₂-O-CH₂CH₂CH₂-OH, Propylenglycolmonophenylether C₆H₅-O-CH₂CH₂CH₂-OH, Propylenglycolmonobenzylether C₆H₅CH₂-O-CH₂CH₂CH₂-OH, *iso*-Propylenglycolmonomethylether CH₃-O-CH₂-CH(CH₃)-OH, *iso*-Propylenglycolmonoethylether CH₃CH₂-O-CH₂-CH(CH₃)-OH, *iso*-Propylenglycolmono-n-propylether CH₃CH₂CH₂-O-CH₂-CH(CH₃)-OH, *iso*-Propylenglycolmono-iso-propylether (CH₃)₂CH-O-CH₂-CH(CH₃)-OH, *iso*-Propylenglycolmono-*n*-butylether CH₃CH₂CH₂CH₂-O-CH₂-CH(CH₃)-OH, *iso*-Propylenglycolmono-*n*-pentylether CH₃CH₂CH₂CH₂CH₂-O-CH₂-CH(CH₃)-OH, *iso*-Propylenglycolmono-*n*-hexylether CH₃CH₂CH₂CH₂CH₂CH₂-O-CH₂-CH(CH₃)-OH, *iso*-Propylenglycolmonophenylether C₆H₅-O-CH₂-CH(CH₃)-OH, *iso*-Propylenglycolmonobenzylether C₆H₅CH₂-O-CH₂-CH(CH₃)-OH, 1-Methoxy-2-propanol CH₃-O-CH₂CH(CH₃)-OH, 1-Butoxypropan-2-ol C₄H₉-O-CH₂CH(CH₃)-OH, 1-Propoxy-2-propanol CH₃CH₂CH₂-O-CH₂CH(CH₃)-OH sowie deren Mischungen. Die angegebenen Glycolether können auch als Isomerengemische verwendet werden.

Gemäß einer weiteren Ausführungsform des Verfahrens ist der Elektronenpaardonator E eine Base, ausgewählt aus der Gruppe bestehend aus organischen, metallorganischen und anorganischen Basen, sowie deren Mischungen. Insbesondere ist der Elektronenpaardonator E eine *Lewis-Base.*

In einer weiteren Ausführungsform des beanspruchten Verfahrens ist der Elektronenpaardonator E eine organische oder anorganische Base. Vorteilhafterweise ist der Elektronenpaardonator E ausgewählt aus der Gruppe bestehend aus primären, sekundären und tertiären Aminen, organischen Amiden, heterocyclischen Sauerstoffbasen, heterocyclischen Stickstoffbasen, Ammoniak, Alkalimetallcarbonaten, Alkalimetalloxiden und Alkalimetallamiden, und deren Mischungen. Ist der Elektronenpaardonator E ein Alkalimetalloxid und/oder ein Alkalimetallamid, so ist er vorteilhafterweise ausgewählt aus der Gruppe bestehend aus Lithium-, Natrium- und Kaliumoxid und Lithium-, Natrium- und Kaliumamid. Insbesondere ist der Elektronenpaardonator E ausgewählt aus der Gruppe bestehend aus Aminen, organischen Amiden, heterocyclische Sauerstoffbasen, heterocyclischen Stickstoffbasen und Ammoniak. Als organisches Amid kann beispielsweise *N,N*-Dimethylformamid (DMF) oder Hexamethylphosphorsäuretriamid (HMPT) vorgesehen sein. Die heterocyclische Sauerstoffbase kann z. B. ausgewählt sein aus der Gruppe bestehend aus Tetrahydrofuran, 2-Methyltetrahydrofuran, 3-Methyltetrahydrofuran, 1,4-Dioxan und Tetrahydropyran, und Mischungen davon. Wird Amin eingesetzt, so können im Allgemeinen verschiedene Amine, auch als Gemisch, verwendet werden, wie z. B. primäre, sekundäre oder tertiäre Amine. Hierbei können Alkylamine vorteilhaft verwendet werden. Dies können Methylamin, Ethylamin, Propylamin, *Iso*-propylamin, Butylamin, *tert*-Butylamin, Cyclohexylamin, Dimethylamin, Diethylamin, Dipropylamin, Di-*iso*-propylamin, Dibutylamin, Di-*tert*-butylamin, Dicyclohexylamin, Trimethylamin, Triethylamin, Tripropylamin, Tri-*iso*-propylamin, Tributylamin, *Tri-tert-*butylamin, Tricyclohexylamin, und Derivate und Mischungen davon sein. Auch gemischtsubstituierte Amine und deren Mischungen sind denkbar, wie z. B. Di-*iso-*propylethylamin (DIPEA). Ebenso können Urotropin, Acetamidin, Ethylendiamin, Triethylentetramin, Morpholin, *N*-Methylmorpholin, 1,8-Diazabicyclo[5.4.0]undec-7-en (DBU), DABCO^{®}, TMEDA, Guanidine, Harnstoff, Thioharnstoff, Imine, Anilin, Pyridin, Pyrazol, Pyrimidin, Imidazol, Hexamethyldisilazan oder deren Kombinationen als Base verwendet werden.

Eine weitere Ausführungsform des Verfahrens sieht vor, dass die Umsetzung des Azulens oder des Azulenderivats mit dem wenigstens einen hydridischen Reduktionsmittel Z in dem Lösungsmittel S_{P} folgende Schritt umfasst:
i) Bereitstellen des Azulens oder des Azulenderivats
   als Substanz oder als Lösung oder Suspension in einem Solvens, welches mit dem Lösungsmittel S_{P} mischbar oder identisch ist,
   und
ii) Hinzufügen des wenigstens einen hydridischen Reduktionsmittels Z
   als Substanz oder als Lösung oder Suspension in einem Solvens, welches mit dem Lösungsmittel S_{P} mischbar oder identisch ist,
wobei während des Hinzufügens und/oder nach dem Hinzufügen von Z eine Reaktion des Azulens oder des Azulenderivats mit Z erfolgt.

Der Ausdruck "Substanz" umfasst hier insbesondere Feststoffe, Flüssigkeiten und Flüssigkristalle.

In einer alternativen Ausführungsform des Verfahrens ist vorgesehen, dass in Schritt i) das Bereitstellen des hydridischen Reduktionsmittels Z erfolgt und in Schritt ii) das Hinzufügen des Azulens oder des Azulenderivats.

Gemäß einer anderen Ausführungsvariante erfolgt in Schritt i) und/oder in Schritt ii) und/oder in einem sich daran anschließenden Schritt iii) das Hinzufügen wenigstens eines Elektronenpaardonators E. Das kann beispielsweise dann vorgesehen sein, wenn das hydridische Reduktionsmittel Z beispielsweise wenigstens ein Alkalimetallaluminiumtetrahydrid M^{A}AlH₄ umfasst oder aus einem oder mehreren Alkalimetallaluminiumtetrahydriden M^{A}AlH₄ besteht. Das Hinzufügen des wenigstens einen Elektronenpaardonators E hat vorteilhafterweise in der Regel ein quantitatives Abfangen einer als Nebenprodukt anfallenden und/oder angefallenen *Lewis*-Säure wie Aluminiumtrihydrid AlH₃ bzw. (AlH₃)ₓ zur Folge, und zwar unter Bildung von *Lewis-*Säure/*Lewis*-Base-Komplexen E-AlH₃.

Eine noch andere Ausführungsform des Verfahrens sieht vor, dass das Hinzufügen des Elektronenpaardonators E durch Einleiten als Gas oder Flüssigkeit, Einleiten einer Lösung, vorteilhafterweise in dem Lösungsmittel S_{P} oder einem damit mischbaren, insbesondere aprotisch-polaren Lösungsmittel, oder durch Druckbeaufschlagung über die Reaktionslösung in einem geschlossenen Druckgebinde erfolgt.

In einer weiteren Variante des Verfahrens ist vorgesehen, dass das Hinzufügen des wenigstens einen hydridischen Reduktionsmittels Z und/oder des wenigstens einen Elektronenpaardonators E zu der Lösung oder der Suspension des Azulens oder des Azulenderivats in dem, insbesondere aprotisch-polaren, Lösungsmittel oder Lösungsmittelgemisch S_{P} unter Verwendung einer Dosiervorrichtung erfolgt. Das Hinzufügen kann beispielsweise durch Zutropfen oder Zuspritzen erfolgen. Alternativ oder ergänzend kann in einer Zuleitung des Reaktionsbehältnisses ein Absperrventil und/oder ein Absperrhahn vorgesehen sein. Das Lösungsmittel S_{P} kann ggf. eine Mischung mehrerer, insbesondere aprotisch-polarer, Lösungsmittel darstellen.

Je nach Wahl des Lösungsmittels oder Lösungsmittelgemisches S_{P}, der eingesetzten Edukte, einschließlich des optional vorgesehenen Elektronenpaardonators E, sowie der übrigen Reaktionsbedingungen, wie z. B. Zugabeform des hydridischen Reduktionsmittels Z und/oder des Elektronenpaardonators E, z. B. als Substanz, d. h. als Gas, Flüssigkeit oder Feststoff, oder gelöst oder suspendiert in einem Solvens, insbesondere in dem Lösungsmittel S_{P} oder einem damit mischbaren Solvens, Geschwindigkeit des Hinzufügens des hydridischen Reduktionsmittels Z und/oder des Elektronenpaardonators E, Rührgeschwindigkeit, Innentemperatur des Reaktionsbehältnisses, erfolgt die Reaktion des Azulens oder des Azulenderivats bereits während des Hinzufügens und/oder nach dem Hinzufügen des wenigstens einen hydridischen Reduktionsmittels Z und/oder des wenigstens einen Elektronenpaardonators E.

Des Weiteren ist eine Verfahrensvariante vorgesehen, bei der die Umsetzung des Azulens oder des Azulenderivats mit dem wenigstens einen hydridischen Reduktionsmittel Z, ggf. unter Zurverfügungstellung eines Elektronenpaardonators E, in dem, insbesondere aprotisch-polaren, Lösungsmittel oder Lösungsmittelgemisch S_{P} bei einer Temperatur Tu durchgeführt wird, wobei die Temperatur Tu zwischen -30 °C und 100 °C, vorteilhafterweise zwischen -20°C bis 80°C, insbesondere zwischen -10 °C und 70 °C beträgt. Besonders energie- und damit kosteneffizient wird die Umsetzung bei einer Temperatur Tu zwischen -10 °C und 60 °C durchgeführt.

Mit Temperatur Tu ist die Innentemperatur Tu des jeweiligen Reaktionsbehältnisses gemeint.

Eine Innentemperatur des jeweiligen Reaktionsbehältnisses kann mithilfe eines Temperatursensors oder mehrerer Temperatursensoren für einen Bereich oder mehrere Bereiche des Reaktionsbehältnisses ermittelt werden. Dabei ist zumindest ein Temperatursensor für die Ermittlung der Temperatur Tu vorgesehen, welche in der Regel einer Durchschnittstemperatur T_{D1} des Reaktionsgemisches entspricht.

In einer weiteren Variante des Verfahrens wird die Innentemperatur Tu des Reaktionsbehältnisses unter Verwendung eines Wärmeträgers Wu geregelt und/oder gesteuert. Dazu kann beispielsweise ein Kryostat verwendet werden, welcher den Wärmeträger Wu beinhaltet, der idealerweise sowohl als Kühlmittel als auch als Wärmemittel fungieren kann. Durch den Einsatz des Wärmeträgers Wu können Abweichungen der Temperatur Tu von einem für die Umsetzung des Azulens oder Azulenderivats mit dem wenigstens einen hydridischen Reduktionsmittel Z, ggf. in Gegenwart des Elektronenpaardonators E, festgelegten Sollwert T_{S1} weitestgehend abgefangen bzw. kompensiert werden. Die Realisierung einer konstanten Temperatur Tu ist aufgrund der üblichen Geräteabweichungen kaum möglich. Durch die Verwendung des Wärmeträgers Wu kann die Umsetzung des Azulens oder Azulenderivats mit dem hydridischen Reduktionsmittel Z, ggf. in Gegenwart des Elektronenpaardonators E, aber zumindest in einem vorgewählten Temperaturbereich oder in mehreren vorgewählten Temperaturbereichen durchgeführt werden. So kann es beispielsweise - in Abhängigkeit von den übrigen Reaktionsparametern - zur noch besseren Kontrolle des Reaktionsverlaufs und/oder der Exothermie vorteilhaft sein, ein Temperaturprogramm zu erstellen. Dabei kann zum Beispiel während einer ersten Phase der Umsetzung des Azulens oder Azulenderivats mit dem hydridischen Reduktionsmittel Z eine niedrigere Temperatur bzw. ein niedrigerer Temperaturbereich gewählt werden als in einer zweiten Phase der Umsetzung des Azulens oder Azulenderivats mit dem wenigstens einen hydridischen Reduktionsmittel Z. Es können auch mehr als zwei Phasen des Hinzufügens und damit mehr als zwei vorgewählte Temperaturen bzw. Temperaturbereiche vorgesehen sein. Je nach Wahl der übrigen Reaktionsbedingungen, wie z. B. der Konzentration des hydridischen Reduktionsmittels Z und des Lösungsmittels oder Lösungsmittelgemisches, kann es während des Hinzufügens und/oder nach dem Hinzufügen von Z und ggf. E günstig sein, eine Erhöhung der Innentemperatur Tu des Reaktionsbehältnisses unter Verwendung des Wärmeträgers Wu durchzuführen. Dadurch kann gegebenenfalls sichergestellt werden, dass die Umsetzung des Azulens oder Azulenderivats mit dem wenigstens einen hydridischen Reduktionsmittel Z, ggf. unter Zurverfügungstellung eines Elektronenpaardonators E, quantitativ erfolgt. Eine Dauer der Erhöhung der Innentemperatur Tu des Reaktionsbehältnisses unter Verwendung des Wärmeträgers Wu kann beispielsweise zwischen 10 min und 96 h betragen.

In einer noch anderen Verfahrensvariante ist das Lösungsmittel S_{P} chemisch inert.

Im Zusammenhang mit der vorliegenden Erfindung ist mit dem Begriff "inertes Lösungsmittel" ein Lösungsmittel gemeint, welches unter den jeweiligen Verfahrensbedingungen chemisch nicht reaktiv ist. Mithin reagiert das inerte Lösungsmittel unter den jeweiligen Reaktionsbedingungen, einschließlich der Aufreinigungs- und/oder Isolierungsschritte, nicht mit einem potenziellen Reaktionspartner, insbesondere nicht mit einem Edukt und/oder einem Zwischenprodukt und/oder einem Produkt und/oder einem Nebenprodukt, und nicht mit einem anderen Lösungsmittel, Luft oder Wasser.

In einer weiteren Ausführungsform des Verfahrens ist vorgesehen, dass nach der Umsetzung in Schritt B. oder nach Schritt C. oder nach Schritt D. ein Schritt durchgeführt wird, welcher eine Isolierung von

M^{A}Yₙ(AzuH) (I)

umfasst:
- als Suspension oder Lösung, welche

   M^{A}Yₙ(AzuH) (I)

   und wenigstens ein, insbesondere aprotisch-polares, Lösungsmittel S_{P} umfasst,
   oder
- als Flüssigkeit oder Feststoff.

In einer weiteren Variante des Verfahrens umfasst die Isolierung einen Filtrationsschritt. Dabei können auch mehrere Filtrationsschritte vorgesehen sein, gegebenenfalls auch eine oder mehrere Filtrationen über einem Reinigungsmedium, wie z. B. Aktivkohle, oder Silica, z. B. Celite^{®}.

Die Isolierung der Verbindung gemäß der allgemeinen Formel

M^{A}Yₙ(AzuH) (I)

als Lösung oder als Feststoff kann weitere Verfahrensschritte umfassen, wie z. B. die Reduzierung des Volumens der Mutterlauge, d. h. Einengen, z. B. mittels *"bulb-to-bulb",* die Zugabe eines Lösungsmittels und/oder einen Lösungsmittelaustausch, um eine Fällung des Produktes aus der Mutterlauge zu erzielen und/oder Verunreinigungen und/oder Edukte zu entfernen, Waschen, z. B. mit Pentan und/oder Hexan, und Trocknen des Produktes. Die vorgenannten Schritte können jeweils in unterschiedlichen Reihenfolgen und Häufigkeiten vorgesehen sein.

Vorteilhafterweise kann das Filtrat, Zentrifugat oder Dekantat oder der Feststoff ohne besonderen präparativen Aufwand den gegebenenfalls vorgesehenen, unkompliziert und rasch durchführbaren Aufreinigungs- und/oder Isolierungsschritten unterworfen werden. Insgesamt gestaltet sich die Aufreinigung und/oder Isolierung der Zielverbindung gemäß der allgemeinen Formel

M^{A}Yₙ(AzuH) (I)

relativ einfach und kostengünstig.

Im Allgemeinen kann das Endprodukt noch Reste von Lösungsmitteln oder beispielsweise Verunreinigungen aus den Edukten enthalten. Isolierte Verbindungen des Typs

M^{A}Yₙ(AzuH) (I)

weisen mindestens eine Reinheit von 97 %, vorteilhaft von mehr als 97 %, insbesondere von mehr als 98 % oder 99 % auf. Die reproduzierbare Ausbeute beträgt insbesondere in Abhängigkeit von der Wahl der Edukte sowie des Lösungsmittels oder Lösungsmittelgemisches - auch im Falle einer Hochskalierung in Richtung industriellem Maßstab - üblicherweise ≥ 60%.

Außerdem wird die Aufgabe gelöst durch eine Lösung oder eine Suspension, umfassend

M^{A}Yₙ(AzuH) (I)

und wenigstens ein, insbesondere aprotisch-polares, Lösungsmittel S_{P}, erhalten oder erhältlich nach einem Verfahren gemäß einem der weiter oben beschriebenen Ausführungsbeispiele.

Das Lösungsmittel S_{P} ist vorteilhaft ein aprotisch-polares Lösungsmittel oder umfasst wenigstens ein aprotisch-polares Lösungsmittel. Beispielsweise ist das Lösungsmittel S_{P} ein Ether oder umfasst wenigstens einen Ether. Der Ether kann ausgewählt sein aus der Gruppe bestehend aus Tetrahydrofuran, Methyltetrahydrofuran, 1,4-Dioxan, Diethylether, Methyl-*tert*-butylether, Di-*n*-propylether, Di*i*sopropylether, Cyclopentylmethylether, und deren Isomeren, und Mischungen davon.

Die Lösungen oder Suspensionen zeichnen sich insbesondere durch eine hohe Reinheit der darin jeweils enthaltenen Verbindung des Typs

M^{A}Yₙ(AzuH) (I)

aus.

Die mittels des hier beschriebenen Verfahrens erhältlichen Verbindungen gemäß der allgemeinen Formel

M^{A}Yₙ(AzuH) (I)

weisen jeweils ein *H*-Dihydroazulenyl-Anion (AzuH)¹⁻ auf, welches ein Derivat des Cyclopentadienyl-Anions bzw. ein Cyclopentadienyl-artiges Monoanion darstellt. Besonders vorteilhaft ist, dass die mittels des hier beschriebenen Verfahrens erhältlichen Verbindungen, umfassend Cyclopentadienyl-artige Monoanionen (AzuH)¹⁻, bei Raumtemperatur eine gute bis sehr gute Langzeitstabilität aufweisen. Während einer Lagerung für mehrere Monate bei Raumtemperatur werden weder Zersetzungsreaktionen noch eine Oligomerisierung oder Polymerisierung beobachtet. Dies ist besonders mit Blick auf die weitere Verwendung der Verbindungen des Typs

M^{A}Yₙ(AzuH) (I),

insbesondere zur Herstellung von *Sandwich-* und Halb*sandwich-*Komplexen, vorteilhaft. Weiterhin ist die Herstellung von Alkalimetall-*H*-dihydroazuleniden gemäß der allgemeinen Formel

M^{A}Yₙ(AzuH) (I),

umfassend Cyclopentadienyl-artige Monoanionen (AzuH)¹⁻, gemäß dem hier beanspruchten Verfahren im Vergleich zur Bereitstellung von LiCp weniger arbeits- und zeitaufwändig. Einsetzbare Edukte, wie z. B. Naturstoffe wie Guajazulen und hydridische Reduktionsmittel wie Lithiumtriethylborhydrid, sind nicht nur einfacher zu handhaben und zu lagern, sondern auch kostengünstiger. Außerdem sind weniger und einfachere Arbeitsschritte auszuführen.

Mithin sind mittels des hier beanspruchten Verfahrens Verbindungen des Typs

M^{A}Yₙ(AzuH) (I),

umfassend Cyclopentadienyl-artige Monoanionen (AzuH)¹⁻, einfach und reproduzierbar und - je nach Wahl der Edukte - nachhaltig und vergleichsweise kostengünstig erhältlich. Die erhaltenen Zielverbindungen liegen in hoher Reinheit von mindestens 97 %, vorteilhaft von mehr als 97 %, insbesondere von mehr als 98 % oder 99 %, und guten Ausbeuten, auch Raum-Zeit-Ausbeuten, von ≥ 60 % vor. Dies gilt auch für die Herstellung auch im industriellen Maßstab.

Weiterhin wird die Aufgabe gelöst durch Verbindungen gemäß der allgemeinen Formel

M^{A}Yₙ(AzuH) (I),

erhalten oder erhältlich nach einem Verfahren gemäß einer der weiter oben beschriebenen Ausführungsformen.

Ob die hier beanspruchten Verbindungen gemäß der allgemeinen Formel

M^{A}Yₙ(AzuH) (I)

als Solvens-Addukte, insbesondere Ether-Addukte, vorliegen, hängt von verschiedenen Faktoren ab, z. B. von dem für die Darstellung von Verbindungen gemäß der allgemeinen Formel I verwendeten Lösungsmittel sowie der Art des Alkalimetall-Kations M^{A+}, also dem eingesetzten hydridischen Reduktionsmittel Z. Wurde beispielsweise im Rahmen der Synthese, einschließlich der Aufreinigung, ein Solvens verwendet, welches einen oder mehrere Ether umfasste oder daraus bestand, und wenigstens ein Lithium-Kationen aufweisendes hydridisches Reduktionsmittel Z eingesetzt, so wird aller Wahrscheinlichkeit nach ein Ether-Addukt

Li(ether)ₙ(AzuH) (I),

wobei n = 1 oder 2, vorliegen. Sofern ein solches Ether-Addukt abschließend mit einem nicht-etherischen Lösungsmittel, wie z. B. Pentan oder Hexan, gewaschen wurde, liegt üblicherweise eine solvensfreie Verbindung gemäß der allgemeinen Formel

Li(AzuH) (I)

vor.

Vorteilhaft an den mittels des weiter oben beschriebenen Verfahrens erhältlichen Verbindungen ist, dass Ihre Herstellung einfach und reproduzierbar und - je nach Wahl der Edukte - nachhaltig und relativ kostengünstig realisierbar ist. In Abhängigkeit von der Verfahrensführung, insbesondere der Wahl des hydridischen Reduktionsmittels Z, können die gewünschten Verbindungen des

M^{A}Yₙ(AzuH) (I)

- wie bereits weiter oben beschrieben - beispielsweise mittels einfacher Filtration und/oder durch Zentrifugieren und/oder durch Dekantieren isoliert werden. Die Zielverbindungen liegen regelmäßig - bereits ohne weitere Aufreinigung - in hoher Reinheit von 97 %, vorteilhaft von mehr als 97 %, insbesondere von mehr als 98 % oder 99 % vor. Zudem werden mittels des hier beanspruchten Verfahrens gute Ausbeuten, auch Raum-Zeit-Ausbeuten, von ≥ 60 % erzielt. Eine Herstellung im industriellen Maßstab ist - in vergleichbarer Reinheit und Ausbeute - vorteilhafterweise ebenfalls möglich.

Insbesondere Verbindungen gemäß der allgemeinen Formel

M^{A}Yₙ(AzuH) (I),

wobei AzuH = GuaH = 7-*iso*-Propyl-1,4-dimethyl-8-*H*-dihydroazulen, erhalten oder erhältlich nach einem Verfahren gemäß einer der oben beschriebenen Ausführungsformen, sind als nachhaltig zu bewerten. Denn diese Verbindungen, welche Cyclopentadienyl-artige Liganden umfassen, können unter Verwendung von kostengünstigen nachwachsenden Rohstoffen hergestellt werden. Der Richtpreis des ausgehend von dem Naturstoff Guajol und anderen Azulenbildnern durch einfache Dehydratisierung und Dehydrierung (T. Shono, N. Kise, T. Fujimoto, N. Tominaga, H. Morita, J. Org. Chem. 1992, 57, 26, 7175 - 7187; CH 314 487 A (B. Joos) 29.01.1953) zugänglichen partialsynthetischen Guajazulens beträgt 74,70 € pro 25g (Sigma Aldrich, 12/2020).

Zudem wird die Aufgabe gelöst durch Verbindungen gemäß der allgemeinen Formel

M^{A}Yₙ(AzuH) (I),

wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
   und
- AzuH = Azulen oder ein Azulenderivat, welches in 4-Position, 6-Position oder 8-Position zusätzlich zu einem H-Atom ein Hydrid-Anion trägt,
   wobei
   Azu = Azulen gemäß der Formel 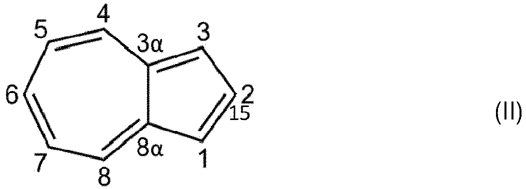 oder
   Azu = ein Azulenderivat, welches ein Azulengerüst gemäß Formel II, bestehend aus einem Fünfring und einem Siebenring, aufweist,
      wobei
      a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
         wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
         wobei zwei Substituenten R^{F} optional einen Ring bilden können,
         und
      b) wenigstens ein Kohlenstoffatom des Azulengerüsts, ausgewählt aus der Gruppe bestehend aus den Kohlenstoffatomen C4, C6 und C8, ein H-Atom trägt,
         wobei
         die Verbindungen Li(O(C₂H₅)₂)ₙ(AzulenH) und Li(O(C₂H₅)₂)ₙ(GuaH),
         wobei
         - n = 0, 1 oder 2,
         - AzulenH = Azulen, welches in 4-Position, 6-Position oder 8-Position zusätzlich zu einem H-Atom ein Hydrid-Anion trägt,
         - GuaH = 7-*iso*-Propyl-1,4-dimethyl-8-*H*-dihydroazulen,
         ausgenommen sind.

Verbindungen gemäß der allgemeinen Formel

M^{A}Yₙ(AzuH) (I)

werden nachfolgend als Alkalimetall-*H*-dihydroazulenide bezeichnet, welche ggf. als Solvens-Addukte, insbesondere Ether-Addukte, welche auch Etherate genannt werden, vorliegen. Verbindungen gemäß der allgemeinen Formel

M^{A}Yₙ(AzuH) (I)

können auch als Isomerenmischungen vorliegen. Das gilt ebenfalls für die hier ausgenommene Verbindung Li(O(C₂H₅)₂)ₙ(AzulenH).

Die hier beanspruchten Verbindungen gemäß der allgemeinen Formel

M^{A}Yₙ(AzuH) (I)

weisen jeweils ein *H*-Dihydroazulenyl-Anion (AzuH)¹⁻ auf, welches ein Derivat des Cyclopentadienyl-Anions bzw. ein Cyclopentadienyl-artiges Monoanion darstellt. Bei dem *H*-Dihydroazulenyl-Anion (AzuH)¹⁻ kann es sich um ein 3α,4-*H*-Dihydroazulenyl-, ein 8,8α-*H*-Dihydroazulenyl-, ein 3α,6-*H*-Dihydroazulenyl- oder ein 6,8α-*H*-Dihydroazulenyl-Anion handeln, oder um eine Mischung zweier oder mehrerer Regioisomere.

Besonders vorteilhaft ist, dass die Verbindungen dieses Typs umfassend Cyclopentadienyl-artige Monoanionen (AzuH)¹⁻ bei Raumtemperatur eine gute bis sehr gute Langzeitstabilität aufweisen. Während einer Lagerung für mehrere Monate bei Raumtemperatur werden weder Zersetzungsreaktionen noch eine Oligomerisierung oder Polymerisierung beobachtet. Dies ist besonders mit Blick auf die weitere Verwendung der Verbindungen gemäß der allgemeinen Formel

M^{A}Yₙ(AzuH) (I),

insbesondere zur Herstellung von *Sandwich-* und Halb*sandwich*-Komplexen, vorteilhaft. Weiterhin ist die Herstellung von Alkalimetall-*H*-dihydroazuleniden gemäß der allgemeinen Formel

M^{A}Yₙ(AzuH) (I),

umfassend Cyclopentadienyl-artige Monoanionen (AzuH)¹⁻, im Vergleich zur Bereitstellung von LiCp weniger arbeits- und zeitaufwändig. Einsetzbare Edukte, wie z. B. Naturstoffe wie Guajazulen und hydridische Reduktionsmittel wie Lithiumtriethylborhydrid, sind nicht nur einfacher zu handhaben und zu lagern, sondern auch kostengünstiger. Außerdem sind weniger und einfachere Arbeitsschritte auszuführen.

Die hier beschriebenen Verbindungen des Typs

M^{A}Yₙ(AzuH) (I),

umfassend Cyclopentadienyl-artige Monoanionen (AzuH)¹⁻, sind einfach und reproduzierbar und - je nach Wahl der Edukte - nachhaltig und vergleichsweise kostengünstig erhältlich. Zudem sind eine hohe Reinheit und gute Ausbeuten, auch Raum-Zeit-Ausbeuten, realisierbar. Mithin eignen sie sich auch für den Einsatz in industriellen Prozessen.

Insbesondere Verbindungen gemäß der allgemeinen Formel

M^{A}Yₙ(AzuH) (I),

wobei AzuH = GuaH = 7-*iso*-Propyl-1,4-dimethyl-8-*H*-dihydroazulen, sind als nachhaltig zu bewerten. Denn diese Verbindungen, welche Cyclopentadienyl-artige Liganden umfassen, können unter Verwendung von kostengünstigen nachwachsenden Rohstoffen hergestellt werden. Der Richtpreis des ausgehend von dem Naturstoff Guajol und anderen Azulenbildnern durch einfache Dehydratisierung und Dehydrierung (T. Shono, N. Kise, T. Fujimoto, N. Tominaga, H. Morita, J. Org. Chem. 1992, 57, 26, 7175 - 7187; CH 314 487 A (B. Joos) 29.01.1953) zugänglichen partialsynthetischen Guajazulens beträgt 74,70 € pro 25g (Sigma Aldrich, 12/2020).

Gemäß einer Ausführungsform der beanspruchten Verbindungen ist vorgesehen, dass Azu = Azulen ist, wobei die Verbindung gemäß der allgemeinen Formel

M^{A}Yₙ(AzulenH) (I)

als ein Isomerengemisch oder isomerenrein vorliegt, wobei das Isomerengemisch wenigstens zwei Regioisomere enthält ausgewählt aus der Gruppe bestehend aus einem ersten Regioisomer, einem zweiten Regioisomer und einem dritten Regioisomer. Dabei weist das erste Regioisomer eine CH₂-Gruppe in C4-Position des Azulens auf, das zweite Regioisomer weist eine CH₂-Gruppe in C6-Position des Azulens auf, und das dritte Regioisomer weist eine CH₂-Gruppe in C8-Position des Azulens auf. Mit anderen Worten: Im Falle des ersten Regioisomers trägt das Kohlenstoffatom C4 ein H-Atom und ein Hydrid-Anion H⁻, im Falle des zweiten Regioisomers trägt das Kohlenstoffatom C6 ein H-Atom und ein Hydrid-Anion H⁻ und im Falle des dritten Regiosomiers trägt das Kohlenstoffatom C8 ein H-Atom und ein Hydrid-Anion H⁻.

Während die Kohlenstoffatome C4, C6 und C8 des Bicyclo[5.3.0]decapentaens (= Azulens) bekanntermaßen eine vergleichbare Nucleophilie aufweisen, besitzen die Kohlenstoffatome C4, C6 und C8 eines Azulenderivats, d. h. eines substituierten Azulens, regelmäßig eine unterschiedliche Nucleophilie. Daher können Verbindungen des Typs

M^{A}Yₙ(AzuH) (I),

wobei Azu = ein Azulenderivat ist - in Abhängigkeit vom Substitutionsmuster des Azulenderivats - nicht nur als Gemische dreier Regioisomere vorliegen, sondern vorteilhafterweise auch als Isomerengemische, welche nur zwei Regioisomere enthalten, oder besonders vorteilhafterweise als isomerenreine Verbindungen vorliegen.

"Isomerenrein" bedeutet im Rahmen der vorliegenden Erfindung, dass das gewünschte Produkt isomerenrein anfällt bzw. angefallen ist oder das gewünschte Isomer nach Aufreinigung mit einem Anteil von ≥ 90 %, bevorzugt von ≥ 95 %, besonders bevorzugt von ≥ 99 % vorliegt. Dabei ist die Isomerenreinheit beispielsweise mittels Kernresonanzspektroskopie bestimmt.

In einer anderen Ausführungsform der hier beanspruchten Verbindungen des Typs

M^{A}Yₙ(AzuH) (I)

ist vorgesehen, dass Azu = ein Azulenderivat ist, wobei die Verbindung gemäß der allgemeinen Formel

M^{A}Yₙ(AzuH) (I)

als ein Isomerengemisch oder isomerenrein vorliegt.

Ist Azu = Azulenderivat und liegt die Verbindung gemäß der allgemeinen Formel

M^{A}Yₙ(AzuH) (I)

als Isomerengemisch vor, enthält das Isomerengemisch wenigstens zwei Regioisomere ausgewählt aus der Gruppe bestehend aus einem ersten Regioisomer, einem zweiten Regioisomer und einem dritten Regioisomer. Dabei weist das erste Regioisomer eine CH₂-Gruppe in C4-Position des Azulengerüsts auf, das zweite Regioisomer weist eine CH₂-Gruppe in C6-Position des Azulengerüsts auf, und das dritte Regioisomer weist eine CH₂-Gruppe in C8-Position des Azulengerüsts auf. Mit anderen Worten: Im Falle des ersten Regioisomers trägt das Kohlenstoffatom C4 ein H-Atom und ein Hydrid-Anion H⁻, im Falle des zweiten Regioisomers trägt das Kohlenstoffatom C6 ein H-Atom und ein Hydrid-Anion H⁻ und im Falle des dritten Regiosomiers trägt das Kohlenstoffatom C8 ein H-Atom und ein Hydrid-Anion H⁻.

Ist Azu = Azulenderivat und liegt die Verbindung gemäß der allgemeinen Formel

M^{A}Yₙ(AzuH) (I)

isomerenrein vor, dann trägt entweder
i. das Kohlenstoffatom C4 des Azulengerüsts
   oder
ii. das Kohlenstoffatom C6 des Azulengerüsts
   oder
iii. das Kohlenstoffatom C8 des Azulengerüsts
zusätzlich zu dem einen H-Atom ein Hydrid-Anion H⁻.
Mithin liegt entweder in C4-Position oder alternativ in C6-Position oder in C8-Position des Azulengerüsts eine CH₂-Gruppe vor. Mit anderen Worten: Es liegt nur ein Regioisomer vor.

Gemäß einer Variante der hier beanspruchten Verbindungen gemäß der allgemeinen Formel

M^{A}Yₙ(AzuH) (I),

wobei Azu = ein Azulenderivat ist, trägt wenigstens ein Kohlenstoffatom des Azulengerüsts, ausgewählt aus der Gruppe bestehend aus C1, C2 und C3, einen Substituenten R^{F} und die Kohlenstoffatome C4, C5, C6, C7 und C8 des Auzulengerüsts tragen jeweils ein H-Atom.

In einer anderen Ausführungsform der hier beschriebenen Verbindungen des Typs

M^{A}Yₙ(AzuH) (I),

wobei Azu = ein Azulenderivat ist, trägt wenigstens ein Kohlenstoffatom des Azulengerüsts, ausgewählt aus der Gruppe bestehend aus C4, C5, C6, C7 und C8, einen Substituenten R^{F}, und die Kohlenstoffatome C1, C2 und C3 des Azulengerüsts tragen jeweils ein H-Atom.

In einer weiteren Variante der hier beanspruchten Verbindungen gemäß der allgemeinen Formel

M^{A}Yₙ(AzuH) (I),

wobei Azu = ein Azulenderivat ist, ist vorgesehen, dass genau ein Kohlenstoffatom des Fünfrings, also C1 oder C2 oder C3, und genau ein Kohlenstoffatom des Siebenrings, also C4 oder C5 oder C6 oder C7 oder C8, einen Substituenten R^{F} tragen.

Eine alternative Ausführungsform der hier beanspruchten Verbindungen gemäß der allgemeinen Formel

M^{A}Yₙ(AzuH) (I),

wobei Azu = ein Azulenderivat ist, sieht vor, dass genau ein Kohlenstoffatom des Fünfrings, also C1 oder C2 oder C3, und genau zwei Kohlenstoffatome des Siebenrings, also genau zwei der Kohlenstoffatome C4, C5, C6, C7, C8, einen Substituenten R^{F} tragen.

Gemäß einer noch anderen Ausführungsvariante der hier beschriebenen Verbindungen gemäß der allgemeinen Formel

M^{A}Yₙ(AzuH) (I),

wobei Azu = ein Azulenderivat ist, ist vorgesehen, dass genau ein Kohlenstoffatom des Fünfrings, also C1 oder C2 oder C3, und genau drei Kohlenstoffatome des Siebenrings, also genau drei der Kohlenstoffatome C4, C5, C6, C7, C8, einen Substituenten R^{F} tragen.

In einer weiteren Ausführungsform der hier beanspruchten Verbindungen gemäß der allgemeinen Formel

M^{A}Yₙ(AzuH) (I),

wobei Azu = ein Azulenderivat ist, tragen wenigstens die Kohlenstoffatome C1, C4 und C7 des Azulengerüsts einen Substituenten R^{F}. Dabei sind auch die Isomere des wenigstens 1,4,7-substituierten Azulenderivats umfasst.

Beispiele für 1,4,7-substituierte Azulenderivate sind 1,4,7-Trimethylazulen, 7-Ethyl-1,4-dimethylazulen (Chamazulen), 7-*n*-Propyl-1,4-dimethylazulen, 7-*iso*-Propyl-1,4-dimethylazulen (Guajazulen), 7-*n*-Butyl-1,4-dimethylazulen, 7-*iso*-Butyl-1,4-dimethylazulen, 7-*sec*-Butyl-1,4-dimethylazulen, 7-*tert*-Butyl-1,4-dimethylazulen, 7-*n*-Pentyl-1,4-dimethylazulen, 7-*iso*-Pentyl-1,4-dimethylazulen, 7-*neo*-Pentyl-1,4-dimethylazulen, 7-*n-*Hexyl-1,4-dimethylazulen, 7-*iso*-Hexyl-1,4-dimethylazulen, 7-(3-Methylpentan)-1,4-dimethylazulen, 7-*neo*-Hexyl-1,4-dimethylazulen, 7-(2,3-Dimethylbutan)-1,4-dimethylazulen, und deren Isomere.

Bei Guajazulen handelt es sich um einen Naturstoff, der in Kamillenöl und anderen ätherischen Ölen enthalten und daher in großen Mengen kostengünstig zugänglich ist. Synthetisch kann es aus dem Guajol des Guajakholzöls (Guajakharz) hergestellt werden. Guajazulen ist eine intensiv blaue Substanz mit entzündungshemmender Wirkung. Ein Isomer des Guajazulens ist beispielsweise 2-*Iso*-propyl-4,8-dimethylazulen (Vetivazulen).

Ist Azu = Guajazulen, so liegt vorteilhafterweise die isomerenreine Verbindung Alkalimetall-7-*iso*-propyl-1,4-dimethyl-8-*H*-dihydroazulenid vor, welches auch als Alkalimetall-8-*H-*dihydroguajazulenid bezeichnet werden kann.

In einer anderen Variante der beanspruchten Verbindungen ist das Alkalimetall M^{A} ausgewählt ist aus der Gruppe bestehend aus Li, Na und K.

Gemäß einer noch anderen Ausführungsform ist der Neutralligand Y ein aprotisch-polares Lösungsmittel. Vorteilhaft ist der Neutralligand ausgewählt aus der Gruppe bestehend aus Ethern (= Alkoxyalkanen), Thioethern und tertiären Aminen, insbesondere aus der Gruppe bestehend aus Ethern (= Alkoxyalkanen) und Thioethern.

Mit dem Begriff "Alkoxyalkan" ist vorliegend jeder Sauerstoff enthaltende Ether gemeint, beispielsweise auch Glycol-dialkylether und Kronenether. Der Begriff "Thioether" umfasst sowohl nicht-cyclische als auch cyclische Thioether.

Als Glycol-dialkylether werden auch terminal dialkylierte Mono-, Di- oder Trialkylenglycoldialkylether verstanden. Beispiele für Glycol-dialkylether sind in nicht einschränkender Weise weiter oben aufgeführt. Eine Definition des Begriffs "Kronenether" sowie eine Auswahl an Kronenethern ist bereits weiter oben angegeben.

Als tertiäres Amin kann beispielsweise Di-*iso*-propylethylamin (DIPEA) oder *N,N,N',N'-*Tetramethylethylendiamin (TMEDA) vorgesehen sein.

Gemäß einer noch anderen Ausführungsform der beanspruchten Verbindungen ist der Neutralligand Y ein Ether. Beispielsweise kann der Ether ein nicht-cyclischer oder ein cyclischer Ether sein ausgewählt aus der Gruppe bestehend aus Dialkylethern, Cyclopentylmethylether, Tetrahydrofuran, 2-Methyltetrahydrofuran, 3-Methyltetrahydrofuran, Tetrahydropyran, 1,4-Dioxan, und deren Isomeren, und Mischungen davon, insbesondere aus der Gruppe bestehend aus Diethylether, Methyl-*tert-*butylether, Di-n-propylether, Di-*iso*-propylether, Di-*n*-butylether, Di-*iso*-butylether, Di*-tert-*butylether, Tetrahydrofuran, 2-Methyltetrahydrofuran, 3-Methyltetrahydrofuran, Tetrahydropyran, 1,4-Dioxan, und deren Isomeren, und Mischungen davon.

In einer weiteren Variante der hier beschriebenen Verbindungen ist der Neutralligand Y ein Kronenether, welcher ausgewählt ist aus der Gruppe bestehend aus makrocyclischen Polyethern und deren Aza-, Phospha- und Thia-Derivaten, wobei ein Innendurchmesser des Kronenethers und ein lonenradius von M^{A} miteinander korrespondieren.

Ob die hier beanspruchten Verbindungen gemäß der allgemeinen Formel

M^{A}Yₙ(AzuH) (I)

als Solvens-Addukte, insbesondere Ether-Addukte, vorliegen, hängt von verschiedenen Faktoren ab, z. B. von dem für die Darstellung von Verbindungen gemäß der allgemeinen Formel I verwendeten Lösungsmittel oder Lösungsmittelgemisch sowie der Art des Alkalimetall-Kations M^{A+}, also dem eingesetzten hydridischen Reduktionsmittel Z. Wurde beispielsweise im Rahmen der Synthese, einschließlich der Aufreinigung, ein Solvens verwendet, welches einen oder mehrere Ether umfasste oder daraus bestand, und wenigstens ein Lithium-Kationen aufweisendes hydridisches Reduktionsmittel Z eingesetzt, so wird aller Wahrscheinlichkeit nach ein Ether-Addukt

Li(ether)ₙ(AzuH) (I),

wobei n = 1 oder 2, vorliegen. Sofern ein solches Ether-Addukt abschließend mit einem nichtetherischen Lösungsmittel, wie z. B. Pentan oder Hexan, gewaschen wurde, liegt üblicherweise eine solvensfreie Verbindung gemäß der allgemeinen Formel

Li(AzuH) (I)

vor.

Die Aufgabe wird außerdem gelöst durch die Verwendung
a) einer Verbindung gemäß der allgemeinen Formel

   M^{A}Yₙ(AzuH) (I)

   - gemäß einer Ausführungsform der weiter oben beschriebenen Verbindungen gemäß der allgemeinen Formel

      M^{A}Yₙ(AzuH) (I)

      oder
   - erhalten oder erhältlich nach einem Verfahren zur Herstellung solcher Verbindungen gemäß einer der weiter oben beschriebenen Ausführungsformen,
   oder
b) einer Lösung oder einer Suspension,
   umfassend eine Verbindung gemäß der allgemeinen Formel

   M^{A}Yₙ(AzuH) (I)

   und wenigstens ein, insbesondere aprotisch-polares, Lösungsmittel S_{P},
   erhalten oder erhältlich nach einem Verfahren gemäß einem der weiter oben beschriebenen Ausführungsbeispiele,
   wobei
   - M^{A} ein Alkalimetall ist,
   - Y ein Neutralligand ist, welcher über wenigstens ein Donoratom an M^{A} gebunden oder koordiniert ist, wobei H₂O ausgenommen ist,
   - n = 0, 1, 2, 3 oder 4
      und
   - AzuH = Azulen oder ein Azulenderivat, welches in 4-Position, 6-Position oder 8-Position zusätzlich zu einem H-Atom ein Hydrid-Anion trägt,
      wobei
      Azu = Azulen gemäß der Formel 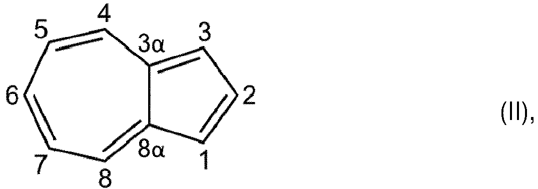 oder
      Azu = ein Azulenderivat, welches ein Azulengerüst gemäß Formel II, bestehend aus einem Fünfring und einem Siebenring, aufweist,
         wobei
         a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
            wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
            wobei zwei Substituenten R^{F} optional einen Ring bilden können,
            und
         b) wenigstens ein Kohlenstoffatom des Azulengerüsts, ausgewählt aus der Gruppe bestehend aus den Kohlenstoffatomen C4, C6 und C8, ein H-Atom trägt,
      zur Herstellung von Metallkomplexen gemäß der allgemeinen Formel

   M(L_{K})_{f}(AzuH)ₘ (III)

   oder

   M(L_{N})(AzuH)_{q} (IV)

   oder

   [M(L_{S})_{g}(AzuH)ᵥ]X (V)

   oder

   [M(L_{T})(AzuH)_{z}]X (VI),

   wobei
   - M: = Metall-Zentralatom ausgewählt aus der Gruppe 6, der Gruppe 7, der Gruppe 8, der Gruppe 9, der Gruppe 10, der Gruppe 11 oder der Gruppe 12,
   - L_{K}: = optionaler neutraler sigma-Donor-Ligand oder optionaler neutraler pi-Donor-Ligand,
   - f: = Anzahl der Liganden L_{K}, wobei f = 0, 1, 2, 3, 4, 5 oder 6 ist,
   - m: = Anzahl der Liganden AzuH, wobei m = 1, 2, 3, 4, 5, 6 oder 7 ist,
   - L_{N}: = wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
   - q: = Anzahl der Liganden AzuH, wobei q = w₂ - |u|, wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
   - L_{S}: = optionaler neutraler sigma-Donor-Ligand oder optionaler neutraler pi-Donor-Ligand,
   - g: = Anzahl der Liganden Ls, wobei g = 0, 1, 2, 3, 4, 5 oder 6 ist,
   - v: = Anzahl der Liganden AzuH, wobei v = w₃ - 1, wobei w₃ = 2, 3, 4, 5, 6 oder 7 ist,
   - L_{T}: = wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
   - z: = Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
   - X⁻: = Halogenid-Anion oder einwertiges schwach-koordinierendes Anion oder einwertiges nicht-koordinierendes Anion,
   und
   AzuH und Azu wie oben definiert sind.

Bei der vorgenannten Verwendung einer Verbindung gemäß der allgemeinen Formel

M^{A}Yₙ(AzuH) (I)

oder einer Lösung oder Suspension, umfassend eine Verbindung gemäß der allgemeinen Formel

M^{A}Yₙ(AzuH) (I)

und wenigstens ein, insbesondere aprotisch-polares, Lösungsmittel S_{P}, zur Herstellung von Metallkomplexen handelt es sich um ein Verfahren zur Herstellung von Metallkomplexen gemäß der allgemeinen Formel

M(L_{K})_{f}(AzuH)ₘ (III)

oder

M(L_{N})(AzuH)_{q} (IV)

oder

[M(L_{S})_{g}(AzuH)ᵥ]X (V)

oder

[M(L_{T})(AzuH)_{z}]X (VI),

wobei
- M: = Metall-Zentralatom ausgewählt aus der Gruppe 6, der Gruppe 7, der Gruppe 8, der Gruppe 9, der Gruppe 10, der Gruppe 11 oder der Gruppe 12,
- L_{K}: = optionaler neutraler sigma-Donor-Ligand oder optionaler neutraler pi-Donor-Ligand,
- f: = Anzahl der Liganden L_{K}, wobei f = 0, 1, 2, 3, 4, 5 oder 6 ist,
- AzuH: = Azulen oder ein Azulenderivat, welches in 4-Position, 6-Position oder 8-Position zusätzlich zu einem H-Atom ein Hydrid-Anion trägt,
- m: = Anzahl der Liganden AzuH, wobei m = 1, 2, 3, 4, 5, 6 oder 7 ist,
- L_{N}: = wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
- q: = Anzahl der Liganden AzuH, wobei q = w₂ - |u|,
wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
- Ls: = optionaler neutraler sigma-Donor-Ligand oder optionaler neutraler pi-Donor-Ligand,
- g: = Anzahl der Liganden L_{S}, wobei g = 0, 1, 2, 3, 4, 5 oder 6 ist,
- v: = Anzahl der Liganden AzuH, wobei v = w₃ - 1, wobei w₃ = 2, 3, 4, 5, 6 oder 7 ist,
- L_{T}: = wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
- z: = Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
- X⁻: = Halogenid-Anion oder einwertiges schwach-koordinierendes Anion oder einwertiges nicht-koordinierendes Anion,
und wobei
- Azu: = Azulen gemäß der Formel 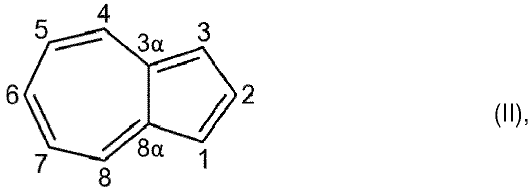 oder
- Azu: = ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
   wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
   wobei zwei Substituenten R^{F} optional einen Ring bilden können,
   und
b) wenigstens ein Kohlenstoffatom des Azulengerüsts, ausgewählt aus der Gruppe bestehend aus den Kohlenstoffatomen C4, C6 und C8, ein H-Atom trägt,
unter Verwendung
▪ einer Verbindung gemäß der allgemeinen Formel

   M^{A}Yₙ(AzuH) (I),

   - gemäß einer Ausführungsform der weiter oben beschriebenen Verbindungen gemäß der allgemeinen Formel

      M^{A}Yₙ(AzuH) (I)

      oder
   - erhalten oder erhältlich nach einem Verfahren zur Herstellung solcher Verbindungen gemäß einer der weiter oben beschriebenen Ausführungsformen,
   oder
▪ einer Lösung oder einer Suspension,
   umfassend eine Verbindung gemäß der allgemeinen Formel

   M^{A}Yₙ(AzuH) (I)

   und wenigstens ein, insbesondere aprotisch-polares, Lösungsmittel S_{P},
   erhalten oder erhältlich nach einem Verfahren gemäß einem der weiter oben beschriebenen Ausführungsbeispiele,
wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
   und
- AzuH und Azu wie oben definiert sind,
umfassend die Schritte:
A. Zurverfügungstellung der Verbindung gemäß der allgemeinen Formel

   M^{A}Yₙ(AzuH) (I)

   oder der Lösung oder der Suspension, umfassend die Verbindung gemäß der allgemeinen Formel

   M^{A}Yₙ(AzuH) (I)

   und das wenigstens eine, insbesondere aprotisch-polare, Lösungsmittel S_{P},
   und
B. Synthese des Metallkomplexes

   M(L_{K})_{f}(AzuH)ₘ (III)

   oder

   M(L_{N})(AzuH)_{q} (IV)

   oder

   [M(L_{S})_{g}(AzuH)ᵥ]X (V)

   oder

   [M(L_{T})(AzuH)_{z}]X (VI)

   unter Verwendung der Verbindung gemäß der allgemeinen Formel

   M^{A}Yₙ(AzuH) (I)

   als Edukt.

Dabei umfassen die allgemeinen Formeln III, IV, V und VI sowohl die Monomere als auch etwaige Oligomere, insbesondere Dimere.

Das jeweilige Metall-Zentralatom M kann grundsätzlich eine formale Oxidationsstufe bzw. Oxidationszahl von 0, 1, 2, 3, 4, 5, 6 oder 7 besitzen. Die höheren Oxidationsstufen, insbesondere die Oxidationsstufen 4, 5, 6 und 7, werden üblicherweise durch anionische, insbesondere monoanionische Liganden, z. B. Fluoridanionen (vgl. insbesondere Formeln IV, V und VI), und/oder dianionische Liganden, z. B. O²⁻ (vgl. insbesondere Formel VI), stabilisiert.

Der Index q kann den Wert 1, 2, 3, 4, 5 oder 6 annehmen. Alternativ ist q = 1, 2, 3, 4 oder 5, vorteilhaft ist q = 1, 2, 3 oder 4, insbesondere ist q = 1, 2 oder 3.

Der Index v kann ebenfalls 1, 2, 3, 4, 5 oder 6 betragen. Alternativ ist v = 1, 2, 3, 4 oder 5, vorteilhaft ist v = 1, 2, 3 oder 4, insbesondere ist v = 1, 2 oder 3.

Der Index z kann den Wert 1, 2, 3, 4 oder 5 annehmen. Alternativ ist z = 1, 2, 3 oder 4, insbesondere ist z = 1, 2 oder 3.

Der Begriff "schwach-koordinierend" umfasst auch die Ausdrücke "sehr schwach koordinierend" und "mäßig stark koordinierend". Die Halogenid-Anionen sind insbesondere ausgewählt aus der Gruppe bestehend aus Fluorid, Chlorid und Bromid. Bei den einwertigen schwach-koordinierenden und einwertigen nicht-koordinierenden Anionen handelt es sich insbesondere um perfluorierte Anionen, wie z. B. PF₆⁻, BF₄⁻ und [(CF₃SO₂)₂N]⁻.

Die Metallkomplexe gemäß den allgemeinen Formeln III, IV, V und VI werden üblicherweise solvensfrei, d. h. nicht als Solvensaddukte, erhalten. Es ist aber auch die Herstellung von Lösungsmitteladdukten dieser Metallkomplexe möglich. Im Falle eines Lösungsmitteladduktes ist das Lösungsmittel insbesondere mit dem Lösungsmittel S_{P} identisch. Alternativ oder ergänzend können einer oder mehrere der neutralen Donor-Liganden L_{K} bzw. Ls (vgl. Formel III bzw. Formel V) ausgewählt sein aus der Gruppe bestehend aus Acetonitril, Dimethylsulfoxid und Tetrahydrothiophen.

Die jeweils verwendete Verbindung des Typs

M^{A}Yₙ(AzuH) (I)

kann isomerenrein vorliegen oder als Gemisch zweier oder dreier Isomere. Bei den Isomeren gemäß der allgemeinen Formel

M^{A}Yₙ(AzuH) (I)

handelt es sich im Einzelnen um ein Alkalimetall-3α,4-*H-*dihydroazulenid, ein Alkalimetall-8,8α-*H*-dihydroazulenid, ein Alkalimetall-3α,6-*H-*dihydroazulenid und/oder ein Alkalimetall-6,8α-*H*-dihydroazulenid. Diese können adduktfrei bzw. solvensfrei vorliegen, nämlich wenn n = 0, oder als Addukte bzw. Solvate mit einem (n = 1), zwei (n = 2), drei (n = 3) oder vier (n = 4) Neutralliganden Y. Vorteilhaft ist der Neutralligand Y ausgewählt aus der Gruppe bestehend aus Ethern (= Alkoxyalkanen), Thioethern und tertiären Aminen, insbesondere aus der Gruppe bestehend aus Ethern (= Alkoxyalkanen) und Thioethern. Beispiele für Y sind weiter oben angegeben.

Bei dem Lösungsmittel S_{P} kann es sich auch um ein Lösungsmittelgemisch handeln. Das Lösungsmittel S_{P} ist vorteilhaft ein aprotisch-polares Lösungsmittel oder umfasst wenigstens ein aprotisch-polares Lösungsmittel. Beispielsweise ist das Lösungsmittel S_{P} ein Ether oder umfasst wenigstens einen Ether. Der Ether kann ausgewählt sein aus der Gruppe bestehend aus Tetrahydrofuran, Methyltetrahydrofuran, 1,4-Dioxan, Diethylether, Methyl-*tert*-butylether, Di-n-propylether, Di*i*sopropylether, Cyclopentylmethylether, und deren Isomeren, und Mischungen davon.

Überraschenderweise sind mittels der hier beanspruchten Verwendung von Verbindungen gemäß der allgemeinen Formel

M^{A}Yₙ(AzuH) (I)

bzw. mittels des hier beschriebenen Verfahrens Metallkomplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, in guter Reinheit von 97 %, vorteilhaft von mehr als 97 %, insbesondere von mehr als 98 % oder 99 %, und guter Ausbeute, auch Raum-Zeit-Ausbeute, erhältlich. Im Einzelnen handelt es sich um Metallkomplexe gemäß den allgemeinen Formeln

M(LK)_{f}(AzuH)ₘ (III),

M(L_{N})(AzuH)_{q} (IV),

[M(L_{S})_{g}(AzuH)ᵥ]X (V),

[M(L_{T})(AzuH)_{z}]X (VI).

Dabei ist M ein Metall-Zentralatom ausgewählt aus der Gruppe 6, der Gruppe 7, der Gruppe 8, der Gruppe 9, der Gruppe 10, der Gruppe 11 oder der Gruppe 12.

Weiterhin wurde überraschenderweise gefunden, dass sich stark reduzierende *H-*Dihydroazulenyl-Liganden (AzuH)¹⁻, wie z. B. der 8-*H*-Dihydroguajazulenyl-Ligand (GuaH)¹⁻ , für die Darstellung von Komplexen der mittleren Übergangsmetalle (Gruppen 6, 7 und 8), z. B. ausgehend von Chlorid-Salzen der Metalle der Gruppe 8, und der späten Übergangsmetalle, beispielsweise ausgehend von Chlorid-Salzen der Metalle der Gruppe 9, der Gruppe 10, der Gruppe 11 und der Gruppe 12, eignen. Diese Komplexe sind zudem vorteilhafterweise in guter Ausbeute und guter Reinheit, in vielen Fällen auch isomerenrein, erhältlich.

Die vorgenannten Tatsachen sind deswegen überraschend, weil dem Fachmann bekannt ist, dass stark reduzierende *H*-Dihydroazulenyl-Liganden (AzuH)¹⁻, wie z. B. der 8-H-Dihydroguajazulenyl-Ligand (GuaH)¹⁻, insbesondere für die Komplexbildung mit frühen Übergangsmetallen, wie z. B. Titan und Zirkonium, prädestiniert ist. (vgl. J. Richter, P. Liebing, F. T. Edelmann Inorg. Chim. Acta 2018, 475,18 - 27).

Mittels der hier beanspruchten Verwendung von Verbindungen gemäß der allgemeinen Formel

M^{A}Yₙ(AzuH) (I)

bzw. mittels des hier beschriebenen Verfahrens sind zum einen hochreine homoleptische *Sandwich*-Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, erhältlich, insbesondere:
▪ neutrale *Sandwich*-Komplexe des Typs

   M(L_{K})_{f}(AzuH)ₘ (III)

   mit f = 0, d. h. ohne neutralen Donor-Liganden L_{K}, z. B. Fe(GuaH)₂, Ru(GuaH)₂, Co(GuaH)₂, Zn(GuaH)₂, wobei jeweils die formale Oxidationsstufe 2 ist, M = Fe, Ru, Co oder Zn, f = 0, m = 2 und AzuH = GuaH
   und
▪ kationische *Sandwich*-Komplexe des Typs

   [M(L_{S})_{g}(AzuH)ᵥ]X (V)

   mit g = 0, d. h. ohne neutralen Donor-Liganden Ls, z. B. [Co(GuaH)₂]PF₆, wobei die formale Oxidationsstufe 3 ist, M = Co, g = 0, v = 3 - 1 = 2, AzuH = GuaH und X = PF₆.

Zum anderen sind mittels der hier beanspruchten Verwendung von Verbindungen gemäß der allgemeinen Formel

M^{A}Yₙ(AzuH) (I)

bzw. mittels des hier beschriebenen Verfahrens hochreine heteroleptische Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, erhältlich, insbesondere:
▪ neutrale Halb*sandwich*-Komplexe des Typs

   M(L_{K})_{f}(AzuH)ₘ (III)

   mit f = 1 oder 2, d. h. mit genau einem neutralen sigma-Donor-Liganden oder mit genau einem neutralen, nicht-planaren pi-Donor-Liganden, z. B. Cu(PPh₃)(GuaH), Rh(nbd)(GuaH), Rh(cod)(GuaH), wobei die formale Oxidationsstufe jeweils 1 ist, M = Cu oder Rh, L_{K} = PPh₃, NBD oder COD, f jeweils 1 ist, m jeweils 1 ist und AzuH = GuaH ist, oder zwei planaren, neutralen pi-Donor-Liganden, z. B. Rh(ethen)₂(GuaH), wobei die formale Oxidationsstufe 1 ist, M = Rh, L_{K} = Ethen, f = 2, m = 1 und AzuH = GuaH
▪ neutrale Halb*sandwich*-Komplexe des Typs

   M(L_{N})(AzuH)_{q} (IV),

   beispielsweise mit |u| = 1, 2 oder 3, d. h. beispielsweise mit einem, zwei oder drei monoanionischen sigma-Donor-Liganden, z. B. Zn(Mes)(GuaH), wobei die formale Oxidationsstufe 2 ist, M = Zn, L_{N} = Mes⁻, |u| = 1, q = 2 - |-1| = 1 und AzuH = GuaH ist, und PtMe₃(GuaH), wobei die formale Oxidationsstufe 4 ist, M = Pt, L_{N} = CH₃⁻, |u| = 3, q = 4 - |-3| = 1 und AzuH = GuaH
▪ neutrale *Sandwich*-Komplexe des Typs

   M(L_{N})(AzuH)_{q} (IV),

   beispielsweise mit |u| = 1, d. h. mit genau einem monoanionischen, planaren pi-Donor-Liganden, z. B. Ru(Cp*)(GuaH), wobei die formale Oxidationsstufe 2 ist, M = Ru, L_{N} = Cp*, |u| = 1, q = 2 -|-1| = 1 und AzuH = GuaH
▪ kationische *Sandwich*-Komplexe des Typs

   [M(L_{S})_{g}(AzuH)ᵥ]X (V)

   mit g = 1, d. h mit genau einem neutralen, planaren pi-Donor-Liganden, z. B. [Ru(*p*-cymol)(GuaH)]PF₆, wobei die formale Oxidationsstufe 2 ist, M = Ru, L_{S} = *p*-Cymol, g = 1, v = 2 - 1 = 1, AzuH = GuaH und X = PF₆
▪ kationische Halb*sandwich*-Komplexe des Typs

   [M(L_{S})_{g}(AzuH)ᵥ]X (V)

   mit g = 1 oder 2, d. h. mit einem neutralen nicht-planaren pi-Donor-Liganden, z. B. [Pt(cod)(GuaH)]PF₆, wobei die formale Oxidationsstufe 2 ist, M = Pt, Ls = COD, g = 1, v = 2 - 1 = 1, AzuH = GuaH und X = PF₆
   oder mit zwei planaren, neutralen pi-Donor-Liganden, z. B. [Pt(ethen)₂(GuaH)]PF₆, wobei die formale Oxidationsstufe 2 ist, M = Pt, Ls = Ethen, g = 2, v = 2 - 1 = 1, AzuH = GuaH und X = PF₆
▪ kationische *Sandwich*-Komplexe des Typs

   [M(L_{T})(AzuH)_{z}]X (VI)

   mit |h| = 1, d. h. mit genau einem anionischen, planaren pi-Donor-Liganden, z. B. [Rh(Cp*)(GuaH)]Cl, [Rh(Cp*)(GuaH)]PF₆, wobei jeweils die formale Oxidationsstufe 3 ist, M = Rh, L_{T} = Cp*, |h| = 1, z = 3 - (|-1| + 1) = 1, AzuH = GuaH und X = Cl oder PF₆.

Mit Reinheit ist hier sowohl die Abwesenheit unerwünschter Verunreinigungen, insbesondere durch Edukte, Nebenprodukte und Lösungsmittel, als auch die Isomerenreinheit gemeint. Denn beide vorgenannten Arten der Reinheit können mit Blick auf die spätere Verwendung der mittels dieses Verfahrens darstellbaren Metallkomplexe von Bedeutung sein. Eine Definition des Begriffes "isomerenrein" und damit implizit auch des Begriffs "Isomerenreinheit" ist bereits weiter oben gegeben.

Im Zusammenhang mit der vorliegenden Erfindung bezieht sich der Ausdruck "hochrein" außerdem auf einen Gesamtgehalt an Verunreinigungen, umfassend insbesondere Verunreinigungen durch Metalle, Halbmetalle, Luftsauerstoff, Wasser und sauerstoffhaltige Verbindungen, von unter 1 ppm, idealerweise unter 100 ppb.

In einer Ausführungsform der beanspruchten Verwendung bzw. des hier beanspruchten Verfahrens ist die Herstellung von Metallkomplexen gemäß der allgemeinen Formel

M(L_{K})_{f}(AzuH)ₘ (III)

vorgesehen.

Gemäß einer noch anderen Ausführungsform der beanspruchten Verwendung bzw. des beanspruchten Verfahrens ist das Metall-Zentralatom M des herzustellenden Metallkomplexes gemäß der allgemeinen Formel

M(L_{K})_{f}(AzuH)ₘ (III)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der Verwendung bzw. des Verfahrens sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der Verwendung bzw. des Verfahrens ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der hier beanspruchten Verwendung bzw. des hier beanspruchten Verfahrens sieht vor, dass das Metall-Zentralatom M eine formale Oxidationsstufe von 1, 2, 3, 4, 5, 6 oder 7 besitzt. Nach einer alternativen oder ergänzenden Ausführungsform der Verwendung bzw. des Verfahrens ist vorgesehen, dass der Index m und die formale Oxidationsstufe des Metall-Zentralatoms M des jeweils herzustellenden Metallkomplexes gemäß der allgemeinen Formel

M(L_{K})_{f}(AzuH)ₘ (III)

identisch sind, d. h. dieselbe natürliche Zahl sind, wobei Null ausgenommen ist. Mithin kann m = 1, 2, 3, 4, 5, 6 oder 7 sein.

Gemäß einer weiteren Ausführungsvariante der Verwendung bzw. des Verfahrens ist die Herstellung eines Metallkomplexes gemäß der allgemeinen Formel

M(L_{K})_{f}(AzuH)ₘ (III)

vorgesehen, wobei das Metall-Zentralatom M eine formale Oxidationsstufe von 1, 2, 3 oder 4 besitzt, vorteilhaft von 1, 2 oder 3, insbesondere von 1 oder 2. In einer alternativen oder ergänzenden Ausführungsvariante der beanspruchten Verwendung bzw. des beanspruchten Verfahrens ist der Index m 1, 2, 3 oder 4, vorteilhaft 1, 2 oder 3, insbesondere 1 oder 2. Eine weitere alternative oder ergänzende Ausführungsform der beanspruchten Verwendung bzw. des beanspruchten Verfahrens sieht vor, dass der Index f, welcher die Anzahl der neutralen Liganden L_{K} in einem Metallkomplex gemäß der allgemeinen Formel

M(L_{K})_{f}(AzuH)ₘ (III)

angibt, Null, 1, 2, 3, 4 oder 5 ist, vorteilhaft Null, 1, 2, 3 oder 4, insbesondere Null, 1, 2 oder 3.

In einer anderen Ausführungsvariante der hier beanspruchten Verwendung bzw. des hier beanspruchten Verfahrens beträgt die Summe der Anzahl m der Liganden AzuH und der Anzahl f der neutralen Liganden L_{K}, also Σ (f + m), 2, 3, 4, 5, 6 oder 7. Eine andere Ausführungsform sieht vor, dass die Summe der Anzahl m der Liganden AzuH und der Anzahl f der neutralen Liganden L_{K}, also Σ (f + m), 2, 3, 4, 5 oder 6 beträgt, vorteilhaft 2, 3, 4 oder 5, insbesondere 2, 3 oder 4.

Eine weitere Ausführungsform sieht vor, dass der neutrale sigma-Donor-Ligand L_{K} oder pi-Donor-Ligand L_{K} ausgewählt ist aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Mit dem Begriff Phosphor-Donor-Ligand ist vorliegend jeder ein- oder mehrzähnige Ligand gemeint, der wenigstens ein Phosphor-Donoratom aufweist, über welches der Neutralligand L_{K} an ein Metallion koordinieren kann. Dazu zählen neben Phosphanen und Diphosphanen auch Phosphor-Donorliganden wie z. B. 2-(Dicyclohexylphosphino)-2'-(*N,N-*dimethylamino))-1,1'-biphenyl (DavePhos).

Beispiele für den Liganden L_{K} sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, p-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

In einer Variante der beanspruchten Verwendung bzw. des beanspruchten Verfahrens ist der Ligand L_{K} ausgewählt aus der Gruppe bestehend aus 2-(Dicyclohexylphosphino)-2'-(*N,N*-dimethylamino))-1,1'-biphenyl (DavePhos), 2-(Dicyclohexylphosphino)-2',4',6'-tri-*iso*propyl-1,1'-biphenyl (XPhos), 2-Dicyclohexylphosphino-2',6'-dimethoxy-1,1'-biphenyl (SPhos), 2-Dicyclohexylphosphino-2',6'-di-*iso*-propoxy-1,1'-biphenyl (RuPhos), 2-(Dicyclohexylphosphino)-3,6-dimethoxy-2',4',6'-tri-*iso*-propyl-1,1'-biphenyl (BrettPhos), [4-(*N,N*-Dimethylamino)phenyl]di-*tert*-butylphosphin (Amphos), 9,9-Dimethyl-4,5-bis(diphenylphosphino)xanthen (Xantphos), 2-Dicyclohexylphosphino-2',6'-bis(dimethylamino)-1,1'-biphenyl (CPhos), Tricyclohexylphosphin (PCy₃), Butyldi-1-adamantylphosphin (cataCXium^{®} A), 2-Di-*tert*-butylphosphino-2',4',6'-tri-*iso*-propyl-1,1'-biphenyl (*t*-BuXPhos), 2-(Di-*tert*-butylphosphino)-3,6-dimethoxy-2',4',6'-tri-*iso*-propyl-1,1'-biphenyl (*tert*-BuBrettPhos), 2-(Di-*tert*-butylphosphino)-3-methoxy-6-methyl-2',4',6'-*tri*-isopropyl-1,1'-biphenyl (RockPhos), 2-Di[3,5-bis(trifluoromethyl)phenylphosphino]-3,6-dimethoxy-2',4',6'-tri-*iso*-propyl-1,1'-biphenyl (JackiePhos), (*R*)-(-)-1-[(*S*)-2-(Dicyclohexylphosphino)ferrocenyl]ethyldi-*tert*-butylphosphin, Di*-tert-*butyl(*n-*butyl)phosphin, 2-(Di-1-adamantylphosphino)-3,6-dimethoxy-2',4',6'-tri-*iso*-propyl-1,1'-biphenyl (AdBrettPhos), 2-Diethylphosphino-2',6'-bis(dimethylamino)-1,1'-biphenyl, *racemic*-2-Di-*tert*-butylphosphino-1,1'-binaphthyl (TrixiePhos), Tri-*tert*-butylphosphin (P*t*Bu₃), 1,3,5,7-Tetramethyl-8-phenyl-2,4,6-trioxa-8-phosphaadamantan (MeCgPPh), N-[2-(di-1-adamantylphosphino)phenyl]morpholin (MorDalPhos), 4,6-Bis(diphenylphosphino)phenoxazin (NiXantphos), 1,1'-Bis(diphenylphosphino)ferrocen (dppf), 2-Di-*tert*-butylphosphino-2'-(*N,N-*dimethylamino))-1,1'-biphenyl (*t*BuDavePhos), *racemic*-2,2'-Bis(diphenylphosphino)-1,1'-binaphthyl (*rac*-BINAP), 1,1'-Bis(di-*tert-*butylphosphino)ferrocen (DTBPF), 2-Di-*tert*-butylphosphino-3,4,5,6-tetramethyl-2',4',6'-tri-*iso*-propyl)-1,1'-biphenyl (Me₄*t*-BuXPhos), 2-Dicyclohexylphosphino-4-(*N,N-*dimethylamino)-1,1'-biphenyl, Trimethylphosphin (PMe₃), Tris-*p*-tolylphosphin (P(*p*-tolyl)₃), Tris-*o*-tolylphosphin (P(*p*-tolyl)₃), Methyldiphenylphosphin, Triphenylphosphin (PPh₃), Trifluorphosphin, 1,2-Bis(diphenylphosphino)ethan (dppe), Phenyl-di-*tert*-butylphosphin, Di-*tert*-butyl-neopentylphosphin, 1,2,3,4,5-Pentaphenyl-1'-(di-*tert*-butylphosphino)ferrocen, Tris(*p*-methoxyphenyl)phosphin, Tris(*p*-trifluormethylphenyl)phosphin, Tris(2,4,6-trimethoxyphenyl)phosphin, Tris(2,4,6,-trimethyl)phosphin, Tris(2,6-dimethylphenyl)phosphin, 1-Adamantyl-di-*tert*-butylphosphin, Benzyldi-1-adamantylphosphin, Butyldi-1-adamantylphosphin, Tris(1-adamantyl)phosphin (PAd₃), Cyclohexyldi-*tert*-butylphosphin, Cyclohexyldiphenylphosphin, 2-Di-*tert*-butylphosphino-1,1'-binaphtyl, 2-(Di-*tert*-butylphosphino)biphenyl, 2-Di-*tert*-butylphosphino-2'-methylbiphenyl, 2-Di-*tert*-butylphosphino-2',4',6'-tri-isopropyl-1,1'-biphenyl, *2-*Di-*tert-*butylphosphino-3,4,5,6-tetramethyl-2',4',6'-tri-*iso*propylbiphenyl, 2-(Dicyclohexylphosphino)biphenyl, 2-(Dicyclohexylphosphino)-2',6'-dimethoxy-1,1'-biphenyl, 2-Di-*tert*-cyclohexyl phosphino-2'-(*N,N*-dimethylamino)biphenyl, 2-Di*-tert-*cyclohexylphosphino-2',6'-di-isopropoxy-1,1'-biphenyl, 2-(Dicyclohexylphosphino)-2',4',6'-tri-isopropyl-1,1'-biphenyl, 2-Di-cyclohexylphosphino-2'-methylbiphenyl, 2-Diphenylphosphino-2'-(*N*,*N*-dimethylamino)biphenyl, (4-Dimethyl-aminophenyl)(*tert*-butyl)2-phosphin, 1,2-Bis(di-*tert*-butylphosphinomethyl)benzen, 1,3-Bis(di-*tert-*butylphosphinomethyl)propan, 1,2-Bis(diphenylphosphinomethyl)benzen, 1,2-Bis(di-phenylphosphino)ethan, 1,2-Bis(diphenylphosphino)propan, 1,2-Bis(diphenylphosphino)butan, *N*-(2-Methoxyphenyl)-2-(di-*tert*-butylphosphino)pyrrole, 1-(2-Methoxyphenyl)-2-(di-cyclohexylphosphino)pyrrol, *N*-Phenyl-2-(di-*tert*-butylphosphino)indol, *N*-Phenyl-2-(di-*tert*-butylphosphino)pyrrol, *N*-Phenyl-2-(dicyclohexylphosphino)indol, *N-*Phenyl-2-(dicyclohexylphosphino)pyrrol und 1-(2,4,6-Trimethylphenyl)-2(dicyclohexylphosphino)imidazol.

Eine weitere vorteilhafte Ausführungsform der Verwendung bzw. des Verfahrens sieht vor, dass das Metall-Zentralatom M des herzustellenden Metallkomplexes gemäß der allgemeinen Formel

M(L_{K})_{f}(AzuH)ₘ (III)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer weiteren Ausführungsform der beanspruchten Verwendung bzw. des hier beanspruchten Verfahrens ist die Herstellung eines Metallkomplexes gemäß der allgemeinen Formel

M(L_{N})(AzuH)_{q} (IV)

vorgesehen.

Gemäß einer noch anderen Ausführungsform der beanspruchten Verwendung bzw. des beanspruchten Verfahrens ist das Metall-Zentralatom M des herzustellenden Metallkomplexes gemäß der allgemeinen Formel

M(L_{N})(AzuH)_{q} (IV)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der Verwendung bzw. des Verfahrens sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der Verwendung bzw. des Verfahrens ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der hier beanspruchten Verwendung bzw. des hier beanspruchten Verfahrens sieht vor, dass das Metall-Zentralatom M eine formale Oxidationsstufe von 2, 3, 4, 5, 6 oder 7 besitzt. Nach einer alternativen oder ergänzenden Ausführungsform der Verwendung bzw. des Verfahrens ist vorgesehen, dass w₂ und die formale Oxidationsstufe des Metall-Zentralatoms M des jeweils herzustellenden Metallkomplexes gemäß der allgemeinen Formel

M(L_{N})(AzuH)_{q} (IV)

identisch sind, d. h. dieselbe natürliche Zahl sind, wobei Null ausgenommen ist. Mithin kann w₂ = 2, 3, 4, 5, 6 oder 7 sein.

Gemäß einer weiteren Ausführungsvariante der beanspruchten Verwendung bzw. des beanspruchten Verfahrens ist die Herstellung eines Metallkomplexes gemäß der allgemeinen Formel

M(L_{N})(AzuH)_{q} (IV)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verwendung bzw. des beanspruchten Verfahrens ist w₂ = 2, 3, 4, 5 oder 6, vorteilhaft ist w₂ = 2, 3, 4 oder 5, insbesondere ist w₂ = 2, 3 oder 4. Eine weitere alternative oder ergänzende Ausführungsform der beanspruchten Verwendung bzw. des beanspruchten Verfahrens sieht vor, dass |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4, 5, oder 6 ist. In einer noch anderen Ausführungsvariante ist |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4 oder 5, vorteilhaft 1, 2, 3 oder 4, insbesondere 1, 2 oder 3.

In einer anderen Ausführungsvariante der hier beanspruchten Verwendung bzw. des hier beanspruchten Verfahrens beträgt die Summe der Anzahl q der Liganden AzuH und der Anzahl der anionischen Liganden L_{N} 2, 3, 4, 5, 6 oder 7. Eine weitere Ausführungsform sieht vor, dass die Summe der Anzahl q der Liganden AzuH und der Anzahl der anionischen Liganden L_{N} 2, 3, 4, 5 oder 6 beträgt, vorteilhaft 2, 3, 4 oder 5, insbesondere 2, 3 oder 4.

Eine noch andere Ausführungsform der hier beanspruchten Verwendung bzw. des hier beanspruchten Verfahrens zur Herstellung von Metallkomplexen gemäß der allgemeinen Formel

M(L_{N})(AzuH)_{q} (IV)

sieht vor, dass der anionische sigma-Donor-Ligand L_{N} oder pi-Donor-Ligand L_{N} vorteilhafterweise ein monoanionischer Ligand ist, welcher ausgewählt ist aus der Gruppe bestehend aus Anionen des Cyclopentadiens und dessen Derivaten, Alkyl-Anionen und Aryl-Anionen. Alternativ oder ergänzend kann ein Fluoridanion als wenigstens einer der monoanionischen Liganden L_{N} vorgesehen sein.

Beispiele für den anionischen Liganden L_{N} sind das Cyclopentadienyl-Anion C₅H₅⁻ (Cp⁻) und das 1,2,3,4,5-Pentamethylcyclopentadienyl-Anion C₅Me₅⁻ (Cp*), das Methyl-Anion CH₃⁻ (Me⁻) und das Mesityl-Anion Me₃C₆H₂⁻ (Mes⁻). Die vorgenannten Anionen können als monoanionische pi-Donor-Liganden bzw. sigma-Donor-Liganden L_{N} im Rahmen der Herstellung neutraler *Sandwich-* bzw. Halb*sandwich*-Komplexe des Typs

M(L_{N})(AzuH)_{q} (IV)

fungieren.

Eine weitere vorteilhafte Ausführungsform der Verwendung bzw. des Verfahrens sieht vor, dass das Metall-Zentralatom M des herzustellenden Metallkomplexes gemäß der allgemeinen Formel

M(L_{N})(AzuH)_{q} (IV)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

Die Komplexe Ru(Cp*)(GuaH), Zn(Mes)(GuaH) und PtMe₃(GuaH) liegen in isolierter Form als Flüssigkeiten vor. Letzteres ist insbesondere mit Blick auf eine Verwendung als Metallpräkursor-Verbindungen für Gasphasenabscheidungsprozesse von Vorteil. Darüber hinaus ist es von Vorteil, in der Katalyse einen flüssigen Katalysator einzusetzen, beispielsweise die Pt(IV)-Verbindung PtMe₃(GuaH) für lichtinduzierte Platin-katalysierte Hydrosilylierungsreaktionen. Die vorgenannte Pt(IV)-Verbindung zeigt zudem eine Absorption im Vis-Bereich. Das stellt im Rahmen lichtinduzierter Platin-katalysierter Hydrosilylierungsreaktionen einen weiteren Vorteil dar. Denn dabei ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig.

In einer anderen Ausführungsform der beanspruchten Verwendung bzw. des hier beanspruchten Verfahrens ist die Herstellung von Metallkomplexen gemäß der allgemeinen Formel

[M(L_{S})_{g}(AzuH)ᵥ]X (V)

vorgesehen.

Gemäß einer weiteren Ausführungsform der beanspruchten Verwendung bzw. des beanspruchten Verfahrens ist das Metall-Zentralatom M des herzustellenden Metallkomplexes gemäß der allgemeinen Formel

[M(L_{S})_{g}(AzuH)ᵥ]X (V)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der Verwendung bzw. des Verfahrens sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der Verwendung bzw. des Verfahrens ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der hier beanspruchten Verwendung bzw. des hier beanspruchten Verfahrens sieht vor, dass das Metall-Zentralatom M eine formale Oxidationsstufe von 2, 3, 4, 5, 6 oder 7 besitzt. Nach einer alternativen oder ergänzenden Ausführungsform der Verwendung bzw. des Verfahrens ist vorgesehen, dass w₃ und die formale Oxidationsstufe des Metall-Zentralatoms M des jeweils herzustellenden Metallkomplexes gemäß der allgemeinen Formel

[M(L_{S})_{g}(AzuH)ᵥ]X (V)

identisch sind, d. h. dieselbe natürliche Zahl sind, wobei Null ausgenommen ist. Mithin kann w₃ = 2, 3, 4, 5, 6 oder 7 sein.

Gemäß einer weiteren Ausführungsvariante der Verwendung bzw. des Verfahrens ist die Herstellung eines Metallkomplexes gemäß der allgemeinen Formel

[M(L_{S})_{g}(AzuH)ᵥ]X (V)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verwendung bzw. des beanspruchten Verfahrens ist w₃ = 2, 3, 4, 5 oder 6, vorteilhaft ist w₃ = 2, 3, 4 oder 5, insbesondere ist w₃ = 2, 3 oder 4. Eine weitere alternative oder ergänzende Ausführungsform der beanspruchten Verwendung bzw. des beanspruchten Verfahrens sieht vor, dass der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4, 5 oder 6 ist. In einer noch anderen Ausführungsvariante ist der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4 oder 5, vorteilhaft Null, 1, 2, 3 oder 4, insbesondere Null, 1, 2 oder 3.

In einer anderen Ausführungsvariante der hier beanspruchten Verwendung bzw. des hier beanspruchten Verfahrens beträgt die Summe der Anzahl v der Liganden AzuH und der Anzahl g neutralen Liganden L_{S}, also ∑(g + v), 2, 3, 4, 5, 6 oder 7. Eine weitere Ausführungsform sieht vor, dass die Summe der Anzahl v der Liganden AzuH und der Anzahl g neutralen Liganden L_{S}, also ∑(g + v), 2, 3, 4, 5 oder 6 beträgt, vorteilhaft 2, 3, 4 oder 5, insbesondere 2, 3 oder 4.

In einer weiteren Variante der beanspruchten Verwendung bzw. des Verfahrens zur Herstellung von Metallkomplexen ist der neutrale sigma-Donor-Ligand Ls oder der neutrale pi-Donor-Ligand Ls ausgewählt aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den neutralen, insbesondere pi-Donor-Liganden, Ls sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, *p*-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der Verwendung bzw. des Verfahrens sieht vor, dass das Metall-Zentralatom M des herzustellenden Metallkomplexes gemäß der allgemeinen Formel

[M(L_{S})_{g}(AzuH)ᵥ]X (V)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer noch anderen Ausführungsform der beanspruchten Verwendung bzw. des hier beanspruchten Verfahrens ist die Herstellung von Metallkomplexen gemäß der allgemeinen Formel

[M(L_{T})(AzuH)_{z}]X (VI)

vorgesehen.

Gemäß einer weiteren Ausführungsform der beanspruchten Verwendung bzw. des beanspruchten Verfahrens ist das Metall-Zentralatom M des jeweils herzustellenden Metallkomplexes gemäß der allgemeinen Formel

[M(L_{T})(AzuH)_{z}]X (VI)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der Verwendung bzw. des Verfahrens sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der Verwendung bzw. des Verfahrens ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der hier beanspruchten Verwendung bzw. des hier beanspruchten Verfahrens sieht vor, dass das Metall-Zentralatom M eine formale Oxidationsstufe von 3, 4, 5, 6 oder 7 besitzt. Nach einer alternativen oder ergänzenden Ausführungsform der Verwendung bzw. des Verfahrens ist vorgesehen, dass w₄ und die formale Oxidationsstufe des Metall-Zentralatoms M des jeweils herzustellenden Metallkomplexes gemäß der allgemeinen Formel

[M(L_{T})(AzuH)_{z}]X (VI)

identisch sind, d. h. dieselbe natürliche Zahl sind, wobei Null ausgenommen ist. Mithin kann w₄ = 3, 4, 5, 6 oder 7 sein.

Gemäß einer weiteren Ausführungsvariante der beanspruchten Verwendung bzw. des beanspruchten Verfahrens ist die Herstellung eines Metallkomplexes gemäß der allgemeinen Formel

[M(L_{T})(AzuH)_{z}]X (VI)

vorgesehen, wobei das Metall-Zentralatom M eine formale Oxidationsstufe von 3, 4, 5 oder 6 besitzt, insbesondere von 3, 4 oder 5. In einer alternativen oder ergänzenden Ausführungsvariante der beanspruchten Verwendung bzw. des beanspruchten Verfahrens ist w₄ = 3, 4, 5 oder 6, insbesondere ist w₄ = 3, 4 oder 5. Eine weitere alternative oder ergänzende Ausführungsform der beanspruchten Verwendung bzw. des beanspruchten Verfahrens sieht vor, dass |h|, also der absolute Betrag der Summe der negativen Ladungen aller anionischen Liganden L_{T} in einem Metallkomplex gemäß der allgemeinen Formel

[M(L_{T})(AzuH)_{z}]X (VI),

1, 2, 3 oder 4 ist, insbesondere 1, 2 oder 3.

In einer anderen Ausführungsvariante der hier beanspruchten Verwendung bzw. des hier beanspruchten Verfahrens beträgt die Summe der Anzahl z der Liganden AzuH und der Anzahl der anionischen Liganden L_{T} 2, 3, 4, 5 oder 6. Eine weitere Ausführungsform sieht vor, dass die Summe der Anzahl z der Liganden AzuH und der Anzahl der anionischen Liganden L_{T} 2, 3, 4 oder 5 beträgt, insbesondere 2, 3 oder 4.

Eine weitere Ausführungsform der hier beanspruchten Verwendung bzw. des hier beanspruchten Verfahrens zur Herstellung von Metallkomplexen gemäß der allgemeinen Formel

[M(L_{T})(AzuH)_{z}]X (VI)

sieht vor, dass der Ligand L_{T} ein monoanionischer Ligand ist, welcher ausgewählt ist aus der Gruppe bestehend aus Anionen des Cyclopentadiens und dessen Derivaten und einem Fluoridanion, oder ein dianionischer Ligand. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻. Dabei sind R^{O}, R^{P} und R^{V} unabhängig voneinander ausgewählt aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren, wobei die Substituenten R^{P} und R^{V} optional einen Ring bilden können. Die Reste R^{O}, R^{P} und R^{V} können auch unabhängig voneinandner substituiert sein, insbesondere halogeniert.

Beispiele für Anionen des Cyclopentadiens (Cp) sind das Cyclopentadienyl-Anion C₅H₅⁻ (Cp⁻) und das 1,2,3,4,5-Pentamethylcyclopentadienyl-Anion C₅Me₅⁻ (Cp*). Die vorgenannten Anionen können als planare pi-Donor-Liganden L_{T} für die Synthese kationischer *Sandwich-Komplexe* des Typs

[M(L_{T})(AzuH)_{z}]X (VI)

verwendet werden.

Eine weitere vorteilhafte Ausführungsform der Verwendung bzw. des Verfahrens sieht vor, dass das Metall-Zentralatom M des jeweils herzustellenden Metallkomplexes gemäß der allgemeinen Formel

[M(L_{T})(AzuH)_{z}]X (VI)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

Dem Fachmann ist bekannt, welche Metallpräkursor-Verbindungen kommerziell erhältlich oder-ggf. auch *in situ -* darstellbar sind und welche Reaktionsbedingungen, z. B. Stöchiometrie der Edukte, Lösungsmittel, Reaktionstemperatur, Reaktionsdauer, und Arbeitsschritte, inklusive ggf. erforderlichem Lösungsmittelwechsel, Isolierung und ggf. Aufreinigung, in Schritt B. für die Synthese des jeweiligen Metallkomplexes gemäß einer der Formeln III, IV, V und VI erforderlich sind.

In einer Ausführungsform des Verfahrens ist vorgesehen, dass die Synthese des jeweiligen Metallkomplexes gemäß Schritt B. in einem Lösungsmittel durchgeführt wird, welches insbesondere ein aprotisch-polares Lösungsmittel umfasst oder ist. Eine weitere Variante des Verfahrens sieht vor, dass die Synthese des jeweiligen Metallkomplexes gemäß Schritt B. in einem Lösungsmittel durchgeführt, welches insbesondere mit dem Lösungsmittel S_{P} identisch oder mischbar ist. Dann kann - die Inertheit des Lösungsmittel S_{P} und des in Schritt B. vorgesehenen Lösungsmittels vorausgesetzt - auf einen Lösungsmittelwechsel verzichtet werden, was aus (verfahrens)ökonomischer und ökologischer Sicht besonders vorteilhaft ist.

Der Begriff "mischbar" ist bereits weiter oben definiert.

Das hierin beschriebene Verfahren zur Herstellung homoleptischer oder heteroleptischer Metallkomplexe gemäß den Formeln III, IV, V und VI kann als diskontinuierliches Verfahren oder als kontinuierliches Verfahren durchgeführt werden.

Im Rahmen des hier beanspruchten Verfahrens zur Herstellung von Metallkomplexen gemäß den allgemeinen Formeln III, IV, V und VI werden in Schritt A. insbesondere zuvor isolierte und ggf. aufgereinigte Verbindungen gemäß der allgemeinen Formel M^{A}Yₙ(AzuH) (I) eingesetzt. Dies ist besonders vorteilhaft, weil unter Verwendung (isomeren)reiner Edukte des Typs

M^{A}Yₙ(AzuH) (I)

eine Synthese der gewünschten Metallkomplexe gemäß den allgemeinen Formeln

M(L_{K})_{f}(AzuH)ₘ (III),

M(L_{N})(AzuH)_{q} (IV),

[M(L_{S})_{g}(AzuH)ᵥ]X (V),

[M(L_{T})(AzuH)_{z}]X (VI)

besonders einfach, relativ kostengünstig und - je nach Wahl der Edukte - nachhaltig und reproduzierbar gewährleistet werden kann. Zudem werden die Zielverbindungen in hoher (Isomeren-)Reinheit von 97 %, vorteilhaft von mehr als 97 %, insbesondere von mehr als 98 % oder 99 %, und guter bis sehr guter Ausbeute, auch Raum-Zeit-Ausbeute, erhalten.

Wird in Schritt A. eine Suspension zur Verfügung gestellt, umfassend eine Verbindung gemäß der allgemeinen Formel

M^{A}Yₙ(AzuH) (I)

und ein, insbesondere aprotisch-polares, Lösungsmittel S_{P}, so ist es besonders vorteilhaft, wenn die Zurverfügungstellung gemäß Schritt A. wenigstens einen Filtrationsschritt umfasst. Denn dadurch können einfach und schnell Nebenprodukte, welche während der Herstellung von

M^{A}Yₙ(AzuH) (I)

ausgefallen sind und/oder ggf. nicht umgesetzte, in dem Lösungsmittel S_{P} nicht lösliche Edukte und/oder sonstige Verunreinigungen abgetrennt werden. Dadurch können ggf. die Reinheit und/oder die Ausbeuten, auch Raum-Zeit-Ausbeuten, der mittels der hier beschriebenen Verwendung bzw. des beschriebenen Verfahrens erhältlichen Metallkomplexe auf einfache und schnelle Weise verbessert werden.

Eine Ausführungsform des beanspruchten Verfahrens zur Herstellung von Metallkomplexen sieht vor, dass die Zurverfügungstellung in Schritt A. eine *in situ-*Herstellung der Verbindung gemäß der allgemeinen Formel

M^{A}Yₙ(AzuH) (I)

umfasst. Dabei erfolgt die *in situ*-Herstellung insbesondere gemäß einer Ausführungsform des weiter oben beschriebenen Verfahrens zur Herstellung von Verbindungen gemäß der allgemeinen Formel

M^{A}Yₙ(AzuH) (I).

Die *in situ*-Herstellung der Verbindung gemäß der allgemeinen Formel

M^{A}Yₙ(AzuH) (I)

kann beispielsweise in einem, insbesondere aprotisch-polaren, Lösungsmittel oder Lösungsmittelgemisch S_{L} erfolgen. Das Lösungsmittel S_{L} kann ausgewählt sein aus der Gruppe bestehend aus Tetrahydrofuran, Methyltetrahydrofuran, 1,4-Dioxan, Diethylether, Methyl-*tert*-butylether, Di-n-propylether, Di*i*sopropylether, Cyclopentylmethylether, und deren Isomeren, Acetonitril, Chloroform, Dichlormethan, und Mischungen davon. Besonders vorteilhaft ist es, wenn die *in situ*-Herstellung wenigstens einen Filtrationsschritt umfasst, um während der Synthese ausgefallene Nebenprodukte und/oder ggf. nicht umgesetzte, in dem Lösungsmittel S_{L} nicht lösliche Edukte und/oder sonstige Verunreinigungen abzutrennen.

In einer anderen Variante des Verfahrens zur Herstellung von Metallkomplexen ist vorgesehen, dass die Synthese in Schritt B. wenigstens eine salzmetathetische Umsetzung umfasst.

Insbesondere im Rahmen der Synthese von Komplexen gemäß der allgemeinen Formel

[M(L_{S})_{g}(AzuH)ᵥ]X (V)

oder

[M(L_{T})(AzuH)_{z}]X (VI)

können wenigstens zwei salzmetathetische Umsetzungen erforderlich sein. So kann beispielsweise eine *in situ*-Herstellung der jeweiligen Vorläuferverbindung in einer ersten salzmetathetischen Umsetzung erfolgen. Bei der Vorläuferverbindung kann es sich insbesondere um ein Halogenid, wie z. B. [Pt(cod)(GuaH)]Cl (GuaH = 7-*iso*-Propyl-1,4-dimethyl-8-*H*-dihydroazulen), handeln. In einer zweiten, sich an die *in situ*-Herstellung der Vorläuferverbindung anschließende salzmetathetischen Umsetzung erfolgt dann die Darstellung der Zielverbindung. Bei der Zielverbindung kann es sich im vorgenannten Beispiel um [Pt(cod)(GuaH)]PF₆ handeln.

Alternativ oder ergänzend zu der wenigstens einen salzmetathetischen Umsetzung kann Schritt B. wenigstens eine Oxidationsreaktion umfassen.

So kann beispielsweise eine salzmetathetische Umsetzung einer Verbindung gemäß der allgemeinen Formel

M^{A}Yₙ(AzuH) (I)

vorgesehen sein, gefolgt von einer Oxidation, z. B. unter Einsatz von Luftsauerstoff, und einer Umsetzung des Oxidationsproduktes mit einem Salz, umfassend ein schwach-koordinierendes oder ein nicht-koordinierendes Anion, z. B. KPF₆ oder NH₄PF₆. Ein Beispiel für eine solche Reaktionsfolge ist die Umsetzung von Li(GuaH) mit Cobalt(II)-chlorid unter Bildung von Co(GuaH)₂ (*meso*-Form und Racemat) gemäß der allgemeinen Formel III, gefolgt von einer Oxidation der isolierten oder *in situ* hergestellten Verbindung Co(GuaH)₂ in Gegenwart von Luftsauerstoff und einer Umsetzung des Oxidationsproduktes mit KPF₆ oder NH₄PF₆. Das Produkt dieser Reaktionssequenz ist eine Cobalt(III)-Verbindung gemäß der allgemeinen Formel V, nämlich [Co(GuaH)₂]PF₆, welche als Gemisch dreier Isomere (*meso*-Form und Racemat) vorliegt.

Die wenigstens eine salzmetathetische Umsetzung in Schritt B. erfolgt in einem Lösungsmittel S_{M}, insbesondere einem aprotische-polaren Lösungsmittel S_{M}. Das aprotisch-polare Lösungsmittel S_{M} kann beispielsweise ausgewählt sein aus der Gruppe bestehend aus Ethern, Acetonitril, halogenierten aliphatischen und aromatischen Kohlenwasserstoffen. In einer weiteren Variante des Verfahrens ist das aprotisch-polare Lösungsmittel S_{M} ausgewählt aus der Gruppe bestehend aus Tetrahydrofuran, Methyltetrahydrofuran, 1,4-Dioxan, Diethylether, Methyl-*tert*-butylether, Di-*n*-propylether, Di*i*sopropylether, Cyclopentylmethylether, und deren Isomeren, Acetonitril, Chloroform, Dichlormethan, und Mischungen davon.

In einer weiteren Variante sind die Lösungsmittel S_{P} und das in Schritt B. vorgesehene Lösungsmittel, insbesondere die Lösungsmittel S_{L} und S_{M}, chemisch inert.

Der Begriff "inertes Lösungsmittel" ist bereits weiter oben definiert worden.

Die wenigstens eine Oxidationsreaktion kann in einem polaren Lösungsmittel, insbesondere Wasser, in Gegenwart von Sauerstoff, insbesondere Luftsauerstoff, erfolgen.

Besonders vorteilhaft ist, dass die Verwendung von Verbindungen gemäß der allgemeinen Formel

M^{A}Yₙ(AzuH) (I)

zur Herstellung von Metallkomplexen bzw. das Verfahren zur Herstellung von Metallkomplexen gemäß den allgemeinen Formeln III, IV, V und VI unter Verwendung von Verbindungen gemäß der allgemeinen Formel

M^{A}Yₙ(AzuH) (I)

die Darstellung hochreiner Metallkomplexe ermöglichen. Insbesondere kann mittels des hier beschriebenen Verfahrens eine Vielzahl isomerenreiner Metallkomplexe in guter bis sehr guter, zum Teil quantitativer, Ausbeute zur Verfügung gestellt werden. Beispiele für solche isomerenreinen Metallkomplexe sind Ru(Cp*)(GuaH), [Ru(*p*-cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH).

Im Falle der Metallkomplexe Fe(GuaH)₂ und Ru(GuaH)₂ konnte jeweils das *rac-*Diastereomer als Hauptprodukt isoliert werden, und zwar mit einer guten Ausbeute von > 70 % bzw. > 60 %. Die Metallkomplexe Co(GuaH)₂ und [Co(GuaH)₂]PF₆ wurden jeweils als Isomerengemisch der meso-Form und eines Racemats erhalten.

Die Aufgabe wird außerdem gelöst durch Metallkomplexe gemäß der allgemeinen Formel

M(L_{K})_{f}(AzuH)ₘ (III)

oder

M(L_{N})(AzuH)_{q} (IV)

oder

[M(L_{S})_{g}(AzuH)ᵥ]X (V)

oder

[M(L_{T})(AzuH)_{z}]X (VI)

wobei
- M =: Metall-Zentralatom ausgewählt aus der Gruppe 6, der Gruppe 7, der Gruppe 8, der Gruppe 9, der Gruppe 10, der Gruppe 11 oder der Gruppe 12,
- L_{K} =: optionaler neutraler sigma-Donor-Ligand oder optionaler neutraler pi-Donor-Ligand,
- f =: Anzahl der Liganden L_{K}, wobei f = 0, 1, 2, 3, 4, 5 oder 6 ist,
- AzuH =: Azulen oder ein Azulenderivat, welches in 4-Position, 6-Position oder 8-Position zusätzlich zu einem H-Atom ein Hydrid-Anion trägt,
- m =: Anzahl der Liganden AzuH, wobei m = 1, 2, 3, 4, 5, 6 oder 7 ist,
- L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
- q =: Anzahl der Liganden AzuH, wobei q = w₂ - |u|,
wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
- L_{S} =: optionaler neutraler sigma-Donor-Ligand oder optionaler neutraler pi-Donor-Ligand,
- g =: Anzahl der Liganden L_{S}, wobei g = 0, 1, 2, 3, 4, 5 oder 6 ist,
- v =: Anzahl der Liganden AzuH, wobei v = w₃ - 1, wobei w₃ = 2, 3, 4, 5, 6 oder 7 ist,
- L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
- z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
- X⁻ =: Halogenid-Anion oder einwertiges schwach-koordinierendes Anion oder einwertiges nicht-koordinierendes Anion,
wobei
- Azu =: Azulen gemäß der Formel 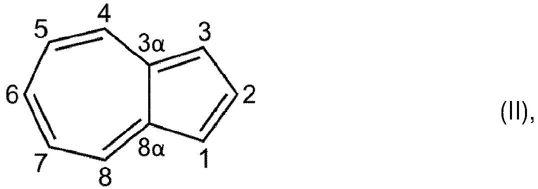 oder
- Azu=: ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
   wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
   wobei zwei Substituenten R^{F} optional einen Ring bilden können,
   und
b) wenigstens ein Kohlenstoffatom des Azulengerüsts, ausgewählt aus der Gruppe bestehend aus den Kohlenstoffatomen C4, C6 und C8, ein H-Atom trägt,
erhalten oder erhältlich nach einem Verfahren zur Herstellung solcher Metallkomplexe gemäß einer der weiter oben beschriebenen Ausführungsformen.

Weiterhin wird die Aufgabe gelöst durch Lösungen oder Suspensionen, umfassend einen Metallkomplex gemäß der allgemeinen Formel

M(L_{K})_{f}(AzuH)ₘ (III)

oder

M(L_{N})(AzuH)_{q} (IV)

oder

[M(L_{S})_{g}(AzuH)ᵥ]X (V)

oder

[M(L_{T})(AzuH)_{z}]X (VI)

und wenigstens ein Lösungsmittel, welches mit dem, insbesondere aprotisch-polaren, Lösungmittel S_{P} mischbar oder identisch ist,
wobei
- M =: Metall-Zentralatom ausgewählt aus der Gruppe 6, der Gruppe 7, der Gruppe 8, der Gruppe 9, der Gruppe 10, der Gruppe 11 oder der Gruppe 12,
- L_{K} =: optionaler neutraler sigma-Donor-Ligand oder optionaler neutraler pi-Donor-Ligand,
- f =: Anzahl der Liganden L_{K}, wobei f = 0, 1, 2, 3, 4, 5 oder 6 ist,
- AzuH =: Azulen oder ein Azulenderivat, welches in 4-Position, 6-Position oder 8-Position zusätzlich zu einem H-Atom ein Hydrid-Anion trägt,
- m =: Anzahl der Liganden AzuH, wobei m = 1, 2, 3, 4, 5, 6 oder 7 ist,
- L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
- q =: Anzahl der Liganden AzuH, wobei q = w₂ - |u|,
wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
- L_{S} =: optionaler neutraler sigma-Donor-Ligand oder optionaler neutraler pi-Donor-Ligand,
- g =: Anzahl der Liganden L_{S}, wobei g = 0, 1, 2, 3, 4, 5 oder 6 ist,
- v =: Anzahl der Liganden AzuH, wobei v = w₃ - 1, wobei w₃ = 2, 3, 4, 5, 6 oder 7 ist,
- L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
- z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
- X⁻ =: Halogenid-Anion oder einwertiges schwach-koordinierendes Anion oder einwertiges nicht-koordinierendes Anion,
wobei
- Azu =: Azulen gemäß der Formel 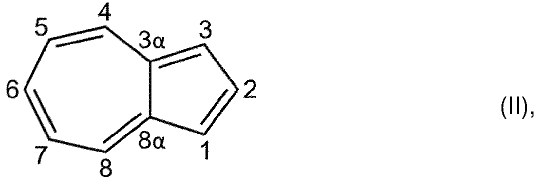 oder
- Azu=: ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
   wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
   wobei zwei Substituenten R^{F} optional einen Ring bilden können,
   und
b) wenigstens ein Kohlenstoffatom des Azulengerüsts, ausgewählt aus der Gruppe bestehend aus den Kohlenstoffatomen C4, C6 und C8, ein H-Atom trägt,
erhalten oder erhältlich nach einem Verfahren zur Herstellung solcher Lösungen oder Suspensionen gemäß einer der weiter oben beschriebenen Ausführungsformen.

Dabei umfassen die allgemeinen Formeln III, IV, V und VI sowohl die Monomere als auch etwaige Oligomere, insbesondere Dimere.

Das jeweilige Metall-Zentralatom M kann grundsätzlich eine formale Oxidationsstufe bzw. Oxidationszahl von 0, 1, 2, 3, 4, 5, 6 oder 7 besitzen. Die höheren Oxidationsstufen, insbesondere die Oxidationsstufen 4, 5, 6 und 7, werden üblicherweise durch anionische, insbesondere monoanionische Liganden, z. B. Fluoridanionen (vgl. insbesondere Formeln IV, V und VI), und/oder dianionische Liganden, z. B. O²⁻ (vgl. insbesondere Formel VI), stabilisiert.

Der Index q kann den Wert 1, 2, 3, 4, 5 oder 6 annehmen. Alternativ ist q = 1, 2, 3, 4 oder 5, vorteilhaft ist q = 1, 2, 3 oder 4, insbesondere ist q = 1, 2 oder 3.

Der Index v kann ebenfalls 1, 2, 3, 4, 5 oder 6 betragen. Alternativ ist v = 1, 2, 3, 4 oder 5, vorteilhaft ist v = 1, 2, 3 oder 4, insbesondere ist v = 1, 2 oder 3.

Der Index z kann den Wert 1, 2, 3, 4 oder 5 annehmen. Alternativ ist z = 1, 2, 3 oder 4, insbesondere ist z = 1, 2 oder 3.

Die Metallkomplexe gemäß den allgemeinen Formeln III, IV, V und VI werden üblicherweise solvensfrei, d. h. nicht als Solvensaddukte, erhalten. Mittels des weiter oben beschriebenen Verfahrens zur Herstellung solcher Metallkomplexe können aber auch Lösungsmitteladdukten dieser Metallkomplexe erhalten werden. Im Falle eines Lösungsmitteladduktes ist das Lösungsmittel insbesondere mit dem - im Rahmen des weiter oben beschriebenen Verfahrens verwendeten - Lösungsmittel S_{P} identisch. Alternativ oder ergänzend können einer oder mehrere der neutralen Donor-Liganden L_{K} bzw. Ls (vgl. Formel III bzw. Formel V) ausgewählt sein aus der Gruppe bestehend aus Acetonitril, Dimethylsulfoxid und Tetrahydrothiophen.

Der Begriff "schwach-koordinierend" umfasst auch die Ausdrücke "sehr schwach koordinierend" und "mäßig stark koordinierend". Die Halogenid-Anionen sind insbesondere ausgewählt aus der Gruppe bestehend aus Fluorid, Chlorid und Bromid. Bei den einwertigen schwach-koordinierenden und einwertigen nicht-koordinierenden Anionen handelt es sich insbesondere um perfluorierte Anionen, wie z. B. PF₆⁻, BF₄⁻ und [(CF₃SO₂)₂N]⁻.

Eine Definition des Begriffs "mischbar" ist bereits weiter oben gegeben.

Metallkomplexe gemäß den allgemeinen Formeln

M(L_{K})_{f}(AzuH)ₘ (III),

M(L_{N})(AzuH)_{q} (IV),

[M(L_{S})_{g}(AzuH)ᵥ]X (V),

[M(L_{T})(AzuH)_{z}]X (VI)

weisen jeweils wenigstens ein H-Dihydroazulenyl-Anion (AzuH)¹- auf, welches ein einfach, nämlich in 4-Position, in 6-Position oder in 8-Position, hydriertes Azulen oder Azulenderivat ist. Das jeweilige H-Dihydroazulenyl-Anion (AzuH)¹- weist in 4-Position oder in 6-Position oder in 8-Position zusätzlich zu einem H-Atom ein Hydrid-Anion H⁻ auf. Mithin liegt in C4-Position oder in C6-Position oder in C8-Position des Azulengerüsts eine CH₂-Gruppe vor. Das *H*-Dihydroazulenyl-Anion stellt ein Derivat des Cyclopentadienyl-Anions bzw. ein Cyclopentadienyl-artiges Monoanion dar. Bei dem *H*-Dihydroazulenyl-Anion kann es sich um ein 3α,4-*H*-Dihydroazulenyl-, ein 8,8α-*H*-Dihydroazulenyl-, ein 3α,6-*H*-Dihydroazulenyl-oder ein 6,8α-*H*-Dihydroazulenyl-Anion handeln, oder um eine Mischung zweier oder mehrerer Regioisomere.

Die Metallkomplexe der Typen III, IV, V und VI sowie deren Lösungen oder Suspensionen in wenigstens einem, insbesondere aprotisch-polaren, Lösungsmittel, welches mit dem Lösungmittel S_{P} mischbar oder identisch ist, z. B. S_{L} und/oder S_{M}, sind mittels des hier beanspruchten Verfahrens zur Herstellung solcher Metallkomplexe und Lösungen vorteilhafterweise auf einfache, reproduzierbare und vergleichsweise kostengünstige Weise in hoher (Isomeren-)Reinheit von 97 %, vorteilhaft von mehr als 97 %, insbesondere von mehr als 98 % oder 99 %, und guter bis sehr guter, zum Teil quantitativer, Ausbeute erhältlich. Insbesondere liegt eine Vielzahl dieser Metallkomplexe isomerenrein vor. Nach alledem eignen sich mittels des hier beanspruchten Verfahrens erhältliche Metallkomplexe gemäß den allgemeinen Formeln III, IV, V und VI sowie Lösungen oder Suspensionen, umfassend solche Metallkomplexe, als qualitativ hochwertige Edukte für weitere Umsetzungen und/oder Anwendungen, auch im industriellen Maßstab.

Aufgrund des Vorhandenseins wenigstens eines *H*-Dihydroazulenyl-Anions, also wenigstens eines Cyclopentadienyl-artigen Monoanions, eignen sich die Verbindungen gemäß den allgemeinen Formeln III, IV, V und VI insbesondere als Präkatalysatoren, als Katalysatoren und als Elektronentransfer-Reagenzien für chemische Reaktionen, in welchen ansonsten Metallkomplexe eingesetzt werden, die Cyclopentadienyl-Liganden aufweisen. Dies ist besonders vorteilhaft, weil die Zurverfügungstellung eines *H-*Dihydroazulenyl-Liganden im Vergleich zur Bereitstellung des Cyclopentadienyl-Liganden weniger arbeits- und zeitaufwändig. Denn die Edukte, z. B. Naturstoffe wie Guajazulen und hydridische Reduktionsmittel wie Lithiumtriethylborhydrid, sind nicht nur einfacher zu handhaben und zu lagern, sondern auch kostengünstiger. Außerdem sind weniger und einfachere Arbeitsschritte auszuführen. Infolgedessen fallen auch der Syntheseaufwand und die Herstellungskosten für die hier beanspruchten Metallkomplexe sowie Lösungen oder Suspensionen, umfassend eine solche Verbindung und wenigstens ein, insbesondere aprotisch-polares, Lösungsmittel, welches mit dem Lösungmittel S_{P} mischbar oder identisch ist, geringer aus als für analoge Metall-Cp-Komplexe. Mithin stellen die hier beschriebenen Metallkomplexe sowie deren Lösungen und Suspensionen insbesondere mit Blick auf eine industrielle Anwendung eine Alternative für Metall-Cp-Komplexe dar.

Bei Guajazulen handelt es sich um einen Naturstoff, der in Kamillenöl und anderen ätherischen Ölen enthalten und daher vorteilhafterweise in großen Mengen kostengünstig zugänglich ist. Synthetisch kann es aus dem Guajol des Guajakholzöls (Guajakharz) hergestellt werden. Guajazulen ist eine intensiv blaue Substanz mit entzündungshemmender Wirkung. Ein Isomer des Guajazulens ist beispielsweise 2*-iso*Propyl-4,8-dimethylazulen (Vetivazulen).

In einer vorteilhaften Ausführungsform der hier beanspruchten Metallkomplexe gemäß den allgemeinen Formeln III, IV, V und VI sowie der beanspruchten Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen, ist Azu = Gua = 7-*iso*-Propyl-1,4-dimethylazulen und AzuH = GuaH = 7-*iso*-Propyl-1,4-dimethyl-8-*H*-dihydroazulen.

Beispiele für die hier beanspruchten Metallkomplexen gemäß den allgemeinen Formeln III, IV, V und VI, umfassend jeweils wenigstens ein Anion des Typs (AzuH)¹⁻, welche als isolierter Feststoff oder als isolierte Flüssigkeit, d. h. in Substanz, vorliegen oder in einer Lösung oder Suspension, umfassend einen solchen Metallkomplex und wenigstens ein, insbesondere aprotisch-polares, Lösungsmittel, welches mit dem Lösungmittel S_{P} mischbar oder identisch ist, sind zum einen hochreine homoleptische *Sandwich-Komplexe* mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, insbesondere:
▪ neutrale *Sandwich-Komplexe* des Typs

   M(L_{K})_{f}(AzuH)ₘ (III)

   mit f = 0, d. h. ohne neutralen Donor-Liganden L_{K}, z. B. Fe(GuaH)₂, Ru(GuaH)₂, Co(GuaH)₂, Zn(GuaH)₂, wobei jeweils die formale Oxidationsstufe 2 ist, M = Fe, Ru, Co oder Zn, f = 0, m = 2 und AzuH = GuaH
   und
▪ kationische *Sandwich-Komplexe* des Typs

   [M(L_{S})_{g}(AzuH)ᵥ]X (V)

   mit g = 0, d. h. ohne neutralen Donor-Liganden L_{S}, z. B. [Co(GuaH)₂]PF₆, wobei die formale Oxidationsstufe 3 ist, M = Co, g = 0, v = 3 - 1 = 2, AzuH = GuaH und X = PF₆.

Zum anderen kann es sich bei den hier beanspruchten Metallkomplexen gemäß den allgemeinen Formeln III, IV, V und VI, umfassend jeweils wenigstens ein Anion des Typs (AzuH)¹⁻, welche als isolierter Feststoff oder als isolierte Flüssigkeit, d. h. in Substanz, vorliegen oder in einer Lösung oder Suspension, umfassend einen solchen Metallkomplex und wenigstens ein, insbesondere aprotisch-polares, Lösungsmittel, welches mit dem Lösungmittel S_{P} mischbar oder identisch ist, um hochreine heteroleptische Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, handeln, insbesondere:
▪ neutrale Halb*sandwich*-Komplexe des Typs

   M(L_{K})_{f}(AzuH)ₘ (III)

   mit f = 1 oder 2, d. h. mit genau einem neutralen sigma-Donor-Liganden oder mit genau einem neutralen, nicht-planaren pi-Donor-Liganden, z. B. Cu(PPh₃)(GuaH), Rh(nbd)(GuaH), Rh(cod)(GuaH), wobei die formale Oxidationsstufe jeweils 1 ist, M = Cu oder Rh, L_{K} = PPh₃, NBD oder COD, f jeweils 1 ist, m jeweils 1 ist und AzuH = GuaH ist, oder zwei planaren, neutralen pi-Donor-Liganden, z. B. Rh(ethen)₂(GuaH), wobei die formale Oxidationsstufe 1 ist, M = Rh, L_{K} = Ethen, f = 2, m = 1 und AzuH = GuaH
▪ neutrale Halb*sandwich*-Komplexe des Typs

   M(L_{N})(AzuH)_{q} (IV),

   beispielsweise mit |u| = 1, 2 oder 3, d. h. beispielsweise mit einem, zwei oder drei monoanionischen sigma-Donor-Liganden, z. B. Zn(Mes)(GuaH), wobei die formale Oxidationsstufe 2 ist, M = Zn, L_{N} = Mes⁻, |u| = 1, q = 2 - |-1| = 1 und AzuH = GuaH ist, und PtMe₃(GuaH), wobei die formale Oxidationsstufe 4 ist, M = Pt, L_{N} = CH₃⁻, |u| = 3, q = 4 - |-3| = 1 und AzuH = GuaH
▪ neutrale *Sandwich-Komplexe* des Typs

   M(L_{N})(AzuH)_{q} (IV),

   beispielsweise mit |u| = 1, d. h. mit genau einem monoanionischen, planaren pi-Donor-Liganden, z. B. Ru(Cp*)(GuaH), wobei die formale Oxidationsstufe 2 ist, M = Ru, L_{N} = Cp*, |u| = 1, q = 2 -|-1| = 1 und AzuH = GuaH
▪ kationische *Sandwich-Komplexe* des Typs

   [M(L_{S})_{g}(AzuH)ᵥ]X (V)

   mit g = 1, d. h mit genau einem neutralen, planaren pi-Donor-Liganden, z. B. [Ru(*p*-cymol)(GuaH)]PF₆, wobei die formale Oxidationsstufe 2 ist, M = Ru, Ls = p-Cymol, g = 1, v = 2 - 1 = 1, AzuH = GuaH und X = PF₆
▪ kationische Halb*sandwich*-Komplexe des Typs

   [M(L_{S})_{g}(AzuH)ᵥ]X (V)

   mit g = 1 oder 2, d. h. mit einem neutralen nicht-planaren pi-Donor-Liganden, z. B. [Pt(cod)(GuaH)]PF₆, wobei die formale Oxidationsstufe 2 ist, M = Pt, L_{S} = COD, g = 1, v = 2 - 1 = 1, AzuH = GuaH und X = PF₆
   oder mit zwei planaren, neutralen pi-Donor-Liganden, z. B. [Pt(ethen)₂(GuaH)]PF₆, wobei die formale Oxidationsstufe 2 ist, M = Pt, Ls = Ethen, g = 2, v = 2 - 1 = 1, AzuH = GuaH und X = PF₆
▪ kationische *Sandwich*-Komplexe des Typs

   [M(L_{T})(AzuH)_{z}]X (VI)

   mit |h| = 1, d. h. mit genau einem anionischen, planaren pi-Donor-Liganden, z. B. [Rh(Cp*)(GuaH)]Cl, [Rh(Cp*)(GuaH)]PF₆, wobei jeweils die formale Oxidationsstufe 3 ist, M = Rh, L_{T} = Cp*, |h| = 1, z = 3 - (|-1| + 1) = 1, AzuH = GuaH und X = Cl oder PF₆.

Die Begriffe "Reinheit" und "hochrein" sind bereits weiter oben definiert worden.

In einer Ausführungsform der beanspruchten Metallkomplexe, welche als isolierter Feststoff oder als isolierte Flüssigkeit, d. h. in Substanz, vorliegen, bzw. Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen weist der Metallkomplex die allgemeine Formel

M(L_{K})_{f}(AzuH)ₘ (III)

auf.

Gemäß einer noch anderen Ausführungsform der beanspruchten Metallkomplexe bzw. Lösungen oder Suspensionen ist das Metall-Zentralatom M des Metallkomplexes gemäß der allgemeinen Formel

M(L_{K})_{f}(AzuH)ₘ (III)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verbindungen bzw. Lösungen oder Suspensionen sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verbindungen bzw. Lösungen oder Suspensionen ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der hier beanspruchten Verbindungen bzw. Lösungen oder Suspensionen sieht vor, dass das Metall-Zentralatom M eine formale Oxidationsstufe von 1, 2, 3, 4, 5, 6 oder 7 besitzt. Nach einer alternativen oder ergänzenden Ausführungsform der beanspruchten Verbindungen bzw. Lösungen oder Suspensionen ist vorgesehen, dass der Index m und die formale Oxidationsstufe des Metall-Zentralatoms M des jeweiligen Metallkomplexes gemäß der allgemeinen Formel

M(L_{K})_{f}(AzuH)ₘ (III)

identisch sind, d. h. dieselbe natürliche Zahl sind, wobei Null ausgenommen ist. Mithin kann m = 1, 2, 3, 4, 5, 6 oder 7 sein.

Gemäß einer weiteren Ausführungsvariante der beanspruchten Verbindungen bzw. Lösungen oder Suspensionen weist der Metallkomplex die allgemeine Formel

M(L_{K})_{f}(AzuH)ₘ (III)

auf, wobei das Metall-Zentralatom M eine formale Oxidationsstufe von 1, 2, 3 oder 4 besitzt, vorteilhaft von 1, 2 oder 3, insbesondere von 1 oder 2. In einer alternativen oder ergänzenden Ausführungsvariante der beanspruchten Verbindungen bzw. Lösungen oder Suspensionen ist der Index m 1, 2, 3 oder 4, vorteilhaft 1, 2 oder 3, insbesondere 1 oder 2. Eine weitere alternative oder ergänzende Ausführungsform der beanspruchten Verbindungen bzw. Lösungen oder Suspensionen sieht vor, dass der Index f, welcher die Anzahl der neutralen Liganden L_{K} in einem Metallkomplex gemäß der allgemeinen Formel

M(L_{K})_{f}(AzuH)ₘ (III)

angibt, Null, 1, 2, 3, 4 oder 5 ist, vorteilhaft Null, 1, 2, 3 oder 4, insbesondere Null, 1, 2 oder 3.

In einer anderen Ausführungsvariante der beanspruchten Metallkomplexe gemäß der allgemeinen Formel

M(L_{K})_{f}(AzuH)ₘ (III)

bzw. Lösungen oder Suspensionen, umfassend einen solchen Metallkomplex, beträgt die Summe der Anzahl m der Liganden AzuH und der Anzahl f der neutralen Liganden L_{K}, also Σ (f + m), 2, 3, 4, 5, 6 oder 7 beträgt. Eine andere Ausführungsform sieht vor, dass die Summe der Anzahl m der Liganden AzuH und der Anzahl f der neutralen Liganden L_{K}, also Σ (f + m), 2, 3, 4, 5 oder 6 beträgt, vorteilhaft 2, 3, 4 oder 5, insbesondere 2, 3 oder 4.

Eine weitere Ausführungsform sieht vor, dass der neutrale sigma-Donor-Ligand L_{K} oder pi-Donor-Ligand L_{K} ausgewählt ist aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den Liganden L_{K} sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, *p*-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der beanspruchten Metallkomplexe bzw. Lösungen oder Suspensionen, umfassend einen solchen Metallkomplex sieht vor, dass das Metall-Zentralatom M des Metallkomplexes gemäß der allgemeinen Formel

M(L_{K})_{f}(AzuH)ₘ (III)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer weiteren Ausführungsform der beanspruchten Metallkomplexe, welche als isolierter Feststoff oder als isolierte Flüssigkeit, d. h. in Substanz, vorliegen, bzw. Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen weist der Metallkomplex die allgemeine Formel

M(L_{N})(AzuH)_{q} (IV)

auf.

Gemäß einer noch anderen Ausführungsform der beanspruchten Verbindungen bzw. Lösungen oder Suspensionen ist das Metall-Zentralatom M des Metallkomplexes gemäß der allgemeinen Formel

M(L_{N})(AzuH)_{q} (IV)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verbindungen bzw. Lösungen oder Suspensionen sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verbindungen bzw. Lösungen oder Suspensionen ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe gemäß der allgemeinen Formel

M(L_{N})(AzuH)_{q} (IV)

bzw. Lösungen oder Suspensionen, umfassend einen solchen Metallkomplex, sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Verbindungen bzw. Lösungen oder Suspensionen ist vorgesehen, dass w₂ und die formale Oxidationsstufe des Metall-Zentralatoms M des jeweils herzustellenden Metallkomplexes gemäß der allgemeinen Formel

M(L_{N})(AzuH)_{q} (IV)

identisch sind, d. h. dieselbe natürliche Zahl sind, wobei Null ausgenommen ist. Mithin kann w₂ = 2, 3, 4, 5, 6 oder 7 sein.

Gemäß einer weiteren Ausführungsvariante der beanspruchten Verbindungen bzw. Lösungen oder Suspensionen weist der Metallkomplex die allgemeine Formel

M(L_{N})(AzuH)_{q} (IV)

auf, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verbindungen bzw. Lösungen oder Suspensionen ist w₂ = 2, 3, 4, 5 oder 6, vorteilhaft ist w₂ = 2, 3, 4 oder 5, insbesondere ist w₂ = 2, 3 oder 4. Eine weitere alternative oder ergänzende Ausführungsform der beanspruchten Verbindungen bzw. Lösungen oder Suspensionen sieht vor, dass |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4, 5, oder 6 ist. In einer noch anderen Ausführungsvariante ist |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4 oder 5, vorteilhaft 1, 2, 3 oder 4, insbesondere 1, 2 oder 3.

In einer anderen Ausführungsvariante der beanspruchten Metallkomplexe gemäß der allgemeinen Formel

M(L_{N})(AzuH)_{q} (IV)

bzw. Lösungen oder Suspensionen, umfassend einen solchen Metallkomplex, beträgt die Summe der Anzahl q der Liganden AzuH und der Anzahl der anionischen Liganden L_{N} 2, 3, 4, 5, 6 oder 7. Eine weitere Ausführungsform sieht vor, dass die Summe der Anzahl q der Liganden AzuH und der Anzahl der anionischen Liganden L_{N} 2, 3, 4, 5 oder 6 beträgt, vorteilhaft 2, 3, 4 oder 5, insbesondere 2, 3 oder 4.

Eine noch andere Ausführungsform der beanspruchten Verbindungen bzw. Lösungen oder Suspensionen sieht vor, dass der Metallkomplex die allgemeine Formel

M(L_{N})(AzuH)_{q} (IV)

aufweist, wobei der anionische sigma-Donor-Ligand L_{N} oder pi-Donor-Ligand L_{N} vorteilhafterweise ein monoanionischer Ligand ist, welcher ausgewählt ist aus der Gruppe bestehend aus Anionen des Cyclopentadiens und dessen Derivaten, Alkyl-Anionen und Aryl-Anionen. Alternativ oder ergänzend kann ein Fluoridanion als wenigstens einer der monoanionischen Liganden L_{N} vorgesehen sein.

Beispiele für den anionischen Liganden L_{N} sind das Cyclopentadienyl-Anion C₅H₅⁻ (Cp⁻) und das 1,2,3,4,5-Pentamethylcyclopentadienyl-Anion C₅Me₅⁻ (Cp*), das Methyl-Anion CH₃⁻ (Me⁻) und das Mesityl-Anion Me₃C₆H₂⁻ (Mes⁻). Die vorgenannten Anionen können als monoanionische pi-Donor-Liganden bzw. sigma-Donor-Liganden L_{N} im Rahmen der Herstellung neutraler *Sandwich-* bzw. Halb*sandwich*-Komplexe des Typs

M(L_{N})(AzuH)_{q} (IV)

fungieren.

Eine weitere vorteilhafte Ausführungsform der beanspruchten Verbindungen bzw. Lösungen oder Suspensionen sieht vor, dass das Metall-Zentralatom M des Metallkomplexes gemäß der allgemeinen Formel

M(L_{N})(AzuH)_{q} (IV)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer anderen Ausführungsform der beanspruchten Metallkomplexe, welche als isolierter Feststoff oder als isolierte Flüssigkeit, d. h. in Substanz, vorliegen, bzw. Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen weist der Metallkomplex die allgemeine Formel

[M(L_{S})_{g}(AzuH)ᵥ]X (V)

auf.

Gemäß einer weiteren Ausführungsform der beanspruchten Verbindungen bzw. Lösungen oder Suspensionen ist das Metall-Zentralatom M des Metallkomplexes gemäß der allgemeinen Formel

[M(L_{S})_{g}(AzuH)ᵥ]X (V)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verbindungen bzw. Lösungen oder Suspensionen sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verbindungen bzw. Lösungen oder Suspensionen ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe gemäß der allgemeinen Formel

[M(L_{S})_{g}(AzuH)ᵥ]X (V)

bzw. Lösungen oder Suspensionen, umfassend einen solchen Metallkomplex, sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Verbindungen bzw. Lösungen oder Suspensionen ist vorgesehen, dass w₃ und die formale Oxidationsstufe des Metall-Zentralatoms M des jeweiligen Metallkomplex gemäß der allgemeinen Formel

[M(L_{S})_{g}(AzuH)ᵥ]X (V)

identisch sind, d. h. dieselbe natürliche Zahl sind, wobei Null ausgenommen ist. Mithin kann w₃ = 2, 3, 4, 5, 6 oder 7 sein.

Gemäß einer weiteren Ausführungsvariante der beanspruchten Verbindungen bzw. Lösungen oder Suspensionen weist der Metallkomplex die allgemeine Formel

[M(L_{S})_{g}(AzuH)ᵥ]X (V)

auf, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verbindungen bzw. Lösungen oder Suspensionen ist w₃ = 2, 3, 4, 5 oder 6, vorteilhaft ist w₃ = 2, 3, 4 oder 5, insbesondere ist w₃ = 2, 3 oder 4. Eine weitere alternative oder ergänzende Ausführungsform der beanspruchten Verbindungen bzw. Lösungen oder Suspensionen sieht vor, dass der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4, 5 oder 6 ist. In einer noch anderen Ausführungsvariante ist der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4 oder 5, vorteilhaft Null, 1, 2, 3 oder 4, insbesondere Null, 1, 2 oder 3.

In einer anderen Ausführungsvariante der beanspruchten Verbindungen bzw. Lösungen oder Suspensionen beträgt die Summe der Anzahl v der Liganden AzuH und der Anzahl g neutralen Liganden Ls, also Σ (g + v), 2, 3, 4, 5, 6 oder 7. Eine weitere Ausführungsform sieht vor, dass die Summe der Anzahl v der Liganden AzuH und der Anzahl g neutralen Liganden L_{S}, also Σ (g + v), 2, 3, 4, 5 oder 6 beträgt, vorteilhaft 2, 3, 4 oder 5, insbesondere 2, 3 oder 4.

In einer weiteren Variante der beanspruchten Verbindungen bzw. Lösungen oder Suspensionen ist der neutrale sigma-Donor-Ligand Ls oder der neutrale pi-Donor-Ligand Ls ausgewählt aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den neutralen, insbesondere pi-Donor-Liganden, L_{S} sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, *p*-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der beanspruchten Verbindungen bzw. Lösungen oder Suspensionen sieht vor, dass das Metall-Zentralatom M des Metallkomplexes gemäß der allgemeinen Formel

[M(Ls)_{g}(AzuH)ᵥ]X (V)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer noch anderen Ausführungsform der beanspruchten Metallkomplexe, welche als isolierter Feststoff oder als isolierte Flüssigkeit, d. h. in Substanz, vorliegen, bzw. Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen weist der Metallkomplex die allgemeine Formel

[M(L_{T})(AzuH)_{z}]X (VI)

auf.

Gemäß einer weiteren Ausführungsform der beanspruchten Verbindungen bzw. Lösungen oder Suspensionen ist das Metall-Zentralatom M des Metallkomplexes gemäß der allgemeinen Formel

[M(L_{T})(AzuH)_{z}]X (VI)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verbindungen bzw. Lösungen oder Suspensionen sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verbindungen bzw. Lösungen oder Suspensionen ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Verbindungen gemäß der allgemeinen Formel

[M(L_{T})(AzuH)_{z}]X (VI)

bzw. Lösungen oder Suspensionen, umfassend eine solche Verbindung, sieht vor, dass das Metall-Zentralatom M eine formale Oxidationsstufe von 3, 4, 5, 6 oder 7 besitzt. Nach einer alternativen oder ergänzenden Ausführungsform der beanspruchten Verbindungen bzw. Lösungen oder Suspensionen ist vorgesehen, dass w₄ und die formale Oxidationsstufe des Metall-Zentralatoms M des Metallkomplexes gemäß der allgemeinen Formel

[M(L_{T})(AzuH)_{z}]X (VI)

identisch sind, d. h. dieselbe natürliche Zahl sind, wobei Null ausgenommen ist. Mithin kann w₄ = 3, 4, 5, 6 oder 7 sein.

Gemäß einer weiteren Ausführungsvariante der beanspruchten Verbindungen bzw. Lösungen oder Suspensionen ist ein Metallkomplex gemäß der allgemeinen Formel

[M(L_{T})(AzuH)_{z}]X (VI)

vorgesehen, wobei das Metall-Zentralatom M eine formale Oxidationsstufe von 3, 4, 5 oder 6 besitzt, insbesondere von 3, 4 oder 5. In einer alternativen oder ergänzenden Ausführungsvariante der beanspruchten Metallkomplexe bzw. Lösungen oder Suspensionen, umfassend einen solchen Metallkomplex, ist w₄ = 3, 4, 5 oder 6, insbesondere ist w₄ = 3, 4 oder 5. Eine weitere alternative oder ergänzende Ausführungsform der beanspruchten Verbindungen bzw. Lösungen oder Suspensionen sieht vor, dass |h|, also der absolute Betrag der Summe der negativen Ladungen aller anionischen Liganden L_{T} in einem Metallkomplex gemäß der allgemeinen Formel

[M(L_{T})(AzuH)_{z}]X (VI),

1, 2, 3 oder 4 ist, insbesondere 1, 2 oder 3.

In einer anderen Ausführungsvariante der beanspruchten Metallkomplexe gemäß der allgemeinen Formel

[M(L_{T})(AzuH)_{z}]X (VI)

bzw. Lösungen oder Suspensionen, umfassend einen solchen Metallkomplex, beträgt die Summe der Anzahl z der Liganden AzuH und der Anzahl der anionischen Liganden L_{T} 2, 3, 4, 5 oder 6. Eine weitere Ausführungsform sieht vor, dass die Summe der Anzahl z der Liganden AzuH und der Anzahl der anionischen Liganden L_{T} 2, 3, 4 oder 5 beträgt, insbesondere 2, 3 oder 4.

Eine weitere Ausführungsform der beanspruchten Verbindungen bzw. Lösungen oder Suspensionen sieht einen Metallkomplexe gemäß der allgemeinen Formel

[M(L_{T})(AzuH)_{z}]X (VI)

vor, wobei der Ligand L_{T} ein monoanionischer Ligand ist, welcher ausgewählt ist aus der Gruppe bestehend aus Anionen des Cyclopentadiens und dessen Derivaten und einem Fluoridanion, oder ein dianionischer Ligand. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻. Dabei sind R^{Q}, R^{P} und R^{V} unabhängig voneinander ausgewählt aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren, wobei die Substituenten R^{P} und R^{V} optional einen Ring bilden können. Die Reste R^{Q}, R^{P} und R^{V} können auch unabhängig voneinandner substituiert sein, insbesondere halogeniert.

Beispiele für Anionen des Cyclopentadiens (Cp) sind das Cyclopentadienyl-Anion C₅H₅⁻ (Cp⁻) und das 1,2,3,4,5-Pentamethylcyclopentadienyl-Anion C₅Me₅⁻ (Cp^{*}). Die vorgenannten Anionen können als planare pi-Donor-Liganden L_{T} in kationischen *Sandwich-Komplexen* des Typs

[M(L_{T})(AzuH)_{z}]X (VI)

vorgesehen sein.

Eine weitere vorteilhafte Ausführungsform der beanspruchten Verbindungen bzw. Lösungen oder Suspensionen sieht vor, dass das Metall-Zentralatom M des jeweiligen Metallkomplexes gemäß der allgemeinen Formel

[M(L_{T})(AzuH)_{z}]X (VI)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

Besonders vorteilhaft ist, dass die Verwendung von Verbindungen gemäß der allgemeinen Formel

M^{A}Yₙ(AzuH) (I)

zur Herstellung von Metallkomplexen bzw. das Verfahren zur Herstellung von Metallkomplexen gemäß den allgemeinen Formeln III, IV, V und VI unter Verwendung von Verbindungen gemäß der allgemeinen Formel

M^{A}Yₙ(AzuH) (I)

die Darstellung hochreiner Metallkomplexe ermöglichen. Insbesondere kann mittels des hier beschriebenen Verfahrens eine Vielzahl isomerenreiner Metallkomplexe in guter bis sehr guter, zum Teil quantitativer, Ausbeute zur Verfügung gestellt werden. Beispiele für solche isomerenreinen Metallkomplexe, erhalten oder erhältlich als Feststoffe, Flüssigkeiten, Lösungen oder Suspensionen nach einem Verfahren gemäß einer der weiter oben beschriebenen Ausführungsformen, sind Ru(Cp*)(GuaH), [Ru(*p*-cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH).

In einer Ausführungsform der hier beanspruchten Metallkomplexe oder Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, jeweils erhalten oder erhältlich nach einem Verfahren zur Herstellung solcher Metallkomplexe oder Lösungen oder Suspensionen gemäß einer der weiter oben beschriebenen Ausführungsformen ist der Metallkomplex ausgewählt aus der Gruppe bestehend aus Fe(GuaH)₂, Ru(GuaH)₂, Ru(Cp*)(GuaH), [Ru(*p*-cymol)(GuaH)]PF₆, Co(GuaH)₂, [Co(GuaH)₂]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), vorteilhaft aus der Gruppe bestehend aus Ru(Cp*)(GuaH), [Ru(*p*-cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), besonders vorteilhaft aus der Gruppe bestehend aus Ru(Cp*)(GuaH), Zn(Mes)(GuaH) und PtMe₃(GuaH). Insbesondere ist der Metallkomplex PtMe₃(GuaH).

Die Komplexe Ru(Cp*)(GuaH), Zn(Mes)(GuaH) und PtMe₃(GuaH) liegen in isolierter Form als Flüssigkeiten vor. Dies ist insbesondere mit Blick auf eine Verwendung als Metallpräkursor-Verbindungen für Gasphasenabscheidungsprozesse von Vorteil. Darüber hinaus ist es von Vorteil, in der Katalyse einen flüssigen Katalysator einzusetzen, beispielsweise die Pt(IV)-Verbindung PtMe₃(GuaH) für lichtinduzierte Platin-katalysierte Hydrosilylierungsreaktionen. Die vorgenannte Pt(IV)-Verbindung zeigt zudem eine Absorption im Vis-Bereich. Das stellt im Rahmen lichtinduzierter Platin-katalysierter Hydrosilylierungsreaktionen einen weiteren Vorteil dar. Denn dabei ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig. Der als Isomerengemisch der meso-Form und eines Racemats erhaltene, in isolierter Form ebenfalls als Flüssigkeit vorliegende Cobalt-Komplex Co(GuaH)₂ vom Metallocen-Typ kann beispielsweise als Elektronentransfer-Reagenz verwendet werden.

Im Falle der Metallkomplexe Fe(GuaH)₂ und Ru(GuaH)₂ konnte jeweils das *rac-*Diastereomer als Hauptprodukt isoliert werden, und zwar mit einer guten Ausbeute von > 70 % bzw. > 60 %. Die Metallkomplexe Co(GuaH)₂ und [Co(GuaH)₂]PF₆ wurden jeweils als Isomerengemisch der meso-Form und eines Racemats erhalten.

Ferner wird die Aufgabe gelöst durch Metallkomplexe gemäß der allgemeinen Formel

M(L_{K})_{f}(AzuH)ₘ (III)

oder

M(L_{N})(AzuH)_{q} (IV)

oder

[M(L_{S})_{g}(AzuH)ᵥ]X (V)

oder

[M(L_{T})(AzuH)_{z}]X (VI)

wobei
- M =: Metall-Zentralatom ausgewählt aus der Gruppe 6, der Gruppe 7, der Gruppe 8, der Gruppe 9, der Gruppe 10, der Gruppe 11 oder der Gruppe 12,
- L_{K} =: optionaler neutraler sigma-Donor-Ligand oder optionaler neutraler pi-Donor-Ligand,
- f =: Anzahl der Liganden L_{K}, wobei f = 0, 1, 2, 3, 4, 5 oder 6 ist,
- AzuH =: Azulen oder ein Azulenderivat, welches in 4-Position, 6-Position oder 8-Position zusätzlich zu einem H-Atom ein Hydrid-Anion trägt,
- m =: Anzahl der Liganden AzuH, wobei m = 1, 2, 3, 4, 5, 6 oder 7 ist,
- L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
- q =: Anzahl der Liganden AzuH, wobei q = w₂ - |u|,
wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
- L_{S} =: optionaler neutraler sigma-Donor-Ligand oder optionaler neutraler pi-Donor-Ligand,
- g =: Anzahl der Liganden L_{S}, wobei g = 0, 1, 2, 3, 4, 5 oder 6 ist,
- v =: Anzahl der Liganden AzuH, wobei v = w₃ - 1, wobei w₃ = 2, 3, 4, 5, 6 oder 7 ist,
- L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
- z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
- X⁻ =: Halogenid-Anion oder einwertiges schwach-koordinierendes Anion oder einwertiges nicht-koordinierendes Anion,
wobei
- Azu =: Azulen gemäß der Formel 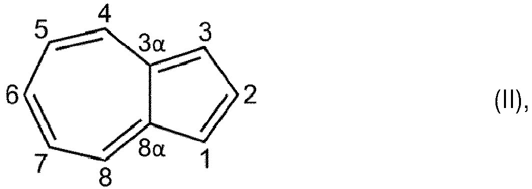 oder
- Azu: = ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
   wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
   wobei zwei Substituenten R^{F} optional einen Ring bilden können,
   und
b) wenigstens ein Kohlenstoffatom des Azulengerüsts, ausgewählt aus der Gruppe bestehend aus den Kohlenstoffatomen C4, C6 und C8, ein H-Atom trägt,
wobei die Verbindungen Fe(AzulenH)₂ und Cr(AzulenH)₂, und deren Isomere, ausgenommen sind.

Der von Knox und Pauson (J. Chem. Soc. 1961, 4610 - 4615) als Isomerengemisch erhaltene d⁶-Metallkomplex Fe(AzulenH)₂ (= Bis-(3α,4-dihydroazulenyl)eisen)) mit zwei *H-*Dihydroazulenyl-Liganden (AzulenH)¹⁻ und der von Fischer und Müller (J. Organomet. Chem. 1964, 1, 464 - 470) beschriebene d⁶-Cr(0)-Komplex Cr(AzulenH)₂, welcher eine Azulenium-Chrom(0)-azuleniat-Einheit aufweist, also nur einen *H*-Dihydroazulenyl-Liganden (AzulenH)¹⁻, sind nicht Gegenstand der vorliegenden Erfindung.

Die allgemeinen Formeln III, IV, V und VI umfassen sowohl die Monomere als auch etwaige Oligomere, insbesondere Dimere.

Das jeweilige Metall-Zentralatom M kann grundsätzlich eine formale Oxidationsstufe bzw. Oxidationszahl von 0, 1, 2, 3, 4, 5, 6 oder 7 besitzen. Die höheren Oxidationsstufen, insbesondere die Oxidationsstufen 4, 5, 6 und 7, werden üblicherweise durch anionische, insbesondere monoanionische Liganden, z. B. Fluoridanionen (vgl. insbesondere Formeln IV, V und VI), und/oder dianionische Liganden, z. B. O²⁻ (vgl. insbesondere Formel VI), stabilisiert.

Der Index q kann den Wert 1, 2, 3, 4, 5 oder 6 annehmen. Alternativ ist q = 1, 2, 3, 4 oder 5, vorteilhaft ist q = 1, 2, 3 oder 4, insbesondere ist q = 1, 2 oder 3.

Der Index v kann ebenfalls 1, 2, 3, 4, 5 oder 6 betragen. Alternativ ist v = 1, 2, 3, 4 oder 5, vorteilhaft ist v = 1, 2, 3 oder 4, insbesondere ist v = 1, 2 oder 3.

Der Index z kann den Wert 1, 2, 3, 4 oder 5 annehmen. Alternativ ist z = 1, 2, 3 oder 4, insbesondere ist z = 1, 2 oder 3.

Die allgemeinen Formeln III, IV, V und VI umfassen jeweils sowohl lösungsmittelfreie, also nicht als Lösungsmitteladdukte vorliegende, Metallkomplexe als auch Solvensaddukte der jeweiligen Metallkomplexe. Im Falle eines Lösungsmitteladduktes ist das Lösungsmittel insbesondere mit dem weiter oben definierten Lösungsmittel S_{P} identisch. Alternativ oder ergänzend können einer oder mehrere der neutralen Donor-Liganden L_{K} bzw. Ls (vgl. Formel III bzw. Formel V) ausgewählt sein aus der Gruppe bestehend aus Acetonitril, Dimethylsulfoxid und Tetrahydrothiophen.

Der Begriff "schwach-koordinierend" umfasst auch die Ausdrücke "sehr schwach koordinierend" und "mäßig stark koordinierend". Die Halogenid-Anionen sind insbesondere ausgewählt aus der Gruppe bestehend aus Fluorid, Chlorid und Bromid. Bei den einwertigen schwach-koordinierenden und einwertigen nicht-koordinierenden Anionen handelt es sich insbesondere um perfluorierte Anionen, wie z. B. PF₆-, BF₄⁻ und [(CF₃SO₂)₂N]⁻.

Metallkomplexe gemäß den allgemeinen Formeln

M(L_{K})_{f}(AzuH)ₘ (III),

M(L_{N})(AzuH)_{q} (IV),

[M(L_{S})_{g}(AzuH)ᵥ]X (V),

[M(L_{T})(AzuH)_{z}]X (VI)

weisen jeweils wenigstens ein *H-*Dihydroazulenyl-Anion (AzuH)¹⁻ auf, welches ein einfach, nämlich in 4-Position, in 6-Position oder in 8-Position, hydriertes Azulen oder Azulenderivat ist. Das *H*-Dihydroazulenyl-Anion stellt ein Derivat des Cyclopentadienyl-Anions bzw. ein Cyclopentadienyl-artiges Monoanion dar. Bei dem *H*-Dihydroazulenyl-Anion kann es sich um ein 3a,4-*H*-Dihydroazulenyl-, ein 8,8α-*H*-Dihydroazulenyl-, ein 3α,6-*H*-Dihydroazulenyl- oder ein 6,8α-*H*-Dihydroazulenyl-Anion handeln, oder eine Mischung zweier oder mehrerer Regioisomere.

Aufgrund des Vorhandenseins wenigstens eines *H*-Dihydroazulenyl-Anions, also wenigstens eines Cyclopentadienyl-artigen Monoanions, eignen sich die hier beschriebenen Verbindungen gemäß den allgemeinen Formeln III, IV, V und VI insbesondere als Präkatalysatoren, als Katalysatoren und als Elektronentransfer-Reagenzien für chemische Reaktionen, in welchen ansonsten Metallkomplexe eingesetzt werden, die Cyclopentadienyl-Liganden aufweisen. Dies ist besonders vorteilhaft, weil die Zurverfügungstellung eines *H*-Dihydroazulenyl-Liganden im Vergleich zur Bereitstellung des Cyclopentadienyl-Liganden weniger arbeits- und zeitaufwändig. Denn die Edukte, z. B. Naturstoffe wie Guajazulen und hydridische Reduktionsmittel wie Lithiumtriethylborhydrid, sind nicht nur einfacher zu handhaben und zu lagern, sondern auch kostengünstiger. Außerdem sind weniger und einfachere Arbeitsschritte auszuführen. Infolgedessen fallen auch der Syntheseaufwand und die Herstellungskosten für die hier beanspruchten Metallkomplexe gemäß den allgemeinen Formeln III, IV, V und VI geringer aus als für analoge Metall-Cp-Komplexe. Mithin stellen die hier beschriebenen Metallkomplexe sowie deren Lösungen und Suspensionen insbesondere mit Blick auf eine industrielle Anwendung eine Alternative für Metall-Cp-Komplexe dar. Und zwar auch hinsichtlich einer Verwendung als Metallpräkursor-Verbindungen in Gasphasenabscheidungsprozessen.

Bei Guajazulen handelt es sich um einen Naturstoff, der in Kamillenöl und anderen ätherischen Ölen enthalten und daher vorteilhafterweise in großen Mengen kostengünstig zugänglich ist. Synthetisch kann es aus dem Guajol des Guajakholzöls (Guajakharz) hergestellt werden. Guajazulen ist eine intensiv blaue Substanz mit entzündungshemmender Wirkung. Ein Isomer des Guajazulens ist beispielsweise 2*-iso-*Propyl-4,8-dimethylazulen (Vetivazulen).

In einer vorteilhaften Ausführungsform der hier beanspruchten Metallkomplexe gemäß den allgemeinen Formeln III, IV, V und VI ist Azu = Gua = 7-iso-Propyl-1,4-dimethylazulen und AzuH = GuaH = 7-*iso*-Propyl-1,4-dimethyl-8-*H*-dihydroazulen.

Beispiele für die hier beanspruchten Metallkomplexe sind zum einen homoleptische *Sandwich*-Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, insbesondere:
▪ neutrale *Sandwich-Komplexe* des Typs

   M(L_{K})_{f}(AzuH)ₘ (III)

   mit f = 0, d. h. ohne neutralen Donor-Liganden L_{K}, z. B. Fe(GuaH)₂, Ru(GuaH)₂, Co(GuaH)₂, Zn(GuaH)₂, wobei jeweils die formale Oxidationsstufe 2 ist, M = Fe, Ru, Co oder Zn, f = 0, m = 2 und AzuH = GuaH
   und
▪ kationische *Sandwich-Komplexe* des Typs

   [M(L_{S})_{g}(AzuH)ᵥ]X (V)

   mit g = 0, d. h. ohne neutralen Donor-Liganden Ls, z. B. der d⁶-Komplex [Co(GuaH)₂]PF₆, wobei die formale Oxidationsstufe 3 ist, M = Co, g = 0, v = 3 - 1 = 2, AzuH = GuaH und X = PF₆.

Zum anderen handelt es sich bei den hier beanspruchten Verbindungen um heteroleptische Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, insbesondere:
▪ neutrale Halb*sandwich*-Komplexe des Typs

   M(L_{K})_{f}(AzuH)ₘ (III)

   mit f = 1 oder 2, d. h. mit genau einem neutralen sigma-Donor-Liganden oder mit genau einem neutralen, nicht-planaren pi-Donor-Liganden, z. B. Cu(PPh₃)(GuaH), Rh(nbd)(GuaH), Rh(cod)(GuaH), wobei die formale Oxidationsstufe jeweils 1 ist, M = Cu oder Rh, L_{K} = PPh₃, NBD oder COD, f jeweils 1 ist, m jeweils 1 ist und AzuH = GuaH ist, oder zwei planaren, neutralen pi-Donor-Liganden, z. B. Rh(ethen)₂(GuaH), wobei die formale Oxidationsstufe 1 ist, M = Rh, L_{K} = Ethen, f = 2, m = 1 und AzuH = GuaH
▪ neutrale Halb*sandwich*-Komplexe des Typs

   M(L_{N})(AzuH)_{q} (IV),

   beispielsweise mit |u| = 1, 2 oder 3, d. h. beispielsweise mit einem, zwei oder drei monoanionischen sigma-Donor-Liganden, z. B. Zn(Mes)(GuaH), wobei die formale Oxidationsstufe 2 ist, M = Zn, L_{N} = Mes⁻, |u| = 1, q = 2 - |-1| = 1 und AzuH = GuaH ist, und PtMe₃(GuaH), wobei die formale Oxidationsstufe 4 ist, M = Pt, L_{N} = CH₃⁻, |u| = 3, q = 4 - |-3| = 1 und AzuH = GuaH
▪ neutrale *Sandwich-Komplexe* des Typs

   M(L_{N})(AzuH)_{q} (IV),

   beispielsweise mit |u| = 1, d. h. mit genau einem monoanionischen, planaren pi-Donor-Liganden, z. B. Ru(Cp*)(GuaH), wobei die formale Oxidationsstufe 2 ist, M = Ru, L_{N} = Cp*, |u| = 1, q = 2 - |-1| = 1 und AzuH = GuaH
▪ kationische *Sandwich-Komplexe* des Typs

   [M(L_{S})_{g}(AzuH)ᵥ]X (V)

   mit g = 1, d. h mit genau einem neutralen, planaren pi-Donor-Liganden, z. B. [Ru(*p*-cymol)(GuaH)]PF₆, wobei die formale Oxidationsstufe 2 ist, M = Ru, Ls = p-Cymol, g = 1, v = 2 - 1 = 1, AzuH = GuaH und X = PF₆
▪ kationische Halb*sandwich*-Komplexe des Typs

   [M(L_{S})_{g}(AzuH)ᵥ]X (V)

   mit g = 1 oder 2, d. h. mit einem neutralen nicht-planaren pi-Donor-Liganden, z. B. [Pt(cod)(GuaH)]PF₆, wobei die formale Oxidationsstufe 2 ist, M = Pt, Ls = COD, g = 1, v = 2 - 1 = 1, AzuH = GuaH und X = PF₆, oder mit zwei planaren, neutralen pi-Donor-Liganden, z. B. [Pt(ethen)₂(GuaH)]PF₆, wobei die formale Oxidationsstufe 2 ist, M = Pt, Ls = Ethen, g = 2, v = 2 - 1 = 1, AzuH = GuaH und X = PF₆
▪ kationische *Sandwich*-Komplexe des Typs

   [M(L_{T})(AzuH)_{z}]X (VI)

   mit |h| = 1, d. h. mit genau einem anionischen, planaren pi-Donor-Liganden, z. B. [Rh(Cp*)(GuaH)]Cl, [Rh(Cp*)(GuaH)]PF₆, wobei jeweils die formale Oxidationsstufe 3 ist, M = Rh, L_{T} = Cp*, |h| = 1, z = 3 - (|-1| + 1) = 1, AzuH = GuaH und X = Cl oder PF₆.

In einer Ausführungsform der hier beanspruchten Verbindungen sind Metallkomplexe gemäß der allgemeinen Formel

M(L_{K})_{f}(AzuH)ₘ (III)

vorgesehen.

Gemäß einer anderen Ausführungsform der beanspruchten Verbindungen ist das Metall-Zentralatom M des Metallkomplexes gemäß der allgemeinen Formel

M(L_{K})_{f}(AzuH)ₘ (III)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der hier beschriebenen Metallkomplexe sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Metallkomplexe ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe sieht vor, dass das Metall-Zentralatom M eine formale Oxidationsstufe von 1, 2, 3, 4, 5, 6 oder 7 besitzt. Nach einer alternativen oder ergänzenden Ausführungsform der beanspruchten Metallkomplexe ist vorgesehen, dass der Index m und die formale Oxidationsstufe des Metall-Zentralatoms M des Metallkomplexes gemäß der allgemeinen Formel

M(L_{K})_{f}(AzuH)ₘ (III)

identisch sind, d. h. dieselbe natürliche Zahl sind, wobei Null ausgenommen ist. Mithin kann m = 1, 2, 3, 4, 5, 6 oder 7 sein.

Gemäß einer weiteren Ausführungsvariante der hier beanspruchten Verbindungen ist ein Metallkomplexe gemäß der allgemeinen Formel

M(L_{K})_{f}(AzuH)ₘ (III)

vorgesehen, wobei das Metall-Zentralatom M eine formale Oxidationsstufe von 1, 2, 3 oder 4 besitzt, vorteilhaft von 1, 2 oder 3, insbesondere von 1 oder 2. In einer alternativen oder ergänzenden Ausführungsvariante der beanspruchten Metallkomplexe ist der Index m 1, 2, 3 oder 4, vorteilhaft 1, 2 oder 3, insbesondere 1 oder 2. Eine weitere alternative oder ergänzende Ausführungsform der beanspruchten Metallkomplexe sieht vor, dass der Index f, welcher die Anzahl der neutralen Liganden L_{K} in einem Metallkomplex gemäß der allgemeinen Formel

M(L_{K})_{f}(AzuH)ₘ (III)

angibt, Null, 1, 2, 3, 4 oder 5 ist, vorteilhaft Null, 1, 2, 3 oder 4, insbesondere Null, 1, 2 oder 3.

In einer anderen Ausführungsvariante der beanspruchten Metallkomplexe gemäß der allgemeinen Formel

M(L_{K})_{f}(AzuH)ₘ (III)

beträgt die Summe der Anzahl m der Liganden AzuH und der Anzahl f der neutralen Liganden L_{K}, also ∑ (f + m), 2, 3, 4, 5, 6 oder 7. Eine andere Ausführungsform sieht vor, dass die Summe der Anzahl m der Liganden AzuH und der Anzahl f der neutralen Liganden L_{K}, also ∑ (f + m), 2, 3, 4, 5 oder 6 beträgt, vorteilhaft 2, 3, 4 oder 5, insbesondere 2, 3 oder 4.

Eine weitere Ausführungsform sieht vor, dass der neutrale sigma-Donor-Ligand L_{K} oder pi-Donor-Ligand L_{K} ausgewählt ist aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den Liganden L_{K} sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, p-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der hier beanspruchten Verbindungen sieht vor, dass das Metall-Zentralatom M des Metallkomplexes gemäß der allgemeinen Formel

M(L_{K})_{f}(AzuH)ₘ (III)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer weiteren Ausführungsform der hier beschriebenen Verbindungen sind Metallkomplexe gemäß der allgemeinen Formel

M(L_{N})(AzuH)_{q} (IV)

vorgesehen.

Gemäß einer noch anderen Ausführungsform der beanspruchten Verbindungen ist das Metall-Zentralatom M des Metallkomplexes gemäß der allgemeinen Formel

M(L_{N})(AzuH)_{q} (IV)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Metallkomplexe sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Metallkomplexe ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe gemäß der allgemeinen Formel

M(L_{N})(AzuH)_{q} (IV)

sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Metallkomplexe ist vorgesehen, dass w₂ und die formale Oxidationsstufe des Metall-Zentralatoms M des Metallkomplexes gemäß der allgemeinen Formel

M(L_{N})(AzuH)_{q} (IV)

identisch sind, d. h. dieselbe natürliche Zahl sind, wobei Null ausgenommen ist. Mithin kann w₂ = 2, 3, 4, 5, 6 oder 7 sein.

Gemäß einer weiteren Ausführungsvariante der hier beanspruchten Verbindungen sind Metallkomplexe gemäß der allgemeinen Formel

M(L_{N})(AzuH)_{q} (IV)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Metallkomplexe ist w₂ = 2, 3, 4, 5 oder 6, vorteilhaft ist w₂ = 2, 3, 4 oder 5, insbesondere ist w₂ = 2, 3 oder 4. Eine weitere alternative oder ergänzende Ausführungsform der beanspruchten Metallkomplexe sieht vor, dass |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4, 5, oder 6 ist. In einer noch anderen Ausführungsvariante ist |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4 oder 5, vorteilhaft 1, 2, 3 oder 4, insbesondere 1, 2 oder 3.

In einer anderen Ausführungsvariante der beanspruchten Metallkomplexe beträgt die Summe der Anzahl q der Liganden AzuH und der Anzahl der anionischen Liganden L_{N} 2, 3, 4, 5, 6 oder 7. Eine weitere Ausführungsform sieht vor, dass die Summe der Anzahl q der Liganden AzuH und der Anzahl der anionischen Liganden L_{N} 2, 3, 4, 5 oder 6 beträgt, vorteilhaft 2, 3, 4 oder 5, insbesondere 2, 3 oder 4.

Eine noch andere Ausführungsform der hier beanspruchten Verbindungen sieht Metallkomplexe gemäß der allgemeinen Formel

M(L_{N})(AzuH)_{q} (IV)

vor, wobei der anionische sigma-Donor-Ligand L_{N} oder pi-Donor-Ligand L_{N} vorteilhafterweise ein monoanionischer Ligand ist, welcher ausgewählt ist aus der Gruppe bestehend aus Anionen des Cyclopentadiens und dessen Derivaten, Alkyl-Anionen und Aryl-Anionen. Alternativ oder ergänzend kann ein Fluoridanion als wenigstens einer der monoanionischen Liganden L_{N} vorgesehen sein.

Beispiele für den anionischen Liganden L_{N} sind das Cyclopentadienyl-Anion C₅H₅⁻ (Cp⁻) und das 1,2,3,4,5-Pentamethylcyclopentadienyl-Anion C₅Me₅⁻ (Cp*), das Methyl-Anion CH₃⁻ (Me⁻) und das Mesityl-Anion Me₃C₆H₂⁻ (Mes⁻). Die vorgenannten Anionen können als monoanionische pi-Donor-Liganden bzw. sigma-Donor-Liganden L_{N} im Rahmen der Herstellung neutraler *Sandwich-* bzw. Halb*sandwich*-Komplexe des Typs

M(L_{N})(AzuH)_{q} (IV)

fungieren.

Eine weitere vorteilhafte Ausführungsform der beanspruchten Metallkomplexe sieht vor, dass das Metall-Zentralatom M des Metallkomplexes gemäß der allgemeinen Formel

M(L_{N})(AzuH)_{q} (IV)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

Die Komplexe Ru(Cp*)(GuaH), Zn(Mes)(GuaH) und PtMe₃(GuaH) liegen in isolierter Form als Flüssigkeiten vor. Letzteres ist insbesondere mit Blick auf eine Verwendung als Metallpräkursor-Verbindungen für Gasphasenabscheidungsprozesse von Vorteil. Darüber hinaus ist es von Vorteil, in der Katalyse einen flüssigen Katalysator einzusetzen, beispielsweise die Pt(IV)-Verbindung PtMe₃(GuaH) für lichtinduzierte Platin-katalysierte Hydrosilylierungsreaktionen. Die vorgenannte Pt(IV)-Verbindung zeigt zudem eine Absorption im Vis-Bereich. Das stellt im Rahmen lichtinduzierter Platin-katalysierter Hydrosilylierungsreaktionen einen weiteren Vorteil dar. Denn dabei ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig.

In einer anderen Ausführungsform der hier beanspruchten Verbindungen sind Metallkomplexe gemäß der allgemeinen Formel

[M(L_{S})_{g}(AzuH)ᵥ]X (V)

vorgesehen.

Gemäß einer weiteren Ausführungsform der hier beschriebenen Verbindungen ist das Metall-Zentralatom M des Metallkomplexes gemäß der allgemeinen Formel

[M(L_{S})_{g}(AzuH)ᵥ]X (V)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Metallkomplexe sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Metallkomplexe ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Metallkomplexe ist vorgesehen, dass w₃ und die formale Oxidationsstufe des Metall-Zentralatoms M des Metallkomplexes gemäß der allgemeinen Formel

[M(L_{S})_{g}(AzuH)ᵥ]X (V)

identisch sind, d. h. dieselbe natürliche Zahl sind, wobei Null ausgenommen ist. Mithin kann w₃ = 2, 3, 4, 5, 6 oder 7 sein.

Gemäß einer weiteren Ausführungsvariante der hier beanspruchten Verbindungen sind Metallkomplexe gemäß der allgemeinen Formel

[M(L_{S})_{g}(AzuH)ᵥ]X (V)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Metallkomplexe ist w₃ = 2, 3, 4, 5 oder 6, vorteilhaft ist w₃ = 2, 3, 4 oder 5, insbesondere ist w₃ = 2, 3 oder 4. Eine weitere alternative oder ergänzende Ausführungsform der beanspruchten Metallkomplexe sieht vor, dass der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4, 5 oder 6 ist. In einer noch anderen Ausführungsvariante ist der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4 oder 5, vorteilhaft Null, 1, 2, 3 oder 4, insbesondere Null, 1, 2 oder 3.

In einer anderen Ausführungsvariante der beanspruchten Metallkomplexe gemäß der allgemeinen Formel

[M(L_{S})_{g}(AzuH)ᵥ]X (V)

beträgt die Summe der Anzahl v der Liganden AzuH und der Anzahl g der neutralen Liganden Ls, also ∑ (g + v), 2, 3, 4, 5, 6 oder 7. Eine weitere Ausführungsform sieht vor, dass die Summe der Anzahl v der Liganden AzuH und der Anzahl g der neutralen Liganden Ls, also ∑ (g + v), 2, 3, 4, 5 oder 6 beträgt, vorteilhaft 2, 3, 4 oder 5, insbesondere 2, 3 oder 4.

In einer weiteren Variante der beanspruchten Metallkomplexe ist der neutrale sigma-Donor-Ligand Ls oder der neutrale pi-Donor-Ligand Ls ausgewählt aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den neutralen, insbesondere pi-Donor-Liganden, Ls sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, p-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der hier beanspruchten Metallkomplexe sieht vor, dass das Metall-Zentralatom M des Metallkomplexes gemäß der allgemeinen Formel

[M(L_{S})_{g}(AzuH)ᵥ]X (V)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer noch anderen Ausführungsform der hier beanspruchten Verbindungen sind Metallkomplexe gemäß der allgemeinen Formel

[M(L_{T})(AzuH)_{z}]X (VI)

vorgesehen.

Gemäß einer weiteren Ausführungsform der hier beschriebenen Verbindungen ist das Metall-Zentralatom M des Metallkomplexes gemäß der allgemeinen Formel

[M(L_{T})(AzuH)_{z}]X (VI)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Metallkomplexe sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Metallkomplexe ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Metallkomplexe gemäß der allgemeinen Formel

[M(L_{T})(AzuH)_{z}]X (VI)

sieht vor, dass das Metall-Zentralatom M eine formale Oxidationsstufe von 3, 4, 5, 6 oder 7 besitzt. Nach einer alternativen oder ergänzenden Ausführungsform der beanspruchten Metallkomplexe ist vorgesehen, dass w₄ und die formale Oxidationsstufe des Metall-Zentralatoms M des Metallkomplexes gemäß der allgemeinen Formel

[M(L_{T})(AzuH)_{z}]X (VI)

identisch sind, d. h. dieselbe natürliche Zahl sind, wobei Null ausgenommen ist. Mithin kann w₄ = 3, 4, 5, 6 oder 7 sein.

Gemäß einer weiteren Ausführungsvariante der hier beanspruchten Verbindungen sind Metallkomplexe gemäß der allgemeinen Formel

[M(L_{T})(AzuH)_{z}]X (VI)

vorgesehen, wobei das Metall-Zentralatom M eine formale Oxidationsstufe von 3, 4, 5 oder 6 besitzt, insbesondere von 3, 4 oder 5. In einer alternativen oder ergänzenden Ausführungsvariante der beanspruchten Metallkomplexe ist w₄ = 3, 4, 5 oder 6, insbesondere ist w₄ = 3, 4 oder 5. Eine weitere alternative oder ergänzende Ausführungsform der beanspruchten Metallkomplexe sieht vor, dass |h|, also der absolute Betrag der Summe der negativen Ladungen aller anionischen Liganden L_{T} in einem Metallkomplex gemäß der allgemeinen Formel

[M(L_{T})(AzuH)_{z}]X (VI),

1, 2, 3 oder 4 ist, insbesondere 1, 2 oder 3.

In einer anderen Ausführungsvariante der beanspruchten Metallkomplexe gemäß der allgemeinen Formel

[M(L_{T})(AzuH)_{z}]X (VI)

beträgt die Summe der Anzahl z der Liganden AzuH und der Anzahl der anionischen Liganden L_{T} 2, 3, 4, 5 oder 6. Eine weitere Ausführungsform sieht vor, dass die Summe der Anzahl z der Liganden AzuH und der Anzahl der anionischen Liganden L_{T} 2, 3, 4 oder 5 beträgt, insbesondere 2, 3 oder 4.

Eine weitere Ausführungsform der hier beanspruchten Verbindungen sieht Metallkomplexe gemäß der allgemeinen Formel

[M(L_{T})(AzuH)_{z}]X (VI)

vor, wobei der Ligand L_{T} ein monoanionischer Ligand ist, welcher ausgewählt ist aus der Gruppe bestehend aus Anionen des Cyclopentadiens und dessen Derivaten und einem Fluoridanion, oder ein dianionischer Ligand. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻. Dabei sind R^{Q}, R^{P} und R^{V} unabhängig voneinander ausgewählt aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren, wobei die Substituenten R^{P} und R^{V} optional einen Ring bilden können. Die Reste R^{Q}, R^{P} und R^{V} können auch unabhängig voneinandner substituiert sein, insbesondere halogeniert.

Beispiele für Anionen des Cyclopentadiens (Cp) sind das Cyclopentadienyl-Anion C₅H₅⁻ (Cp⁻) und das 1,2,3,4,5-Pentamethylcyclopentadienyl-Anion C₅Me₅⁻ (Cp*). Die vorgenannten Anionen können als planare pi-Donor-Liganden L_{T} in kationischen *Sandwich-Komplexen* des Typs

[M(L_{T})(AzuH)_{z}]X (VI)

vorgesehen sein.

Eine weitere vorteilhafte Ausführungsform der hier beanspruchten Verbindungen sieht vor, dass das Metall-Zentralatom M des Metallkomplexes gemäß der allgemeinen Formel

[M(L_{T})(AzuH)_{z}]X (VI)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer Ausführungsform der hier beanspruchen Verbindungen ist der Metallkomplex ausgewählt aus der Gruppe bestehend aus Fe(GuaH)₂, Ru(GuaH)₂, Ru(Cp*)(GuaH), [Ru(*p*-cymol)(GuaH)]PF₆, Co(GuaH)₂, [Co(GuaH)₂]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), vorteilhaft aus der Gruppe bestehend aus Ru(Cp*)(GuaH), [Ru(p-cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), besonders vorteilhaft aus der Gruppe bestehend aus Ru(Cp*)(GuaH), Zn(Mes)(GuaH) und PtMe₃(GuaH). Insbesondere ist der Metallkomplex PtMe₃(GuaH).

Insbesondere hinsichtlich einer Verwendung als Metallpräkursor-Verbindungen für Gasphasenabscheidungsprozesse ist es von Vorteil, dass die Komplexe Ru(Cp*)(GuaH), Zn(Mes)(GuaH) und PtMe₃(GuaH) nicht nur in hoher (Isomeren-)Reinheit von 97 %, vorteilhaft von mehr als 97 %, insbesondere von mehr als 98 % oder 99 %, und guter Ausbeute, auch Raum-Zeit-Ausbeute, erhältlich sind, sondern - in isolierter Form - auch als Flüssigkeiten vorliegen. Darüber hinaus ist es von Vorteil, in der Katalyse einen flüssigen Katalysator einzusetzen, beispielsweise die Pt(IV)-Verbindung PtMe₃(GuaH) für lichtinduzierte Platin-katalysierte Hydrosilylierungsreaktionen. Die vorgenannte Pt(IV)-Verbindung zeigt zudem eine Absorption im Vis-Bereich. Das stellt im Rahmen lichtinduzierter Platin-katalysierter Hydrosilylierungsreaktionen einen weiteren Vorteil dar. Denn dabei ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig. Der als Isomerengemisch der meso-Form und eines Racemats erhältliche, in isolierter Form ebenfalls als Flüssigkeit vorliegende Cobalt-Komplex Co(GuaH)₂ vom Metallocen-Typ kann beispielsweise als Elektronentransfer-Reagenz verwendet werden.

Die Aufgabe wird auch gelöst durch die Verwendung wenigstens eines Metallkomplexes gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

oder wenigstens einer Lösung oder Suspension, umfassend einen Metallkomplex gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

und wenigstens ein Lösungsmittel, welches mit dem, insbesondere aprotisch-polaren, Lösungmittel S_{P} mischbar oder identisch ist,
- gemäß einer Ausführungsform der weiter oben beschriebenen Verbindungen
   oder
- erhalten oder erhältlich nach einem Verfahren zur Herstellung solcher Verbindungen oder Lösungen oder Suspensionen gemäß einer der weiter oben beschriebenen Ausführungsformen,
   wobei
   - M =: Metall-Zentralatom ausgewählt aus der Gruppe 6, der Gruppe 7, der Gruppe 8, der Gruppe 9, der Gruppe 10, der Gruppe 11 oder der Gruppe 12,
   - L_{K} =: optionaler neutraler sigma-Donor-Ligand oder optionaler neutraler pi-Donor-Ligand,
   - f =: Anzahl der Liganden L_{K}, wobei f = 0, 1, 2, 3, 4, 5 oder 6 ist,
   - AzuH =: Azulen oder ein Azulenderivat, welches in 4-Position, 6-Position oder 8-Position zusätzlich zu einem H-Atom ein Hydrid-Anion trägt,
   - m =: Anzahl der Liganden AzuH, wobei m = 1, 2, 3, 4, 5, 6 oder 7 ist,
   - L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
   - q =: Anzahl der Liganden AzuH, wobei q = w₂ - |u|,
   wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
   - L_{S} =: optionaler neutraler sigma-Donor-Ligand oder optionaler neutraler pi-Donor-Ligand,
   - g =: Anzahl der Liganden L_{S}, wobei g = 0, 1, 2, 3, 4, 5 oder 6 ist,
   - v =: Anzahl der Liganden AzuH, wobei v = w₃ - 1, wobei w₃ = 2, 3, 4, 5, 6 oder 7 ist,
   - L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
   - z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
   - X⁻ =: Halogenid-Anion oder einwertiges schwach-koordinierendes Anion oder einwertiges nicht-koordinierendes Anion,
   wobei
   - Azu =: Azulen gemäß der Formel 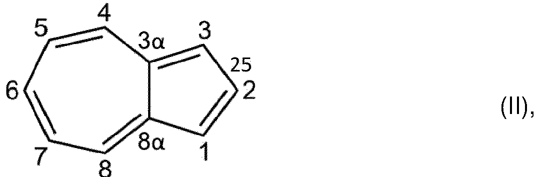 oder
   - Azu =: ein Azulenderivat, welches ein Azulengerüst gemäß Formel II, bestehend aus einem Fünfring und einem Siebenring, aufweist, wobei
   a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
      wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
      wobei zwei Substituenten R^{F} optional einen Ring bilden können,
      und
   b) wenigstens ein Kohlenstoffatom des Azulengerüsts, ausgewählt aus der Gruppe bestehend aus den Kohlenstoffatomen C4, C6 und C8, ein H-Atom trägt,
   als
   i. Präkatalysator oder Präkatalysator enthaltende Lösung oder Suspension in einer chemischen Reaktion
      und/oder
   ii. Katalysator oder Katalysator enthaltende Lösung oder Suspension in einer chemischen Reaktion
      und/oder
   iii. Elektronentransfer-Reagenz oder Elektronentransfer-Reagenz enthaltende Lösung oder Suspension in einer chemischen Reaktion
      und/oder
   iv. Präkursorverbindung oder Präkursorverbindung enthaltende Lösung oder Suspension zur Herstellung wenigstens einer Schicht, welche ein Metall M enthält, oder wenigstens einer Metallschicht bestehend aus dem Metall M, insbesondere auf wenigstens einer Oberfläche eines Substrats.

Zum einen handelt es sich bei der vorgenannten Verwendung um ein Verfahren zur Durchführung einer chemischen Reaktion unter Verwendung wenigstens eines Metallkomplexes gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

oder wenigstens einer Lösung oder Suspension, umfassend einen Metallkomplex gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

und wenigstens ein Lösungsmittel, welches mit dem, insbesondere aprotisch-polaren, Lösungmittel S_{P} mischbar oder identisch ist,
- gemäß einer Ausführungsform der weiter oben beschriebenen Verbindungen
   oder
- erhalten oder erhältlich nach einem Verfahren zur Herstellung solcher Verbindungen oder Lösungen oder Suspensionen gemäß einer der weiter oben beschriebenen Ausführungsformen,
   wobei
   - M =: Metall-Zentralatom ausgewählt aus der Gruppe 6, der Gruppe 7, der Gruppe 8, der Gruppe 9, der Gruppe 10, der Gruppe 11 oder der Gruppe 12,
   - L_{K} =: optionaler neutraler sigma-Donor-Ligand oder optionaler neutraler pi-Donor-Ligand,
   - f =: Anzahl der Liganden L_{K}, wobei f = 0, 1, 2, 3, 4, 5 oder 6 ist,
   - AzuH =: Azulen oder ein Azulenderivat, welches in 4-Position, 6-Position oder 8-Position zusätzlich zu einem H-Atom ein Hydrid-Anion trägt,
   - m =: Anzahl der Liganden AzuH, wobei m = 1, 2, 3, 4, 5, 6 oder 7 ist,
   - L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
   - q =: Anzahl der Liganden AzuH, wobei q = w₂ - |u|, wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
   - L_{S} =: optionaler neutraler sigma-Donor-Ligand oder optionaler neutraler pi-Donor-Ligand,
   - g =: Anzahl der Liganden L_{S}, wobei g = 0, 1, 2, 3, 4, 5 oder 6 ist,
   - v =: Anzahl der Liganden AzuH, wobei v = w₃ - 1, wobei w₃ = 2, 3, 4, 5, 6 oder 7 ist,
   - L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
   - z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
   - X⁻ =: Halogenid-Anion oder einwertiges schwach-koordinierendes Anion oder einwertiges nicht-koordinierendes Anion,
   wobei
   - Azu =: Azulen gemäß der Formel 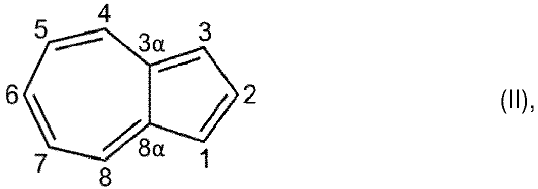 oder
   - Azu =: ein Azulenderivat, welches ein Azulengerüst gemäß Formel II, bestehend aus einem Fünfring und einem Siebenring, aufweist, wobei
   a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
      wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
      wobei zwei Substituenten R^{F} optional einen Ring bilden können,
      und
   b) wenigstens ein Kohlenstoffatom des Azulengerüsts, ausgewählt aus der Gruppe bestehend aus den Kohlenstoffatomen C4, C6 und C8, ein H-Atom trägt,
   umfassend die Schritte:
   A) Zurverfügungstellung des wenigstens einen Metallkomplexes gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      oder
      der wenigstens einen Lösung oder Suspension, umfassend einen Metallkomplex gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      und wenigstens ein Lösungsmittel, welches mit dem, insbesondere aprotisch-polaren, Lösungmittel S_{P} mischbar oder identisch ist,
      und
   B) Durchführung der chemischen Reaktion unter Verwendung des wenigstens einen Metallkomplexes gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      als Präkatalysator, als Katalysator oder als Elektronentransfer-Reagenz.

Dabei umfassen die allgemeinen Formeln III, IV, V und VI sowohl die Monomere als auch etwaige Oligomere, insbesondere Dimere.

Die zur Verfügung zu stellenden Metallkomplexe gemäß den allgemeinen Formeln III, IV, V und VI können - je nach Anwendung - lösungsmittelfrei, also nicht als Lösungsmitteladdukte, oder als Solvensaddukte der jeweiligen Metallkomplexe vorliegen. Im Falle eines Lösungsmitteladduktes ist das Lösungsmittel insbesondere mit dem Lösungsmittel S_{P} identisch. Alternativ oder ergänzend können einer oder mehrere der neutralen Donor-Liganden L_{K} bzw. L_{S} (vgl. Formel III bzw. Formel V) ausgewählt sein aus der Gruppe bestehend aus Acetonitril, Dimethylsulfoxid und Tetrahydrothiophen.

Insbesondere mit Blick auf eine Verwendung als Metallpräkursor-Verbindungen in Gasphasenabscheidungsprozessen ist es vorteilhaft, wenn die Metallkomplexe gemäß den allgemeinen Formenl III, IV, V und VI insbesondere Ether-frei vorliegen.

Das Metall-Zentralatom M kann eine formale Oxidationsstufe von 0, 1, 2, 3, 4, 5, 6 oder 7 besitzen. Höhere Oxidationsstufen, insbesondere die Oxidationsstufen 4, 5, 6 oder 7, werden üblicherweise durch anionische, insbesondere monoanionische Liganden, z. B. Fluoridanionen, und/oder dianionische Liganden, z. B. O²⁻, stabilisiert (vgl. Formeln IV, V und VI).

L_{N} ist vorteilhafterweise ein monoanionischer Ligand. L_{T} kann ein monoanionischer oder ein dianionischer Ligand sein. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻.

Der Index q kann den Wert 1, 2, 3, 4, 5 oder 6 annehmen. Alternativ ist q = 1, 2, 3, 4 oder 5, vorteilhaft ist q = 1, 2, 3 oder 4, insbesondere ist q = 1, 2 oder 3.

Der Index v kann ebenfalls 1, 2, 3, 4, 5 oder 6 betragen. Alternativ ist v = 1, 2, 3, 4 oder 5, vorteilhaft ist v = 1, 2, 3 oder 4, insbesondere ist v = 1, 2 oder 3.

Der Index z kann den Wert 1, 2, 3, 4 oder 5 annehmen. Alternativ ist z = 1, 2, 3 oder 4, insbesondere ist z = 1, 2 oder 3.

Das Halogenid-Anion X⁻ fungiert als Fluchtgruppe bzw. Abgangsgruppe. Der Begriff "schwach-koordinierend" umfasst auch die Ausdrücke "sehr schwach koordinierend" und "mäßig stark koordinierend". Die Halogenid-Anionen sind insbesondere ausgewählt aus der Gruppe bestehend aus Fluorid, Chlorid und Bromid. Bei den einwertigen schwach-koordinierenden und einwertigen nicht-koordinierenden Anionen handelt es sich insbesondere um perfluorierte Anionen, wie z. B. PF₆-, BF₄⁻ und [(CF₃SO₂)₂N]⁻.

Eine Definition des Begriffs "mischbar" ist bereits weiter oben gegeben.

Beispielsweise die Komplexe Ru(Cp*)(GuaH), Zn(Mes)(GuaH) und PtMe₃(GuaH) sind in hoher (Isomeren-)Reinheit von 97 %, vorteilhaft von mehr als 97 %, insbesondere von mehr als 98 % oder 99 %, und guter Ausbeute, auch Raum-Zeit-Ausbeute, erhältlich und liegen in isolierter Form als Flüssigkeiten vor. In der Katalyse ist es von Vorteil, einen flüssigen Katalysator einzusetzen, beispielsweise die Pt(IV)-Verbindung PtMe₃(GuaH) für lichtinduzierte Platin-katalysierte Hydrosilylierungsreaktionen. Die vorgenannte Pt(IV)-Verbindung zeigt zudem eine Absorption im Vis-Bereich. Das stellt im Rahmen lichtinduzierter Platin-katalysierter Hydrosilylierungsreaktionen einen weiteren Vorteil dar. Denn dabei ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig. Der als Isomerengemisch der *meso*-Form und eines Racemats erhältliche, in isolierter Form ebenfalls als Flüssigkeit vorliegende Cobalt-Komplex Co(GuaH)₂ vom Metallocen-Typ kann beispielsweise als Elektronentransfer-Reagenz verwendet werden.

Zum anderen handelt es sich bei der vorgenannten Verwendung um ein Verfahren zur Herstellung
i. wenigstens einer Metallschicht bestehend aus einem Metall M
   oder
ii. wenigstens einer Schicht, welche ein Metall M enthält,
auf wenigstens einer Oberfläche eines Substrats unter Verwendung
wenigstens eines Metallkomplexes gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

oder
wenigstens einer Lösung oder Suspension, umfassend einen Metallkomplex gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

und wenigstens ein Lösungsmittel, welches mit dem Lösungmittel S_{P} mischbar oder identisch ist,
- gemäß einer Ausführungsform der weiter oben beschriebenen Verbindungen oder
- erhalten oder erhältlich nach einem Verfahren zur Herstellung solcher Verbindungen oder Lösungen oder Suspensionen gemäß einer der weiter oben beschriebenen Ausführungsformen,
   wobei
   - M =: Metall-Zentralatom ausgewählt aus der Gruppe 6, der Gruppe 7, der Gruppe 8, der Gruppe 9, der Gruppe 10, der Gruppe 11 oder der Gruppe 12,
   - L_{K} =: optionaler neutraler sigma-Donor-Ligand oder optionaler neutraler pi-Donor-Ligand,
   - f =: Anzahl der Liganden L_{K}, wobei f = 0, 1, 2, 3, 4, 5 oder 6 ist,
   - AzuH =: Azulen oder ein Azulenderivat, welches in 4-Position, 6-Position oder 8-Position zusätzlich zu einem H-Atom ein Hydrid-Anion trägt,
   - m =: Anzahl der Liganden AzuH, wobei m = 1, 2, 3, 4, 5, 6 oder 7 ist,
   - L_{N} =: wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
   - q =: Anzahl der Liganden AzuH, wobei q = w₂ - |u|,
   wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
   - L_{S} =: optionaler neutraler sigma-Donor-Ligand oder optionaler neutraler pi-Donor-Ligand,
   - g =: Anzahl der Liganden L_{S}, wobei g = 0, 1, 2, 3, 4, 5 oder 6 ist,
   - v =: Anzahl der Liganden AzuH, wobei v = w₃ - 1, wobei w₃ = 2, 3, 4, 5, 6 oder 7 ist,
   - L_{T} =: wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
   - z =: Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
   - X⁻ =: Halogenid-Anion oder einwertiges schwach-koordinierendes Anion oder einwertiges nicht-koordinierendes Anion,
   wobei
   - Azu =: Azulen gemäß der Formel 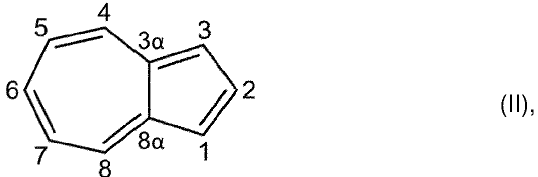 oder
   - Azu =: ein Azulenderivat, welches ein Azulengerüst gemäß Formel II, bestehend aus einem Fünfring und einem Siebenring, aufweist, wobei
   a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
      wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
      wobei zwei Substituenten R^{F} optional einen Ring bilden können,
      und
   b) wenigstens ein Kohlenstoffatom des Azulengerüsts, ausgewählt aus der Gruppe bestehend aus den Kohlenstoffatomen C4, C6 und C8, ein H-Atom trägt,
   umfassend die Schritte:
   A) Zurverfügungstellung
      des wenigstens einen Metallkomplexes gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      oder
      der wenigstens einen Lösung oder Suspension, umfassend einen Metallkomplex gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      und wenigstens ein Lösungsmittel, welches mit dem Lösungmittel S_{P} mischbar oder identisch ist,
      und
   B) Abscheidung
      i. der wenigstens einen Metallschicht bestehend aus dem Metall M
         oder
      ii. der wenigstens einen Schicht, welche das Metall M enthält,
      auf der wenigstens einen Oberfläche des Substrats unter Verwendung des wenigstens einen Metallkomplexes gemäß einer der Formeln

      M(L_{K})_{f}(AzuH)ₘ (III),

      M(L_{N})(AzuH)_{q} (IV),

      [M(L_{S})_{g}(AzuH)ᵥ]X (V)

      und

      [M(L_{T})(AzuH)_{z}]X (VI)

      als Präkursorverbindung.

Dabei umfassen die allgemeinen Formeln III, IV, V und VI sowohl die Monomere als auch etwaige Oligomere, insbesondere Dimere.

Das Metall-Zentralatom M kann eine formale Oxidationsstufe von 0, 1, 2, 3, 4, 5, 6 oder 7 besitzen. Höhere Oxidationsstufen, insbesondere die Oxidationsstufen 4, 5, 6 oder 7, werden üblicherweise durch anionische, insbesondere monoanionische Liganden, z. B. Fluoridanionen, und/oder dianionische Liganden, z. B. O²⁻, stabilisiert (vgl. Formeln IV, V und VI).

L_{N} ist vorteilhafterweise ein monoanionischer Ligand. L_{T} kann ein monoanionischer oder ein dianionischer Ligand sein. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻.

Der Index q kann den Wert 1, 2, 3, 4, 5 oder 6 annehmen. Alternativ ist q = 1, 2, 3, 4 oder 5, vorteilhaft ist q = 1, 2, 3 oder 4, insbesondere ist q = 1, 2 oder 3.

Der Index v kann ebenfalls 1, 2, 3, 4, 5 oder 6 betragen. Alternativ ist v = 1, 2, 3, 4 oder 5, vorteilhaft ist v = 1, 2, 3 oder 4, insbesondere ist v = 1, 2 oder 3.

Der Index z kann den Wert 1, 2, 3, 4 oder 5 annehmen. Alternativ ist z = 1, 2, 3 oder 4, insbesondere ist z = 1, 2 oder 3.

Das Halogenid-Anion X⁻ fungiert als Fluchtgruppe bzw. Abgangsgruppe. Der Begriff "schwach-koordinierend" umfasst auch die Ausdrücke "sehr schwach koordinierend" und "mäßig stark koordinierend". Die Halogenid-Anionen sind insbesondere ausgewählt aus der Gruppe bestehend aus Fluorid, Chlorid und Bromid. Bei den einwertigen schwach-koordinierenden und einwertigen nicht-koordinierenden Anionen handelt es sich insbesondere um perfluorierte Anionen, wie z. B. PF₆-, BF₄⁻ und [(CF₃SO₂)₂N]⁻.

Eine Definition des Begriffs "mischbar" ist bereits weiter oben gegeben.

Bei den hier beschriebenen Verwendungen bzw. den hier beanspruchten Verfahren zur Durchführung einer chemischen Reaktion oder zur Herstellung wenigstens einer Metallschicht bestehend aus dem Metall M oder wenigstens einer Schicht, welche ein Metall M enthält, können die Metallkomplexe als Feststoffe oder Flüssigkeiten gemäß einer Ausführungsform der weiter oben beschriebenen Verbindungen oder als Feststoff oder Flüssigkeit oder als Lösung oder Suspension, umfassend einen Metallkomplex und wenigstens ein, insbesondere aprotisch-polares, Lösungsmittel, welches mit dem Lösungmittel S_{P} mischbar oder identisch ist, z. B. S_{L} und/oder S_{M}, eingesetzt werden, jeweils erhalten oder erhältlich nach einem Verfahren zur Herstellung solcher Komplex-Verbindungen bzw. Lösungen oder Suspensionen gemäß einer der weiter oben beschriebenen Ausführungsformen. Aufgrund ihrer hohen Reinheit eignen sich die vorgenannten Komplex-Verbindungen gemäß den Formeln III, IV, V und VI sowohl als für den Einsatz als Präkatalysatoren oder Katalysatoren in einer Vielzahl von Reaktionen, welche durch Metalle, ausgewählt aus Gruppe 6, Gruppe 7, Gruppe 8, Gruppe 9, Gruppe 10, Gruppe 11 und Gruppe 12, katalysiert werden, als auch als Metallpräkursor-Verbindungen in Gasphasenabscheidungsprozessen. Einige dieser Metallkomplexe liegen vorteilhaft nicht nur isomerenrein, sondern auch flüssig vor.

Besonders vorteilhaft ist, dass die Metallkomplexe der Typen

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

jeweils wenigstens ein *H-*Dihydroazulenyl-Anion (AzuH)¹⁻ aufweisen, welches ein einfach, nämlich in 4-Position, in 6-Position oder in 8-Position, hydriertes Azulen oder Azulenderivat ist. Das jeweilige *H-*Dihydroazulenyl-Anion (AzuH)¹⁻ weist in 4-Position oder in 6-Position oder in 8-Position zusätzlich zu einem H-Atom ein Hydrid-Anion H⁻ auf. Mithin liegt in C4-Position oder in C6-Position oder in C8-Position des Azulengerüsts eine CH₂-Gruppe vor. Das *H-*Dihydroazulenyl-Anion stellt ein Derivat des Cyclopentadienyl-Anions bzw. ein Cyclopentadienyl-artiges Monoanion dar. Bei dem *H*-Dihydroazulenyl-Anion kann es sich um ein 3α,4-*H*-Dihydroazulenyl-, ein 8,8α-*H*-Dihydroazulenyl-, ein 3α,6-*H*-Dihydroazulenyl- oder ein 6,8α-*H*-Dihydroazulenyl-Anion handeln, oder eine Mischung zweier oder mehrerer Regioisomere.

Aufgrund des Vorhandenseins wenigstens eines *H*-Dihydroazulenyl-Anions, also wenigstens eines Cyclopentadienyl-artigen Monoanions, eignen sich die Verbindungen gemäß den allgemeinen Formeln III, IV, V und VI insbesondere als Präkatalysatoren, als Katalysatoren und als Elektronentransfer-Reagenzien für chemische Reaktionen, in welchen ansonsten Metallkomplexe eingesetzt werden, die Cyclopentadienyl-Liganden aufweisen. Dies ist besonders vorteilhaft, weil die Zurverfügungstellung eines *H-*Dihydroazulenyl-Liganden im Vergleich zur Bereitstellung des Cyclopentadienyl-Liganden weniger arbeits- und zeitaufwändig. Denn die Edukte, z. B. Naturstoffe wie Guajazulen und hydridische Reduktionsmittel wie Lithiumtriethylborhydrid, sind nicht nur einfacher zu handhaben und zu lagern, sondern auch kostengünstiger. Außerdem sind weniger und einfachere Arbeitsschritte auszuführen. Infolgedessen fallen auch der Syntheseaufwand und die Herstellungskosten für die hier verwendeten Metallkomplexe geringer aus als für analoge Metall-Cp-Komplexe. Mithin stellen die hier beschriebenen Metallkomplexe insbesondere mit Blick auf eine industrielle Anwendung eine Alternative für Metall-Cp-Komplexe dar.

Bei Guajazulen handelt es sich um einen Naturstoff, der in Kamillenöl und anderen ätherischen Ölen enthalten und daher vorteilhafterweise in großen Mengen kostengünstig zugänglich ist. Synthetisch kann es aus dem Guajol des Guajakholzöls (Guajakharz) hergestellt werden. Guajazulen ist eine intensiv blaue Substanz mit entzündungshemmender Wirkung. Ein Isomer des Guajazulens ist beispielsweise 2*-iso*Propyl-4,8-dimethylazulen (Vetivazulen).

In einer vorteilhaften Ausführungsvariante der hier beanspruchten Verwendungen bzw. den hier beanspruchten Verfahren zur Durchführung einer chemischen Reaktion oder zur Herstellung wenigstens einer Metallschicht bestehend aus dem Metall M oder wenigstens einer Schicht, welche ein Metall M enthält, ist Azu = Gua = 7-*iso*-Propyl-1,4-dimethylazulen und AzuH = GuaH = 7-*iso*-Propyl-1,4-dimethyl-8-*H*-dihydroazulen.

Beispiele für die hier verwendeten Metallkomplexe sind zum einen homoleptische *Sandwich*-Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, insbesondere:
▪ neutrale *Sandwich-Komplexe* des Typs

   M(L_{K})_{f}(AzuH)ₘ (III)

   mit f = 0, d. h. ohne neutralen Donor-Liganden L_{K}, z. B. Fe(GuaH)₂, Ru(GuaH)₂, Co(GuaH)₂, Zn(GuaH)₂, wobei jeweils die formale Oxidationsstufe 2 ist, M = Fe, Ru, Co oder Zn, f = 0, m = 2 und AzuH = GuaH
   und
▪ kationische *Sandwich-Komplexe* des Typs

   [M(L_{S})_{g}(AzuH)ᵥ]X (V)

   mit g = 0, d. h. ohne neutralen Donor-Liganden Ls, z. B. der d⁶-Komplex [Co(GuaH)₂]PF₆, wobei die formale Oxidationsstufe 3 ist, M = Co, g = 0, v = 3 - 1 = 2, AzuH = GuaH und X = PF₆.

Zum anderen handelt es sich bei den hier verwendeten Verbindungen um heteroleptische Komplexe mittlerer Übergangsmetalle (Gruppen 6, 7 und 8), insbesondere von Metallen der Gruppe 8, und später Übergangsmetalle, also von Metallen der Gruppe 9, der Gruppe 10, der Gruppe 11 und der Gruppe 12, insbesondere:
▪ neutrale Halb*sandwich*-Komplexe des Typs

   M(L_{K})_{f}(AzuH)ₘ (III)

   mit f = 1 oder 2, d. h. mit genau einem neutralen sigma-Donor-Liganden oder mit genau einem neutralen, nicht-planaren pi-Donor-Liganden, z. B. Cu(PPh₃)(GuaH), Rh(nbd)(GuaH), Rh(cod)(GuaH), wobei die formale Oxidationsstufe jeweils 1 ist, M = Cu oder Rh, L_{K} = PPh₃, NBD oder COD, f jeweils 1 ist, m jeweils 1 ist und AzuH = GuaH ist, oder zwei planaren, neutralen pi-Donor-Liganden, z. B. Rh(ethen)₂(GuaH), wobei die formale Oxidationsstufe 1 ist, M = Rh, L_{K} = Ethen, f = 2, m = 1 und AzuH = GuaH
▪ neutrale Halb*sandwich*-Komplexe des Typs

   M(L_{N})(AzuH)_{q} (IV),

   beispielsweise mit |u| = 1, 2 oder 3, d. h. beispielsweise mit einem, zwei oder drei monoanionischen sigma-Donor-Liganden, z. B. Zn(Mes)(GuaH), wobei die formale Oxidationsstufe 2 ist, M = Zn, L_{N} = Mes⁻, |u| = 1, q = 2 - |-1| = 1 und AzuH = GuaH ist, und PtMe₃(GuaH), wobei die formale Oxidationsstufe 4 ist, M = Pt, L_{N} = CH₃⁻, |u| = 3, q = 4 - |-3| = 1 und AzuH = GuaH
▪ neutrale *Sandwich*-Komplexe des Typs

   M(L_{N})(AzuH)_{q} (IV),

   beispielsweise mit |u| = 1, d. h. mit genau einem monoanionischen, planaren pi-Donor-Liganden, z. B. Ru(Cp*)(GuaH), wobei die formale Oxidationsstufe 2 ist, M = Ru, L_{N} = Cp*, |u| = 1, q = 2 -|-1| = 1 und AzuH = GuaH
▪ kationische *Sandwich*-Komplexe des Typs

   [M(L_{S})_{g}(AzuH)ᵥ]X (V)

   mit g = 1, d. h mit genau einem neutralen, planaren pi-Donor-Liganden, z. B. [Ru(*p*-cymol)(GuaH)]PF₆, wobei die formale Oxidationsstufe 2 ist, M = Ru, Ls = p-Cymol, g = 1, v = 2 - 1 = 1, AzuH = GuaH und X = PF₆
▪ kationische Halb*sandwich*-Komplexe des Typs

   [M(L_{S})_{g}(AzuH)ᵥ]X (V)

   mit g = 1 oder 2, d. h. mit einem neutralen nicht-planaren pi-Donor-Liganden, z. B. [Pt(cod)(GuaH)]PF₆, wobei die formale Oxidationsstufe 2 ist, M = Pt, Ls = COD, g = 1, v = 2 - 1 = 1, AzuH = GuaH und X = PF₆, oder mit zwei planaren, neutralen pi-Donor-Liganden, z. B. [Pt(ethen)₂(GuaH)]PF₆, wobei die formale Oxidationsstufe 2 ist, M = Pt, Ls = Ethen, g = 2, v = 2 - 1 = 1, AzuH = GuaH und X = PF₆
▪ kationische *Sandwich*-Komplexe des Typs

   [M(L_{T})(AzuH)_{z}]X (VI)

   mit |h| = 1, d. h. mit genau einem anionischen, planaren pi-Donor-Liganden, z. B. [Rh(Cp*)(GuaH)]Cl, [Rh(Cp*)(GuaH)]PF₆, wobei jeweils die formale Oxidationsstufe 3 ist, M = Rh, L_{T} = Cp*, |h| = 1, z = 3 - (|-1| + 1) = 1, AzuH = GuaH und X = Cl oder PF₆.

Beispiele für isomerenreine Metallkomplexe sind Ru(Cp*)(GuaH), [Ru(p-cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH).

"Isomerenrein" bedeutet im Rahmen der vorliegenden Erfindung, dass das gewünschte Produkt isomerenrein anfällt bzw. angefallen ist oder das gewünschte Isomer nach Aufreinigung mit einem Anteil von ≥ 90 %, bevorzugt von ≥ 95 %, besonders bevorzugt von ≥ 99 % vorliegt. Dabei ist die Isomerenreinheit beispielsweise mittels Kernresonanzspektroskopie bestimmt.

Insbesondere hinsichtlich einer Verwendung als Metallpräkursor-Verbindungen für Gasphasenabscheidungsprozesse ist es von Vorteil, dass die Komplexe Ru(Cp*)(GuaH), Zn(Mes)(GuaH) und PtMe₃(GuaH) nicht nur in hoher (Isomeren-)Reinheit von 97 %, vorteilhaft von mehr als 97 %, insbesondere von mehr als 98 % oder 99 % und guter Ausbeute, auch Raum-Zeit-Ausbeute, erhältlich sind, sondern - in isolierter Form - auch als Flüssigkeiten vorliegen.

In Schritt A) der hier beschriebenen Verfahren zur Durchführung einer chemischen Reaktion oder zur Herstellung wenigstens einer Metallschicht bestehend aus dem Metall M oder wenigstens einer Schicht, welche ein Metall M enthält, kann jeweils die Zurverfügungstellung eines Metallkomplexes oder mehrerer Metallkomplexe vorgesehen sein. In einer Ausführungsvariante des jeweiligen Verfahrens ist vorgesehen, dass in Schritt A) wenigstens ein Metallkomplex als Feststoff, als Flüssigkeit oder als Lösung oder Suspension, umfassend einen Metallkomplex, zur Verfügung gestellt wird. Alternativ oder ergänzend können mehrere Metallkomplexe unabhängig voneinander als separate Feststoffe oder als Feststoffgemische oder als separate Flüssgkeiten oder als Flüssigkeitsgemische oder als separate Lösungen oder Suspensionen, umfassend jeweils einen Metallkomplex, oder als Lösung oder Suspensionen, umfassend mehrere Metallkomplexe, zur Verfügung gestellt werden.

An dieser Stelle sowie im Folgenden wird auf die Angabe einer exakten Stöchiometrie der abscheidbaren Metall enthaltenden Schichten oder Filme verzichtet. Der Begriff Schicht ist gleichbedeutend mit dem Ausdruck Film und trifft keine Aussage über die Schichtdicke oder die Filmdicke. Zudem kann gemäß der vorliegenden Erfindung eine Metallschicht bestehend aus dem Metall M oder eine Schicht, welche ein Metall M enthält, Nanopartikel eines Metalls M oder Nanopartikel unterschiedlicher Metalle M oder Nanopartikel, die jeweils mehrere Metalle M umfassen, enthalten oder aus solchen Nanopartikeln bestehen.

Die verwendeten Metallkomplexe sind aufgrund ihrer hohen (Isomeren-)Reinheit besonders gut als Präkursorverbindungen zur Herstellung qualitativ hochwertiger Metallschichten oder Metall M enthaltender Schichten auf einer Oberfläche eines Substrats geeignet. Das ist insbesondere zurückzuführen auf ihre Herstellung nach einem Verfahren gemäß einer der vorhergehend beschriebenen Ausführungsformen, nämlich unter Verwendung von Alkalimetall-*H*-dihydroazuleniden, erhalten oder erhältlich nach einem Verfahren zur Herstellung von Alkalimetall-*H*-dihydroazuleniden gemäß einem der weiter oben beschriebenen Ausführungsbeispiele. Zudem sind die gemäß Schritt A) zur Verfügung zu stellenden Metallkomplexe bzw. Lösungen oder Suspensionen, umfassend solche Metallkomplexe, nach einem Verfahren zur Herstellung solcher Verbindungen oder Lösungen oder Suspensionen gemäß einer der vorbeschriebenen Ausführungsformen besonders einfach und vergleichsweise kostengünstig darstellbar. Letzteres ermöglicht ihre Verwendung im großtechnischen Maßstab.

In einer Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welche ein Metall M enthält, sind Metallkomplexe gemäß der allgemeinen Formel

M(L_{K})_{f}(AzuH)ₘ (III)

vorgesehen.

Gemäß einer noch anderen Ausführungsform der beanspruchten Verwendungen bzw. der beanspruchten Verfahren ist das Metall-Zentralatom M des Metallkomplexes gemäß der allgemeinen Formel

M(L_{K})_{f}(AzuH)ₘ (III)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verwendungen bzw. der beanspruchten Verfahren sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verwendungen bzw. der beanspruchten Verfahren ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Verwendungen bzw. der beanspruchten Verfahren sieht vor, dass das Metall-Zentralatom M eine formale Oxidationsstufe von 1, 2, 3, 4, 5, 6 oder 7 besitzt. Nach einer alternativen oder ergänzenden Ausführungsform der beanspruchten Verwendungen bzw. der beanspruchten Verfahren ist vorgesehen, dass der Index m und die formale Oxidationsstufe des Metall-Zentralatoms M des Metallkomplexes gemäß der allgemeinen Formel

M(L_{K})_{f}(AzuH)ₘ (III)

identisch sind, d. h. dieselbe natürliche Zahl sind, wobei Null ausgenommen ist. Mithin kann m = 1, 2, 3, 4, 5, 6 oder 7 sein.

Gemäß einer weiteren Ausführungsvariante der beanspruchten Verwendungen bzw. der beanspruchten Verfahren ist ein Metallkomplex gemäß der allgemeinen Formel

M(L_{K})_{f}(AzuH)ₘ (III)

vorgesehen, wobei das Metall-Zentralatom M eine formale Oxidationsstufe von 1, 2, 3 oder 4 besitzt, vorteilhaft von 1, 2 oder 3, insbesondere von 1 oder 2. In einer alternativen oder ergänzenden Ausführungsvariante der beanspruchten Verwendungen bzw. der beanspruchten Verfahren ist der Index m 1, 2, 3 oder 4, vorteilhaft 1, 2 oder 3, insbesondere 1 oder 2. Eine weitere alternative oder ergänzende Ausführungsform der beanspruchten Verwendungen bzw. der beanspruchten Verfahren sieht vor, dass der Index f, welcher die Anzahl der neutralen Liganden L_{K} in einem Metallkomplex gemäß der allgemeinen Formel

M(L_{K})_{f}(AzuH)ₘ (III)

angibt, Null, 1, 2, 3, 4 oder 5 ist, vorteilhaft Null, 1, 2, 3 oder 4, insbesondere Null, 1, 2 oder 3.

In einer anderen Ausführungsvariante der beanspruchten Verwendungen bzw. der beanspruchten Verfahren beträgt die Summe der Anzahl m der Liganden AzuH und der Anzahl f der neutralen Liganden L_{K}, also ∑ (f + m), 2, 3, 4, 5, 6 oder 7. Eine andere Ausführungsform sieht vor, dass die Summe der Anzahl m der Liganden AzuH und der Anzahl f der neutralen Liganden L_{K}, also ∑ (f + m), 2, 3, 4, 5 oder 6 beträgt, vorteilhaft 2, 3, 4 oder 5, insbesondere 2, 3 oder 4.

Eine weitere Ausführungsform sieht vor, dass der neutrale sigma-Donor-Ligand L_{K} oder pi-Donor-Ligand L_{K} ausgewählt ist aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den Liganden L_{K} sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, p-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welche ein Metall M enthält, sieht vor, dass das Metall-Zentralatom M des Metallkomplexes gemäß der allgemeinen Formel

M(L_{K})_{f}(AzuH)ₘ (III)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer weiteren Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welches ein Metall M enthält, sind Metallkomplexe gemäß der allgemeinen Formel

M(L_{N})(AzuH)_{q} (IV)

vorgesehen.

Gemäß einer noch anderen Ausführungsform der beanspruchten Verwendungen bzw. der beanspruchten Verfahren ist das Metall-Zentralatom M des Metallkomplexes gemäß der allgemeinen Formel

M(L_{N})(AzuH)_{q} (IV)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verwendungen bzw. der beanspruchten Verfahren sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verwendungen bzw. der beanspruchten Verfahren ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Verwendungen bzw. der beanspruchten Verfahren sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Verwendungen bzw. der beanspruchten Verfahren ist vorgesehen, dass w₂ und die formale Oxidationsstufe des Metall-Zentralatoms M des Metallkomplexes gemäß der allgemeinen Formel

M(L_{N})(AzuH)_{q} (IV)

identisch sind, d. h. dieselbe natürliche Zahl sind, wobei Null ausgenommen ist. Mithin kann w₂ = 2, 3, 4, 5, 6 oder 7 sein.

Gemäß einer weiteren Ausführungsvariante der beanspruchten Verwendungen bzw. der beanspruchten Verfahren sind Metallkomplexe gemäß der allgemeinen Formel

M(L_{N})(AzuH)_{q} (IV)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verwendungen bzw. der beanspruchten Verfahren ist w₂ = 2, 3, 4, 5 oder 6, vorteilhaft ist w₂ = 2, 3, 4 oder 5, insbesondere ist w₂ = 2, 3 oder 4. Eine weitere alternative oder ergänzende Ausführungsform der beanspruchten Verwendungen bzw. der beanspruchten Verfahren sieht vor, dass |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4, 5, oder 6 ist. In einer noch anderen Ausführungsvariante ist |u|, also der absolute Betrag der Summe der negativen Ladungen aller anionischen Liganden L_{N} in einem Metallkomplex gemäß der allgemeinen Formel

M(L_{N})(AzuH)_{q} (IV),

1, 2, 3, 4 oder 5, vorteilhaft 1, 2, 3 oder 4, insbesondere 1, 2 oder 3.

In einer anderen Ausführungsvariante der beanspruchten Verwendungen bzw. der beanspruchten Verfahren beträgt die Summe der Anzahl q der Liganden AzuH und der Anzahl der anionischen Liganden L_{N} 2, 3, 4, 5, 6 oder 7. Eine weitere Ausführungsform sieht vor, dass die Summe der Anzahl q der Liganden AzuH und der Anzahl der anionischen Liganden L_{N} 2, 3, 4, 5 oder 6 beträgt, vorteilhaft 2, 3, 4 oder 5, insbesondere 2, 3 oder 4.

Eine noch andere Ausführungsform der beanspruchten Verwendungen bzw. der beanspruchten Verfahren sieht Metallkomplexe gemäß der allgemeinen Formel

M(L_{N})(AzuH)_{q} (IV)

vor, wobei der anionische sigma-Donor-Ligand L_{N} oder pi-Donor-Ligand L_{N} vorteilhafterweise ein monoanionischer Ligand ist, welcher ausgewählt ist aus der Gruppe bestehend aus Anionen des Cyclopentadiens und dessen Derivaten, Alkyl-Anionen und Aryl-Anionen. Alternativ oder ergänzend kann ein Fluoridanion als wenigstens einer der monoanionischen Liganden L_{N} vorgesehen sein.

Beispiele für den anionischen Liganden L_{N} sind das Cyclopentadienyl-Anion C₅H₅⁻ (Cp⁻) und das 1,2,3,4,5-Pentamethylcyclopentadienyl-Anion C₅Me₅⁻ (Cp*), das Methyl-Anion CH₃⁻ (Me⁻) und das Mesityl-Anion Me₃C₆H₂⁻ (Mes⁻). Die vorgenannten Anionen können als monoanionische pi-Donor-Liganden bzw. sigma-Donor-Liganden L_{N} im Rahmen der Herstellung neutraler *Sandwich-* bzw. Halb*sandwich*-Komplexe des Typs M(L_{N})(AzuH)_{q} (IV) fungieren.

Eine weitere vorteilhafte Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welches ein Metall M enthält, sieht vor, dass das Metall-Zentralatom M des Metallkomplexes gemäß der allgemeinen Formel

M(L_{N})(AzuH)_{q} (IV)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer anderen Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welches ein Metall M enthält, sind Metallkomplexe gemäß der allgemeinen Formel

[M(L_{S})_{g}(AzuH)ᵥ]X (V)

vorgesehen.

Gemäß einer weiteren Ausführungsform der beanspruchten Verwendungen bzw. der beanspruchten Verfahren ist das Metall-Zentralatom M des Metallkomplexes gemäß der allgemeinen Formel

[M(L_{S})_{g}(AzuH)ᵥ]X (V)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verwendungen bzw. der beanspruchten Verfahren sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verwendungen bzw. der beanspruchten Verfahren ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Verwendungen bzw. der beanspruchten Verfahren sieht vor, dass das Metall-Zentralatom M eine formale Oxidationsstufe von 2, 3, 4, 5, 6 oder 7 besitzt. Nach einer alternativen oder ergänzenden Ausführungsform der beanspruchten Verwendungen bzw. der beanspruchten Verfahren ist vorgesehen, dass w₃ und die formale Oxidationsstufe des Metall-Zentralatoms M des Metallkomplexes gemäß der allgemeinen Formel

[M(L_{S})_{g}(AzuH)ᵥ]X (V)

identisch sind, d. h. dieselbe natürliche Zahl sind, wobei Null ausgenommen ist. Mithin kann w₃ = 2, 3, 4, 5, 6 oder 7 sein.

Gemäß einer weiteren Ausführungsvariante der beanspruchten Verwendungen bzw. der beanspruchten Verfahren sind Metallkomplexe gemäß der allgemeinen Formel

[M(L_{S})_{g}(AzuH)ᵥ]X (V)

vorgesehen, wobei das Metall-Zentralatom M eine formale Oxidationsstufe von 2, 3, 4, 5 oder 6 besitzt, vorteilhaft von 2, 3, 4 oder 5, insbesondere von 2, 3 oder 4. In einer alternativen oder ergänzenden Ausführungsvariante der beanspruchten Verwendungen bzw. der beanspruchten Verfahren ist w₃ = 2, 3, 4, 5 oder 6, vorteilhaft ist w₃ = 2, 3, 4 oder 5, insbesondere ist w₃ = 2, 3 oder 4. Eine weitere alternative oder ergänzende Ausführungsform der beanspruchten Verwendungen bzw. der beanspruchten Verfahren sieht vor, dass der Index g, welcher die Anzahl der neutralen Liganden L_{S} in einem Metallkomplex gemäß der allgemeinen Formel

[M(L_{S})_{g}(AzuH)ᵥ]X (V)

angibt, Null, 1, 2, 3, 4, 5 oder 6 ist. In einer noch anderen Ausführungsvariante ist der Index g, welcher die Anzahl der neutralen Liganden Ls in einem Metallkomplex gemäß der allgemeinen Formel

[M(L_{S})_{g}(AzuH)ᵥ]X (V)

angibt, Null, 1, 2, 3, 4 oder 5, vorteilhaft Null, 1, 2, 3 oder 4, insbesondere Null, 1, 2 oder 3.

In einer anderen Ausführungsvariante der beanspruchten Verwendungen bzw. der beanspruchten Verfahren beträgt die Summe der Anzahl v der Liganden AzuH und der Anzahl g der neutralen Liganden L_{S}, also ∑ (g + v), 2, 3, 4, 5, 6 oder 7. Eine weitere Ausführungsform sieht vor, dass die Summe der Anzahl v der Liganden AzuH und der Anzahl g der neutralen Liganden L_{S}, also ∑ (g + v), 2, 3, 4, 5 oder 6 beträgt, vorteilhaft 2, 3, 4 oder 5, insbesondere 2, 3 oder 4.

In einer weiteren Variante der beanspruchten Verwendungen bzw. der beanspruchten Verfahren ist der neutrale sigma-Donor-Ligand Ls oder der neutrale pi-Donor-Ligand Ls ausgewählt aus der Gruppe bestehend aus einzähnigen und mehrzähnigen Phosphor-Donor-Liganden, Alkenen, cyclischen Dienen und cyclischen Polyenen, und einkernigen Arenen, mehrkernigen Arenen, einkernigen Heteroarenen und mehrkernigen Heteroarenen, und deren Derivaten.

Der Begriff "Phosphor-Donor-Ligand" ist weiter oben definiert. Eine beispielhafte Auswahl von Phosphor-Donor-Liganden ist in nicht beschränkender Weise ebenfalls weiter oben angegeben.

Weitere Beispiele für den neutralen, insbesondere pi-Donor-Liganden, Ls sind die Alkene Ethen, Propen, Buten, Penten, Hexen, Hepten, Octen, Nonen, Decen, und deren Isomere, das bicyclische Alken Bicyclo[2.2.1]hept-2-en, das cyclische Dien Cycloocta-1,5-dien (COD), das bicyclische Dien Bicyclo[2.2.1]hepta-2,5-dien (NBD), das monocyclische Cycloocta-1,3,5,7-tetraen (COT).

Beispiele für ein einkerniges Aren und Derivate eines einkernigen Arens sind Benzol und Benzolderivate, z. B. Toluol, *p*-Cymol und halogenierte Benzole. Naphthalin und Naphthalinderivate sind Beispiele für ein mehrkerniges Aren und ein Derivat eines mehrkernigen Arens. Ein Beispiel für ein Heteroaren ist Pyridin. Ein zweikerniges bzw. bicyclisches Heteroaren ist beispielsweise Indol. Die einkernigen Arene, mehrkernigen Arene, einkernigen Heteroarene und mehrkernigen Heteroarene können auch substituiert sein, insbesondere Alkylgruppen und/oder Alkenylgruppen und/oder Alkinylgruppen und/oder Arylgruppen und/oder Heteroarylgruppen und/oder Halogensubstituenten aufweisen.

Eine weitere vorteilhafte Ausführungsform der beanspruchten Verwendungen bzw. der beanspruchten Verfahren sieht vor, dass das Metall-Zentralatom M des Metallkomplexes gemäß der allgemeinen Formel

[M(L_{S})_{g}(AzuH)ᵥ]X (V)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer noch anderen Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welches ein Metall M enthält, sind Metallkomplexe gemäß der allgemeinen Formel

[M(L_{T})(AzuH)_{z}]X (VI)

vorgesehen.

Gemäß einer weiteren Ausführungsform der beanspruchten Verwendungen bzw. der beanspruchten Verfahren ist das Metall-Zentralatom M des Metallkomplexes gemäß der allgemeinen Formel

[M(L_{T})(AzuH)_{z}]X (VI)

ausgewählt aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber. Eine andere Variante der beanspruchten Verwendungen bzw. der beanspruchten Verfahren sieht vor, dass das Metall-Zentralatom M ausgewählt ist aus der Gruppe bestehend aus Chrom, Molybdän, Wolfram, Mangan, Rhenium, Eisen, Ruthenium, Cobalt, Rhodium, Nickel, Platin, Kupfer, Silber, Zink und Cadmium. Gemäß einer noch anderen Ausführungsform der beanspruchten Verwendungen bzw. der beanspruchten Verfahren ist das Metall-Zentralatom M ausgewählt aus der Gruppe bestehend aus Chrom, Molybdän, Wolfram, Mangan, Rhenium, Eisen, Ruthenium, Cobalt, Rhodium, Nickel, Platin, Kupfer, Silber und Zink, insbesondere aus der Gruppe bestehend aus Chrom, Molybdän, Wolfram, Mangan, Eisen, Ruthenium, Cobalt, Rhodium, Platin, Kupfer und Zink.

Eine weitere Ausführungsform der beanspruchten Verwendungen bzw. der beanspruchten Verfahren sieht vor, dass das Metall-Zentralatom M eine formale Oxidationsstufe von 3, 4, 5, 6 oder 7 besitzt. Nach einer alternativen oder ergänzenden Ausführungsform der beanspruchten Verwendungen bzw. der beanspruchten Verfahren ist vorgesehen, dass w₄ und die formale Oxidationsstufe des Metall-Zentralatoms M des Metallkomplexes gemäß der allgemeinen Formel

[M(L_{T})(AzuH)_{z}]X (VI)

identisch sind, d. h. dieselbe natürliche Zahl sind, wobei Null ausgenommen ist. Mithin kann w₄ = 3, 4, 5, 6 oder 7 sein.

Gemäß einer weiteren Ausführungsvariante der beanspruchten Verwendungen bzw. der beanspruchten Verfahren sind Metallkomplexe gemäß der allgemeinen Formel

[M(L_{T})(AzuH)_{z}]X (VI)

vorgesehen, wobei das Metall-Zentralatom M eine formale Oxidationsstufe von 3, 4, 5 oder 6 besitzt, insbesondere von 3, 4 oder 5. In einer alternativen oder ergänzenden Ausführungsvariante der beanspruchten Verwendungen bzw. der beanspruchten Verfahren ist w₄ = 3, 4, 5 oder 6, insbesondere ist w₄ = 3, 4 oder 5. Eine weitere alternative oder ergänzende Ausführungsform der beanspruchten Verwendungen bzw. der beanspruchten Verfahren sieht vor, dass |h|, also der absolute Betrag der Summe der negativen Ladungen aller anionischen Liganden L_{T} in einem Metallkomplex gemäß der allgemeinen Formel

[M(L_{T})(AzuH)_{z}]X (VI),

1, 2, 3 oder 4 ist, insbesondere 1, 2 oder 3.

In einer anderen Ausführungsvariante der beanspruchten Verwendungen bzw. der beanspruchten Verfahren beträgt die Summe der Anzahl z der Liganden AzuH und der Anzahl der anionischen Liganden L_{T} 2, 3, 4, 5 oder 6. Eine weitere Ausführungsform sieht vor, dass die Summe der Anzahl z der Liganden AzuH und der Anzahl der anionischen Liganden L_{T} 2, 3, 4 oder 5 beträgt, insbesondere 2, 3 oder 4.

Eine weitere Ausführungsform der beanspruchten Verwendungen bzw. der beanspruchten Verfahren sieht Metallkomplexe gemäß der allgemeinen Formel

[M(L_{T})(AzuH)_{z}]X (VI)

vor, wobei der Ligand L_{T} ein monoanionischer Ligand ist, welcher ausgewählt ist aus der Gruppe bestehend aus Anionen des Cyclopentadiens und dessen Derivaten und einem Fluoridanion, oder ein dianionischer Ligand. Ein dianionischer Ligand L_{T} ist beispielsweise ausgewählt aus der Gruppe bestehend aus einem Oxidoliganden O²⁻, einem Imidoliganden (NR^{Q})²⁻ und einem Alkylidenliganden (CR^{P}R^{V})²⁻. Dabei sind R^{Q}, R^{P} und R^{V} unabhängig voneinander ausgewählt aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren, wobei die Substituenten R^{P} und R^{V} optional einen Ring bilden können. Die Reste R^{Q}, R^{P} und R^{V} können auch unabhängig voneinandner substituiert sein, insbesondere halogeniert.

Beispiele für Anionen des Cyclopentadiens (Cp) sind das Cyclopentadienyl-Anion C₅H₅⁻ (Cp⁻) und das 1,2,3,4,5-Pentamethylcyclopentadienyl-Anion C₅Me₅⁻ (Cp*). Die vorgenannten Anionen können als planare pi-Donor-Liganden L_{T} in kationischen *Sandwich*-Komplexen des Typs

[M(L_{T})(AzuH)_{z}]X (VI)

vorgesehen sein.

Eine weitere vorteilhafte Ausführungsform der beanspruchten Verwendungen bzw. der beanspruchten Verfahren sieht vor, dass das Metall-Zentralatom M des Metallkomplexes gemäß der allgemeinen Formel

[M(L_{T})(AzuH)_{z}]X (VI)

ausgewählt ist aus der Gruppe 8, der Gruppe 9, der Gruppe 10, der Gruppe 11 oder der Gruppe 12. Vorteilhafterweise ist das Metall-Zentralatom M dann ausgewählt aus der Gruppe bestehend aus Eisen, Ruthenium, Osmium, Cobalt, Rhodium, Iridium, Nickel, Palladium, Platin, Kupfer, Silber, Gold, Zink, Cadmium und Quecksilber. Noch vorteilhafter ist das Metall-Zentralatom M ausgewählt aus der Gruppe bestehend aus Eisen, Ruthenium, Cobalt, Rhodium, Nickel, Platin, Kupfer, Silber, Zink und Cadmium. Besonders vorteilhaft ist das Metall-Zentralatom M ausgewählt aus der Gruppe bestehend aus Eisen, Ruthenium, Cobalt, Rhodium, Nickel, Platin, Kupfer, Silber und Zink, insbesondere aus der Gruppe bestehend aus Eisen, Ruthenium, Cobalt, Rhodium, Platin, Kupfer und Zink.

In einer Ausführungsform der hier beschriebenen Verwendungen bzw. der hier beanspruchten Verfahren zur Durchführung einer chemischen Reaktion oder zur Herstellung wenigstens einer Metallschicht bestehend aus dem Metall M oder wenigstens einer Schicht, welches ein Metall M enthält, ist der Metallkomplex ausgewählt aus der Gruppe bestehend aus Fe(GuaH)₂, Ru(GuaH)₂, Ru(Cp*)(GuaH), [Ru(*p*-cymol)(GuaH)]PF₆, Co(GuaH)₂, [Co(GuaH)₂]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), und Mischungen davon,vorteilhaft aus der Gruppe bestehend aus Ru(Cp*)(GuaH), [Ru(*p-*cymol)(GuaH)]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH), und Mischungen davon, besonders vorteilhaft aus der Gruppe bestehend aus Ru(Cp*)(GuaH), Zn(Mes)(GuaH) und PtMe₃(GuaH). Insbesondere ist der Metallkomplex PtMe₃(GuaH).

In einer anderen Ausführungsform des hier beanspruchten Verfahrens zur Herstellung einer Metallschicht oder einer Metall M enthaltenden Schicht erfolgt die Abscheidung der Metallschicht oder der Metall M enthaltenden Schicht in Schritt B) mittels eines Gasphasenabscheidungsverfahrens. Vorteilhaft erfolgt die Abscheidung der Metallschicht oder der Metall M enthaltenden Schicht mittels eines *ALD*-Verfahrens oder eines *MOCVD-*Verfahrens, insbesondere mittels eines *MOVPE*-Verfahrens*.* Alternativ kann ein Sol-Gel-Verfahren angewendet werden, wobei das Sol beispielsweise mittels Spin- oder Dipcoating auf einer Oberfläche oder mehreren Oberflächen des Substrats abgeschieden werden kann.

Eine weitere Variante der hier beschriebenen Verwendung bzw. des beanspruchten Verfahrens sieht eine sequenzielle Abscheidung mehrerer Metallschichten und/oder Metall enthaltender Schichten auf der Oberfläche des Substrats vor. Dabei erfolgt eine Wiederholung von Schritt B), wobei die jeweiligen Metall enthaltenden Schichten und/oder Metallschichten nacheinander abgeschieden werden. Die jeweils erste Schicht wird unmittelbar auf der Oberfläche des Substrats abgeschieden, während die weiteren Schichten auf der Oberfläche der jeweils zuvor abgeschiedenen Schicht abgeschieden werden.

Das Substrat kann beispielsweise ein Nichtmetall oder mehrere Nichtedelmetalle umfassen oder aus einem Nichtmetall oder mehreren Nichtedelmetallen gefertigt sein. Alternativ oder ergänzend kann das Substrat ein nichtmetallisches Material oder mehrere nichtmetallische Materialien umfassen oder vollständig aus einem nichtmetallischen Material oder mehreren solcher Materialien bestehen. Als Substrat können z. B. Korundfolien oder dünne metallische Folien eingesetzt werden. Das Substrat kann selbst Teil eines Bauteils sein. In einer Ausführungsform der vorgenannten Verwendung eines Metallkomplexes als Präkursorverbindung zur Herstellung einer Metallschicht oder einer Metall M enthaltenden Schicht bzw. in einer Ausführungsform des Verfahrens zur Herstellung einer Metallschicht oder einer Metall M enthaltenden Schicht auf einer Oberfläche eines Substrats ist das Substrat ein Wafer. Der Wafer kann Silicium, Siliciumcarbid, Germanium, Galliumarsenid, Indiumphosphid, ein Glas, wie z. B. SiO₂, und/oder einen Kunststoff, wie z. B. Silikon, umfassen oder vollständig aus einem oder mehreren dieser Materialien bestehen. Zudem kann der Wafer eine Waferschicht oder mehrere Waferschichten mit jeweils einer Oberfläche aufweisen. Die Herstellung einer Metallschicht oder einer Metall M enthaltenden Schicht kann auf der Oberfläche einer Waferschicht oder mehrerer Waferschichten vorgesehen sein.

Mittels der hier beanspruchten Verwendung bzw. des hier beschriebenen Verfahrens erhaltene oder erhältliche Substrate, umfassend eine Metallschicht oder eine Metall M enthaltende Schicht, insbesondere eine Platinschicht oder eine Platin enthaltende Schicht, ggf. umfassend Metallnanopartikel oder bestehend aus Metallnanopartikeln, sind aufgrund der hohen Reinheit der Metallschicht oder der Metall M enthaltenden Schicht besonders gut für die Herstellung eines elektronischen Bauelements, insbesondere eines elektronischen Halbleiterbauelements, oder einer redoxaktiven Elektrode für eine Brennstoffzelle einsetzbar. In letzterem Fall fungiert die Platinschicht oder die Platin-Nanopartikel enthaltende Schicht als katalytische Schicht.

Die Aufgabe wird außerdem gelöst durch ein Substrat, welches auf wenigstens einer Oberfläche
i. wenigstens eine Metallschicht bestehend aus dem Metall M
   oder
ii. wenigstens eine Schicht, welche ein Metall M enthält,
aufweist,
wobei die wenigstens eine Metallschicht bestehend aus dem Metall M oder die wenigstens eine Schicht, welche ein Metall M enthält, herstellbar oder hergestellt ist unter Verwendung eines Metallkomplexes gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

oder einer Lösung oder Suspension, umfassend einen solchen Metallkomplex und wenigstens ein, insbesondere aprotisch-polares, Lösungsmittel, welches mit dem Lösungmittel S_{P} mischbar oder identisch ist,
- gemäß einer Ausführungsform der weiter oben beschriebenen Verbindungen
   oder
- erhalten oder erhältlich nach einem Verfahren zur Herstellung solcher Metallkomplexe oder solcher Lösungen oder Suspensionen gemäß einer der weiter oben beschriebenen Ausführungsformen.

Dabei sind M, L_{K}, f, m, L_{N}, q, L_{S}, g, v, L_{T}, z, X⁻, AzuH und Azu wie weiter oben definiert.

Hinsichtlich einer Auswahl verwendbarer Metallkomplexe gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI)

sowie von Lösungen oder Suspensionen, umfassend einen solchen Metallkomplex und wenigstens ein, insbesondere aprotisch-polares, Lösungsmittel, welches mit dem Lösungmittel S_{P} mischbar oder identisch ist, wird auf die Ausführungen betreffend das weiter oben beschriebene Verfahren zur Herstellung eines solchen Substrats verwiesen.

Eine Definition des Begriffs "mischbar" ist bereits weiter oben gegeben.

Hinsichtlich der Vorteile eines solchen Substrats wird auf die Vorteile, welche für das weiter oben beschriebene Verfahren zur Herstellung eines solchen Substrats genannt sind, verwiesen.

In einer vorteilhaften Ausführungsform des hier beanspruchten Substrats ist die wenigstens eine Metallschicht bestehend aus dem Metall M oder die wenigstens eine Schicht, welche ein Metall M enthält, herstellbar oder hergestellt unter Verwendung
eines Metallkomplexes gemäß einer der Formeln

M(L_{K})_{f}(AzuH)ₘ (III),

M(L_{N})(AzuH)_{q} (IV),

[M(L_{S})_{g}(AzuH)ᵥ]X (V)

und

[M(L_{T})(AzuH)_{z}]X (VI),

wobei Azu = Gua = 7-*iso*-Propyl-1,4-dimethylazulen und AzuH = GuaH = 7-*iso*-Propyl-1,4-dimethyl-8-*H*-dihydroazulen ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- **Fig. 1**: ¹H-NMR-Spektren zur Bestimmung des Umsatzes der Hydrosilylierungsreaktion von 1-Octen mit Pentamethylsiloxan unter Verwendung von 5 ppm PtMe₃(GuaH) als Katalysator, wobei GuaH = 7-*iso*-Propyl-1,4-dimethyl-8-*H*-dihydroazulen,
und
- **Fig. 2**: ein Diagramm betreffend den Umsatz der Hydrosilylierungsreaktion von 1-Octen mit Pentamethylsiloxan unter Verwendung von 5 ppm PtMe₃(GuaH) als Katalysator.

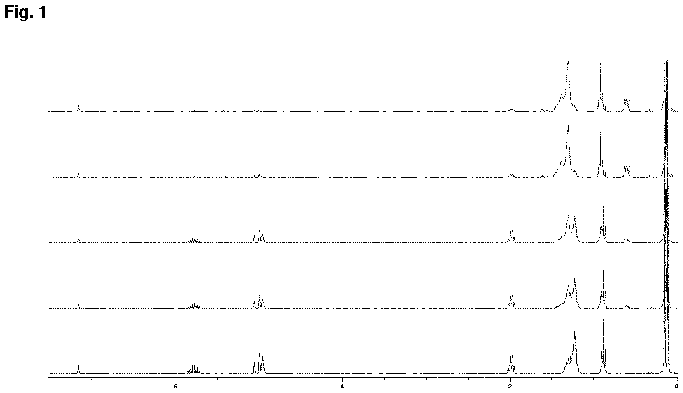

Die in **Fig. 1** gezeigten ¹H-NMR-Spektren wurden in C₆D₆ bei 298 K und 300 MHz aufgenommen. Auf der x-Achse ist die chemische Verschiebung δ in ppm aufgetragen.

Während der Hydrosilylierungsreaktion von 1-Octen mit Pentamethylsiloxan unter Verwendung von 5 ppm PtMe₃(GuaH) als Katalysator (vgl. **Beispiel 15,** NMR-Experimente mit 5 ppm Pt) wurden die in **Fig. 1** dargestellten ¹H-NMR-Spektren in vordefinierten zeitlichen Abständen aufgenommen. Das unterste ¹H-NMR-Spektren wurde zum Zeitpunkt 0 h, also vor dem Starten der Hydrosilylierungsreaktion, aufgenommen. Oberhalb dieses ¹H-NMR-Spektrums sind - in aufsteigender Reihenfolge - die nach etwa 0,25 h, 1 h, 8 h und 48 h aufgenommenen ¹H-NMR-Spektren gezeigt. Es wurden weitere, hier nicht gezeigte, ¹H-NMR-Spektren nach etwa 0,5 h, 2 h, 4 h und 24 h in C₆D₆ bei 298 K und 300 MHz aufgenommen.

Die Reaktionsgleichung für die Hydrosilylierung von 1-Octen lautet wie folgt: 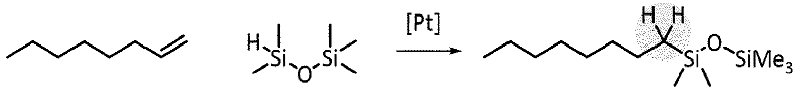 Der Umsatz wurde jeweils auf Basis der *CH*₂-Gruppe des Produktes (im Produktmolekül grau hinterlegt) mit einer Verschiebung von 0,60 ppm bestimmt. Im Rahmen der Berechnung der vorgenannten Umsätze wurden auch die ¹H-NMR-Spektren, welche nach etwa 0,50 h, 2 h, 4 h und 24 h in C₆D₆ bei 298 K und 300 MHz aufgenommen wurden, berücksichtigt. In Tabelle 1 sind die berechneten Umsätze der Hydrosilylierungsreaktion von 1-Octen mit Pentamethylsiloxan unter Einsatz von 5 ppm PtMe₃(GuaH) als Katalysator aufgeführt (vgl. Spalte 2).

**Tabelle 1:**

| Zeit in h | Umsatz in % |
|---|---|
| 0 | 0,0 |
| 0,25 | 28,0 |
| 0,50 | 32,3 |
| 1 | 37,6 |
| 2 | 49,8 |
| 4 | 73,1 |
| 8 | 95,8 |
| 24 | 99,5 |
| 48 | 100,0 |

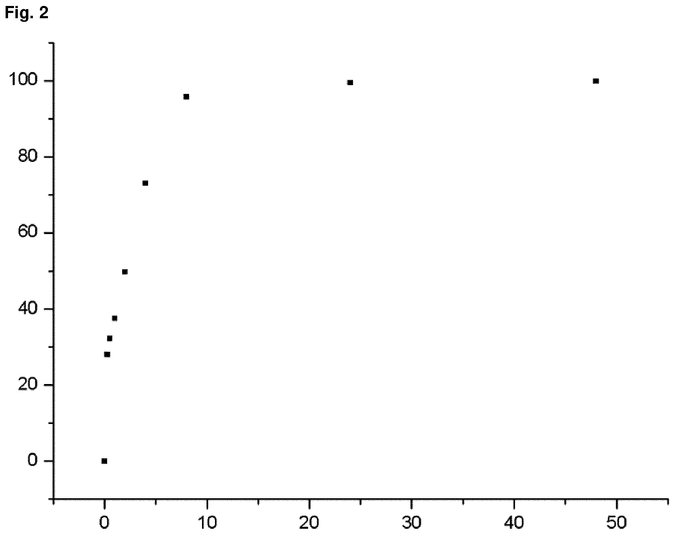

Die grafische Auswertung der in **Tabelle 2** aufgeführten Ergebnisse ist in **Fig. 2** dargestellt. Dabei ist auf der Abszisse die Zeit in Stunden (h) aufgetragen, und auf der Ordinate der Umsatz in Prozent (%).

Es lässt sich feststellen, dass die Hydrosilylierungsreaktion unter Einsatz von 5 ppm PtMe₃(GuaH) als Katalysator nach etwa 8 h fast vollständig abgelaufen ist. Mithin wird eine zufriedenstellende Reaktionsgeschwindigkeit erreicht.

Vorteilhafterweise liegt die Pt(IV)-Verbindung PtMe₃(GuaH) als Flüssigkeit vor und zeigt eine Absorption im Vis-Bereich. Letzteres stellt einen weiteren Vorteil hier eingesetzten Pt(IV)-Verbindung dar. Denn bei lichtinduzierten Platin-katalysierten Hydrosilylierungsreaktionen ist regelmäßig die Verwendung von UV/Vis-Licht vorgesehen, wodurch üblicherweise besondere Sicherheitsmaßnahmen erforderlich sind, um das Hautkrebsrisiko zu reduzieren. Solche Sicherheitsmaßnahmen sind bei Verwendung von PtMe₃(GuaH) nicht zwingend notwendig.

Nach gängiger Lehrmeinung führt die Photolyse eines bekannten, ein Cyclopentadienyl-Anion enthaltenden Katalysators, wie z. B. CpPtMe₃ und (MeCp)PtMe₃, in Gegenwart eines Silans, wie z. B. Pentamethylsiloxan, zur Bildung eines Platin-Kolloids als aktivem Hydrosilylierungskatalysator. (L. D. Boardman, Organometallics 1992, 11, 4194 - 4201) Boardman gibt für die Hydrosilylierungsreaktion von 1-Octen mit Pentamethylsiloxan (äquimolare Mischung) eine Katalysatorkonzentration von 10 ppm Platin als CpPtMe₃ an.

Bei Verwendung des im Rahmen der vorliegenden Erfindung erstmals dargestellten Präkatalysators PtMe₃(GuaH) wird bereits bei 50 % der in der Literatur gewählten Katalysatorkonzentration, also bei einer Katalysatorkonzentration von 5 ppm Platin als PtMe₃(GuaH), ein vollständiger Umsatz der Substrate 1-Octen und Pentamethylsiloxan beobachtet.

Ein weiterer Vorteil der vorliegend als Präkatalysator eingesetzten Verbindung PtMe₃(GuaH) gegenüber Cyclopentadienyl-Anionen enthaltenden Pt(IV)-Verbindungen besteht darin, dass das zu dessen Herstellung erforderliche Guajazulen unter Verwendung nachwachsender Rohstoffe anstelle von Erdöl synthetisiert wird. Infolgedessen ist die Darstellung des Pt(IV)-Komplexes PtMe₃(GuaH) vergleichsweise nachhaltig, einfach und kostengünstig realisierbar.

Mithin stellt der im Rahmen der vorliegenden Erfindung als Präkatalysator für die Hydrosilylierungsreaktion von 1-Octen mit Pentamethylsiloxan eingesetzte Halbsandwich-Komplex PtMe₃(GuaH) eine relativ nachhaltige und kostengünstige Alternative zu vorbekannten Hydrosilylierungs-Katalysatoren wie CpPtMe₃ und (MeCp)PtMe₃ dar.

**Arbeitsvorschriften zur Synthese von Li(GuaH), Na([15]-krone-5)(GuaH), K([18]-Krone-6)(GuaH), Fe(GuaH)₂, Ru(GuaH)₂, Ru(Cp*)(GuaH), [Ru(*p*-cymol)(GuaH)]PF₆, Co(GuaH)₂, [Co(GuaH)₂]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH)**
(GuaH)⁻ = 7-*iso*-Propyl-1,4-dimethyl-8-*H*-dihydroazulenyl, C₁₅H₁₉⁻
Cp* = 1,2,3,4,5-Pentamethylcyclopentadienyl, C₅Me₅⁻

### Materialien und Methoden

Alle Reaktionen wurden unter Standard-Inertgasbedingungen durchgeführt. Die eingesetzten Lösungsmittel und Reagenzien wurden nach Standardprozeduren gereinigt und getrocknet. Im Falle von Reagenzien, welche als Lösung eingesetzt wurden, erfolgte die Gehaltsbestimmung jeweils mittels einer Titration oder per ICP-MS/OES.

Alle kernresonanzspektroskopischen Messungen wurden an einem Gerät des Typs Bruker AV II 300, Bruker AV II HD 300, DRX 400 oder AV III 500 durchgeführt. ¹³C-NMR-Spektren wurden standardmäßig ¹H-breitbandentkoppelt bei 300 K gemessen. ¹H- und ¹³C-NMR-Spektren wurden auf das entsprechende Restprotonensignal des Lösungsmittels als interner Standard kalibriert: ¹H: DMSO[d₆]: 2,50 ppm; ¹³C: DMSO[d₆]: 39,52 ppm. Die chemischen Verschiebungen werden in ppm angegeben und beziehen sich auf die δ-Skala. Alle Signale werden entsprechend ihres Aufspaltungsmusters mit den folgenden Abkürzungen versehen: s (Singulett), d (Dublett), t (Triplet), q (Quartett), sept (Septett), m (Multiplett), br (breites Signal).

Die Messungen von Infrarotspektren erfolgten in Substanz in der Regel an einem Alpha ATR-IR-Spektrometer der Fa. Bruker. Die Absorptionsbanden sind angegeben in Wellenzahl (cm⁻¹) und die Intensität wird mit folgenden Abkürzungen beschrieben: w (schwach), m (mittelstark), st (stark), vst (sehr stark), br (breit). Normiert wurden die Spektren stets auf die intensitätsstärkste Bande.

Hochaufgelöste LIFDI-Massenspektren wurde mittels eines AccuTOF-GCv-TOF-Massenspektrometers (JEOL) erhalten.

Die Elementaranalysen wurden an einem Vario-Micro-Cube Verbrennungsgerät der Fa. Elementar durchgeführt. Die Probenvorbereitung erfolgte in einem mit Stickstoff gefluteten Handschuhkasten durch Einwiegen der Substanz in Zinn-Tiegel, welche kalt verschweißt und bis zur Messung unter Schutzgasatmosphäre gelagert wurden. Die Elemente Wasserstoff, Kohlenstoff und Stickstoff wurden über eine Verbrennungsanalyse ermittelt, wobei die Angabe stets in Massenprozent erfolgt.

Die Datensammlung für die Kristallstrukturanalyse wurde an einem Stoe Stadivari-Diffraktometer oder einem Bruker D8 Quest-Diffraktometer von der Fachabteilung des Fachbereichs Chemie, Universität Marburg, durchgeführt. Nach dem Lösungs- (SHELXT) und Verfeinerungsprozess (SHELXL 2017/1) wurden die Daten mittels Platon validiert. Die graphische Darstellung der Molekülstrukturen erfolgte mit Diamond 4.

### Beispiel 1: Darstellung von Li(GuaH)

**Methode A.** Guajazulen (5,00 g, 25,0 mmol, 1,00 eq.) und Lithiumtriethylborhydrid (1,7 M in THF) (15 mL, 25,5 mmol, 1,02 eq.) wurden in einen mit Argongas gefluteten Kolben gegeben, und das Lösungsmittel wurde im Vakuum entfernt. Nach Hinzufügen von Et₂O (150 mL) wurde das Reaktionsgemisch auf 40°C erwärmt und drei Tage lang bei dieser Temperatur gerührt. Das Verschwinden der blauen Farbe zeigte die Beendigung der Reaktion an. Der ausgefallene farblose Feststoff wurde durch Filtration abgetrennt, mit Et₂O (3 x 15 mL) und Pentan (3 x 15 mL) gewaschen und im Vakuum getrocknet. Li(GuaH) wurde in einer Ausbeute von etwa 60% erhalten.
**Methode B.** Guajazulen (5,00 g, 25,0 mmol, 1,00 eq.) und LiAIH₄ (950 mg, 25,0 mmol, 1,00 eq.) wurden in einen mit Argon gefluteten Kolben gegeben und in THF (150 mL) suspendiert. Das Reaktionsgemisch wurde auf 60°C erwärmt und 24 h lang bei dieser Temperatur gerührt. Das Verschwinden der blauen Farbe zeigte die Beendigung der Reaktion an. Aluminiumhydrid wurde durch Hinzufügen von 1,4-Diazabicyclo[2.2.2]octan (DABCO^{®}) abgefangen. Der ausgefallene Feststoff wurde durch Filtration abgetrennt und das Lösungsmittel im Vakuum entfernt. Et₂O (150 mL) wurde zu dem Rückstand hinzugefügt, und der ungelöste farblos-gräuliche Feststoff wurde durch Filtration isoliert, mit Et₂O (3 x 15 mL) und Pentan (3 x 15 mL) gewaschen und im Vakuum getrocknet. Li(GuaH) wurde in einer Ausbeute von etwa 60% erhalten.
**Methode C.** Guajazulen (5,00 g, 25,0 mmol, 1,00 eq.), LiH (2,00 g, 250 mmol, ~10 eq.) und LiAlH₄ (48 mg, 1,26 mmol, 0,05 eq., 5 mol%) wurden in einen mit Argon gefluteten Kolben gegeben und in THF (150 mL) suspendiert. Das Reaktionsgemisch wurde auf 60 °C erwärmt und 7 Tage lang bei dieser Temperatur gerührt. Das Verschwinden der blauen Farbe zeigte die Beendigung der Reaktion an. Überschüssiges Lithiumhydrid wurde durch Filtration abgetrennt und das Lösungsmittel im Vakuum entfernt. Et₂O (150 mL) wurde zu dem Rückstand hinzugefügt, und der ungelöste farblos-gräuliche Feststoff wurde durch Filtration isoliert, mit Et₂O (3 x 15 mL) und Pentan (3 x 15 mL) gewaschen und im Vakuum getrocknet. Li(GuaH) wurde in einer Ausbeute von etwa 60% erhalten.
   **¹H-NMR** (300,1 MHz, [D₆]DMSO): δ_{H} = 5,37 (q, *⁴J_{HH}*= 2,91 Hz, 2H), 5,30 (d, *³J_{HH}*= 6,87 Hz, 1H), 4,87 (d, *³J_{HH}*= 6,41 Hz, 1H), 2,77 (s, 2H), 2,32 (sept, *³J_{HH}*= 6,41 Hz, 1H), 2,01 (s), 1,96 (s), 1,01 (d, *³J_{HH}*= 6,85 Hz, 6H) ppm; **¹³C-NMR** (75,5 MHz, [D₆]DMSO): δc = 136,7 (s, 1C), 135,4 (s, 1C), 121,9 (s, 1C), 118,8 (s, 1C), 115,0 (s, 1C), 108,5 (s, 1C), 106,9 (s, 1C), 106,7 (s, 1C), 100,3 (s, 1C), 36,0 (s, 1C), 29,1 (s, 1C), 24,2 (s, 1C), 22,4 (s, 2C), 13,8 (s, 1C) ppm.**Anmerkung:**
   Die Verbindung Li(GuaH) kann auch durch Umsetzung von Guajazulen mit Lithium-tri-*sec*.-butylborhydrid (L-Selectride^{®}-Lösung, 1,0 M in THF) hergestellt werden.

Die Verbindungen Na(GuaH) und K(GuaH) können durch Umsetzung von Guajazulen mit Natriumtriethylborhydrid (z. B. 1,0 M in THF), Natrium-tri-sec.-butylborhydrid-Lösung (N-Selectride^{®}-Lösung, 1,0 M in THF), Kaliumtriethylborhydrid (z. B. 1,0 M in THF) oder Kalium-tri-sec.-butylborhydrid (K-Selectride^{®}-Lösung, 1,0 M in THF) erhalten werden. Ein isolierbarer Feststoff wurde durch Hinzufügen des jeweils korrespondierenden Kronenethers erhalten werden, wobei Na([15]-krone-5)(GuaH) und K([18]-Krone-6)(GuaH) gebildet werden. Gelbe, für eine Kristallstrukturanalyse geeignete Nadeln von K([18]-Krone-6)(GuaH) wurden aus einer gesättigten und mit Pentan überschichteten THF-Lösung bei -20 °C erhalten.

### Beispiel 2: Darstellung von Fe(GuaH)₂

Li(GuaH) (500 mg, 2,42 mmol, 2,0 eq.) und FeCl₂(154 mg,1,21 mmol, 1,0 eq.) wurden in Diethylether (40 mL) suspendiert, und die Suspension wurde 20 h lang bei Raumtemperatur gerührt. Das Lösungsmittel wurde im Vakuum entfernt. Der Rückstand wurde in Pentan aufgenommen, und die anorganischen Salze mittels Filtration abgetrennt. Das zurückbleibende rote Öl wurde durch Säulenchromatographie (Al₂O₃, CH₂Cl₂) gereinigt. Durch Umkristallisation des isolierten Produkts aus Ethylacetat oder Methanol bei -20 °C über Nacht, wurde das rac-Diastereomer (Hauptprodukt) als roter Feststoff erhalten und durch Filtration isoliert (72%).
**¹H-NMR** (300,1 MHz, CDCl₃): δ_{H} = 5,99 (d, *³J_{HH}*= 6,52 Hz, 2H), 5,57 (d, *³J_{HH}* = 6,57 Hz, 2H), 4,10 (d, *⁴J_{HH}* = 2,39 Hz, 2H), 3,76 (d, *⁴J_{HH}*= 2,56 Hz, 2H) 3,06 (m, 4H), 2,36 (sept., *³J_{HH}* = 6,8 Hz, 2H), 2,23 (s, 6H), 1,97 (s, -C*H*₃, 6H), 1,03 (m, 12H) ppm; **¹³C-NMR** (75,5 MHz, CDCl₃): *δ*c = 145,49 (s, 2C), 136,80 (s, 2C), 123,74 (s, 2C), 120,14 (s, 2C), 85,81 (s, 2C), 81,34 (s, 2C), 81,31 (s, 2C), 71,32 (s, 2C), 66,25 (s, 2C), 36,54 (s, 2C), 27,35 (s, 2C), 23,32 (s, 2C), 21,89 (s, 2C), 21,56 (s, 2C), 11,69 (s, 2C) ppm; **HR-MS** (EI(+)): m/z [FeC₃₀H₃₈] gefunden: 454,1879 [M], berechnet: 454,2177; **Elementaranalyse** berechnet (%) für C₃₀H₃₈Fe (454,48 g/mol): C 79,28; H 8,43; gefunden: C 79,12, H 8,32; **IR** (KBr-Pressling): *ṽ*= 2957 (s), 2898 (m), 2866 (m), 1631 (vw), 1593 (w), 1448 (m), 1345 (w), 1310 (w), 1275 (w), 1194 (w), 1181 (w), 1094 (m), 1078 (s), 1042 (w), 1026 (w), 987 (w), 952 (w), 863 (w), 841 (s), 815 (s), 803 (vs), 768 (vs), 694 (m), 590 (s), 551 (m), 538 (s), 511 (vw), 489 (m), 478 (w), 452 (vs), 445 (s), 423 (w) cm⁻¹.

### Beispiel 3: Darstellung von Ru(GuaH)₂

Li(GuaH) (500 mg, 2,42 mmol, 2,0 eq.) und Ru(tht)₄Cl₂ (636 mg, 1,21 mmol, 1,0 eq.) oder Ru(dmso)₄Cl₂ (586 mg, 1,21 mmol, 1,0 eq) wurden in THF (40 mL) suspendiert, und die Suspension wurde 20 h lang bei Raumtemperatur gerührt. Das Lösungsmittel wurde im Vakuum entfernt. Der Rückstand wurde in Pentan aufgenommen, und die ausgefallenen anorganischen Salze wurden mittels Filtration abgetrennt. Das Lösungsmittel wurde im Vakuum entfernt, und das zurückgebliebene Rohprodukt wurde durch Säulenchromatographie (Al₂O₃, CH₂Cl₂) gereinigt. Durch Umkristallisation des isolierten Produkts aus Ethylacetat oder Methanol bei -20 °C über Nacht, wurde das *rac-*Diastereomer (Hauptprodukt) als farbloser Feststoff erhalten und durch Filtration isoliert (62%).
**¹H-NMR** (300,1 MHz, CDCl₃): *δ*_{H} = 5,94 (d, *³J_{HH}* = 5,9 Hz, 2H), 5,61 (d, *³J_{HH}* = 5,8 Hz, 2H), 4,49 (d, *⁴J_{HH}* = 2,2 Hz, 2H), 4,31 (d, *⁴J_{HH}* = 2,1 Hz, 2H), 2,92 (d, *²J_{HH}* = 14,3 Hz, 2H), 2,83 (d, *²J_{HH}* = 14,4 Hz, 2H), 2,39 (sept, *³J_{HH}* = 6,7 Hz, 2H), 2,06 (s, 6H), 1,88 (s, 6H), 1,05 (dd, *³J_{HH}* = 6,8 Hz, *⁴J_{HH}* = 1,8 Hz, 12H) ppm; **¹³C-NMR** (75,5 MHz, CDCl₃): *δ*c = 146,52 (s, 2C), 135,82 (s, 2C), 122,95 (s, 2C), 120,33 (s, 2C), 90,47 (s, 2C), 86,15 (s, 2C), 84,29 (s, 2C), 73,82 (s, 2C), 68,14 (s, 2C), 36,50 (s, 2C), 27,23 (s, 2C), 23,24 (s, 2C), 21,94 (s, 2C), 21,64 (s, 2C), 12,06 (s, 2C) ppm; **HR-MS** (EI(+)): m/z [RuC₃₀H₃₈] gefunden: 500, 1545 [M], berechnet: 500,1871; **Elementaranalyse** berechnet (%) für C₃₀H₃₈Ru (499,71 g/mol): C 72,11; H 8,08; N 7,67; gefunden: C 71,98, H 7,59; **IR** (KBr-Pressling): *ṽ* = 2995 (w), 2958 (s), 2895 (m), 2965 (m), 1631 (w), 1598 (w), 1481 (w), 1461 (s), 1447 (s), 1366 (m), 1343 (w), 1310 (w), 1278 (w), 1193 (w), 1180 (w), 1159 (w), 1140 (w), 1107 (w), 1094 (w), 1077 (w), 1043 (m), 1026 (s), 953 (m), 891 (w), 860 (w), 841 (w), 827 (s), 815 (vs), 803 (s), 761 (w), 694 (m), 677 (w), 657 (w), 588 (m), 549 (w), 535 (m), 466 (w), 428 (s), 411 (w) cm⁻¹.

### Beispiel 4: Darstellung von Ru(Cp*)(GuaH)

Li(GuaH) (200 mg, 0,97 mmol, 1,0 eq.) und [Ru(Cp*)Cl]₄ (264 mg, 0,24 mmol, 0,25 eq.) wurden in THF (20 mL) für 20h bei Raumtemperatur gerührt. Das Lösungsmittel wurde im Vakuum entfernt. Der Rückstand wurde in Dichlormethan aufgenommen, und die ausgefallenen anorganischen Salze wurden mittels Filtration abgetrennt. Das Lösungsmittel wurde im Vakuum entfernt, und das zurückgebliebene Rohprodukt wurde durch Säulenchromatographie (Al₂O₃, CH₂Cl₂) gereinigt. Die Fraktion, welche eine gelbe Bande verursachte, enthielt das gewünschte Produkt. Ru(Cp*)(GuaH) wurde nach Entfernen des Lösungsmittels im Vakuum als braunes Öl isoliert.
**¹H-NMR** (300,1 MHz, C₆D₆): *δ*_{H} = 6,05 (d, *J* = 6,8 Hz, 1H), 5.74 (d, *J* = 6,2 Hz, 1H), 4,21 (d, *J* = 2,3 Hz, 1H), 3,98 (d, *J* = 2,3 Hz, 1H), 2,86 (d, *J* = 4,4 Hz, 1H), 2,38 (m, *J* = 5,6 Hz, 1H), 1,79 (s, 1H), 1,78 (s, 1H), 1,07 (s, 1H), 1,05 (s, 1H) ppm; **HR-MS** (FD(+)): m/z [RuC₂₅H₃₄] gefunden: 436,1721 [M], berechnet: 436,1637.

### Beispiel 5: Darstellung von [Ru(p-cymol)(GuaH)]PF₆

Das Edukt [Ru(MeCN)₂(*p*-cymol)Cl]PF₆ wurde gemäß den folgenden Literaturvorschriften hergestellt: F. B. McCormick, D. D. Cox, W. B. Gleason, Organometallics 1993, 12, 610 - 612; S. B. Jensen, S. J. Rodger, M. D. Spicer, J. Organomet. Chem. 1998, 556, 151 - 158; L. Biancalana et al., New J. Chem. 2018, 42, 17574 - 17586.

Li(GuaH) (200 mg, 0,97 mmol, 1,0 eq.) und [Ru(MeCN)₂(*p*-cymol)Cl]PF₆ (353 mg, 0,97 mmol, 1,0 eq.), erzeugt aus [Ru(*p*-cymol)RuCl₂]₂, wurden in THF (20 mL) für 20h bei Raumtemperatur gerührt. Das Lösungsmittel wurde im Vakuum entfernt, und der Rückstand in Dichlormethan aufgenommen, um die anorganischen Salze auszufällen und durch Filtration abzutrennen. Das Lösungsmittel wurde entfernt und das Rohprodukt in Acetonitril aufgenommen. Die konzentrierte Lösung wurde mit Diethylether überschichtet und über Nacht bei 0 °C aufbewahrt. Das Produkt fiel als farbloser Feststoff aus und wurde mittels Filtration isoliert (69%).
**¹H-NMR** (300,1 MHz, DMSO-d₆): *δ*_{H} = 6,25 (d, *³J_{HH}* = 6,1 Hz, 1H), 6,21 (d, *³J_{HH}* = 6,2 Hz, 1H), 6,15 (d, *³J_{HH}* = 6,1 Hz, 1H), 6,09 (d, *³J_{HH}* = 6,1 Hz, 1H), 6,03 (d, *³J_{HH}* = 6,0 Hz, 1H), 5,74 (d, *³J_{HH}* = 6,0 Hz, 1H), 5,40 (d, *⁴J_{HH}* = 2,3 Hz, 1H), 5,25 (d, *⁴J_{HH}* = 2,2 Hz, 1H), 3,14 (d, *²J_{HH}* = 14,4 Hz, 1H), 2,69 (sept, *³J_{HH}* = 6,9 Hz, 1H), 2,62 (d, *²J_{HH}* = 15,0 Hz, 1H), 2,42 (sept, *³J_{HH}* = 6,7 Hz, 1H), 2,14 (s, 1H), 2,05 (s, 1H), 1,21 (d, *³J_{HH}* = 4,7 Hz, 3H), 1,19 (d, *³J_{HH}* = 4,7 Hz, 6H), 1,02 (t, *³J_{HH}* = 6,0 Hz, 6H) ppm; **¹³C-NMR** (75,5 MHz, DMSO-d₆): *δ*c = 147,35 (s, 1C), 130,53 (s, 1C), 128,96 (s, 1C), 120,96 (s, 1C), 111,30 (s, 1C), 101,19 (s, 1C), 99,83 (s, 1C), 95,49 (s, 1C), 95,20 (s, 1C), 88,08 (s, 1C), 87,79 (s, 1C), 84,98 (s, 1C), 84,87 (s, 1C), 80,62 (s, 1C), 75,24 (s, 1C), 36,07 (s, 1C), 31,49 (s, 1C), 26,04 (s, 1C), 23,58 (s, 1C), 23,20 (s, 1C), 22,77 (s, 1C), 21,87 (s, 1C), 21,68 (s, 1C), 18,06 (s, 1C), 12,21 (s, 1C) ppm; **HR-MS** (FD(+)): m/z [RuC₂₅H₃₃⁺] gefunden: 435,1619 [M], berechnet: 435,1553; **Elementaranalyse** berechnet (%) für C₂₅H₃₃F₆PRu (579,57 g/mol): C 51,81; H 5,74; gefunden: C 51,72, H 5,63; **IR** (KBr-Pressling): *ṽ* = 2968 (w), 1478 (w), 1447 (w), 1390 (w), 1059 (vw), 908 (w), 884 (m), 834 (vs), 696 (vw), 679 (vw), 590 (w), 557 (s), 523 (vw), 449 (w), 421 (m) cm⁻¹.

### Beispiel 6: Darstellung von Co(GuaH)₂

Eine Suspension aus Li(GuaH) (500 mg, 2,42 mmol, 2,0 eq.) und CoCl₂ (157 mg, 1,21 mmol, 1,0 eq.) wurden in Diethylether (40 mL) für 4 h bei Raumtemperatur gerührt. Dabei wurde eine grün-blaue Lösung erhalten. Die anorganischen Salze wurde mittels Filtration abgetrennt. Co(GuaH)₂ wurde als grün-blaues Öl isoliert.

### Beispiel 7: Darstellung von [Co(GuaH)₂]PF₆

Für die Synthese von [Co(GuaH)₂]PF₆ wurde eine Methode entwickelt, welche auf derjenigen von Vanicek *et al.* (Vanicek, S.; Kopacka, H.; Wurst, K.; Müller, T.; Schottenberger, H.; Bildstein, B., Organometallics 2014, 33, 1152-1156) und Bockman und Kochi (Bockman, T. M.; Kochi, J. K., J. Am. Chem. Soc. 1989, 111, 4669-4683) basiert:
Eine Suspension aus Li(GuaH) (500 mg, 2,42 mmol, 2,0 eq.) und CoCl₂ (157 mg, 1,21 mmol, 1,0 eq.) wurden in Diethylether (40 mL) für 4 h bei Raumtemperatur gerührt. Dabei wurde eine grün-blaue Lösung erhalten. Die anorganischen Salze wurde mittels Filtration abgetrennt. Zum Filtrat wurde heißes Wasser (50 mL) hinzugefügt, und das Reaktionsgemisch wurde für 18 h gerührt. Nach Abtrennung eines braunen Feststoffs wurde eine gelbe wässrige Lösung erhalten, welche das Produkt enthielt. Der braune Feststoff wurde mehrmals mit Wasser gewaschen. Die vereinigten wässrigen Lösungen wurden zweimal mit Diethylether gewaschen, mit Aktivkohle entfärbt. Die wässrige Lösung wurde an einem Rotationsverdampfer auf ein Minimum des Volumens (10 mL) eingeengt.

Eine wässrige Lösung von KPF₆ (334 mg in 20 mL H₂O, 1,81 mmol, 1,5 eq.) wurde hinzugefügt, und die Kristallisation wurde durch Kühlung in einem Eisbad erleichtert. Das gelbe Rohprodukt wurde mittels Filtration abgetrennt, gründlich gewaschen, einmal mit Eiswasser und zweimal mit Diethylether, und im Vakuum getrocknet. Nach Umkristallisation aus Acetonitril, überschichtet mit Ethylacetat, wurde [Co(GuaH)₂]PF₆ mittels Filtration abgetrennt und im Vakuum getrocknet (60%).
**¹H-NMR** (300,1 MHz, CDCl₃): *δ*_{H} = 6,47 (d, *³J_{HH}* = 6,5 Hz, 2H), 5,77 (d, *³J_{HH}* = 6,5 Hz, 2H), 5,45 (br s, 2H), 5,36 (br s, 2H), 3,08 (d, *²J_{HH}* = 14,1 Hz, 2H), 2,78 (d, *²J_{HH}* = 14,1 Hz, 2H), 2,44 (sept., *³J_{HH}* = 6,1 Hz, 2H), 2.24 (s, 6H), 1,96 (s, 6H), 1,06 (m, 12H) ppm; **¹³C NMR** (75,5 MHz, CDCl₃): *δ*_{C} = 145,37 (s, 2C), 133,08 (s, 2C), 128,36 (s, 2C), 121,31 (s, 2C), 102,63 (s, 2C), 96,96 (s, 2C), 94,78 (s, 2C), 83,27 (s, 2C), 77,81 (s, 2C), 36,55 (s, 2C), 26,05 (s, 2C), 23,16 (s, 2C), 21,70 (s, 2C), 21,43 (s, 2C), 10,64 (s, 2C) ppm; **HR-MS** (FD(+)): m/z [CoC₃₀H₃₈⁺] gefunden: 457,23157, berechnet: 457,23055; **Elementaranalyse** berechnet (%) für CoC₃₀H₃₈PF₆ (602,53 g/mol): C 59,80; H 6,36; gefunden: C 59,67, H 6,24; **IR** (KBr-Pressling): *ṽ* = 2964 (w), 1465 (w), 1386 (w), 1363 (w), 1285 (w), 1187 (vw), 1084 (vw), 1043 (vw), 958 (vw), 922 (vw), 876 (m), 832 (vs), 699 (vw), 614 (w), 594 (m), 457 (w), 422 (w) cm⁻¹.

### Anmerkung:

Die Darstellung von [Co(GuaH)₂]PF₆ kann analog ausgehend von isoliertem Co(GuaH)₂ durchgeführt werden.

### Beispiel 8: Darstellung von Rh(nbd)(GuaH)

Li(GuaH) (200 mg, 0,97 mmol, 1,0 eq.) und [Rh(nbd)Cl]₂ (224 mg, 0,48 mmol, 0,5 eq.) wurden in THF (20 mL) für 20 h bei Raumtemperatur gerührt. Das Lösungsmittel wurde im Vakuum entfernt und der Rückstand in Dichlormethan, Diethylether oder Pentan aufgenommen, um die anorganischen Salze auszufällen und mittels Filtration abzutrennen. Das Lösungsmittel wurde entfernt und das ölige Produkt für ein paar Tage im Kühlschrank gelagert. Danach lag Rh(nbd)(GuaH) als gelber Feststoff vor (quantitative Ausbeute).
**¹H-NMR** (300,1 MHz, DMSO-d₆): *δ*_{H} = 5,80 (d, *³J_{HH}* = 6,3 Hz, 1H), 5,60 (d, *³J_{HH}* = 6,2 Hz, 1H), 5,29 (d, *⁴J_{HH}* = 2,5 Hz, 1H), 4,83 (d, *⁴J_{HH}* = 2,7 Hz, 1H), 3,32 (m, 2H), 2,91 (m, 6H), 2,39 (sept, *³J_{HH}* = 6,1 Hz, 1H), 1,99 (s, 3H), 1,84 (s, 3H), 1,03 (m, 6H), 0,84 (m, 2H) ppm; **¹³C-NMR** (126 MHz, DMSO-d₆): *δ*c = 146,80 (s, 1C), 144,09 (s, 1C), 132,97 (s, 1C), 129,54 (s, 1C), 121,25 (s, 1C), 119,88 (s, 1C), 112,13 (s, 1C), 103,97 (d, *¹J_{RhC}* = 4,5 Hz, 1C), 99,92 (d, *¹J_{RhC}* = 4,1 Hz, 1C), 95,40 (d, *¹J_{RhC}* = 4,3 Hz, 1C), 85,18 (d, *¹J_{RhC}* = 4,6 Hz, 1C), 77,36 (d, *¹J_{RhC}* = 4,6 Hz, 1C), 56,10 (d, *¹J_{RhC}* = 6,9 Hz, 1C), 46,40 (d, *¹J_{RhC}* = 2,4 Hz, 1C), 35,75 (s, 1C), 32,40 (d, *¹J_{RhC}* = 10,3 Hz, 1C), 31,89 (d, *¹J_{RhC}* = 10,2 Hz, 1C), 26,34 (s, 1C), 23,37 (s, 1C), 21,73 (s, 1C), 21,63 (s, 1C), 11,50 (s, 1C) ppm; **HR-MS** (FD(+)): m/z [RhC₂₂H₂₇] gefunden: 394,11539 [M], berechnet: 394,11678; **Elementaranalyse** berechnet (%) für RhC₂₂H₂₇ (394,36 g/mol): C 67,00; H 6,90; gefunden: C 66,87, H 6,86; **IR** (KBr-Pressling): *ṽ* = 3041 (w), 3027 (w), 2991 (m), 2955 (m), 2923 (s), 2886 (m), 2860 (m), 2842 (m), 1627 (w), 1588 (m), 1456 (m), 1444 (m), 1435 (m), 1407 (w), 1370 (m), 1295 (m), 1276 (w), 1261 (w), 1224 (w), 1196 (w), 1172 (w), 1158 (w), 1101 (w), 1086 (w), 1051 (w), 1044 (w), 1028 (m), 1019 (m), 992 (w), 958 (w), 923 (w), 910 (w), 890 (w), 857 (w), 837 (s), 810 (vs), 792 (s), 779 (s), 764 (m), 757 (m), 691 (w), 660 (w), 619 (w), 587 (w), 556 (w), 531 (w), 507 (w), 494 (w), 472 (w), 440 (w) cm⁻¹.

### Beispiel 9: Darstellung von Rh(cod)(GuaH)

Li(GuaH) (200 mg, 0,97 mmol, 1,0 eq.) und [Rh(cod)Cl]₂ (239 mg, 0,48 mmol, 0,5 eq.) wurden in THF (20 mL) für 20 h bei Raumtemperatur gerührt. Das Lösungsmittel wurde im Vakuum entfernt und der Rückstand in Dichlormethan, Diethylether oder Pentan aufgenommen, um die anorganischen Salze auszufällen und mittels Filtration abzutrennen. Das Lösungsmittel wurde entfernt und das ölige Produkt für ein paar Tage im Kühlschrank gelagert. Danach lag Rh(nbd)(GuaH) als gelber Feststoff vor (quantitative Ausbeute).
**¹H-NMR** (300,1 MHz, DMSO-d₆): δ_{H} = 5,99 (d, *³J_{HH}* = 5,8 Hz, 1H), 5,77 (d, *³J_{HH}*= 6,3 Hz, 1H), 5,08 (d, *⁴J_{HH}*= 2,6 Hz, 1H), 4,70 (d, *⁴J_{HH}*= 2,7 Hz, 1H), 3,69 (m, 2H), 3,63 (m, 2H), 2,85 (d, *²J_{HH}*= 14,1 Hz, 1H), 2,71 (d, *²J_{HH}*= 14,1 Hz, 1H), 2,34 (sept, *³J_{HH}*=*6,7* Hz, 1H), 2,24 (m, 4H), 2,10 (s, 3H), 2,00 (m, 4H), 1,76 (s, 3H), 1,03 (dd, *³J_{HH}*= 6,8 Hz, *⁴J_{HH}*= 0,6 Hz, 6H) ppm; **¹³C-NMR** (75,5 MHz, DMSO-d₆): *δ*c = 143,98 (s, 1C), 132,98 (s, 1C), 122,55 (s, 1C), 120,89 (s, 1C), 106,74 (d, *¹J_{RhC}* = 3,9 Hz, 1C), 100,76 (d, *¹J_{RhC}* = 3,2 Hz, 1C), 97,40 (d, *¹J_{RhC}*= 3,7 Hz, 1C), 87,54 (d, *¹J_{RhC}* = 4,1 Hz, 1C), 79,86 (d, *¹J_{RhC}* = 4,2 Hz, 1C), 68,14 (d, *¹J_{RhC}*= 14,0 Hz, 2C), 67,88 (d, *¹J_{RhC}*= 14,1 Hz, 2C), 36,83 (s, 1C), 33,15 (s, 2C), 32,73 (s, 2C), 26,56 (s, 1C), 23,56 (s, 1C), 22,07 (s, 1C), 21,99 (s, 1C), 11,41 (s, 1C) ppm; **HR-MS** (FD(+)): m/z [RhC₂₃H₃₁] gefunden: 410,1484 [M], berechnet: 410,1408; **Elementaranalyse** berechnet (%) für RhC₂₃H₃₁ (410,41 g/mol): C 67,31; H 7,61; gefunden: C 67,12, H 7,60; **IR** (KBr-Pressling): *ṽ*= 2996 (w), 2982 (m), 2962 (s), 2952 (s), 2932 (s), 2910 (s), 2889 (s), 2862 (s), 2820 (s), 1587 (m), 1444 (s), 1405 (m), 1380 (m), 1371 (m), 1358 (m), 1320 (m), 1294 (m), 1279 (w), 1261 (w), 1235 (w), 1201 (m), 1179 (m), 1153 (m), 1080 (m), 1045 (m), 1026 (m) 992 (m), 955 (m), 884 (w), 868 (s), 841 (s), 813 (vs), 791 (s), 776 (m), 762 (m), 693 (w), 678 (w), 580 (w), 537 (w), 485 (w), 469 (w), 437 (w) cm⁻¹.

### Beispiel 10: Darstellung von [Rh(Cp*)(GuaH)]PF₆

Li(GuaH) (200 mg, 0,97 mmol, 1,0 eq,) und [RhCp*Cl₂]₂ (300 mg, 0,48 mmol, 0,5 eq,) wurden in THF (20 mL) für 20 h bei Raumtemperatur gerührt. Danach wurde NH₄PF₆ hinzugefügt und das Reaktionsgemisch für weitere 2 h gerührt. Das Lösungsmittel wurde im Vakuum entfernt und der Rückstand in Dichlormethan aufgenommen, um NH₄Cl auszufällen und dann mittels Filtration abzutrennen. Das Lösungsmittel des Filtrats wurde im Vakuum entfernt. Das so erhaltene gelbe Produkt wurde nach Waschen mit Pentan und Diethylether in guter Ausbeute (72%) erhalten. [Rh(Cp*)(GuaH)]PF₆ wurde aus einer konzentrierten Lösung in Dichlormethan, überschichtet mit Pentan, umkristallisiert und in Form gelber, kristalliner Blöcke erhalten. Diese wurden mittels Filtration abgetrennt und im Vakuum getrocknet.
**¹H-NMR** (300,1 MHz, DMSO-d₆): *δ*_{H} = 6,34 (d, *³J_{HH}* = 6,3 Hz, 1H), 5,76 (d, *³J_{HH}* = 6,2 Hz, 1H), 5,68 (d, *⁴J_{HH}* = 2,4 Hz, 1H), 5,46 (d, *⁴J_{HH}* = 2,0 Hz, 1H), 3,17 (d, *²J_{HH}* = 14,4 Hz, 1H), 2,44 (sept, *³J_{HH}* = 7,0 Hz, 1H), 2,40 (d, *²J_{HH}* = 13,8 Hz, 2H), 2,03 (s, 3H), 1,97 (s, 3H), 1,94 (s, 15H), 1,03 (t, *³J_{HH}* = 6,7 Hz, 6H) ppm; **¹³C-NMR** (75,5 MHz, DMSO-d₆): *δ*c= 145,71 (s, 1C), 129,49 (s, 1C), 127,89 (s, 1C), 120,35 (s, 1C), 105,62 (d, *¹J_{RhC}* = 7,0 Hz, 1C), 99,63 (d, *¹J_{RhC}* = 7,8 Hz, 5C), 98,77 (d, *¹J_{RhC}* = 6,9 Hz, 1C), 96,07 (d, *¹J_{RhC}* = 6,5 Hz, 1C), 88,10 (d, *¹J_{RhC}* = 7,5 Hz, 1C), 81,81 (d, *¹J_{RhC}* = 7,6 Hz, 1C), 35,59 (s, 1C), 24,08 (s, 1C), 21,36 (s, 1C), 21,19 (s, 1C), 21,10 (s, 1C), 9,49 (s, 1C), 8,99 (s, 5C), ppm; **HR-MS** (FD(+)): m/z [RhC₂₅H₃₄] gefunden: 437,17261 [M], berechnet: 437,17155; **Elementaranalyse** berechnet (%) für RhC₂₅H₃₄PF₆ (582,42 g/mol): C 51,56; H 5,88; gefunden: C 51,52, H 5,84; **IR** (KBr-Pressling): *ṽ*= 2960 (w), 1464 (w), 1385 (w), 1031 (vw), 874 (w), 836 (vs), 764 (w), 739 (w), 699 (w), 611 (w), 591 (w), 557 (s), 506 (w), 492 (w), 462 (w), 438 (w) cm⁻¹.

### Beispiel 11: Darstellung von PtMe₃(GuaH)

Li(GuaH) (500 mg, 2,42 mmol, 1,0 eq,) und [PtMe₃l]₄ (890 mg, 0,61 mmol, 0,25 eq,) wurden in Diethylether (40 mL) suspendiert, und die Suspension wurde für 30 min bei 40 °C, dann für 4 h bei Raumtemperatur gerührt. Es wurde eine gelbe Lösung erhalten. Das Lösungsmittel wurde im Vakuum entfernt. Es ist sehr wichtig, das Lösungsmittel vollständig zu entfernen, weil ansonsten Lithiumiodid in Lösung bleibt und eine Verunreinigung des Produkts nicht auszuschließen ist. Der ölige Rückstand wird in Pentan (40 mL) aufgenommen, anorganische Salze und ggf. nicht umgesetzte Edukte werden mittels Filtration abgetrennt. Das Lösungsmittel des Filtrats wird im Vakuum entfernt, und PtMe₃(GuaH) wird als gelbes Öl in guter Ausbeute (82%) erhalten. Eine weitere Aufreinigung des Produktes kann mittels Säulenchromatographie (Silica, Hexan) erfolgen.
**¹H-NMR** (300,1 MHz, DMSO-d₆): δ_{H} = 6,00 (d, *³J_{HH}* = 6,3 Hz, 1H), 5,73 (d, *⁴J_{HH}* = 2,8 Hz, 1H), 5,56 (d, ³*J* = 6,2 Hz, 1H_{,}), 5,38 (d, ³*J* = 3,0 Hz, 1H), 2,98 (d, *²J_{HH}* = 14,3 Hz, 1H), 2,53 (d, 1H, *²J_{HH}*= 14,3 Hz, 1H), 2,40 (sept,, *³J_{HH}* = 6,8 Hz, 1H), 1,94 (s, 3H), 1,90 (s, 3H), 1,03 (d, *³J_{HH}*= 6,8 Hz, 3H), 1,01 (d, *³J_{HH}*= 6,8 Hz, 3H), 0,66 (s, *J*_{19SPt-1H}= 80,8 Hz, 9H, PtMe₃) ppm; **¹³C-NMR** (75,5 MHz, DMSO-d₆): *δ*c = 144,79 (s, 1C), 130,01 (s, 1C), 123,75 (s, 1C), 119,74 (s, 1C), 110,77 (s, 1C), 106,83 (s, 1C), 106,18 (s, 1C), 91,60 (s, 1C), 90,04 (s, 1C), 35,81 (s, 1C), 24,10 (s, 1C), 22,06 (s, 1C), 21,56 (s, 1C), 21,26 (s, 1C), 9,54 (s, 1C), -14,76 (PtMe₃); **HR-MS** (FD(+)): m/z [PtC₁₈H₂₈] gefunden: 439,18065 [M], berechnet: 439,18387; **IR** (KBr-Pressling): *ṽ*= 2957 (vs), 2891 (vs), 2809 (m), 1634 (vw), 1598 (w), 1461 (m), 1431 (m), 1376 (m), 1359 (s), 1314 (s), 1285 (m), 1251 (w), 1210 (w), 1192 (s), 1095 (w), 1081 (w), 1028 (s), 998 (s), 955 (s), 886 (vs), 839 (m), 812 (w), 786 (w), 759 (w), 693 (w), 673 (w), 653 (w), 583 (w), 555 (s), 533 (m), 504 (w), 469 (w), 425 (m) cm⁻¹.

### Beispiel 12: Darstellung von [Pt(cod)(GuaH)]PF₆

Li(GuaH) (200 mg, 0,97 mmol, 1,0 eq,) und [Pt(cod)Cl₂] (363 mg, 0,97 mmol, 1,0 eq,) wurden in THF (20 mL) für 24 h bei Raumtemperatur gerührt. Das Reaktionsgemisch änderte seine Farbe während der Reaktionszeit zu Orange. NH₄PF₆ wurde hinzugefügt. Nach weiterem Rühren für 2 h wurde das Lösungsmittel im Vakuum entfernt, Acetonitril (20 mL) hinzugegeben und NH₄Cl mittels Filtration abgetrennt. Das Lösungsmittel des Filtrats wurde im Vakuum entfernt. [Pt(cod)(GuaH)]PF₆ wurde als orangefarbener Feststoff in guter Ausbeute (78%) erhalten. [Pt(cod)(GuaH)]PF₆ kann aus THF, überschichtet mit Pentan, bei -20°C umkristallisiert werden.
**¹H-NMR** (300,1 MHz, DMSO-d₆): *δ*_{H} = 6,31 (d, *³J_{HH}* = 6,3 Hz, 1H), 6,30-6,14 (m, 2H), 5,83 (d, *³J_{HH}* = 6,4 Hz, 1H), 5,28-4,95 (m, 4H), 3,24 (d, *²J_{HH}* = 14,6 Hz, 1H), 2,78 (d, *²J_{HH}* = 14,6 Hz, 1H), 2,42 (m, 7H), 2,18 (s, 3H), 2,11 (s, 3H), 1,09 (d, *⁴J_{HH}* = 0,9 Hz, 3H), 1,07 (d, *⁴J_{HH}* = 0,9 Hz, 3H) ppm; **¹³C-NMR** (75,5 MHz, DMSO-d₆): *δ*c = 146,36 (s, 1C), 128,54 (s, 1C), 127,40 (s, 1C), 120,63 (s, 1C), 115,07 (s, 1C), 111,05 (s, 1C), 109,92 (s, 1C), 93,42 (s, 1C), 87,76 (s, 1C), 82,72 (s, 2C), 81,73 (s, 2C), 35,72 (s, 1C), 31,90 (s, 1C), 31,56 (s, 2C), 24,92 (s, 1C), 22,19 (s, 1C), 21,39 (s, 1C), 21,37 (s, 1C), 10,14 (s, 1C) ppm; **HR-MS** (FD(+)): m/z [PtC₂₃H₃₁] gefunden: 501,20506 [M], berechnet: 501,20524; **Elementaranalyse** berechnet (%) für PtC₂₃H₃₁PF₆ (647,55 g/mol): C 42,66; H 4,83; gefunden: C 42,55, H 4,78; **IR** (KBr-Pressling): *ṽ*= 2964 (w), 1435 (w), 1386 (w), 1363 (w), 1285 (w), 1032 (vw), 874 (w), 826 (vs), 697 (w), 556 (s), 471 (vw) cm⁻¹.

### Beispiel 13: Darstellung von Cu(PPh₃)(GuaH)

Li(GuaH) (200 mg, 0,97 mmol, 1,0 eq,) und [Cu(PPh₃)Cl]₄ (350 mg, 0,24 mmol, 0,25 eq,) wurden in THF für ca. 3 h bei -78°C gerührt. Das Reaktionsgemisch wurde unter Rühren über Nacht langsam auf Raumtemperatur erwärmt. Dabei änderte es seine Farbe zu grüngelb. Das Lösungsmittel wurde im Vakuum entfernt, und Diethylether wurde hinzugefügt, um anorganische Salze auszufällen und mittels Filtration abzutrennen. Das Lösungsmittel des Filtrats wurde im Vakuum entfernt. Der Rückstand wurde mit Pentan gewaschen, und Cu(PPh₃)(GuaH) wurde ein blassgelber Feststoff in nahezu quantitativer Ausbeute erhalten.
**¹H-NMR** (300,1 MHz, C₆D₆): *δ*_{H} = 7,35 (m, 6H), 6,99 (m, 9H), 6,22 (d, *³J_{HH}* = 3,0 Hz, 1H), 6,17 (d, *³J_{HH}* = 3,0 Hz, 1H), 6,06 (dd, *³J_{HH}* = 6,3 Hz, *⁴J_{HH}* = 2,4 Hz, 1H), 5,85 (d, *³J_{HH}* = 6,2 Hz, 1H), 3,33 (d, *²J_{HH}* = 15,1 Hz, 1H), 3,23 (d, *²J_{HH}* = 15,1 Hz, 1H), 2,45 (s, 3H), 2,38 (s, 3H), 2,33 (sept, *³J_{HH}* = 6,8 Hz, 1H), 0,95 (d, *³J_{HH}* = 6,8 Hz, 3H), 0,90 (d, *³J_{HH}* = 6,8 Hz, 3H) ppm; **¹³C-NMR** (75,5 MHz, C₆D₆): *δ*c = 145,04 (s, 1C), 135,27 (s, 3C), 134,07 (d, ²*J_{PC}* = 15,8 Hz, 6C), 133,37 (d, ¹*J_{PC}* = 43,5 Hz, 3C), 130,35 (s, 1C), 128,76 (d, *³J_{PC}*= 10,4 Hz, 6C), 120,94 (s, 1C), 118,50 (s, 1C), 116,14 (s, 1C), 115,42 (s, 1C), 103,64 (s, 1C), 94,73 (s, 1C), 89,24 (s, 1C), 37,11 (s, 1C), 28,17 (s, 1C), 24,43 (s, 1C), 22,32 (s, 1C), 22,11 (s, 1C), 13,19 (s, 1C) ppm; **HR-MS** (FD(+)): m/z [C₃₃H₃₄CuP] gefunden: 524,17053 [M], berechnet: 524,16941; **Elementaranalyse** berechnet (%) für C₃₃H₃₄CuP (525,15 g/mol): C 75,48; H 6,53; gefunden: C 75,34, H 6,49; **IR** (KBr-Pressling): *ṽ*= 2963 (m), 2871 (w), 1632 (w), 1593 (w), 1464 (m), 1435 (m), 1385 (m), 1362 (m), 1315 (w), 1284 (w), 1246 (w), 1199 (w), 1186 (w), 1083 (w), 1043 (w), 1029 (w), 996 (w), 958 (w), 872 (m), 798 (vs), 696 (m), 592 (w), 548 (m), 499 (w), 455 (w), 420 (w) cm⁻¹.

### Beispiel 14: Darstellung von Zn(Mes)(GuaH)

Li(GuaH) (200 mg, 0,97 mmol, 1,0 eq,) und ZnCl₂ (66 mg, 0,48 mmol, 0,5 eq,) wurden in THF (20 mL) suspendiert und für 24 h bei Raumtemperatur gerührt. Es wurde eine gelbe Lösung erhalten. Die anorganischen Salze wurden mittels Filtration abgetrennt. Zu dem Filtrat, welches das gewünschte Zwischenprodukt Zn(GuaH)₂ vom Zinkoncene-Typ enthielt, wurde ZnMes₂ (146 mg, 0,48 mmol, 0,5 eq,) hinzugefügt. Das Reaktionsgemisch wurde für 3 h gerührt, bevor das Lösungsmittel im Vakuum entfernt wurde. Der Rückstand wurde in Pentan aufgenommen, und die Lösung wurde über Nacht bei -80°C aufbewahrt, um ggf. nicht umgesetztes Zn(GuaH)₂ und ZnMes₂ auszufällen. Nach Filtration über einen Spritzenfilter wurde das Lösungsmittel des Filtrats im Vakuum entfernt. Zn(Mes)(GuaH) wurde als gelb-orangefarbenes Öl in guter Ausbeute (80%) erhalten.
**¹H-NMR** (300,1 MHz, C₆D₆): *δ*_{H} = 6,78 (s, 1H), 6,02 (q, ⁴*J_{HH}* = 2,4 Hz, 1H), 6,00 (d, ⁴*J_{HH}* = 3,1 Hz, 1H), 5,97 (d, ⁴*J_{HH}* = 3,0 Hz, 1H), 5,71 (d, ³*J_{HH}* = 6,2 Hz, 1H), 3,12 (d, ²*J_{HH}* = 14,0 Hz, 1H), 2,86 (d, ²*J_{HH}* = 14,0 Hz, 1H), 2,27 (sept, ³*J_{HH}* = 6,8 Hz, 1H), 2,20 (s, 3H), 2,17 (s, 3H), 2,16 (s, 6H), 0,91 (t, ³*J_{HH}* = 6,4 Hz, 6H) ppm; **¹³C-NMR** (75,5 MHz, C₆D₆): *δ*c = 147,11 (s, 1C), 145,64 (s, 1C), 140,55 (s, 1C), 137,27 (s, 2C), 133,54 (s, 1C), 126,18 (s, 2C), 122,72 (s, 1C), 122,07 (s, 1C), 120,94 (s, 1C), 119,82 (s, 1C), 110,58 (s, 1C), 101,31 (s, 1C), 93,76 (s, 1C), 36,98 (s, 1C), 28,42 (s, 1C), 27,01 (s, 2C), 23,88 (s, 1C), 22,05 (s, 1C), 22,03 (s, 1C), 21,25 (s, 1C), 12,18 (s, 1C) ppm; **HR-MS** (FD(+)): m/z [C₂₄H₃₀Zn] gefunden: 382,16545 [M], berechnet: 382,16390; **IR** (KBr-Pressling): *ṽ*= 2957 (s), 2914 (s), 2865 (m), 2724 (w), 1631 (w), 1594 (w), 1553 (w), 1443 (s), 1373 (m), 1359 (w), 1335 (w), 1313 (w), 1288 (w), 1236 (w), 1193 (w), 1081 (s), 953 (m), 844 (s), 815 (s), 771 (s), 756 (vs), 702 (m), 659 (w), 619 (w), 584 (w), 564 (w), 537 (m), 484 (w), 468 (w), 418 (w).

### Beispiel 15: Photohydrosilylierung von 1-Octen mit Pentamethylsiloxan unter Verwendung von PtMe₃(GuaH) als Katalysator

Zu einer Lösung von PtMe₃(GuaH) (vgl. Beispiel 11) in Cyclohexan (25 mL; 10 ppm = 2,5 x 10⁻⁵ mol/L) wurden 661 mg Pentamethylsiloxan (4,45 mmol) und 500 mg 1- Octen (4,45 mmol) hinzugefügt. Die Lösung wurde unter Rühren für 30 min mit UV-Licht bestrahlt und dann für weitere 18 h gerührt. Das Rohprodukt wurde mittels Säulenchromatographie (Hexan) gereinigt. Laut ¹H-NMR-Spektrum wies das isolierte Produkt keine Verunreinigungen auf.

Ausbeute laut ¹H-NMR-Spektrum (vor Aufreinigung): quantitativ; isolierte Ausbeute ca. 80%.

### NMR-Experimente mit 5 ppm Pt:

### Stammlösung (1,78 M):

500 mg 1-Octen (4,45 mmol), 661 mg Pentamethylsiloxan (4,45 mmol), 2,5 mL C₆D₆ **Pt-Komplex-Lösung** (0,0889 mM = 0,0005 mol% im Vergleich zur Stammlösung): 0,391 mg PtMe₃(GuaH), 5 mL C₆D₆

0,25 mL **Stammlösung** und 0,25 mL **Pt-Komplex-Lösung** wurden in ein NMR-Röhrchen gefüllt. Das Röhrchen wurde geschüttelt und dann 5 min mit UV-Licht (Osram Ultra Vitalux, 300 W, 220 V, Pflanzenlampe) bestrahlt. Es wurden ¹H-NMR-Spektren zum Zeitpunkt 0 h und nach etwa 0,25 h, 0,50 h, 1 h, 2 h, 4 h, 8 h, 24 h und 48 h aufgenommen.

Die Erfindung ist nicht auf eine der vorbeschriebenen Ausführungsformen beschränkt, sondern in vielfältiger Weise abwandelbar.

Man erkennt, dass die Erfindung ein Verfahren zur Herstellung von Verbindungen gemäß der allgemeinen Formel

M^{A}Yₙ(AzuH) (I)

betrifft, wobei M^{A} = Alkalimetall, Y = Neutralligand, n = 0, 1, 2, 3 oder 4 und AzuH Azulen (Bicyclo[5.3.0]decapentaen) oder ein Azulenderivat ist, welches in 4-Position, 6-Position oder 8-Position ein H-Atom und ein Hydrid-Anion H⁻ trägt. Gegenstand der Erfindung sind zudem Verbindungen, erhältlich nach diesem Verfahren, sowie ein Verfahren unter Verwendung solcher Verbindungen zur Herstellung von Komplexen von Metallen der Gruppen 6 bis 12. Weiterhin betrifft die Erfindung Komplexe mittlerer Übergangsmetalle (Gruppen 6, 7 und 8) und später Übergangsmetalle (Gruppen 9, 10, 11 und 12), welche jeweils wenigstens ein *H*-Dihydroazulenyl-Anion (AzuH)¹⁻ aufweisen, sowie die Verwendung aller vorgenannten Übergangsmetallkomplexe als Präkatalysatoren oder Katalysatoren oder Elektronentransfer-Reagenzien in einer chemischen Reaktion oder als Präkursorverbindungen zur Herstellung einer Schicht, welche ein Metall M enthält, oder einer Metallschicht bestehend aus dem Metall M, insbesondere auf wenigstens einer Oberfläche eines Substrats. Außerdem ist Gegenstand der Erfindung ein Substrat, erhältlich nach einem solchen Verfahren, d. h. unter Verwendung eines Metallkomplexes gemäß einer der Formeln

M(L_{K})_{f}(AzuH)ₘ (III),

M(L_{N})(AzuH)_{q} (IV),

[M(Ls)_{g}(AzuH)ᵥ]X (V)

und

[M(L_{T})(AzuH)_{z}]X (VI).

Mit dem beschriebenen Verfahren sind definierte Alkalimetall-*H*-dihydroazulenyl-Verbindungen des Typs

M^{A}Yₙ(AzuH) (I)

auf einfache, kostengünstige und reproduzierbare Weise in hoher Reinheit und guter Ausbeute darstellbar. Das Verfahren ist auch im industriellen Maßstab durchführbar. Die Verbindungen weisen nach Isolierung - ohne aufwändige Aufreinigung - üblicherweise keine NMR-spektroskopisch detektierbaren Verunreinigungen auf. Sie eignen sich aufgrund ihrer hohen Reinheit als Edukte zur Herstellung von Übergangsmetallkomplexen, insbesondere von Metallen der Gruppe 6, der Gruppe 7, der Gruppe 8, der Gruppe 9, der Gruppe 10, der Gruppe 11 und der Gruppe 12. Mittels des hier beschriebenen Verfahrens sind solche Metallkomplexe mittlerer und später Übergangsmetalle einfach, reproduzierbar und vergleichsweise kostengünstig sowie in guter (Isomeren-)Reinheit und guter bis sehr guter Ausbeute erhältlich. Sie stellen eine relativ kostengünstige und z. T. insbesondere nachhaltige Alternative zu Cyclopentadienyl-Liganden enthaltenden Metallkomplexen dar. Und zwar insbesondere hinsichtlich einer Verwendung als Präkatalysatoren, Katalysatoren und Elektronentransfer-Reagenzien in chemischen Reaktionen. Außerdem eignen sie sich besonders als Präkursorverbindungen zur Herstellung qualitativ hochwertiger Substrate, welche wenigstens eine Metall enthaltende Schicht oder wenigstens eine Metallschicht auf wenigstens einer Oberfläche aufweisen. Das Metall oder die Metalle sind dabei ausgewählt aus der Gruppe 6, der Gruppe 7, der Gruppe 8, der Gruppe 9, der Gruppe 10, der Gruppe 11 und der Gruppe 12. Sämtliche aus den Ansprüchen, der Beschreibung und den Figuren hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verfahren zur Herstellung von Verbindungen gemäß der allgemeinen Formel
M^{A}Yₙ(AzuH) (I),
wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
und
- AzuH = Azulen oder ein Azulenderivat, welches in 4-Position, 6-Position oder 8-Position zusätzlich zu einem H-Atom ein Hydrid-Anion trägt,
wobei
Azu = Azulen gemäß der Formel 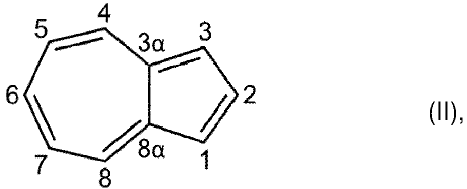 oder
Azu = ein Azulenderivat, welches ein Azulengerüst gemäß Formel II, bestehend aus einem Fünfring und einem Siebenring, aufweist,
wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
wobei zwei Substituenten R^{F} optional einen Ring bilden können,
und
b) wenigstens ein Kohlenstoffatom des Azulengerüsts, ausgewählt aus der Gruppe bestehend aus den Kohlenstoffatomen C4, C6 und C8, ein H-Atom trägt,
umfassend die folgenden Schritte:
A. Zurverfügungstellung von
i. Azulen oder einem Azulenderivat, welches ein Azulengerüst gemäß Formel II, bestehend aus einem Fünfring und einem Siebenring, aufweist,
wobei
- wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren, wobei zwei Substituenten R^{F} optional einen Ring bilden können,
und
- wenigstens ein Kohlenstoffatom des Azulengerüsts, ausgewählt aus der Gruppe bestehend aus den Kohlenstoffatomen C4, C6 und C8, ein H-Atom trägt,
und
ii. wenigstens einem hydridischen Reduktionsmittel Z,
B. Umsetzung des Azulens oder des Azulenderivats mit dem wenigstens einen hydridischen Reduktionsmittel Z in einem Lösungsmittel S_{P},
und
- bei Verwendung wengistens eines Alkalimetallaluminiumtetrahydrids M^{A}AlH₄ als ein erstes hydridisches Reduktionsmittel Z₁ -
C. Zurverfügungstellung
i. wenigstens eines zweiten hydridischen Reduktionsmittels Z₂ ausgewählt aus der Gruppe bestehend aus Alkalimetallhydriden M^{A}H
und/oder
ii. wenigstens eines Elektronenpaardonators E, wobei
der Elektronenpaardonator E wenigstens ein Donoratom aufweist,
wobei H₂O ausgenommen ist,
und
D. optional Hinzufügen eines Neutralliganden Y, wenn Y ungleich S_{P} und Y ungleich E ist.

2. Verfahren nach Anspruch 1, wobei wenigstens ein hydridisches Reduktionsmittel Z ausgewählt ist aus der Gruppe bestehend aus Alkalimetallhydriden M^{A}H, Alkalimetallbortetrahydriden M^{A}BH₄, Alkalimetalltrialkylborhydriden M^{A}[(R^{C})₃BH], Alkalimetallaluminiumtetrahydriden M^{A}AlH₄, Alkalimetalltrialkylaluminiumhydriden M^{A}[(R^{D})₃AlH], Alkalimetall-dihydrido-bis(dialkoxy)-aluminaten M^{A}[AlH₂(OR^{E})₂], sowie deren Mischungen, wobei
i. die Reste R^{C} und R^{D} jeweils unabhängig voneinander ausgewählt sind aus der Gruppe bestehend aus primären, sekundären, tertiären Alkyl-, Alkenyl- und Alkinylresten mit 1 bis 10 Kohlenstoffatomen,
wobei jeweils zwei Substituenten R^{C} oder zwei Substituenten R^{D} optional einen Ring bilden können,
und
ii. die Reste OR^{E} unabhängig voneinander jeweils eine korrespondierende Base eines Glycolethers R^{E}OH sind.

3. Verfahren nach Anspruch 2, wobei die Glycolether R^{E}OH unabhängig voneinander ausgewählt sind aus der Gruppe bestehend aus Monooxomethylenmonoethern, Monoethylenglycolmonoethern, Monopropylenglycolmonoethern, und deren Isomerenmischungen, und Mischungen davon.

4. Verfahren nach einem der vorhergehenden Ansprüche, wobei
- das Lösungsmittel S_{P} und der Neutralligand Y
und/oder
- der Neutralligand Y und der Elektronenpaardonator E
und/oder
- das Lösungsmittel S_{P} und der Elektronenpaardonator E
mischbar oder identisch sind.

5. Verfahren nach einem der vorhergehenden Ansprüche, wobei der Elektronenpaardonator E eine Base ist, ausgewählt aus der Gruppe bestehend aus organischen, metallorganischen und anorganischen Basen, sowie deren Mischungen.

6. Verfahren nach einem der vorhergehenden Ansprüche, wobei in Schritt A. ein Azulenderivat zur Verfügung gestellt wird, wobei wenigstens
- an den Kohlenstoffatomen C4 und C6
oder
- an den Kohlenstoffatomen C8 und C6
oder
- an dem Kohlenstoffatom C4 und/oder an dem Kohlenstoffatom C8
des Azulengerüsts ein H-Atom vorgesehen ist.

7. Verfahren nach einem der vorhergehenden Ansprüche, wobei nach der Umsetzung in Schritt B. oder nach Schritt C. oder nach Schritt D. ein Schritt durchgeführt wird, welcher eine Isolierung von
M^{A}Yₙ(AzuH) (I)
umfasst:
- als Suspension oder Lösung, welche
M^{A}Yₙ(AzuH) (I)
und wenigstens ein Lösungsmittel S_{P} umfasst,
oder
- als Flüssigkeit oder Feststoff.

8. Lösung oder Suspension, umfassend
M^{A}Yₙ(AzuH) (I)
und wenigstens ein Lösungsmittel S_{P}, erhalten oder erhältlich nach einem Verfahren gemäß einem der vorhergehenden Ansprüche.

9. Verbindungen gemäß der allgemeinen Formel
M^{A}Yₙ(AzuH) (I),
erhalten oder erhältlich nach einem Verfahren gemäß einem der Ansprüche 1 bis 7.

10. Verbindungen gemäß der allgemeinen Formel
M^{A}Yₙ(AzuH) (I),
wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
und
- AzuH = Azulen oder ein Azulenderivat, welches in 4-Position, 6-Position oder 8-Position zusätzlich zu einem H-Atom ein Hydrid-Anion trägt,
wobei
Azu = Azulen gemäß der Formel 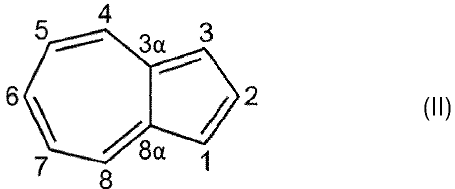 oder
Azu = ein Azulenderivat, welches ein Azulengerüst gemäß Formel II, bestehend aus einem Fünfring und einem Siebenring, aufweist,
wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
wobei zwei Substituenten R^{F} optional einen Ring bilden können,
und
b) wenigstens ein Kohlenstoffatom des Azulengerüsts, ausgewählt aus der Gruppe bestehend aus den Kohlenstoffatomen C4, C6 und C8, ein H-Atom trägt,
wobei
die Verbindungen Li(O(C₂H₅)₂)ₙ(AzulenH) und Li(O(C₂H₅)₂)n(GuaH),
wobei
- n = 0, 1 oder 2,
- AzulenH = Azulen, welches in 4-Position, 6-Position oder 8-Position zusätzlich zu einem H-Atom ein Hydrid-Anion trägt,
- GuaH = 7-*iso*-Propyl-1,4-dimethyl-8-*H*-dihydroazulen
ausgenommen sind.

11. Verbindungen nach Anspruch 10, wobei Azu = ein Azulenderivat ist und die Verbindung gemäß der allgemeinen Formel
M^{A}Yₙ(AzuH) (I)
isomerenrein vorliegt.

12. Verbindungen nach Anspruch 10 oder 11, wobei Azu = ein Azulenderivat ist, und wobei wenigstens die Kohlenstoffatome C1, C4 und C7 des Azulengerüsts einen Substituenten R^{F} tragen, und deren Isomere.

13. Verbindungen nach einem der Ansprüche 10 bis 12, wobei das Alkalimetall M^{A} ausgewählt ist aus der Gruppe bestehend aus Li, Na und K.

14. Verbindungen nach einem der Ansprüche 10 bis 13, wobei der Neutralligand Y
a) ein aprotisch-polares Lösungsmittel
oder
b) ein Kronenether,
welcher ausgewählt ist aus der Gruppe bestehend aus makrocyclischen Polyethern und deren Aza-, Phospha- und Thia-Derivaten,
wobei ein Innendurchmesser des Kronenethers und ein lonenradius von M^{A} miteinander korrespondieren,
ist.

15. Verfahren zur Herstellung von Metallkomplexen gemäß der allgemeinen Formel
M(L_{K})_{f}(AzuH)ₘ (III)
oder
M(L_{N})(AzuH)_{q} (IV)
oder
[M(L_{S})_{g}(AzuH)ᵥ]X (V)
oder
[M(L_{T})(AzuH)_{z}]X (VI),
wobei
M = Metall-Zentralatom ausgewählt aus der Gruppe 6, der Gruppe 7, der Gruppe 8, der Gruppe 9, der Gruppe 10, der Gruppe 11 oder der Gruppe 12,
L_{K} = optionaler neutraler sigma-Donor-Ligand oder optionaler neutraler pi-Donor-Ligand,
f = Anzahl der Liganden L_{K}, wobei f = 0, 1, 2, 3, 4, 5 oder 6 ist,
AzuH = Azulen oder ein Azulenderivat, welches in 4-Position, 6-Position oder 8-Position zusätzlich zu einem H-Atom ein Hydrid-Anion trägt,
m = Anzahl der Liganden AzuH, wobei m = 1, 2, 3, 4, 5, 6 oder 7 ist,
L_{N} = wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
q = Anzahl der Liganden AzuH, wobei q = w₂ - |u|,
wobei w₂> |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
L_{S} = optionaler neutraler sigma-Donor-Ligand oder optionaler neutraler pi-Donor-Ligand,
g = Anzahl der Liganden L_{S}, wobei g = 0, 1, 2, 3, 4, 5 oder 6 ist,
v = Anzahl der Liganden AzuH, wobei v = w₃ - 1, wobei w₃ = 2, 3, 4, 5, 6 oder 7 ist,
L_{T} = wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
z = Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
X⁻ = Halogenid-Anion oder einwertiges schwach-koordinierendes Anion oder einwertiges nicht-koordinierendes Anion,
wobei
Azu = Azulen gemäß der Formel 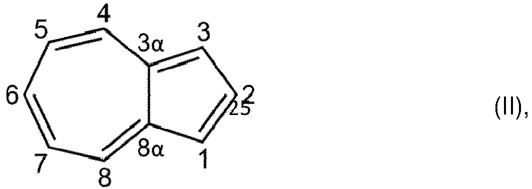 oder
Azu = ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
wobei zwei Substituenten R^{F} optional einen Ring bilden können,
und
b) wenigstens ein Kohlenstoffatom des Azulengerüsts, ausgewählt aus der Gruppe bestehend aus den Kohlenstoffatomen C4, C6 und C8, ein H-Atom trägt,
unter Verwendung
▪ einer Verbindung gemäß der allgemeinen Formel
M^{A}Yₙ(AzuH) (I),
- erhalten oder erhältlich nach einem Verfahren gemäß einem der Ansprüche 1 bis 7,
- gemäß Anspruch 9
oder
- gemäß einem der Ansprüche 10 bis 14
oder
▪ einer Lösung oder einer Suspension,
umfassend eine Verbindung gemäß der allgemeinen Formel
M^{A}Yₙ(AzuH) (I)
und wenigstens ein Lösungsmittel S_{P},
- erhalten oder erhältlich nach einem Verfahren gemäß einem der Ansprüche 1 bis 7,
oder
- gemäß Anspruch 8,
wobei
- M^{A} ein Alkalimetall ist,
- Y ein Neutralligand ist, welcher über wenigstens ein Donoratom an M^{A} gebunden oder koordiniert ist, wobei H₂O ausgenommen ist,
- n = 0, 1, 2, 3 oder 4
und
- AzuH und Azu wie oben definiert sind,
umfassend die Schritte:
A. Zurverfügungstellung der Verbindung gemäß der allgemeinen Formel
M^{A}Yₙ(AzuH) (I)
oder der Lösung oder der Suspension, umfassend die Verbindung gemäß der allgemeinen Formel
M^{A}Yₙ(AzuH) (I)
und das wenigstens eine Lösungsmittel S_{P},
und
B. Synthese des Metallkomplexes
M(L_{K})f(AzuH)ₘ (III)
oder
M(L_{N})(AzuH)_{q} (IV)
oder
[M(L_{S})_{g}(AzuH)ᵥ]X (V)
oder
[M(L_{T})(AzuH)_{z}]X (VI)
unter Verwendung der Verbindung gemäß der allgemeinen Formel
M^{A}Yₙ(AzuH) (I)
als Edukt.

16. Verfahren nach Anspruch 15, wobei die Synthese in Schritt B. wenigstens eine salzmetathetische Umsetzung und/oder wenigstens eine Oxidationsreaktion umfasst.

17. Verfahren nach Anspruch 15 oder 16, wobei M ausgewählt ist aus der Gruppe bestehend aus Chrom, Molybdän, Wolfram, Mangan, Technetium, Rhenium, Eisen, Ruthenium, Osmium, Cobalt, Rhodium, Iridium, Nickel, Palladium, Platin, Kupfer, Silber, Gold, Zink, Cadmium und Quecksilber.

18. Verfahren nach einem der Ansprüche 15 bis 17, wobei
- die Liganden L_{K} und L_{S} unabhängig voneinander ausgewählt sind aus der Gruppe bestehend aus einzähnigen und mehrzähnigen Phosphor-Donor-Liganden, Alkenen, cyclischen Dienen und cyclischen Polyenen,
und einkernigen Arenen, mehrkernigen Arenen, einkernigen Heteroarenen und mehrkernigen Heteroarenen, und deren Derivaten,
und/oder
- der Ligand L_{N} ein monoanionischer Ligand ist, welcher ausgewählt ist aus der Gruppe bestehend aus Anionen des Cyclopentadiens und dessen Derivaten, Alkyl-Anionen, Aryl-Anionen und einem Fluoridanion
und/oder
- der Ligand L_{T} ein monoanionischer Ligand ist, welcher ausgewählt ist aus der Gruppe bestehend aus Anionen des Cyclopentadiens und dessen Derivaten und einem Fluoridanion, oder ein dianionischer Ligand.

19. Metallkomplexe gemäß der allgemeinen Formel
M(L_{K})_{f}(AzuH)ₘ (III)
oder
M(L_{N})(AzuH)_{q} (IV)
oder
[M(L_{S})_{g}(AzuH)ᵥ]X (V)
oder
[M(L_{T})(AzuH)_{z}]X (VI),
oder
Lösungen oder Suspensionen, umfassend einen Metallkomplex gemäß der allgemeinen Formel
M(L_{K})_{f}(AzuH)ₘ (III)
oder
M(L_{N})(AzuH)_{q} (IV)
oder
[M(L_{S})_{g}(AzuH)ᵥ]X (V)
oder
[M(L_{T})(AzuH)_{z}]X (VI)
und wenigstens ein Lösungsmittel, welches mit dem Lösungmittel S_{P} mischbar oder identisch ist, wobei
M = Metall-Zentralatom ausgewählt aus der Gruppe 6, der Gruppe 7, der Gruppe 8, der Gruppe 9, der Gruppe 10, der Gruppe 11 oder der Gruppe 12,
L_{K} = optionaler neutraler sigma-Donor-Ligand oder optionaler neutraler pi-Donor-Ligand,
f = Anzahl der Liganden L_{K}, wobei f = 0, 1, 2, 3, 4, 5 oder 6 ist,
AzuH = Azulen oder ein Azulenderivat, welches in 4-Position, 6-Position oder 8-Position zusätzlich zu einem H-Atom ein Hydrid-Anion trägt,
m = Anzahl der Liganden AzuH, wobei m = 1, 2, 3, 4, 5, 6 oder 7 ist,
L_{N} = wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
q = Anzahl der Liganden AzuH, wobei q = w₂ - |u|, wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
L_{S} = optionaler neutraler sigma-Donor-Ligand oder optionaler neutraler pi-Donor-Ligand,
g = Anzahl der Liganden L_{S}, wobei g = 0, 1, 2, 3, 4, 5 oder 6 ist,
v = Anzahl der Liganden AzuH, wobei v = w₃ - 1, wobei w₃ = 2, 3, 4, 5, 6 oder 7 ist,
L_{T} = wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
z = Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
X⁻ = Halogenid-Anion oder einwertiges schwach-koordinierendes Anion oder einwertiges nicht-koordinierendes Anion,
wobei
Azu = Azulen gemäß der Formel 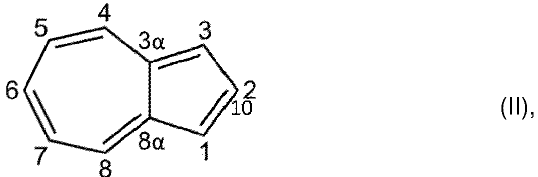 oder
Azu = ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
wobei zwei Substituenten R^{F} optional einen Ring bilden können,
und
b) wenigstens ein Kohlenstoffatom des Azulengerüsts, ausgewählt aus der Gruppe bestehend aus den Kohlenstoffatomen C4, C6 und C8, ein H-Atom trägt,
erhalten oder erhältlich nach einem Verfahren gemäß einem der Ansprüche 15 bis 18.

20. Metallkomplexe gemäß der allgemeinen Formel
M(L_{K})_{f}(AzuH)ₘ (III)
oder
M(L_{N})(AzuH)_{q} (IV)
oder
[M(L_{S})_{g}(AzuH)ᵥ]X (V)
oder
[M(L_{T})(AzuH)_{z}]X (VI)
wobei
M = Metall-Zentralatom ausgewählt aus der Gruppe 6, der Gruppe 7, der Gruppe 8, der Gruppe 9, der Gruppe 10, der Gruppe 11 oder der Gruppe 12,
L_{K} = optionaler neutraler sigma-Donor-Ligand oder optionaler neutraler pi-Donor-Ligand,
f = Anzahl der Liganden L_{K}, wobei f = 0, 1, 2, 3, 4, 5 oder 6 ist,
AzuH = Azulen oder ein Azulenderivat, welches in 4-Position, 6-Position oder 8-Position zusätzlich zu einem H-Atom ein Hydrid-Anion trägt,
m = Anzahl der Liganden AzuH, wobei m = 1, 2, 3, 4, 5, 6 oder 7 ist,
L_{N} = wenigstens ein anionischer sigma-Donor-Ligand oder wenigstens ein anionischer pi-Donor-Ligand, wobei eine Summe u der negativen Ladungen aller Liganden L_{N} -1, -2, -3, -4, -5 oder -6 ist,
q = Anzahl der Liganden AzuH, wobei q = w₂- |u|, wobei w₂ > |u| und w₂ = 2, 3, 4, 5, 6 oder 7, und wobei |u| ein absoluter Betrag der Summe der negativen Ladungen aller Liganden L_{N} ist, wobei |u| = 1, 2, 3, 4, 5 oder 6,
L_{S} = optionaler neutraler sigma-Donor-Ligand oder optionaler neutraler pi-Donor-Ligand,
g = Anzahl der Liganden L_{S}, wobei g = 0, 1, 2, 3, 4, 5 oder 6 ist,
v = Anzahl der Liganden AzuH, wobei v = w₃ - 1, wobei w₃ = 2, 3, 4, 5, 6 oder 7 ist,
L_{T} = wenigstens ein anionischer sigma-Donor-Ligand oder wenigstens ein anionischer pi-Donor-Ligand, wobei eine Summe h der negativen Ladungen aller Liganden L_{T} -1, -2, -3, -4 oder -5 ist,
z = Anzahl der Liganden AzuH, wobei z = w₄ - (|h| + 1), wobei w₄ > (|h| + 1) und w₄ = 3, 4, 5, 6 oder 7, und wobei |h| ein absoluter Betrag der Summe der negativen Ladungen aller Liganden L_{T} ist, wobei |h| = 1, 2, 3, 4 oder 5,
X⁻ = Halogenid-Anion oder einwertiges schwach-koordinierendes Anion oder einwertiges nicht-koordinierendes Anion,
wobei
Azu = Azulen gemäß der Formel 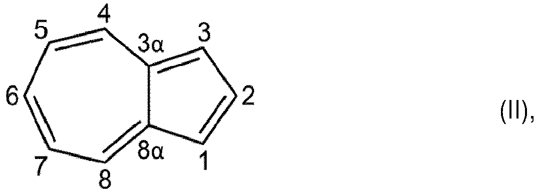 oder
Azu = ein Azulenderivat, welches ein Azulengerüst gemäß Formel II, bestehend aus einem Fünfring und einem Siebenring, aufweist, wobei
a) wenigstens ein Kohlenstoffatom des Azulengerüsts, ausgewählt aus der Gruppe bestehend aus den Kohlenstoffatomen C1, C2, C3, C4, C5, C6, C7 und C8, einen Substituenten R^{F} trägt,
wobei die Substituenten R^{F} unabhängig voneinander ausgewählt sind aus der Gruppe bestehend aus primären, sekundären, tertiären Alkyl-, Alkenyl- und Alkinylresten mit 1 bis 10 Kohlenstoffatomen, cyclischen Alkylresten mit 3 bis 10 Kohlenstoffatomen, einem Benzylrest, einem einkernigen oder mehrkernigen Aren und einem einkernigen oder mehrkernigen Heteroaren,
wobei zwei Substituenten R^{F} optional einen Ring bilden können,
und
b) wenigstens ein Kohlenstoffatom des Azulengerüsts, ausgewählt aus der Gruppe bestehend aus den Kohlenstoffatomen C4, C6 und C8, ein H-Atom trägt,
wobei die Verbindung Fe(AzulenH)₂ und Cr(AzulenH)₂, und deren Isomere, ausgenommen sind.

21. Metallkomplex nach Anspruch 19 oder 20 oder Lösung oder Suspension nach Anspruch 19, umfassend einen Metallkomplex und wenigstens ein Lösungsmittel, welches mit dem Lösungmittel S_{P} mischbar oder identisch ist, wobei der Metallkomplex ausgewählt ist aus der Gruppe bestehend aus Fe(GuaH)₂, Ru(GuaH)₂, Ru(Cp*)(GuaH), [Ru(*p*-cymol)(GuaH)]PF₆, Co(GuaH)₂, [Co(GuaH)₂]PF₆, Rh(nbd)(GuaH), Rh(cod)(GuaH), [Rh(Cp*)(GuaH)]PF₆, PtMe₃(GuaH), [Pt(cod)(GuaH)]PF₆, Cu(PPh₃)(GuaH), Zn(GuaH)₂ und Zn(Mes)(GuaH).

22. Verwendung wenigstens eines Metallkomplexes nach einem der Ansprüche 19 bis 21 oder wenigstens einer Lösung oder Suspension nach Anspruch 19 oder 21, als
i. Präkatalysator oder Präkatalysator enthaltende Lösung oder Suspension in einer chemischen Reaktion
und/oder
ii. Katalysator oder Katalysator enthaltende Lösung oder Suspension in einer chemischen Reaktion
und/oder
iii. Elektronentransfer-Reagenz oder Elektronentransfer-Reagenz enthaltende Lösung oder Suspension in einer chemischen Reaktion
und/oder
iv. Präkursorverbindung oder Präkursorverbindung enthaltende Lösung oder Suspension zur Herstellung wenigstens einer Schicht, welche ein Metall M enthält, oder wenigstens einer Metallschicht bestehend aus dem Metall M auf wenigstens einer Oberfläche eines Substrats.

23. Verfahren zur Durchführung einer chemischen Reaktion unter Verwendung wenigstens eines Metallkomplexes nach einem der Ansprüche 19 bis 21 oder wenigstens einer Lösung oder Suspension nach Anspruch 19 oder 21,
umfassend die Schritte:
A) Zurverfügungstellung
des wenigstens einen Metallkomplexes
oder
der wenigstens einen Lösung oder Suspension, umfassend einen Metallkomplex und wenigstens ein Lösungsmittel, welches mit dem Lösungmittel S_{P} mischbar oder identisch ist,
und
B) Durchführung der chemischen Reaktion unter Verwendung des wenigstens einen Metallkomplexes als Präkatalysator, als Katalysator oder als Elektronentransfer-Reagenz.

24. Verfahren zur Herstellung
i. wenigstens einer Metallschicht bestehend aus einem Metall M
oder
ii. wenigstens einer Schicht, welche ein Metall M enthält,
auf wenigstens einer Oberfläche eines Substrats unter Verwendung wenigstens eines Metallkomplexes nach einem der Ansprüche 19 bis 21 oder wenigstens einer Lösung oder Suspension nach Anspruch 19 oder 21,
umfassend die Schritte:
A) Zurverfügungstellung
des wenigstens einen Metallkomplexes
oder
der wenigstens einen Lösung oder Suspension, umfassend einen Metallkomplex und wenigstens ein Lösungsmittel, welches mit dem Lösungmittel S_{P} mischbar oder identisch ist,
und
B) Abscheidung
i. der wenigstens einen Metallschicht bestehend aus dem Metall M
oder
ii. der wenigstens einen Schicht, welche das Metall M enthält,
auf der wenigstens einen Oberfläche des Substrats unter Verwendung des wenigstens einen Metallkomplexes als Präkursorverbindung.

25. Verfahren nach einem der Ansprüche 1 bis 7 oder Lösung oder Suspension nach Anspruch 8 oder Verbindungen nach Anspruch 9 oder Verbindungen nach einem der Ansprüche 10 bis 14 oder Verfahren nach einem der Ansprüche 15 bis 18 oder Metallkomplexe oder Lösungen oder Suspensionen nach Anspruch 19 oder Metallkomplexe nach Anspruch 20 oder Verwendung nach Anspruch 22 oder Verfahren nach Anspruch 23 oder Verfahren nach Anspruch 24,
wobei Azu = Gua = 7-*iso*-Propyl-1,4-dimethylazulen und AzuH = GuaH = 7-*iso*-Propyl-1,4-dimethyl-8-*H*-dihydroazulen ist.
